# EUROPÄISCHE PATENTSCHRIFT

(11) **EP 1 784 586 B1**
(45) Veröffentlichungstag und Bekanntmachung des Hinweises auf die Patenterteilung: **19.03.2008**
(21) Anmeldenummer: 05783831.0
(22) Anmeldetag: 08.08.2005
(51) Int. Cl.: F16H 3/66

(54) **MEHRSTUFEN-AUTOMATGETRIEBE**
MULTI-STAGE AUTOMATIC TRANSMISSION
BOITE DE VITESSES AUTOMATIQUE A PLUSIEURS ETAGES

(30) Priorität: 06.08.2004 DE 102004038279
(43) Veröffentlichungstag der Anmeldung: 16.05.2007
(73) Patentinhaber: ZF FRIEDRICHSHAFEN AG, 88038 Friedrichshafen (DE)
(72) Erfinder: BAUKNECHT, Gert, 88048 Friedrichshafen (DE); ZIEMER, Peter, 88069 Tettnang (DE); GIERLING, Armin, 88085 Langenargen (DE)
(86) Internationale Anmeldenummer: PCT/EP2005/008598
(87) Internationale Veröffentlichungsnummer: WO 2006/015843

(56) Entgegenhaltungen:
- US-A1- 2003 083 173
- US-A1- 2004 072 648
- US-A1- 2005 085 332
- US-B1- 6 634 980
- PATENT ABSTRACTS OF JAPAN Bd. 2002, Nr. 04, 4. August 2002 (2002-08-04) & JP 2001 349395 A (AISIN AW CO LTD), 21. Dezember 2001 (2001-12-21)

## Beschreibung

Die Erfindung betrifft ein Mehrstufen-Automatgetriebe gemäß dem Oberbegriff der Patentansprüche 1 und 2. Dokument JP 2001 349 395 wird als nachstliegenden Stand der Technik angesehen.

Es existiert eine frühere Patentanmeldung nach Artikel 54(3) EPÜ weshalb zwei unterschiedliche Anspruchssätze für die betreffenden Vertragstraten erforderlich sind, die jeweils zwei unabhängige Ansprüche enthalten.

Automatgetriebe mit mehreren, ohne Gruppenschaltung schaltbaren Gängen sind vielfältig bekannt. Aus der US 5,106,352 ist ein 6-Gang-Automatgetriebe bekannt, bei dem ein einfacher Vorschalt-Planetenradsatz koaxial zu einem als Ravigneaux-Planetenradsatz ausgebildeten Zweisteg-Vierwellen-Hauptradsatz angeordnet ist und fünf Schaltelemente vorgesehen sind. Dabei ist der Vorschalt-Planetenradsatz als nicht schaltbare Reduzierstufe mit an einem Getriebegehäuse festgesetztem Sonnenrad ausgeführt, deren Ausgangsdrehzahl kleiner ist als die Drehzahl einer Antriebswelle des Automatgetriebes und über zwei Kupplungen auf zwei unterschiedliche Elemente des Hauptradsatzes übertragbar ist, wobei eines dieser beiden Elemente zusätzlich über eine erste Bremse an dem Getriebegehäuse festsetzbar ist. Dieses Eingangselement des Hauptradsatzes, welches wahlweise mit dem Ausgangselement des Vorschaltradsatzes verbindbar oder am Getriebegehäuse festsetzbar ist, sei im folgenden mit "erstes Eingangselement des Hauptradsatzes" bezeichnet. Entsprechend sei das andere Eingangselement des Hauptradsatzes, das auch mit dem Ausgangselement des Vorschalt-Planetenradsatz verbindbar ist, im folgenden mit "zweites Eingangselement des Hauptradsatzes" bezeichnet. Die Drehzahl der Antriebswelle ist über eine dritte Kupplung auf ein drittes Eingangselement des Hauptradsatzes übertragbar, wobei dieses dritte Element über eine zweite Bremse auch an dem Getriebegehäuse festsetzbar ist. Ein viertes Element des Hauptradsatzes bildet das Ausgangselement des Hauptradsatzes und ist ausschließlich fest mit einer Abtriebswelle des Automatgetriebes verbunden.

Mehrere alternative Bauteilanordnungen zu diesem in der US 5,106,352 beschriebenen Automatgetriebe sind beispielsweise aus der US 6,139,463 und der DE 102 10 348 A1 bekannt.

In der noch nicht veröffentlichten Deutschen Patentanmeldung DE 10221095.0 der Anmelderin ist eine Weiterentwicklung des in der US 5,106,352 bekannten 6-Gang-Automatgetriebes zu einem 7-Gang-Automatgetriebe beschrieben. Gegenüber der US 5,106,352 ist der Vorschalt-Planetenradsatz als einfacher, schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenradsatzes ist über das gegenüber der US 5,106,352 zusätzliche sechste Schaltelement an einem Getriebegehäuse festsetzbar. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert mit einer Drehzahl kleiner oder gleich der Drehzahl der Antriebswelle. Für diese kinematische Kopplung der einzelnen Radsatzelemente und Schaltelemente offenbart die DE 10221095.0 zahlreiche verschiedene Anordnungsvarianten der Getriebekomponenten relativ zueinander.

In der JP 2001/182785 A ist eine Weiterentwicklung des aus der US 5,106,352 bekannten 6-Gang-Automatgetriebes zu einem 8-Gang-Automatgetriebe beschrieben. Gegenüber der US 5,106,352 ist dabei der Vorschalt-Planetenradsatz als einfacher, nicht schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenradsatzes ist an einem Getriebegehäuse festgesetzt. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert stets mit einer Drehzahl kleiner der Drehzahl der Antriebswelle. Über das gegenüber der US 5,106,352 zusätzliche sechste Schaltelement ist das - wahlweise mit dem Ausgangselement des Vorschalt-Planetenradsatzes verbindbare oder am Getriebegehäuse festsetzbare - erste Eingangselement des Hauptradsatzes nun wahlweise auch mit der Antriebswelle des Getriebes verbindbar. Hinsichtlich der räumlichen Anordnung der Schaltelemente relativ zueinander und relativ zu den Planetenradsätzen ist in der JP 2001/182785 A vorgeschlagen, die beiden Schaltelemente, über die das erste und zweite Eingangselement des Hauptradsatzes mit dem Hohlrad des Vorschalt-Planetenradsatzes verbindbar sind, zusammen mit dem gegenüber der US 5,106,352 zusätzlichen sechsten Schaltelement als eine Baugruppe axial zwischen dem Vorschalt-Planetenradsatz und dem Hauptradsatz anzuordnen. Dabei ist das bereits aus der US 5,106,352 bekannte (fünfte) Schaltelement, über welches die Antriebswelle mit dem dritten Eingangselement des Hauptradsatzes verbindbar ist, auf der dieser Baugruppe gegenüberliegenden Seite des Hauptradsatzes angeordnet, also auch auf der dem Vorschalt-Planetenradsatz abgewandten Seite des Hauptradsatzes. Weiterhin lehrt die JP 2001/182785 A, das gegenüber der US 5,106,352 zusätzliche sechste Schaltelement innerhalb der genannten Baugruppe räumlich gesehen radial über dem Schaltelement anzuordnen, über welches erste Eingangselement des Hauptradsatzes mit dem Hohlrad des Vorschaltradsatzes verbindbar ist.

In der noch nicht veröffentlichten Deutschen Patentanmeldung DE 10318565.8 der Anmelderin wird eine verbesserte Bauteilanordnung des aus der JP 2001/182785 A bekannten 8-Gang-Automatgetriebes beschrieben. Um gegenüber der zugrunde liegenden Basiskonstruktion des 6-Gang-Automatgetriebe gemäß US 5,106,352 nur vergleichsweise wenige konstruktive Änderungen vornehmen zu müssen, wird in der DE 10318565.8 vorgeschlagen, die aus dem 6-Gang-Automatgetriebe bekannte räumliche Lage von Vorschalt-Planetenradsatz, Ravigneaux-Hauptradsatz und den ersten fünf Schaltelementen im Getriebegehäuse relativ zueinander beizubehalten und das gegenüber der US 5,106,352 zusätzliche sechste Schaltelementes in dem Getriebegehäuse auf der Seite des Getriebes anzuordnen, die einem Antriebsmotor zugewandt ist, räumlich gesehen zwischen einer antriebsseitigen Getriebegehäusewand und ersten Schaltelement, über welches das Ausgangselement des Vorschalt-Planeteradsatzes mit dem zweiten Eingangselement des Hauptradsatzes verbindbar ist, räumlich gesehen aber auch zwischen der genannten antriebsseitigen Getriebegehäusewand und dem Vorschalt-Planetenradsatz. Das gegenüber der US 5,106,352 zusätzliche sechste Schaltelement ist also auf der dem Hauptradsatz abgewandten Seite des Vorschalt-Planetenradsatzes angeordnet.

Der vorliegenden Erfindung liegt die Aufgabe zugrunde, das in der JP 2001/182785 A bzw. der DE 10318565.8 angegebene Mehrstufen-Aütomatgetriebe mit acht Vorwärtsgängen weiterzuentwickeln und alternative Bauteilanordnungen für die Planetenradsätze und die sechs Schaltelemente für zu schaffen.

Diese Aufgabe wird durch ein die Merkmale des Patentanspruchs 1 aufweisendes Mehrstufen-Automatgetriebe gelöst. Vorteilhafte Ausgestaltungen und Weiterbildungen der Erfindung ergeben sich aus den Unteransprüchen.

Die Erfindung geht aus von dem in der JP 2001/182785 A bzw. der noch nicht veröffentlichten Deutschen Patentanmeldung DE 10318565.8 der Anmelderin beschriebenen Getriebeschema für ein Mehrstufen-Automatgetriebe mit zumindest acht Vorwärtsgängen, umfassend eine Antriebswelle, eine Abtriebswelle, einen als Doppelplanetenradsatz ausgebildeten Vorschaltradsatz, einen als gekoppelten Planetenradsatz mit mindestens drei nicht gekoppelten Eingangselementen und einem Ausgangselement ausgebildeten Hauptradsatz, sowie mindestens sechs Schaltelemente. Durch selektives Schließen von jeweils zwei der Schaltelemente ist eine Drehzahl der Antriebswelle derart auf die Abtriebswelle übertragbar, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Die gesamte Offenbarung der noch nicht vorveröffentlichten Deutschen Patentanmeldung DE 10318565.8 der Anmelderin soll ausdrücklich auch Teil der Offenbarung der vorliegenden Erfindung sein.

Ein Eingangselement des Vorschaltradsatzes ist ständig mit der Antriebswelle verbunden. Ein Ausgangselement des Vorschaltradsatzes rotiert stets mit einer Drehzahl kleiner der Drehzahl der Antriebswelle. Ein drittes Element des Vorschaltradsatzes ist an einem Getriebegehäuse festgesetzt. Die Ausgangsdrehzahl des Vorschaltradsatzes ist über zwei Schaltelemente auf zwei unterschiedliche Eingangselemente der Hauptradsatzes übertragbar. Die Drehzahl der Antriebswelle ist über zwei andere Schaltelemente ebenfalls auf zwei verschiedene Eingangselemente des Hauptradsatzes übertragbar. Das Ausgangselement des Hauptradsatzes ist ständig mit der Abtriebswelle verbunden.

In einer bevorzugten Ausgestaltung dieses Getriebeschemas als 8-Gang-Automatgetriebe bildet ein (gekoppelter) Steg des Vorschaltradsatzes dessen stets mit der Antriebswelle verbundenes Eingangselement, ein Hohlrad des Vorschaltradsatzes dessen mit zwei verschiedenen Eingangselementen des Hauptradsatzes verbindbares Ausgangselement, und ein Sonnenrad des Vorschaltradsatzes dessen am Getriebegehäuse festgesetztes drittes Element. Vorschalt- und Hauptradsatz sind koaxial zueinander angeordnet. Der Hauptradsatz kann als Zweisteg-Vierwellen-Getriebe in Bauform eines "Ravigneaux-Planetenradsatzes" ausgeführt sein, mit einem ersten Sonnenrad als erstes Eingangselement des Hauptradsatzes, welches wahlweise mit dem Hohlrad des Vorschaltradsatzes oder der Antriebswelle verbindbar oder am Getriebegehäuse festsetzbar ist, mit einem zweiten Sonnenrad als zweites Eingangselement des Hauptradsatzes, welches mit dem Hohlrad des Vorschaltradsatzes verbindbar ist, mit einem (gekoppelten) Steg als drittes Eingangselement des Hauptradsatzes, welcher wahlweise mit der Antriebswelle verbindbar oder am Getriebegehäuse festsetzbar ist, sowie mit einem Hohlrad als Ausgangselement des Hauptradsatzes, welches stets mit der Abtriebswelle verbunden ist. In diesem Fall ist
- ein Eingangselement des ersten Schaltelementes mit dem Ausgangselement des Vorschaltradsatzes verbunden,
- ein Ausgangselement des ersten Schaltelementes mit dem zweiten Eingangselement des Hauptradsatzes verbunden,
- ein Eingangselement des zweiten Schaltelementes mit dem Ausgangselement des Vorschaltradsatzes verbunden,
- ein Ausgangselement des zweiten Schaltelementes mit dem ersten Eingangselement des Hauptradsatzes verbunden,
- ein Eingangselement des dritten Schaltelementes mit dem Getriebegehäuse verbunden,
- ein Ausgangselement des dritten Schaltelementes mit dem ersten Eingangselement des Hauptradsatzes verbunden,
- ein Eingangselement des vierten Schaltelementes mit dem Getriebegehäuse verbunden,
- ein Ausgangselement des vierten Schaltelementes mit dem dritten Eingangselement des Hauptradsatzes verbunden,
- ein Eingangselement des fünften Schaltelementes mit der Antriebswelle verbunden,
- ein Ausgangselement des fünften Schaltelementes mit dem dritten Eingangselement des Hauptradsatzes verbunden,
- ein Eingangselement des sechsten Schaltelementes mit der Antriebswelle verbunden,
- ein Ausgangselement des sechsten Schaltelementes mit dem ersten Eingangselement des Hauptradsatzes verbunden, sowie
- das Ausgangselement des Hauptradsatzes ständig mit der Abtriebswelle verbunden.

Der Hauptradsatz kann aber auch als Zweisteg-Vierwellen-Getriebe mit zwei gekoppelten Einsteg-Planetenradsätzen ausgebildet sein, wobei beispielsweise das wahlweise mit dem Hohlrad des Vorschaltradsatzes oder der Antriebswelle verbindbare oder am Getriebegehäuse festsetzbare erste Eingangselement dieses Hauptradsatzes durch ein Sonnenrad des ersten dieser beiden Einsteg-Planetenradsätzen des Hauptradsatzes und ein mit diesem ersten Sonnenrad des Hauptradsatzes verbundenen Steg des zweiten dieser beiden Einsteg-Planetenradsätzen des Hauptradsatzes gebildet wird, und wobei das mit dem Hohlrad des Vorschaltradsatzes verbindbare zweite Eingangselement dieses Hauptradsatzes durch ein Sonnenrad des zweiten der beiden Einsteg-Planetenradsätzen des Hauptradsatzes gebildet wird, und wobei das wahlweise mit der Antriebswelle verbindbare oder am Getriebegehäuse festsetzbare dritte Eingangselement des Hauptradsatzes durch einen Steg des ersten der beiden Einsteg-Planetenradsätzen des Hauptradsatzes und einen mit diesem ersten Steg des Hauptradsatzes verbundenen Hohlrad des zweiten der beiden Einsteg-Planetenradsätzen des Hauptradsatzes gebildet wird, und wobei ein Hohlrad des ersten der beiden Einsteg-Planetenradsätzen des Hauptradsatzes als Ausgangselement dieses Hauptradsatzes stets mit der Abtriebswelle verbunden ist. In diesem Fall entspricht die Anbindung der Ein- und Ausgangselemente der sechs Schaltelemente an die drei Eingangselemente des Hauptradsatzes der zuvor am Beispiel des Ravigneaux-Hauptradsatzes beschriebenen Anbindung.

Der Hauptradsatz kann beispielsweise auch als "Dreisteg-Fünfwellen-Getriebe" mit drei gekoppelten Einsteg-Planetenradsätzen ausgebildet sein, oder auch als "ein auf eine Zweisteg-Einheit reduziertes Dreisteg-Fünfwellen-Getriebe" mit drei gekoppelten Einsteg-Planetenradsätzen, bei denen zumindest zwei dieser Einzel-Planetenradsätze über einen gemeinsamen Steg und ein weiteres gemeinsames Zentralrad (also entweder über deren Sonnenräder oder über deren Hohlräder) miteinander gekoppelt ("reduziert") sind. Analog dazu kann der Hauptradsatz beispielsweise auch als "ein auf eine Zweisteg-Einheit reduziertes Viersteg-Sechswellen-Getriebe ausgebildet sein, bei dem die dabei im Prinzip vorhandenen vier miteinander gekoppelten Einzel-Planetenradsätze derart zusammengefasst sind, dass der Hauptradsatz nur noch zwei Stege aufweist. Im Unterschied zu der Anbindung der sechs Schaltelemente an die Eingangselemente eines Hauptradsatzes vom Typ "Zweisteg-Vierwellen-Planetengetriebe bieten sich hinsichtlich der kinematischen Anbindung der Ein- und Ausgangselemente des dritten und sechsten Schaltelementes an die einzelnen Hauptradsatz-Elemente verschiedene Möglichkeiten, wobei dann gilt:
- das Eingangselement des dritten Schaltelementes ist mit dem Getriebegehäuse verbunden,
- das Ausgangselement des dritten Schaltelementes ist mit dem ersten Eingangselement des Hauptradsatzes oder einem in einem Drehzahlplan zu diesem ersten Eingangselement benachbarten Eingangselement des Hauptradsatzes verbunden,
- das Eingangselement des sechsten Schaltelementes ist mit der Antriebswelle verbunden,
- das Ausgangselement des sechsten Schaltelementes ist mit dem ersten Eingangselement des Hauptradsatzes oder einem in dem Drehzahlplan zu diesem ersten Eingangselement benachbarten Eingangselement des Hauptradsatzes verbunden.

In allen genannten Ausführungsvarianten sind im ersten Vorwärtsgang das erste und vierte Schaltelement, im zweiten Vorwärtsgang das erste und dritte Schaltelement, im dritten Vorwärtsgang das erste und zweite Schaltelement, im vierten Vorwärtsgang das erste und sechste Schaltelement, im fünften Vorwärtsgang das erste und fünfte Schaltelement, im sechsten Vorwärtsgang das fünfte und sechste Schaltelement, im siebten Vorwärtsgang das zweite und fünfte Schaltelement und im achten Vorwärtsgang das dritte und fünfte Schaltelement geschlossen. Im Rückwärtsgang sind das vierte Schaltelement und zusätzlich entweder das zweite oder das sechste Schaltelement geschlossen.

Gemäß der Erfindung wird nun vorgeschlagen, dass das zweite Schaltelement, über welches das erste Eingangselement des Hauptradsatzes mit dem Ausgangselement des Vorschaltradsatzes verbindbar ist, und das sechste Schaltelement, über das das erste Eingangselement des Hauptradsatzes mit der Antriebswelle des Getriebes verbindbar ist, nunmehr eine Baugruppe bilden, die räumlich gesehen zumindest weitgehend auf der dem Hauptradsatz abgewandten Seite des Vorschaltradsatzes angeordnet ist, vorzugsweise in einem Bereich axial zwischen dem Vorschaltradsatz und einer sich radial erstreckenden Gehäusewand des Getriebegehäuses, die auf der dem Hauptradsatz abgewandten Seite des Vorschaltradsatzes angeordnet ist. Dabei sind Vorschaltradsatz und Hauptradsatz koaxial zueinander angeordnet.

Das erste Schaltelement, über welches das zweite Eingangselement des Hauptradsatzes mit dem Ausgangselement des Vorschaltradsatzes verbindbar ist, kann dabei räumlich gesehen in einem Bereich axial zwischen Vorschaltradsatz und Hauptradsatz angeordnet sein. In diesem Fall grenzt die das zweite und sechste Schaltelement umfassende Baugruppe axial unmittelbar an den Vorschaltradsatz an. In einer anderen Bauteilanordnung kann das erste Schaltelement, insbesondere eine Servoeinrichtung zur Betätigung des ersten Schaltelementes aber auch auf der dem Hauptradsatz abgewandten Seite des Vorschaltradsatzes axial an den Vorschaltradsatz angrenzen, wobei ein Lamellenpaket des ersten Schaltelementes dabei räumlich gesehen auch in einem Bereich radial über dem Vorschaltradsatz angeordnet sein kann. Bei dieser Anordnungsvariante des ersten Schaltelementes grenzt die das zweite und sechste Schaltelement umfassende Baugruppe axial unmittelbar an das erste Schaltelement an, insbesondere axial an die Servoeinrichtung des ersten Schaltelementes.

Das fünfte Schaltelement, über welches das dritte Eingangselement des Hauptradsatzes mit der Antriebswelle des Getriebes verbindbar ist, kann räumlich gesehen sowohl axial zwischen dem Vorschaltradsatz und dem Hauptradsatz, axial angrenzend an den Vorschaltradsatz (VS) angeordnet sein, als auch axial auf der dem Vorschaltradsatz abgewandten Seite des Hauptradsatzes, axial angrenzend an den Hauptradsatz (HS).

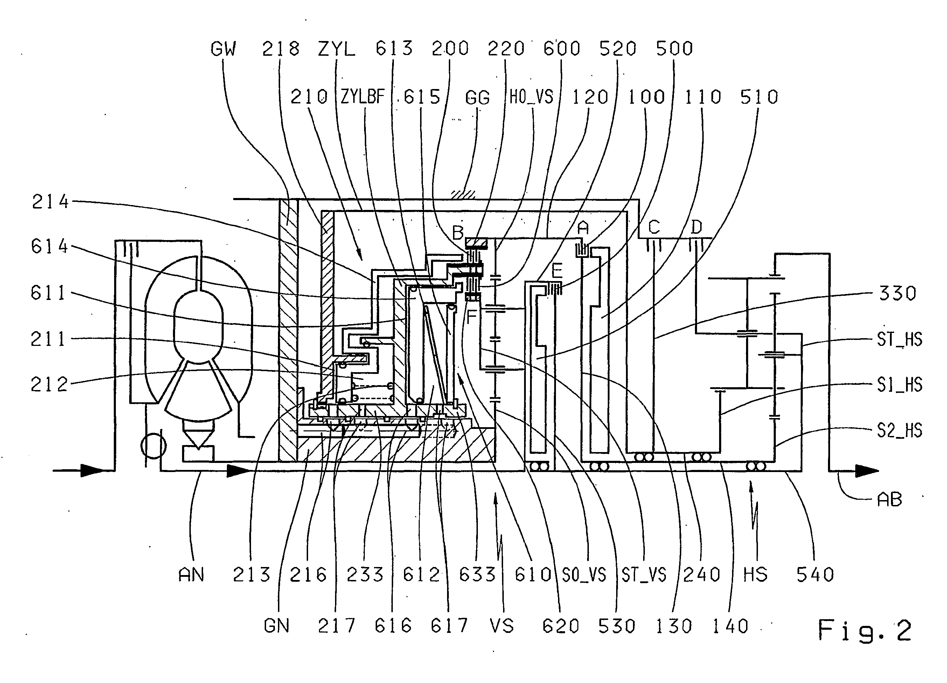

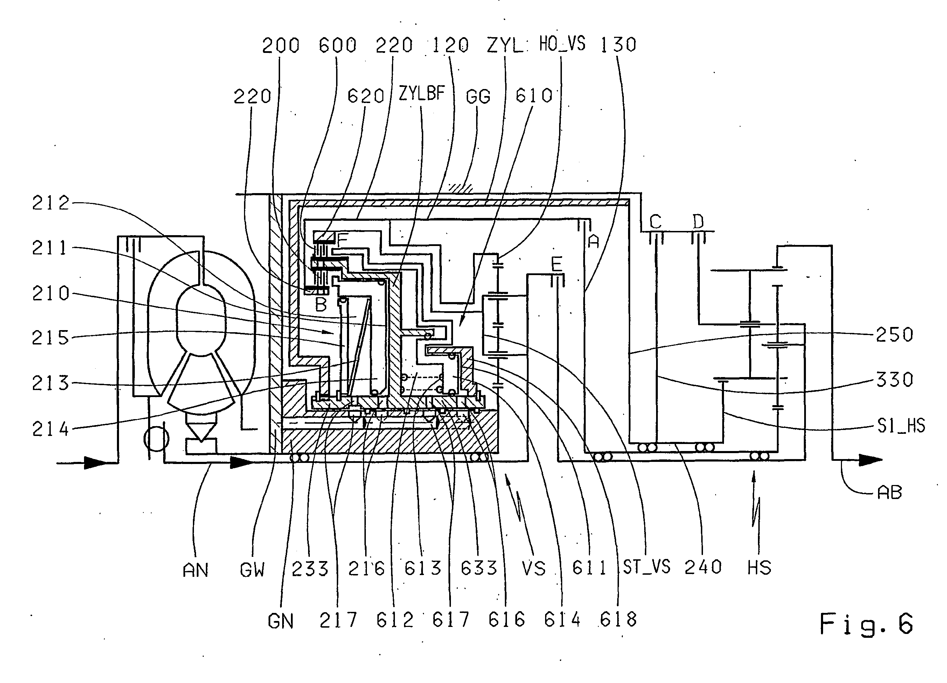

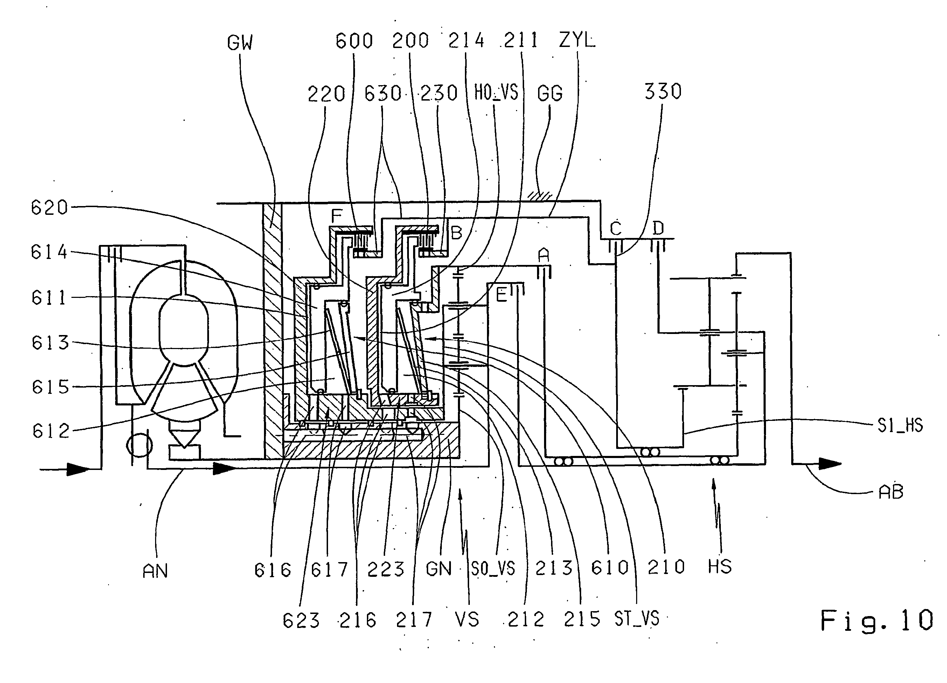

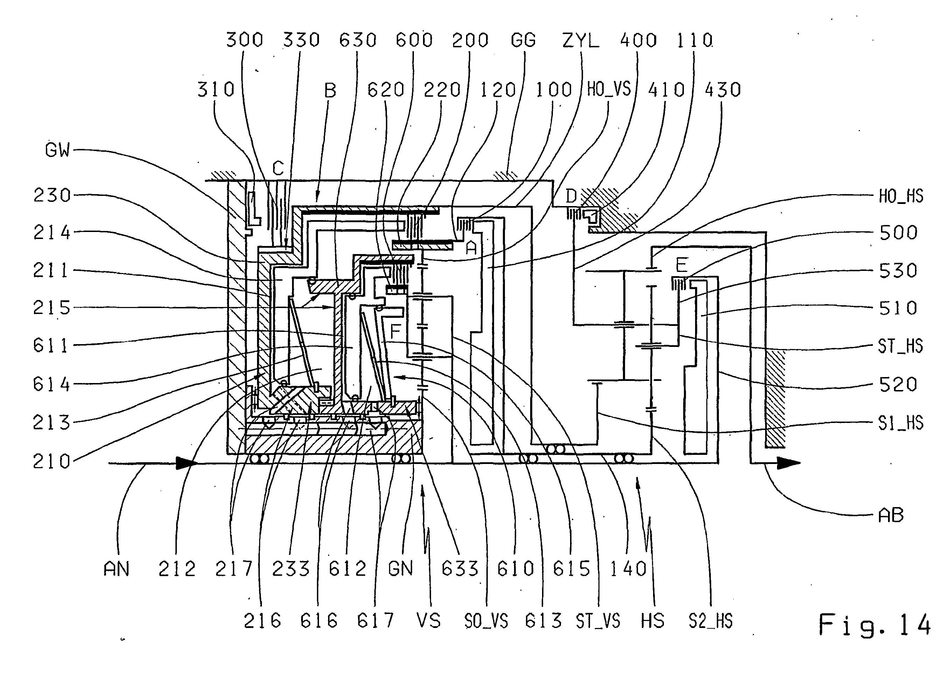

Hinsichtlich der räumlichen Anordnung des zweiten und sechsten Schaltelementes relativ zueinander (und relativ zu dem Hauptradsatz) werden mehrere Varianten vorgeschlagen:
- Lamellenpaket des zweiten Schaltelementes zumindest teilweise radial oberhalb des Lamellenpaketes des sechsten Schaltelementes *[**Fig. 2-5**]*;
- Lamellenpaket des sechsten Schaltelementes zumindest teilweise radial oberhalb des Lamellenpaketes des zweiten Schaltelementes *[**Fig. 6-9**];*
- Lamellenpakete des zweiten und sechsten Schaltelement axial nebeneinander auf gleichem oder zumindest ähnlichem Durchmesser, wobei das Lamellenpaket des zweiten Schaltelementes näher am Hauptradsatz angeordnet ist als das Lamellenpaket des sechsten Schaltelementes *[**Fig. 10-13**]*; und
- Lamellenpaket des zweiten Schaltelementes axial neben dem Lamellenpaket des sechsten Schaltelementes auf einem größeren Durchmesser als das Lamellenpaket des sechsten Schaltelementes, wobei das Lamellenpaket des zweiten Schaltelementes vorzugsweise näher am Hauptradsatz angeordnet ist als das Lamellenpaket des sechsten Schaltelementes *[**Fig. 14-16**]*;

Bei allen verschiedenen Bauteilanordnungen gemäß der Erfindung übergreifen das Ausgangselement des zweiten Schaltelementes und das Ausgangselement des sechsten Schaltelementes, die beide mit dem ersten Eingangelement des Hauptradsatzes verbundenen sind, den Vorschaltradsatz und das erste Schaltelement in axialer Richtung radial außen vollständig. Entsprechend der kinematischen Anbindung an das erste Eingangselement des Hauptradsatzes können das Ausgangselement des zweiten Schaltelementes und das Ausgangselement des sechsten Schaltelementes dabei zumindest abschnittsweise als ein gemeinsames Bauelement ausgebildet sein. Ist das fünfte Schaltelement räumlich gesehen zwischen Vorschalt- und Hauptradsatz angeordnet, insbesondere dabei axial angrenzend an den Vorschaltradsatz, übergreifen die Ausgangselemente des zweiten und sechsten Schaltelementes auch dieses fünfte Schaltelement in axialer Richtung radial außen vollständig.

Entsprechend der vorgeschlagenen Bauteilanordnungen kann zusätzlich auch vorgesehen sein, dass das mit dem Ausgangselement des Vorschaltradsatzes verbundene Eingangselement des zweiten Schaltelementes und/oder das mit der Antriebswelle des Getriebes verbundene Eingangselement des sechsten Schaltelementes die Lamellenpakete des zweiten und sechsten Schaltelementes in axialer Richtung radial außen umgreifen *[**Fig. 6-9**+13]*.

Im Rahmen von mehreren Weiterbildungen dieser erfindungsgemäßen Bauteilanordnungen wird vorgeschlagen, für das zweite und das dazu benachbarte sechste Schaltelement einen gemeinsamen Lamellenträger vorzusehen. Dieser gemeinsame Lamellenträger kann dabei beispielsweise als Außenlamellenträger des sechsten Schaltelementes und als Innenlamellenträger des zweiten Schaltelementes ausgebildet sein, oder auch als Außenlamellenträger des zweiten Schaltelementes und als Innenlamellenträger des sechsten Schaltelementes, oder aber als Außenlamellenträger beider Schaltelemente.

In einer ersten Ausgestaltung der Erfindung hinsichtlich der räumlichen Anordnung von Servoeinrichtungen zur Betätigung des zweiten und sechsten Schaltelementes wird vorgeschlagen, dass die Servoeinrichtung des sechsten Schaltelementes ständig mit der Drehzahl des ersten Eingangselementes des Hauptradsatzes rotiert. Dabei nimmt das mit dem ersten Eingangselement des Hauptradsatzes verbundene Ausgangselement des sechsten Schaltelementes die Servoeinrichtung des sechsten Schaltelementes auf, wobei diese Servoeinrichtung zumindest einen Druckraum und einen Kolben und vorzugsweise auch einen Druckausgleichsraum zum Ausgleich des dynamischen Kupplungsdruckes des rotierenden Druckraums aufweist.

In einer zweiten Ausgestaltung der Erfindung hinsichtlich der räumlichen Anordnung der Servoeinrichtungen zur Betätigung des zweiten und sechsten Schaltelementes wird vorgeschlagen, dass die Servoeinrichtung des sechsten Schaltelementes ständig mit der Drehzahl der Antriebswelle des Getriebes rotiert. Dabei nimmt das mit der Antriebswelle verbundene Eingangselement des sechsten Schaltelementes die Servoeinrichtung des sechsten Schaltelementes, umfassend zumindest einen Druckraum und einen Kolben und vorzugsweise auch einen Druckausgleichsraum zum Ausgleich des dynamischen Kupplungsdruckes des rotierenden Druckraums, auf.

In einer dritten Ausgestaltung der Erfindung hinsichtlich der räumlichen Anordnung der Servoeinrichtungen zur Betätigung des zweiten und des sechsten Schaltelementes wird vorgeschlagen, dass die Servoeinrichtung des zweiten Schaltelementes ständig mit der Drehzahl des ersten Eingangselementes des Hauptradsatzes rotiert. Dabei nimmt das mit dem ersten Eingangselement des Hauptradsatzes verbundene Ausgangselement des zweiten Schaltelementes die Servoeinrichtung des zweiten Schaltelementes auf, wobei diese Servoeinrichtung wiederum zumindest einen Druckraum und einen Kolben und vorzugsweise auch einen Druckausgleichsraum zum Ausgleich des dynamischen Kupplungsdruckes des rotierenden Druckraums aufweist. Diese Anordnung der Servoeinrichtung des zweiten Schaltelementes kann - je nach konstruktiver Ausbildung der Ein- und Ausgangselemente des zweiten und sechsten Schaltelementes - sowohl mit der ersten als auch der zweiten zuvor genannten Ausgestaltung hinsichtlich der räumlichen Anordnung der Servoeinrichtung des sechsten Schaltelementes kombiniert werden.

In einer vierten Ausgestaltung der Erfindung hinsichtlich der räumlichen Anordnung der Servoeinrichtungen zur Betätigung des zweiten und des sechsten Schaltelementes wird vorgeschlagen, dass die Servoeinrichtung des zweiten Schaltelementes ständig mit der Drehzahl des Ausgangselementes des Vorschaltradsatzes rotiert. Dabei nimmt das mit dem Ausgangselement des Vorschaltsatzes verbundene Eingangselement des zweiten Schaltelementes die Servoeinrichtung des zweiten Schaltelementes, wiederum umfassend zumindest einen Druckraum und einen Kolben und vorzugsweise auch einen Druckausgleichsraum zum Ausgleich des dynamischen Kupplungsdruckes des rotierenden Druckraums, auf. Auch diese Anordnung der Servoeinrichtung des zweiten Schaltelementes kann - je nach konstruktiver Ausbildung der Ein- und Ausgangselemente des zweiten und sechsten Schaltelementes - sowohl mit der ersten als auch der zweiten zuvor genannten Ausgestaltung hinsichtlich der räumlichen Anordnung der Servoeinrichtung des sechsten Schaltelementes kombiniert werden.

Bei allen zuvor genannten erfindungsgemäßen Ausgestaltungen hinsichtlich der räumlichen Anordnung der Servoeinrichtungen zur Betätigung des zweiten und des sechsten Schaltelementes können die jeweiligen Lamellenpakete des zweiten und sechsten Schaltelementes bei derem Schließen - bezogen auf den Druckraum und die Bewegungsrichtung des diesem Druckraum zugeordneten Kolben der jeweiligen Servoeinrichtung - entweder gedrückt oder gezogen betätigt werden. Entsprechend ergeben sich auch vielfältige Varianten hinsichtlich der räumlichen Anordnung der jeweiligen Druckräume zur Betätigung der Lamellen des zweiten bzw. sechsten Schaltelementes und - soweit für einen dynamischen Ausgleich des rotatorischen Druckes der rotierenden Druckräume vorhanden - der jeweiligen Druckausgleichräume der Servoeinrichtungen des zweiten und sechsten Schaltelementes, relativ zueinander und relativ zu den benachbarten Bauelementen.

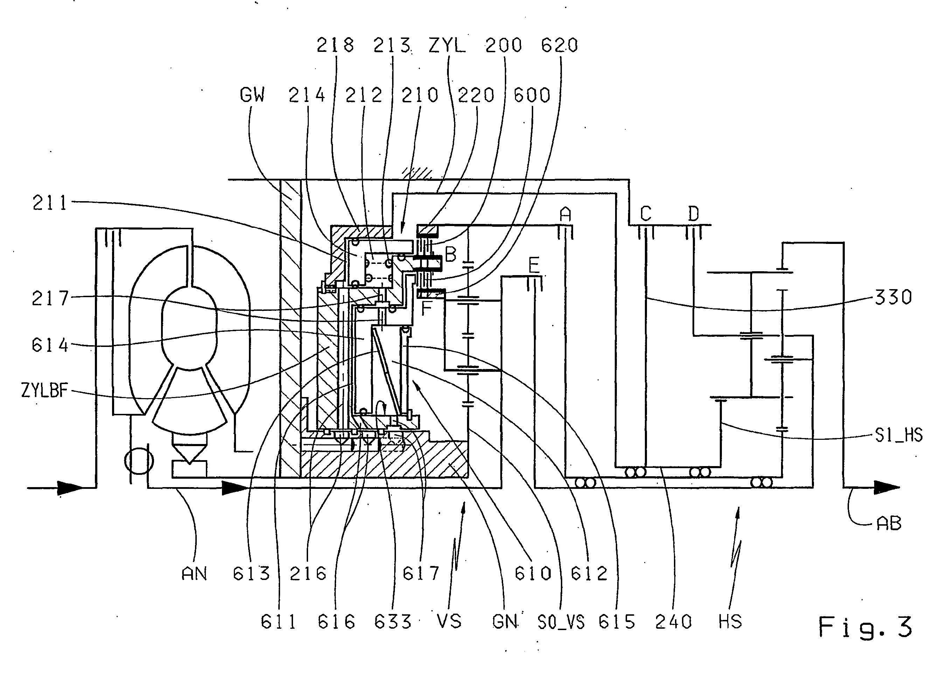

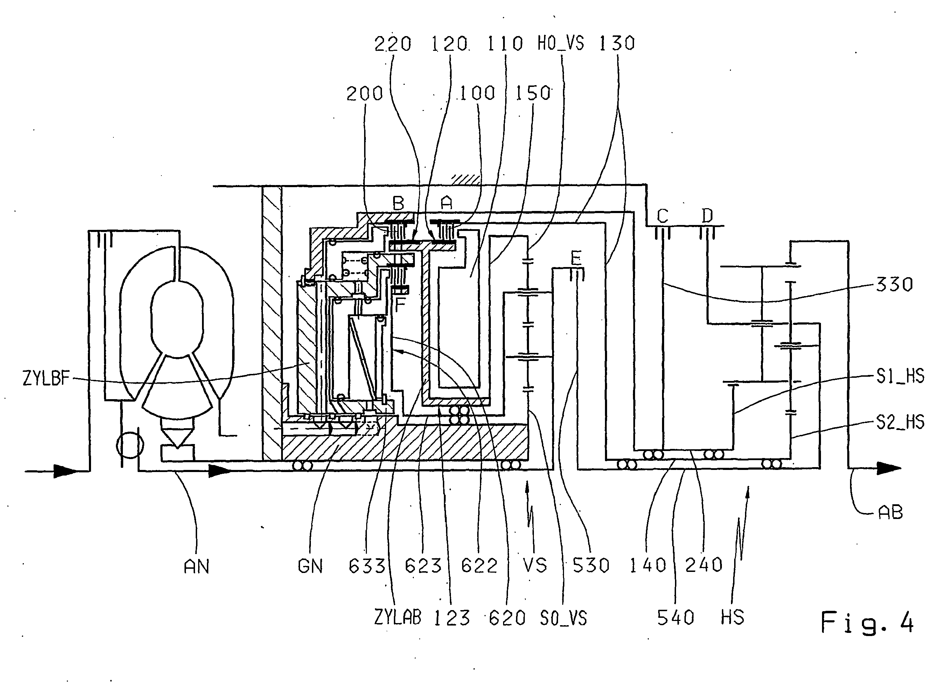

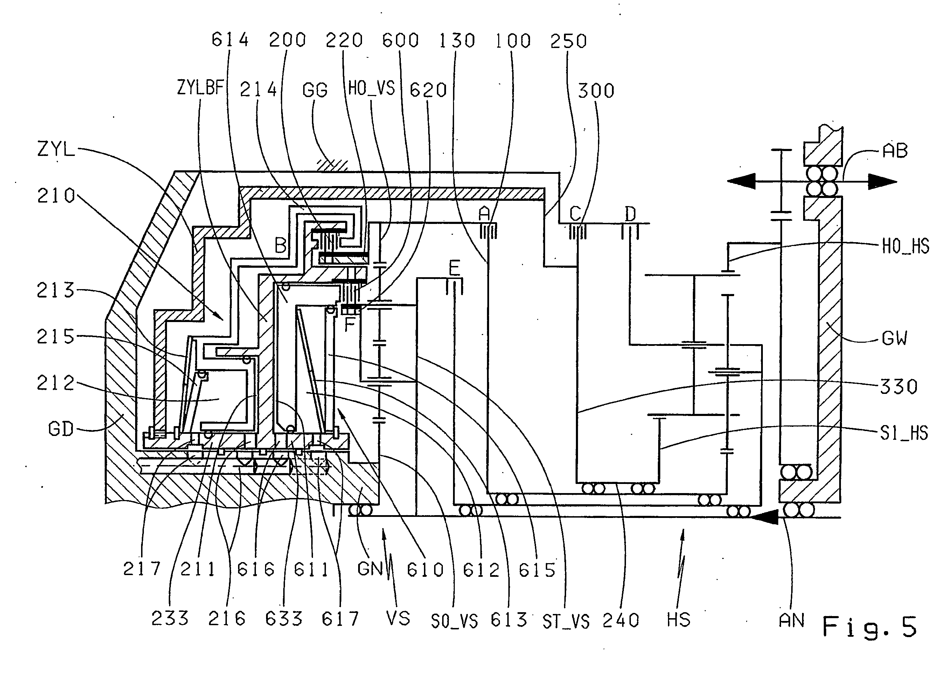

In Verbindung mit einer Anordnung, bei der das Lamellenpaket des zweiten Schaltelementes in axialer Richtung gesehen zumindest teilweise radial über dem Lamellenpaketes des sechsten Schaltelementes angeordnet ist, ergeben sich insbesondere folgende sinnvolle Varianten, deren Merkmale zumindest zum Teil auch miteinander kombiniert sein können:
- das Lamellenpaket und die Servoeinrichtung des sechsten Schaltelementes sind zumindest weitgehend innerhalb eines Kupplungsraumes des zweiten Schaltelementes angeordnet, der durch einen Außenlamellenträger des zweiten Schaltelementes gebildet wird *[**Fig. 4**]*;
- die Servoeinrichtungen des zweiten und sechsten Schaltelementes sind zumindest überwiegend auf der dem Vorschaltradsatzes abgewandten Seite der Lamellenpakete des zweiten und sechsten Schaltelementes angeordnet *[**Fig. 2-5**]*;
- der Druckraum der Servoeinrichtung des sechsten Schaltelementes ist näher am Vorschaltradsatz angeordnet als der Druckraum der Servoeinrichtung des zweiten Schaltelementes *[**Fig. 2**+5]*;
- der Druckraum der Servoeinrichtung des sechsten Schaltelementes ist axial benachbart zu dem Druckausgleichsraum der Servoeinrichtung des zweiten Schaltelementes angeordnet, insbesondere getrennt von diesem durch eine Mantelfläche des für das zweite und sechste Schaltelement gemeinsamen Lamellenträgers *[**Fig. 2**]*;
- die Druckräume der Servoeinrichtungen des zweiten und sechsten Schaltelementes sind axial zueinander benachbart angeordnet, insbesondere getrennt voneinander durch eine Mantelfläche des für das zweite und sechste Schaltelement gemeinsamen Lamellenträgers *[**Fig. 5**]*;
- der Kolben der Servoeinrichtung des zweiten Schaltelementes (bzw. ein mit diesem Kolben verbundenes Betätigungselement zur Betätigung der Lamellen des zweiten Schaltelementes) umgreift das Lamellenpaket des zweiten Schaltelementes in axialer Richtung radial außen *[**Fig. 5**]*;
- der Druckraum der Servoeinrichtung des zweiten Schaltelementes ist in axialer Richtung gesehen zumindest überwiegend radial über dem Druckraum der Servoeinrichtung des sechsten Schaltelementes angeordnet *[**Fig. 3**+4]*;
- der Druckausgleichsraum der Servoeinrichtung des zweiten Schaltelementes ist in axialer Richtung gesehen zumindest überwiegend radial über dem Druckausgleichsraum der Servoeinrichtung des sechsten Schaltelementes angeordnet *[**Fig. 3**+4]*;
- der Druckausgleichsraum der Servoeinrichtung des zweiten Schaltelementes wird über den Druckausgleichsraum der Servoeinrichtung des sechsten Schaltelementes mit Schmiermittel befüllt *[**Fig. 3**+4]*;
- der Druckausgleichsraum der Servoeinrichtung des zweiten Schaltelementes ist näher am Vorschaltradsatz angeordnet als der Druckraum der Servoeinrichtung des zweiten Schaltelementes *[**Fig. 2-4**]*;
- der Druckausgleichsraum der Servoeinrichtung des sechsten Schaltelementes ist näher am Vorschaltradsatz angeordnet als der Druckraum der Servoeinrichtung des sechsten Schaltelementes *[**Fig. 2-5**]*.

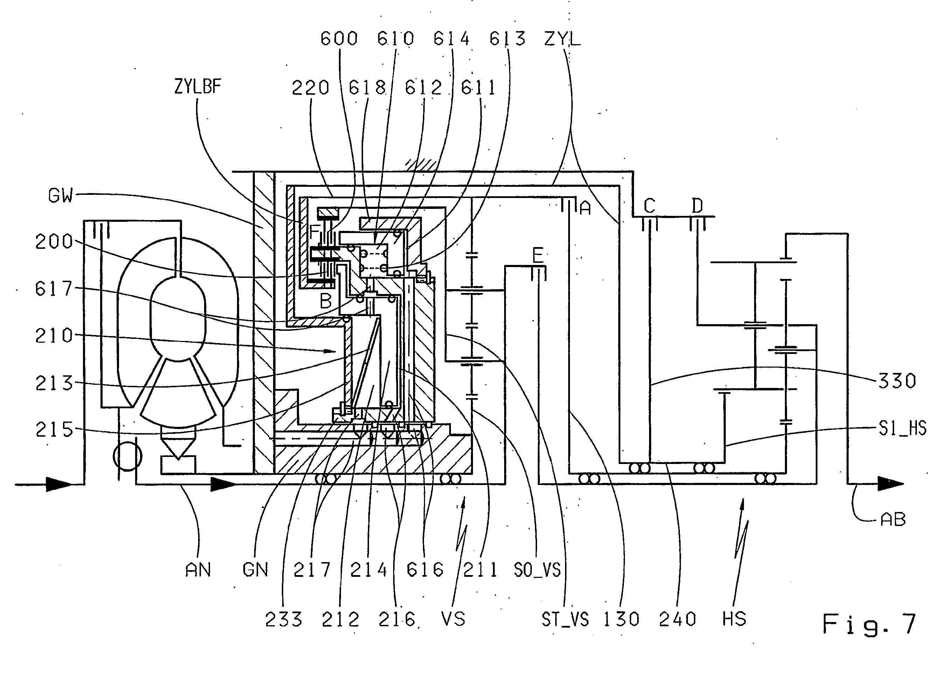

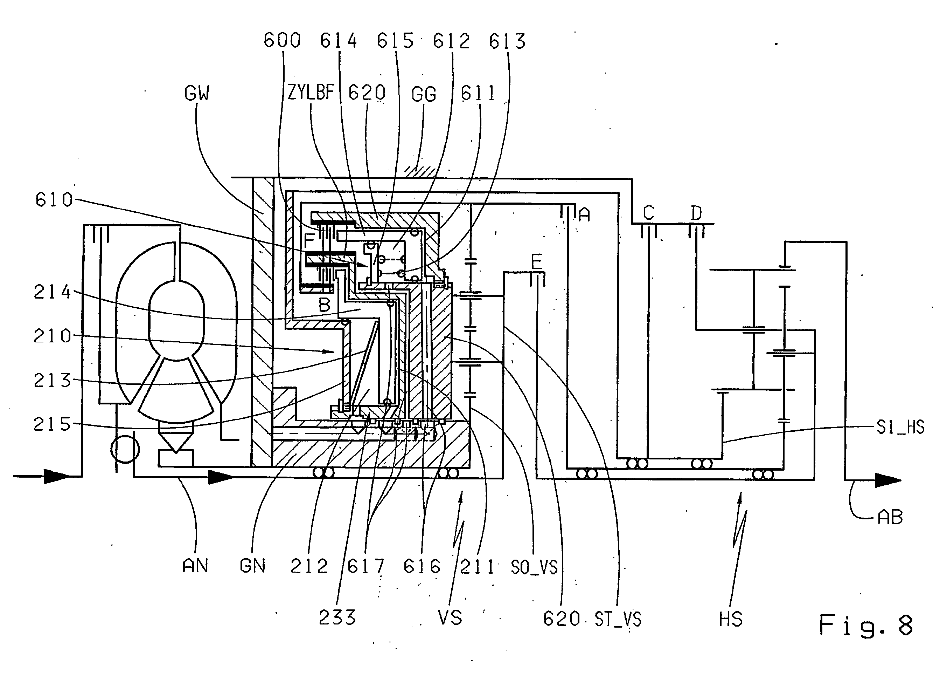

In Verbindung mit einer Anordnung, bei der das Lamellenpaket des sechsten Schaltelementes in axialer Richtung gesehen zumindest teilweise radial oberhalb eines Lamellenpaketes des zweiten Schaltelementes angeordnet ist, ergeben sich insbesondere folgende sinnvolle Varianten, deren Merkmale zumindest zum Teil auch miteinander kombiniert sein können:
- das Lamellenpaket und die Servoeinrichtung des zweiten Schaltelementes sind zumindest weitgehend innerhalb eines Kupplungsraumes des sechsten Schaltelementes angeordnet, der durch einen Außenlamellenträger des sechsten Schaltelementes gebildet wird *[**Fig. 6-9**]*;
- die Servoeinrichtungen des zweiten und sechsten Schaltelementes sind axial benachbart zum Vorschaltradsatz angeordnet, wobei die Lamellenpakete des zweiten und sechsten Schaltelementes auf der dem Vorschaltradsatzes abgewandten Seite der Servoeinrichtungen des zweiten und sechsten Schaltelementes angeordnet sind *[**Fig.6-9**]*;
- der Druckraum der Servoeinrichtung des sechsten Schaltelementes ist näher am Vorschaltradsatz angeordnet als der Druckraum der Servoeinrichtung des zweiten Schaltelementes *[**Fig. 6**]*;
- der Druckraum der Servoeinrichtung des zweiten Schaltelementes ist axial benachbart zu dem Druckausgleichsraum der Servoeinrichtung des sechsten Schaltelementes angeordnet, insbesondere getrennt von diesem durch eine Mantelfläche des für das zweite und sechste Schaltelement gemeinsamen Lamellenträgers *[**Fig. 6**]*;
- die Druckräume der Servoeinrichtungen des zweiten und sechsten Schaltelementes sind zueinander axial benachbart angeordnet, insbesondere getrennt voneinander durch eine Mantelfläche des für das zweite und sechste Schaltelement gemeinsamen Lamellenträgers *[**Fig. 7**]*;
- der Druckraum der Servoeinrichtung des sechsten Schaltelementes ist in axialer Richtung gesehen zumindest überwiegend radial über dem Druckraum der Servoeinrichtung des zweiten Schaltelementes angeordnet *[**Fig. 7-9**]*;
- der Druckausgleichsraum der Servoeinrichtung des sechsten Schaltelementes ist in axialer Richtung gesehen zumindest überwiegend radial über dem Druckausgleichsraum der Servoeinrichtung des zweiten Schaltelementes angeordnet *[**Fig. 7-9**]*;
- der Druckausgleichsraum der Servoeinrichtung des sechsten Schaltelementes wird über den Druckausgleichsraum der Servoeinrichtung des zweiten Schaltelementes mit Schmiermittel befüllt *[**Fig. 7**+8]*;
- der Druckraum der Servoeinrichtung des zweiten Schaltelementes ist näher am Vorschaltradsatz angeordnet als der Druckausgleichsraum der Servoeinrichtung des zweiten Schaltelementes *[**Fig. 6-9**]*;
- der Druckraum der Servoeinrichtung des sechsten Schaltelementes ist näher am Vorschaltradsatz angeordnet als der Druckausgleichsraum der Servoeinrichtung des sechsten Schaltelementes *[**Fig. 7-9**]*.

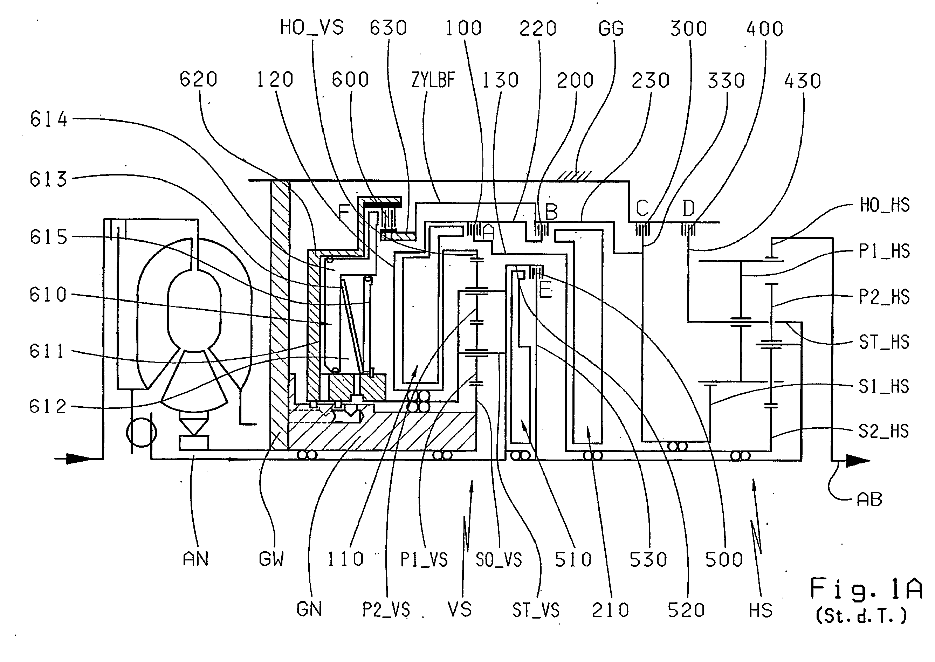

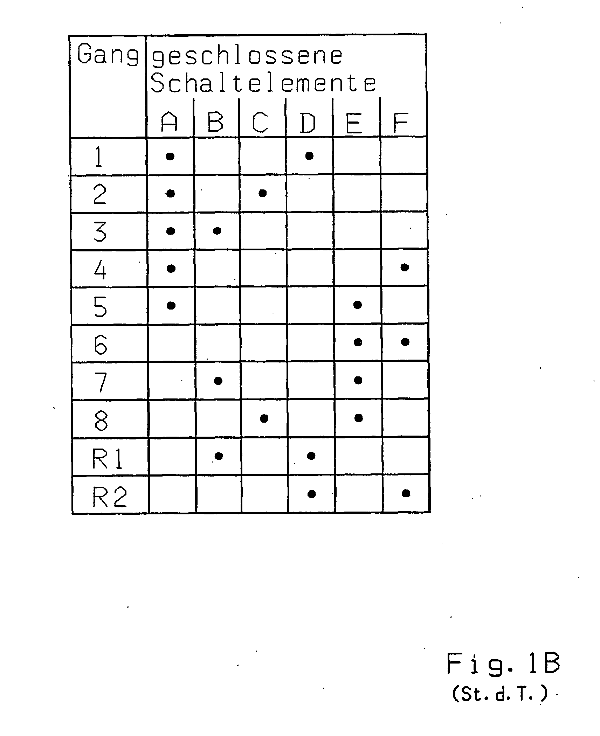

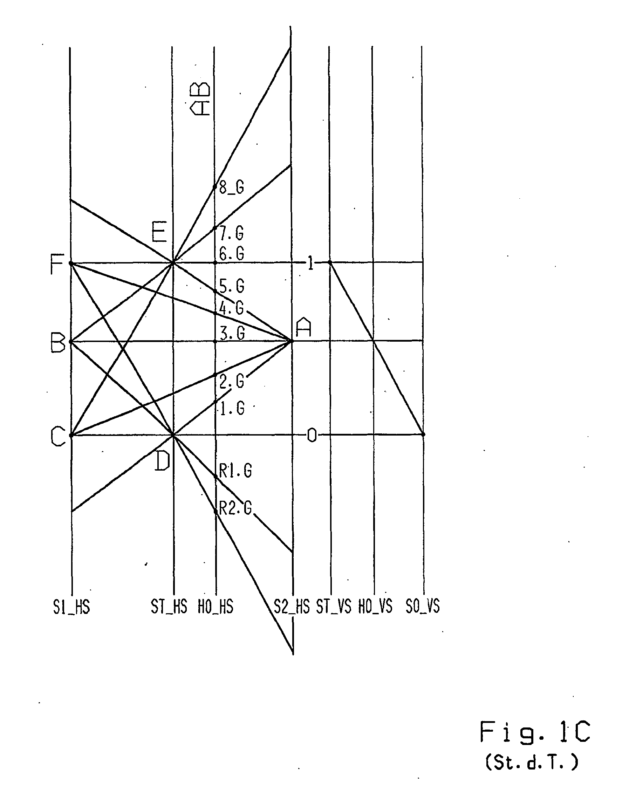

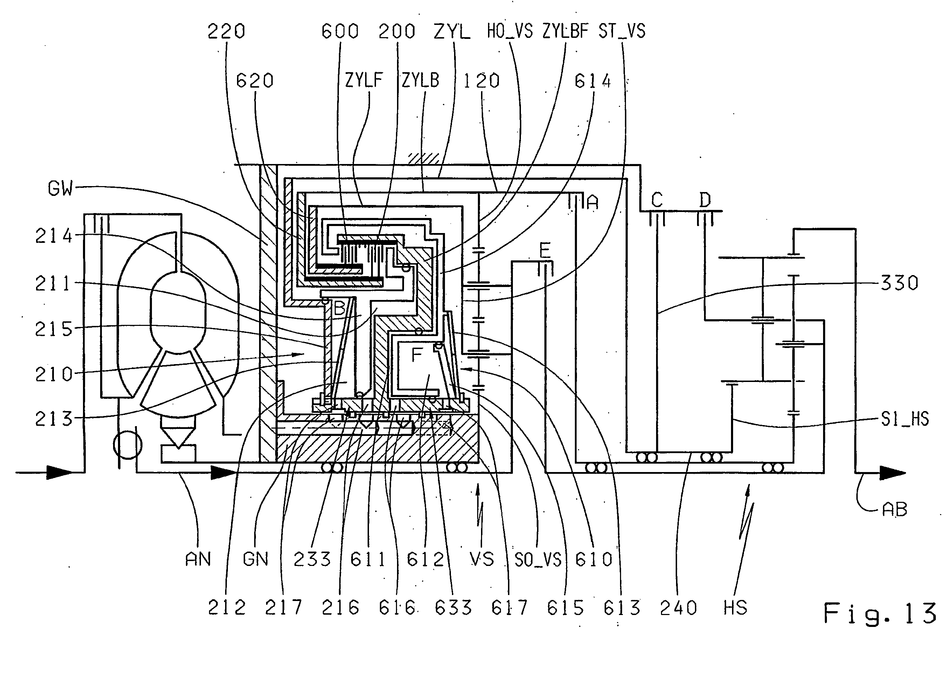

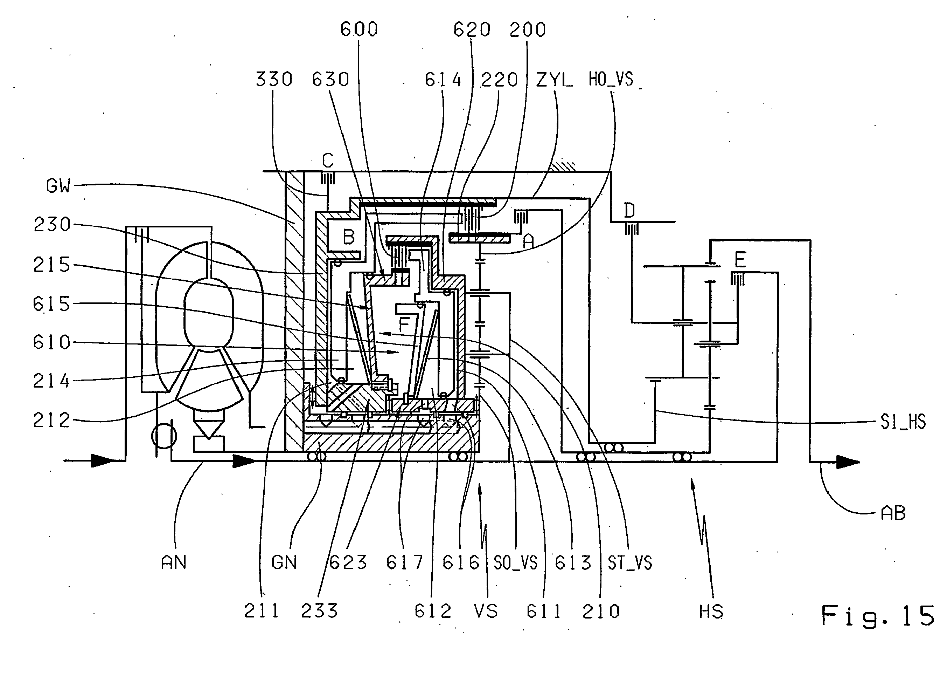

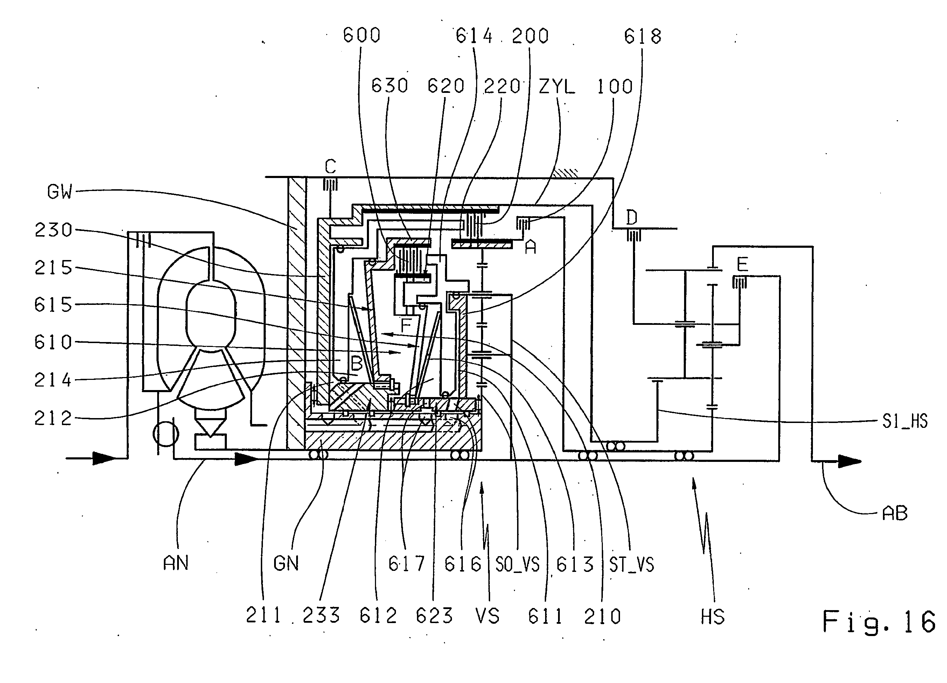

In Verbindung mit einer Anordnung, bei der die Lamellenpakete des zweiten und sechsten Schaltelementes axial nebeneinander angeordnet sind, ergeben sich insbesondere folgende sinnvolle Varianten, deren Merkmale zumindest zum Teil auch miteinander kombiniert sein können:
- das Lamellenpaket und die Servoeinrichtung des zweiten Schaltelementes sind zumindest weitgehend innerhalb eines Kupplungsraumes des sechsten Schaltelementes angeordnet, der durch einen Außenlamellenträger des sechsten Schaltelementes gebildet wird *[**Fig. 13**]*;
- das Lamellenpaket und die Servoeinrichtung des sechsten Schaltelementes sind vollständig innerhalb eines Kupplungsraumes des zweiten Schaltelementes angeordnet, der durch einen Außenlamellenträger des zweiten Schaltelementes gebildet wird *[**Fig. 14-16**]*;
- die Servoeinrichtungen des zweiten und sechsten Schaltelementes sind zumindest überwiegend auf der dem Vorschaltradsatzes abgewandten Seite des ihr jeweils zugeordneten Lamellenpaketes des zweiten bzw. sechsten Schaltelementes angeordnet *[**Fig. 10-12**+14]*;
- die Servoeinrichtung des zweiten Schaltelementes ist zumindest überwiegend auf der dem Vorschaltradsatzes abgewandten Seite des Lamellenpaketes des zweiten Schaltelementes angeordnet, und die Servoeinrichtung des sechsten Schaltelementes ist zumindest überwiegend auf der dem Vorschaltradsatzes zugewandten Seite des Lamellenpaketes des sechsten Schaltelementes angeordnet *[**Fig. 15**+16]*;
- der Druckraum der Servoeinrichtung des zweiten Schaltelementes ist näher am Vorschaltradsatz angeordnet als der Druckraum der Servoeinrichtung des sechsten Schaltelementes *[**Fig. 10-12**]*;
- der Druckraum der Servoeinrichtung des zweiten Schaltelementes ist näher am Vorschaltradsatz angeordnet als der Druckausgleichsraum der Servoeinrichtung des zweiten Schaltelementes *[**Fig. 13**]*;
- der Druckraum der Servoeinrichtung des zweiten Schaltelementes ist axial benachbart neben dem Druckausgleichraum der Servoeinrichtung des sechsten Schaltelementes angeordnet *[**Fig. 10-12**]*;
- der Druckraum der Servoeinrichtung des sechsten Schaltelementes ist näher am Vorschaltradsatz angeordnet als der Druckraum der Servoeinrichtung des zweiten Schaltelementes *[**Fig. 13-16**]*;
- der Druckraum der Servoeinrichtung des sechsten Schaltelementes ist näher am Vorschaltradsatz angeordnet als der Druckausgleichsraum der Servoeinrichtung des sechsten Schaltelementes *[**Fig. 15**+16]*;
- der Druckausgleichsraum der Servoeinrichtung des sechsten Schaltelementes ist näher am Vorschaltradsatz angeordnet als der Druckraum der Servoeinrichtung des sechsten Schaltelementes *[**Fig. 10-14**]*;
- der Druckraum der Servoeinrichtung des sechsten Schaltelementes ist axial benachbart neben dem Druckausgleichraum der Servoeinrichtung des zweiten Schaltelementes angeordnet *[**Fig. 14**]*;
- die Druckräume der Servoeinrichtungen des zweiten und sechsten Schaltelementes sind axial nebeneinander angeordnet, insbesondere getrennt voneinander durch eine Mantelfläche des für das zweite und sechste Schaltelement gemeinsamen Lamellenträgers *[**Fig. 13**]*;
- der Kolben der Servoeinrichtung des sechsten Schaltelementes (bzw. ein mit diesem Kolben verbundenes Betätigungselement zur Betätigung der Lamellen des sechsten Schaltelementes) umgreift die Lamellenpakete des zweiten und sechsten Schaltelementes in axialer Richtung radial außen *[**Fig. 1-3**]*;
- die Druckausgleichsräume der Servoeinrichtungen des zweiten und sechsten Schaltelementes sind axial nebeneinander angeordnet *[**Fig. 15**+16]*.

Die Erfindung wird im folgenden anhand der Figuren näher erläutert, wobei die Bezugszeichen vergleichbarer Bauelemente in allen Figuren auch gleichartig bezeichnet sind. Es zeigen:
- Fig. 1A ein Getriebeschema gemäß dem gattungsgemäßen Stand der Technik;
- Fig. 1B ein Schaltschema des Getriebes gemäß Fig. 1A;
- Fig. 1C ein Drehzahlplan des Getriebes gemäß Fig. 1 A;
- Fig. 2 ein beispielhaftes erstes erfindungsgemäßes Getriebeschema;
- Fig. 3 ein beispielhaftes zweites erfindungsgemäßes Getriebeschema;
- Fig. 4 ein beispielhaftes drittes erfindungsgemäßes Getriebeschema;
- Fig. 5 ein beispielhaftes viertes erfindungsgemäßes Getriebeschema;
- Fig. 6 ein beispielhaftes fünftes erfindungsgemäßes Getriebeschema;
- Fig. 7 ein beispielhaftes sechstes erfindungsgemäßes Getriebeschema;
- Fig. 8 ein beispielhaftes siebtes erfindungsgemäßes Getriebeschema;
- Fig. 9 ein beispielhaftes achtes erfindungsgemäßes Getriebeschema;
- Fig. 10 ein beispielhaftes neuntes erfindungsgemäßes Getriebeschema;
- Fig. 11 ein beispielhaftes zehntes erfindungsgemäßes Getriebeschema;
- Fig. 12A ein erster Teilschnitt einer beispielhaften Getriebekonstruktion mit dem Getriebeschema gemäß Fig. 11;
- Fig. 12B ein zweiter Teilschnitt einer beispielhaften Getriebekonstruktion mit dem Getriebeschema gemäß Fig. 11;
- Fig. 13 ein beispielhaftes elftes erfindungsgemäßes Getriebeschema;
- Fig. 14 ein beispielhaftes zwölftes erfindungsgemäßes Getriebeschema;
- Fig. 15 ein beispielhaftes dreizehntes erfindungsgemäßes Getriebeschema;
- Fig. 16 ein beispielhaftes vierzehntes erfindungsgemäßes Getriebeschema;
- Fig. 17 ein beispielhaftes fünfzehntes erfindungsgemäßes Getriebeschema, basierend auf dem Getriebeschema gemäß Fig. 2, mit einem ersten alternativen Hauptradsatz;
- Fig. 18 ein beispielhaftes sechzehntes erfindungsgemäßes Getriebeschema, basierend auf dem Getriebeschema gemäß Fig. 2, mit einem zweiten alternativen Hauptradsatz;
- Fig. 19 ein beispielhaftes siebzehntes erfindungsgemäßes Getriebeschema, basierend auf dem Getriebeschema gemäß Fig. 18;
- Fig. 20 ein beispielhaftes achtzehntes erfindungsgemäßes Getriebeschema, basierend auf dem Getriebeschema gemäß Fig. 18, mit einem dritten alternativen Hauptradsatz;
- Fig. 21A ein beispielhaftes neunzehntes erfindungsgemäßes Getriebeschema, basierend auf dem Getriebeschema gemäß Fig. 18, mit einem vierten alternativen Hauptradsatz; und
- Fig. 21B ein Drehzahlplan des Getriebes gemäß Fig. 21A.

Zum besseren Verständnis wird zunächst der der Erfindung zugrundeliegende Stand der Technik erläutert. Fig. 1A zeigt dabei das Getriebeschema des gattungsgemäßen Standes der Technik gemäß DE 10318565.8, Fig. 1B das entsprechende Schaltschema. In Fig. 1A ist mit AN eine Antriebswelle des Automatgetriebes bezeichnet, die mit einem (nicht dargestellten) Antriebsmotor des Automatgetriebes wirkverbunden ist, im dargestellten Beispiel über einen Drehmomentwandler mit Torsionsdämpfer und Wandlerüberbrückungskupplung. Mit AB ist eine koaxial zur Antriebswelle AN angeordnete Abtriebswelle des Automatgetriebes bezeichnet, die mit mindestens einer Antriebsachse des Kraftfahrzeugs wirkverbunden ist. Selbstverständlich könnte anstelle des Drehmomentwandlers auch eine Reibkupplung als Anfahrelement des Automatgetriebes zwischen Antriebsmotor und Automatgetriebe angeordnet sein. Auch könnte der Antriebsmotor nur über einen einfachen Torsionsdämpfer oder ein Zweimassenschwungrad oder eine starre Welle mit der Antriebswelle AN des Getriebes verbunden sein, wobei in diesem Fall ein innerhalb des Automatgetriebes angeordnetes Reibschaltelement als Anfahrelement des Getriebes ausgebildet sein muß.

Das Automatgetriebe weist einen Vorschaltradsatz VS und einen koaxial neben (aber nicht unmittelbar neben) diesem Vorschaltradsatz VS angeordneten Hauptradsatz HS auf. Der Vorschaltradsatz VS ist als Plus-Planetenradsatz in Doppelplanetenbauweise ausgeführt, mit einem Hohlrad HO_VS, mit einem Sonnenrad SO_VS, sowie mit einem aus zwei Einzelstegen gebildeten Steg ST_VS, an dem innere Planetenräder P1_VS, die mit dem Sonnenrad SO_VS kämmen, und äußere Planetenräder P2_VS, die mit den inneren Planetenrädern P1_VS und dem Hohlrad HO_VS kämmen, verdrehbar gelagert sind. Dabei arbeitet dieser Vorschaltradsatz VS als nicht schaltbare Reduzierstufe und erzeugt eine Ausgangsdrehzahl, die vom Betrag her kleiner ist als eine Eingangsdrehzahl der Antriebswelle AN des Automatgetriebes. Hierzu ist das Sonnenrad SO_VS des Vorschaltradsatzes VS an einem Getriebegehäuse GG festgesetzt und der Steg ST_VS ständig mit der Antriebswelle AN verbunden. Das Hohlrad HO_VS bildet also das Ausgangselement des Vorschaltradsatzes VS und ist über zwei Schaltelemente A, B mit einzelnen Eingangselementen des Hauptradsatzes HS verbindbar.

Der Hauptradsatz HS ist als gekoppeltes Zweisteg-Vierwellen-Planetengetriebe ausgebildet, mit drei nicht miteinander gekoppelten Eingangselementen und einem Ausgangselement, in Bauform eines Ravigneaux-Radsatzes mit zwei Sonnenrädern S1_HS und S2_HS, einem Hohlrad HO_HS sowie einem gekoppelten Steg ST_HS, an dem lange Planetenräder P1_HS, die mit dem ersten Sonnenrad S1_HS und dem Hohlrad HO_HS kämmen, und kurze Planetenräder P2_HS, die mit dem zweiten Sonnenrad S2_HS und den langen Planetenrädern P1_HS kämmen, verdrehbar gelagert sind. Dabei bildet das erste Sonnenrad S1_HS das erste Eingangselement des Hauptradsatzes HS, das zweite Sonnenrad S2_HS das zweite Eingangselement des Hauptradsatzes HS, der gekoppelte Steg ST_HS das dritte Eingangselement des Hauptradsatzes HS und das Hohlrad HO_HS das Ausgangselement des Hauptradsatzes HS.

Das Automatgetriebe weist insgesamt sechs Schaltelemente A bis F auf. Die Schaltelemente A, B, E und F sind als Kupplung ausgebildet, die Schaltelemente C und D als Bremse. Hierzu ist das zweite Sonnenrad S2_HS des Hauptradsatzes HS über das erste Schaltelement A mit dem Hohlrad HO_VS des Vorschaltradsatzes VS verbindbar. Weiterhin ist hierzu das erste Sonnenrad S1_HS des Hauptradsatzes HS über das zweite Schaltelement B mit dem Hohlrad HO_VS des Vorschaltradsatzes VS verbindbar, über das dritte Schaltelement C an dem Getriebegehäuse GG festsetzbar und über das sechste Schaltelement F mit der Antriebswelle AN verbindbar. Weiterhin ist hierzu der Steg ST_HS des Hauptradsatzes HS über das vierte Schaltelement D an dem Getriebegehäuse GG festsetzbar und über das fünfte Schaltelement E mit der Antriebswelle AN verbindbar. Infolge dieser Anbindung der einzelnen Elemente des Hauptradsatzes HS an die einzelnen Schaltelemente ist der Steg ST_HS des Hautradsatzes HS also durch ein gleichzeitiges Schließen des fünften und sechsten Schaltelementes E, F auch mit dem ersten Sonnenrad S1_HS des Hauptradsatzes HS verbindbar. Das Hohlrad HO_HS des Hauptradsatzes HS ist ständig und ausschließlich mit der Abtriebswelle AB verbunden.

Fig. 1B zeigt ein Schaltschema des in Fig. 1A dargestellten Mehrstufen-Automatgetriebes. Es sind insgesamt acht Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Im ersten Gang "1" sind Kupplung A und Bremse D geschlossen, im zweiten Gang "2" Kupplung A und Bremse C, im dritten Gang "3" die Kupplungen A und B, im vierten Gang "4" die Kupplungen A und F, im fünften Gang "5" die Kupplungen A und E, im sechsten Gang "6" die Kupplungen E und F, im siebten Gang "7" die Kupplungen B und E, und im achten Gang "8" Bremse C und Kupplung E. In einem ersten Rückwärtsgang "R1" sind Kupplung B und Bremse D geschlossen. Es kann auch ein zweiter Rückwärtsgang "R2" vorgesehen sein, in dem Kupplung F und Bremse D geschlossen sind. Fig. 1C zeigt einen Drehzahlplan des in Fig. 1 A dargestellten Mehrstufen-Automatgetriebes.

Zurückkommend auf Fig. 1A, sind die Lamellenpakete sowie die Ein- und Ausgangselemente der Schaltelemente einheitlich bezeichnet. So ist das Lamellenpaket des ersten Schaltelementes A mit 100 bezeichnet, das Eingangselement des ersten Schaltelementes A mit 120, das Ausgangselement des ersten Schaltelementes A mit 130, sowie eine Servoeinrichtung zur Betätigung des Lamellenpaketes 100 des ersten Schaltelementes A mit 110. Entsprechend sind die Lamellenpakete der anderen Schaltelemente B, C, D, E und F mit 200, 300, 400, 500 und 600 bezeichnet, die Eingangselemente der anderen Schaltelemente B, C, D, E und F mit 220, 320, 420, 520 und 620. Entsprechend sind auch die Ausgangselemente der anderen Kupplungen B, E und F mit 230, 530 und 630 bezeichnet, sowie die Servoeinrichtungen der anderen Kupplungen B, E und F zum Betätigen deren jeweiligen Lamellenpakete 200 bzw. 500 bzw. 600 mit 210, 510 und 610.

Hinsichtlich der räumlichen Anordnung der Schaltelemente und Radsätze relativ zueinander innerhalb des mit GG bezeichneten Getriebegehäuses lehrt die DE 10318565.8 folgendes: Das als Kupplung ausgebildete fünfte Schaltelement E ist räumlich gesehen axial zwischen Vorschaltradsatz VS und Hauptradsatz HS angeordnet, axial unmittelbar angrenzend an den Vorschaltradsatz VS. Das ebenfalls als Kupplung ausgebildete zweite Schaltelement B ist ebenfalls axial zwischen Vorschaltradsatz VS und Hauptradsatz HS angeordnet, wobei das Lamellenpaket 200 dieser Kupplung B räumlich gesehen in etwa radial über dem Lamellenpaket 500 der Kupplung E angeordnet ist und die Servoeinrichtung 210 der Kupplung B axial an die Kupplung E auf deren dem Vorschaltradsatz VS abgewandten Seite angrenzt. Axial in Richtung Hauptradsatz HS gesehen schließen sich an die Kupplung B zuerst das als Bremse ausgebildete dritte Schaltelement C, dann das ebenfalls als Bremse ausgebildete vierte Schaltelement D und dann der Hauptradsatz HS an. Das Lamellenpaket 100 des als Kupplung ausgebildeten ersten Schaltelementes A ist räumlich gesehen in etwa über dem Vorschaltradsatz VS angeordnet. Die Servoeinrichtung 110 dieser Kupplung A ist zumindest überwiegend auf der dem Hauptradsatz HS abgewandten Seite des Vorschaltradsatzes VS angeordnet. Auf der dem Vorschaltradsatz VS abgewandten Seite der Servoeinrichtung 110 der Kupplung A, räumlich gesehen axial zwischen der Kupplung A und einer antriebsseitigen getriebegehäusefesten Gehäusewand GW, also auf der dem Hauptradsatz HS abgewandten Seite von Kupplung A und Vorschaltradsatz VS, ist das als Kupplung ausgebildete sechste Schaltelement F angeordnet.

Als Ausführungsbeispiel für eine Servoeinrichtung eines Schaltelementes ist in Fig. 1A die Servoeinrichtung 610 des sechsten Schaltelementes F näher detailliert. So ist diese Servoeinrichtung 610 innerhalb eines zylinderförmigen Lamellenträgers angeordnet, der das Eingangselement 620 der Kupplung F bildet und entsprechend stets mit Drehzahl der Antriebswelle AN des Getriebes rotiert. Die Servoeinrichtung 610 weist einen Druckraum 611 auf, der durch einen Mantelflächenabschnitt des Lamellenträgers der Kupplung F und einen Kolben 614 der Servoeinrichtung 610 gebildet wird. Bei einer Druckbeaufschlagung dieses Druckraums 611 bewegt sich der Kolben 614 gegen die Kraft eines hier beispielhaft als Tellerfeder ausgebildeten Rückstellelementes 613 der Servoeinrichtung 610 axial in Richtung des Vorschaltradsatzes VS und betätigt bzw. schließt das Lamellenpaket 600 der Kupplung F. Zur vorzugsweise vollständigen Kompensation eines dynamischen Druckes des rotierenden Druckraumes 611 weist die Servoeinrichtung 610 zusätzlich einen mit Schmiermittel drucklos befüllbaren Druckausgleichsraum 612 auf, der durch eine Fläche des Kolbens 614 und eine Stauscheibe 615 gebildet wird. Das Eingangselement 620 ist auf einer getriebegehäusefesten Nabe GN verdrehbar gelagert, die sich ausgehend von der getriebegehäusefesten Gehäusewand GW im Innenraum des Getriebegehäuses GG axial in Richtung des Vorschaltradsatzes VS bis zum Sonnenrad SO_VS des Vorschaltradsatzes VS erstreckt und mit diesem Sonnenrad SO_VS verdrehfest verbunden ist. Entsprechend weist diese getriebegehäusefeste Nabe GN auch Kanäle zur Druck- und Schmiermittelzuführung zum Druckraum bzw. Druckausgleichsraum der Kupplung F auf.

Anhand Fig. 2 wird nun ein erstes beispielhaftes Getriebeschema gemäß der vorliegenden Erfindung erläutert. Die Änderungen gegenüber dem gattungsgemäßen Stand der Technik nach Fig. 1A betreffen im wesentlichen die räumliche Anordnung und konstruktive Ausbildung der Kupplungen B, E und A. Ansonsten entspricht der Aufbau des Getriebes mit der Antriebswelle AN und der koaxial zu dieser verlaufenden Abtriebswelle AB, mit dem antriebsnahen Vorschaltradsatz VS und dem koaxial neben diesem angeordneten abtriebsnahen Hauptradsatz HS, mit der an den Vorschaltradsatz VS auf dessen dem Hauptradsatz HS zugewandten Seite unmittelbar angrenzenden Kupplung E, sowie mit den beiden hauptradsatznahen Bremsen C und D im wesentlichen dem in Fig. 1A dargestellten Getriebe.

Die beiden Kupplungen B und F bilden nunmehr eine fertigungstechnisch einfach vormontierbare Baugruppe, die axial zwischen dem Vorschaltradsatz VS und einer einem nicht näher dargestellten, mit der Antriebswelle AN wirkverbundenen Antriebsmotor des Getriebes zugewandten getriebegehäusefesten Gehäusewand GW angeordnet ist, also auf der dem Hauptradsatz HS abgewandten Seite des Vorschaltradsatzes VS und unmittelbar angrenzend an Vorschaltradsatz VS und Gehäusewand GW. Selbstverständlich können Gehäusewand GW und Getriebegehäuse GG auch einstückig ausgeführt sein. Dabei umfaßt diese Baugruppe einen für beide Kupplungen B, F gemeinsamen Lamellenträger ZYLBF, die Lamellenpakete 200, 600 der beiden Kupplungen B, F, sowie die Servoeinrichtungen 210, 610 zum Betätigen dieser Lamellenpakete 200, 600. Dieser Lamellenträger ZYLBF bildet für beide Kupplungen B, F deren Ausgangselement und ist entsprechend der vorgegebenen kinematischen Kopplung mit dem ersten Eingangselement (also hier dem ersten Sonnenrad S1_HS) des Hauptradsatzes HS verdrehfest verbunden, was später noch im Detail erläutert wird. Für die Kupplung F ist der Lamellenträger ZYLBF als Außenlamellenträger zur Aufnahme von vorzugsweise als außenverzahnte Stahllamellen ausgebildeten Außenlamellen des Lamellenpaketes 600 dieser Kupplung F ausgebildet, für die Kupplung B als Innenlamellenträger zur Aufnahme von vorzugsweise als innenverzahnte Belaglamellen ausgebildeten Innenlamellen des Lamellenpaketes 200 dieser Kupplung B. Räumlich gesehen ist das Lamellenpaket 200 der Kupplung B in einem Bereich radial über dem Lamellenpaket 600 der Kupplung F angeordnet. Entsprechend ist das Eingangselement 620 der Kupplung F als Innenlamellenträger zur Aufnahme von vorzugsweise als innenverzahnte Belaglamellen ausgeführten Innenlamellen des Lamellenpaketes 600 dieser Kupplung F ausgebildet und mit einem hauptradsatzfernen Stegblech des gekoppelten Stegs ST_VS des Vorschaltradsatzes VS verdrehfest verbunden, wobei dieser gekoppelte Steg ST_VS - wie in Fig. 1A - auf seiner hauptradsatznahen Seite mit der Antriebswelle AN verbunden ist. Selbstverständlich können das genannte Stegblech und der genannte Innenlamellenträger 620 auch einstückig ausgebildet sein. Das Eingangselement 220 der Kupplung B ist als Außenlamellenträger zur Aufnahme von vorzugsweise als außenverzahnte Stahllamellen ausgeführten Außenlamellen des Lamellenpaketes 200 dieser Kupplung B ausgebildet und mit dem Hohlrad HO_VS des Vorschaltradsatzes VS verdrehfest verbunden. Selbstverständlich können Hohlrad HO_VS und der genannte Außenlamellenträger 220 auch einstückig ausgebildet sein. Selbstverständlich können anstelle der wechselseitig angeordneten Stahllamellen (ohne Reibbelag) und Belaglamellen auch einseitig mit einem Reibbelag belegte Stahllamellen verwendet werden, wobei dann jeweils eine außenverzahnte belegte Stahllamelle und eine innenverzahnte belegte Stahllamelle wechselseitig zu einem Lamellenpaket zusammengefügt werden müssen. Selbstverständlich können anstelle der vorgeschlagenen Stahllamellen auch Lamellen aus Carbon oder Kohlefasern oder anderen geeigneten Verbundwerkstoffen verwendet werden.

Geometrisch weist der für die Kupplungen B, F gemeinsame Lamellenträger ZYLBF eine im wesentlichen zylinderförmige Struktur auf und ist auf einer getriebegehäusefesten Nabe GN, die sich ausgehend von der Gehäusewand GW in den Getriebeinnenraum axial in Richtung Vorschaltradsatz VS erstreckt, verdrehbar gelagert. An dieser Nabe GN ist das Sonnenrad SO_VS des Vorschaltradsatzes VS über eine geeignete Verbindung festgesetzt. Selbstverständlich können Nabe GN und Gehäusewand GW auch einstückig ausgeführt sein. Beispielsweise kann die Nabe GN auch eine Leitradwelle eines im Kraftfluß zwischen Antriebswelle AN und Antriebsmotor des Getriebes angeordneten Drehmomentwandlers sein. Am Außendurchmesser des Lamellenträgers ZYLBF ist ein zylindrischer Abschnitt vorgesehen, an dessen Innendurchmesser die Außenlamellen des Lamellenpaketes 600 der Kupplung F und an dessen Außendurchmesser die Innenlamellen des Lamellenpaketes 200 angeordnet sind, wobei beide Lamellenpakete 600, 200 axial an den Vorschaltradsatz VS angrenzen. Ausgehend vom vorschaltradsatzfernen Ende des genannten zylindrischen Abschnitts des Lamellenträgers ZYLBF, also auf der vorschaltradsatzfernen Seite des Lamellenpaketes 600, erstreckt sich ein zumindest weitgehend scheibenförmiger Abschnitt des Lamellenträgers ZYLBF radial nach innen bis zur Nabe des Lamellenträgers ZYLBF. Dabei ist diese Nabe in zwei Nabenabschnitte 633 und 233 unterteilt. Ausgehend vom Innendurchmesser des scheibenförmigen Abschnitts des Lamellenträgers ZYLBF erstreckt sich der Nabenabschnitt 633 axial in Richtung Vorschaltradsatz VS und ist - wie aus der gewählten Nomenklatur ersichtlich - dem Ausgangselement der Kupplung F zugeordnet. Der andere Nabenabschnitt 233 ist dem Ausgangselement der Kupplung B zugeordnet und erstreckt sich, ausgehend vom Innendurchmesser des scheibenförmigen Abschnitts des Lamellenträgers ZYLBF, axial in Richtung Gehäusewand GW.

Die Servoeinrichtung 610 der Kupplung F, umfassend einen Druckraum 611, einen Druckausgleichsraum 612, einen Kolben 614, ein Rückstellelement 613 und eine Stauscheibe 615, ist vollständig innerhalb eines Zylinderraums angeordnet, der durch den Lamellenträger ZYLBF gebildet wird, im wesentlichen radial oberhalb des Nabenabschnitts 633. Der Kolben 614 ist am Lamellenträger ZYLBF axial verschiebbar gelagert. Entsprechend rotiert die Servoeinrichtung 610 ständig mit Drehzahl des ersten Eingangselementes (also hier des ersten Sonnenrades S1_HS) des Hauptradsatzes HS. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, wobei dieser Druckausgleichsraum 612 näher am Vorschaltradsatz VS (bzw. Hauptradsatz HS) angeordnet ist als der genannte Druckraum 611. Dabei wird der Druckraum 611 durch eine Mantelfläche des Lamellenträgers ZYLBF (und einen Teil dessen Nabenabschnitts 633) und den Kolben 614 gebildet. Der Druckausgleichsraum 612 wird gebildet durch den Kolben 614 und die Stauscheibe 615, welche axial an dem Nabenabschnitt 633 des Lamellenträgers ZYLBF fixiert und gegenüber dem Kolben 614 axial verschiebbar schmiermitteldicht abgedichtet ist. Der Kolben 614 ist über das hier beispielhaft als Tellerfeder ausgebildete Rückstellelement 613 axial gegen den Nabenabschnitt 633 des Lamellenträgers ZYLBF vorgespannt. Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613.

Räumlich gesehen ist die Servoeinrichtung 610 der Kupplung F näher an Haupt- und Vorschaltradsatz HS, VS angeordnet als die Servoeinrichtung 210 der Kupplung B. Dabei ist diese Servoeinrichtung 210 räumlich gesehen zumindest überwiegend in einem Bereich radial über dem zweiten Nabenabschnitt 233 des Lamellenträgers ZYLBF angeordnet und auch an dem Lamellenträger ZYLBF axial verschiebbar gelagert. Entsprechend rotiert auch die Servoeinrichtung 210 ständig mit Drehzahl des ersten Eingangselementes (also hier des ersten Sonnenrades S1_HS) des Hauptradsatzes HS. Die Servoeinrichtung 210 der Kupplung B umfasst einen Druckraum 211, einen Druckausgleichsraum 212, einen abschnittsweise meanderförmig ausgebildeten Kolben 214, ein Rückstellelement 213 und eine abschnittsweise zylindrische Stützscheibe 218. Zum Ausgleich des rotatorischen Drucks des rotierenden Druckraums 211 der Servoeinrichtung 210 ist ein dynamischer Druckausgleich mit dem Druckausgleichsraum 212 vorgesehen. Zur Bildung des Druckraums 211 ist die Stützscheibe 218 druckmitteldicht am gehäusewandnahen Ende des Nabenabschnitts 233 des Lamellenträgers ZYLBF mit diesem Nabenabschnitt 233 verdrehfest befestigt und axial gesichert, im dargestellten Beispiel über ein abgedichtetes Mitnahmeprofil und einen Sicherungsring. Der zylindrische Abschnitt der Stützscheibe 218 erstreckt sich dabei axial in Richtung Vorschaltradsatz VS. Der Kolben 214 der Servoeinrichtung 210 ist gegen diesen zylindrischen Abschnitt der Stützscheibe 218 und gegen den Nabenabschnitt 233 des Lamellenträgers ZYLBF axial verschiebbar druckmitteldicht abgedichtet und weist in diesem Bereich eine meanderförmige Kontur auf. Entsprechend wird der Druckraum 211 der Servoeinrichtung 210 durch den Kolben 214, den zylindrischen Abschnitt der Stützscheibe 218, den radial unterhalb dieses zylindrischen Abschnitts der Stützscheibe 218 befindlichen scheibenförmigen Abschnitt der Stützscheibe 218, sowie einen Teil des Nabenabschnitts 233 des Lamellenträgers ZYLBF gebildet. Zur Bildung des Druckausgleichsraums 212 der Servoeinrichtung 210 weist der Lamellenträger ZYLBF auf einem definierten Durchmesser größer dem Durchmesser des zylindrischen Abschnitt der Stützscheibe 218 einen zweiten zylindrischen Abschnitt auf, der sich ausgehend von dem scheibenförmigen Abschnitt des hier beispielhaft einstückigen Lamellenträgers ZYLBF axial in Richtung Gehäusewand GW erstreckt. Der in diesem Bereich meanderförmige Kolben 214 ist gegen diesen zweiten zylindrischen Abschnitt des Lamellenträgers ZYLBF axial verschiebbar schmiermitteldicht abgedichtet. Entsprechend wird der Druckausgleichsraum 212 durch den Kolben 214, den genannten zweiten zylindrischen Abschnitt des Lamellenträgers ZYLBF und den radial unterhalb dieses zweiten zylindrischen Abschnitts des Lamellenträgers ZYLBF befindlichen scheibenförmigen Abschnitt des Lamellenträgers ZYLBF gebildet. In seinem weiteren geometrischen Verlauf erstreckt sich der Kolben 214 zumindest weitgehend entlang der Außenkontur des radial oberem Bereichs des Lamellenträgers ZYLBF radial nach außen und axial in Richtung Vorschaltradsatz VS bis zu der vorschaltradsatzfernen Seite des ihm zugeordneten Lamellenpaketes 200 der Kupplung B. Axial vorgespannt wird der Kolben 214 durch das Rückstellelement 213, das hier beispielhaft als ein axial zwischen dem scheibenförmigen Abschnitt des Lamellenträgers ZYLBF und dem Kolben 214 angeordnetes Spiralfederpaket ausgebildet ist. Bei einer Beaufschlagung des Druckraums 211 mit Druckmittel zum Schließen der Kupplung B bewegt sich der Kolben 214 axial in Richtung Vorschaltradsatz VS (bzw. Hauptradsatz HS) und betätigt das ihm zugeordnete Lamellenpaket 200 gegen die Federkraft des Rückstellelementes 213. Der Kolben 214 umgreift also den für beide Kupplungen B, F gemeinsamen Lamellenträger ZYLBF fast vollständig.

Der Druckausgleichsraum 212 der Servoeinrichtung 210 der Kupplung B ist also näher am Vorschaltradsatz VS (bzw. Hauptradsatz HS) angeordnet als der Druckraum 211 dieser Servoeinrichtung 210, wobei der Druckausgleichsraum 212 der Kupplung B und der Druckraum 611 der Servoeinrichtung 610 der Kupplung F unmittelbar benachbart zueinander angeordnet und nur durch eine Mantelfläche des für beide Kupplungen B, F gemeinsamen Lamellenträgers ZYLBF voneinander getrennt sind.

Aufgrund der Lagerung des Lamellenträgers ZYLBF auf der getriebegehäusefesten Nabe GN ergibt sich eine konstruktiv relativ einfache Druck- und Schmiermittelzufuhr zu beiden Kupplungen B, F über entsprechende Kanäle bzw. Bohrungen, die abschnittsweise innerhalb der genannten Gehäusenabe GN und abschnittsweise innerhalb der Nabe des Lamellenträgers ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Wie aus Fig. 2 weiterhin ersichtlich, grenzt die Kupplung E axial unmittelbar an den Vorschaltradsatz VS an dessen dem Hauptradsatz HS zugewandten Seite an. Das Eingangselement 520 der Kupplung E ist mit dem hauptradsatznahen Stegblech des gekoppelten Stegs ST_VS des Vorschaltradsatzes VS und mit der Antriebswelle AN verbunden und beispielhaft als Außenlamellenträger zur Aufnahme von beispielsweise als außenverzahnte Stahllamellen ausgeführten Außenlamellen des Lamellenpaketes 500 der Kupplung E ausgebildet. Das Ausgangselement 530 der Kupplung E ist beispielhaft als weitgehend scheibenförmiger Innenlamellenträger zur Aufnahme von beispielsweise als innenverzahnte Belaglamellen ausgeführten Innenlamellen des Lamellenpaketes 500 der Kupplung E ausgeführt und über eine Stegwelle 540 mit dem dritten Eingangselement des Hauptradsatzes HS - hier also mit dem gekoppelten Steg ST_HS des Hauptradsatzes HS - verbunden, wobei die Stegwelle 540 den Hauptradsatz HS zentrisch durchgreift. Geometrisch ist das Lamellenpaket 500 der Kupplung E beispielhaft im Durchmesserbereich des Hohlrades HO_VS des Vorschaltradsatzes VS angeordnet. Sinnvollerweise ist eine Servoeinrichtung 510 zur Betätigung des Lamellenpaketes 500 innerhalb des Eingangselementes 520 der Kupplung E angeordnet. Zweckmäßigerweise weist diese hier zur Vereinfachung nur schematisch dargestellte Servoeinrichtung 510 auch einen dynamischen Druckausgleich auf, da sie stets mit Drehzahl der Antriebswelle AN rotiert.

In Richtung Hauptradsatz HS gesehen grenzt die Kupplung A axial an die Kupplung E an. Dabei übergreift das mit dem Hohlrad HO_VS des Vorschaltradsatzes VS verbundene Eingangselement 120 dieser Kupplung A die Kupplung E vollständig und ist hier beispielhaft als Außenlamellenträger zur Aufnahme von vorzugsweise als außenverzahnte Belaglamellen ausgeführten Außenlamellen des Lamellenpaketes 100 der Kupplung A ausgebildet. Entsprechend ist das Ausgangselement 130 der Kupplung A hier beispielhaft als weitgehend scheibenförmiger Innenlamellenträger zur Aufnahme von vorzugsweise als innenverzahnte Stahllamellen ausgeführten Innenlamellen des Lamellenpaketes 100 ausgebildet und über eine zweiten Sonnenwelle 140 mit dem zweiten Eingangselement - also hier dem zweiten Sonnenrad S2_HS - des Hauptradsatzes HS verbunden. Dabei umschließt diese zweite Sonnenwelle 140 die Stegwelle 540 abschnittsweise und durchgreift in ihrem axialen Verlauf das vorschaltradsatznahe erste Sonnenrad S1_HS des Hauptradsatzes HS zentrisch. Selbstverständlich können das zweite Sonnenrad S2_HS und die zweite Sonnenwelle 140 auch einstückig ausgeführt sein. Selbstverständlich können auch Ausgangselement (Innenlamellenträger) 130 der Kupplung A und zweite Sonnenwelle 140 einstückig ausgeführt sein, wobei die zweite Sonnenwelle 140 dann eine auf der Stegwelle 540 gelagerte Nabe des Ausgangselementes (Innenlamellenträger) 130 bildet. Im dargestellten Beispiel sind die Lamellenpakete 100, 200 der Kupplungen A, B auf einen zumindest ähnlichen Durchmesser angeordnet. Entsprechend kann auch ein für beide Kupplungen A, B gemeinsamer Lamellenträger als deren Eingangselement vorgesehen sein. Zur Betätigung des Lamellenpaketes 100 der Kupplung A ist eine Servoeinrichtung 110 vorgesehen, die hier beispielhaft auf der hauptradsatznahen Seite des Lamellenpakete 100 angeordnet ist und das Lamellenpaket 100 beim Schließen der Kupplung A axial in Richtung Vorschaltradsatz VS betätigt. Vorzugsweise weist diese hier zur Vereinfachung nur schematisch dargestellte Servoeinrichtung 110 auch einen dynamischen Druckausgleich auf, da die Servoeinrichtung 110 stets mit Drehzahl des zweiten Sonnenrades S2_HS des Hauptradsatzes HS rotiert. In einer anderen Anordnungsvariante kann die Servoeinrichtung 110 der Kupplung A auch auf der vorschaltradsatznahen Seite des ihr zugeordneten Lamellenpaketes 100 angeordnet sein, wobei dann dieses Lamellenpaket 100 beim Schließen der Kupplung A axial in Richtung Hauptradsatz HS betätigt wird.

Selbstverständlich können auch für die Kupplungen E und A anstelle der im Ausführungsbeispiel vorgesehenen wechselseitig angeordneten Stahllamellen (ohne Reibbelag) und Belaglamellen auch einseitig mit einem Reibbelag belegte Stahllamellen verwendet werden, wobei dann jeweils eine außenverzahnte belegte Stahllamelle und eine innenverzahnte belegte Stahllamelle wechselseitig zu einem Lamellenpaket zusammengefügt werden müssen. Selbstverständlich können anstelle der vorgeschlagenen Stahllamellen auch Lamellen aus Carbon oder Kohlefasern oder anderen geeigneten Verbundwerkstoffen verwendet werden.

Wie bereits erwähnt, bildet der für beide Kupplungen B, F gemeinsame Lamellenträger ZYLBF das mit dem ersten Eingangselement des Hauptradsatzes HS verbundene Ausgangselement für beide Kupplungen B, F. Die Drehzahl- und Drehmomentübertragung zwischen diesem Lamellenträger ZYLBF zum ersten Sonnenrad S1_HS des Hauptradsatzes HS erfolgt dabei über die Stützscheibe 218, ein zylinderförmiges Verbindungselement ZYL und eine erste Sonnenwelle 240. Die Stützscheibe 218 ist nahe der Gehäusewand GW mit der Nabe des Lamellenträgers ZYLBF verdrehfest verbunden, erstreckt sich axial angrenzend an diese Gehäusewand GW radial nach außen, und ist im Bereich ihres Außendurchmessers mit dem zylinderförmigen Verbindungselement ZYL verbunden, beispielsweise über ein Mitnahmeprofil. Dieses zylinderförmige Verbindungselement ZYL wiederum ist geometrische als ein in Richtung Gehäusewand GW hin geöffneter Topf ausgebildet, mit einer ringförmigen Mantelfläche, welche die Baugruppe der beiden Kupplungen B, F, den Vorschaltradsatz VS und die beiden Kupplungen E und A in axialer Richtung radial vollständig übergreift, sowie mit einem scheibenförmigen Topfboden, der sich neben der Kupplung A auf deren dem Hauptradsatz HS zugewandten Seite radial nach innen erstreckt bis knapp oberhalb der zweiten Sonnenwelle 140. In seinem Nabenbereich ist das zylinderförmige Verbindungselement ZYL mit der ersten Sonnenwelle 240 verdrehfest verbunden, welche wiederum mit dem Ausgangselement 330 der Bremse C und dem vorschaltradsatznahen ersten Sonnenrad S1_HS des Hauptradsatzes HS verbunden ist und in ihrem axialen Verlauf die zweite Sonnenwelle 140 abschnittsweise umschließt.

Anhand Fig. 3 wird nun ein zweites beispielhaftes Getriebeschema gemäß der vorliegenden Erfindung erläutert, basierend auf dem zuvor anhand Fig. 2 beschriebenen ersten erfindungsgemäßen Getriebeschema. Die Änderungen gegenüber Fig. 2 betreffen lediglich die konstruktive Ausgestaltung des für die beiden Kupplungen B, F gemeinsamen Lamellenträgers ZYLBF und die räumliche Lage der Servoeinrichtungen 210, 610 dieser beiden Kupplungen B, F. Insofern kann auf die nochmalige Beschreibung der übrigen Getriebebauelemente an dieser Stelle verzichtet werden.

Wie aus Fig. 3 ersichtlich, umfasst die Baugruppe mit den beiden Kupplungen B und F wie in Fig. 2 den für beide Kupplungen B und F gemeinsamen Lamellenträger ZYLBF, die Lamellenpakete 200, 600 der beiden Kupplungen B, F, sowie die Servoeinrichtungen 210 und 610 zum Betätigen dieser Lamellenpakete 200 und 600, ist axial zwischen dem Vorschaltradsatz VS und der antriebsmotornahen getriebegehäusefesten Gehäusewand GW angeordnet und auf der getriebegehäusefesten Nabe GN verdrehbar gelagert. Wie in Fig. 2 bildet der Lamellenträger ZYLBF für beide Kupplungen B, F deren Ausgangselement, ist für die Kupplung B als Innenlamellenträger und für die Kupplung F als Außenlamellenträger ausgebildet, und ist entsprechend der vorgegebenen kinematischen Kopplung mit dem ersten Eingangselement (hier also mit dem ersten Sonnenrad S1_HS) des Hauptradsatzes HS verdrehfest verbunden, Das als Außenlamellenträger ausgebildete Eingangselement 220 der Kupplung B wurde ebenso wie das als Innenlamellenträger ausgebildete Eingangselement 620 der Kupplung F aus Fig. 2 übernommen. Im Unterschied zu Fig. 2 ist die Kupplung B räumlich gesehen nunmehr vollständig radial über der Kupplung F angeordnet, wobei das Lamellenpaket 200 der Kupplung B radial über dem Lamellenpaket 600 der Kupplung F angeordnet ist, und wobei die Servoeinrichtung 210 der Kupplung B radial über der Servoeinrichtung 610 der Kupplung F angeordnet ist.

Wie aus Fig. 3 weiterhin ersichtlich, ist für die beiden Kupplungen B, F gemeinsame Lamellenträger ZYLBF geometrisch in Form eines in Richtung Vorschaltradsatz VS (bzw. Hauptradsatz HS) geöffneten Topfes ausgebildet. Am Außendurchmesser dieses Lamellenträgers ZYLBF ist ein gestufter zylindrischer Abschnitt vorgesehen, an dessen vorschaltradsatznahen Ende am Innendurchmesser die Außenlamellen des Lamellenpaketes 600 der (radial inneren) Kupplung F und am Außendurchmesser die Innenlamellen des Lamellenpaketes 200 der (radial äußeren) Kupplung B angeordnet sind. Beide Lamellenpakete 600, 200 grenzen also axial an den Vorschaltradsatz VS an. Ausgehend vom vorschaltradsatzfernen Ende des gestuften zylindrischen Abschnitts des Lamellenträgers ZYLBF erstreckt sich ein scheibenförmiger Abschnitt des Lamellenträgers ZYLBF parallel zur Gehäusewand GW radial nach innen bis zu einer Nabe 633 des Lamellenträgers ZYLBF. Diese Nabe 633 erstreckt sich, ausgehend vom Innendurchmesser des scheibenförmigen Abschnitts des Lamellenträgers ZYLBF, axial in Richtung Vorschaltradsatz VS und ist auf der getriebegehäusefesten Nabe GN, an der auch das Sonnenrad SO_VS des Vorschaltradsatzes VS festgesetzt ist, verdrehbar gelagert.

Die Servoeinrichtung 610 der Kupplung F ist vollständig innerhalb eines Zylinderraums angeordnet, der durch den gestuften zylindrischen Abschnitt und den scheibenförmigen Abschnitt des Lamellenträgers ZYLBF gebildet wird, und rotiert entsprechend ständig mit Drehzahl des ersten Eingangselementes (also hier des ersten Sonnenrades S1_HS) des Hauptradsatzes HS. Dabei umfasst diese Servoeinrichtung 610 einen Druckraum 611, einen Druckausgleichsraum 612, einen Kolben 614, ein Rückstellelement 613 und eine Stauscheibe 615. Der Kolben 614 ist im Lamellenträger ZYLBF druckmitteldicht axial verschiebbar gelagert und über das hier beispielhaft als Tellerfeder ausgebildete Rückstellelement 613 axial gegen den Nabenabschnitt 633 des Lamellenträgers ZYLBF vorgespannt. Der Druckraum 611 wird gebildet durch den Kolben 614 und einen Teil der inneren Mantelfläche des Lamellenträgers ZYLBF. Zum Ausgleich des rotatorischen Drucks des rotierenden Druckraums 611 ist ein dynamischer Druckausgleich mit dem Druckausgleichsraum 612 vorgesehen, wobei dieser Druckausgleichsraum 612 durch den Kolben 614 und die Stauscheibe 615 gebildet wird und näher am Vorschaltradsatz VS (bzw. Hauptradsatz HS) angeordnet ist als der genannte Druckraum 611.

Die Druckmittel- und Schmiermittel-Versorgung der Servoeinrichtung 610 der Kupplung F erfolgt in konstruktiv relativ einfacher Weise über die getriebegehäusefeste Nabe GN, wobei die entsprechenden Kanäle bzw. Bohrungen abschnittsweise innerhalb der genannten Gehäusenabe GN und abschnittsweise innerhalb der Nabe 633 des Lamellenträgers ZYLBF verlaufen. Eine Druckmittelzuführung zum Druckraum 611 der Servoeinrichtung 610 der Kupplung F ist mit 616 bezeichnet, eine Schmiermittelzuführung zum Druckausgleichsraum 612 der Servoeinrichtung 610 der Kupplung F mit 617. Wird der Druckraums 611 zum Schließen der Kupplung F mit Druckmittel beaufschlagt, so bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613.

Wie bereits erwähnt, ist die Servoeinrichtung 210 der (radial äußeren) Kupplung B räumlich gesehen in einem Bereich radial über der Servoeinrichtung 610 der (radial inneren) Kupplung F angeordnet. Diese Servoeinrichtung 210 umfaßt einen Druckraum 211, einen Druckausgleichsraum 212, einen Kolben 214, ein Rückstellelement 213 und eine Stützscheibe 218. Dabei ist der Druckraum 211 der Servoeinrichtung 210 der (radial äußeren) Kupplung B zumindest in etwa radial über dem Druckraum 611 der Servoeinrichtung 610 der (radial inneren) Kupplung F und der Druckausgleichsraum 212 der Servoeinrichtung 210 der (radial äußeren) Kupplung B zumindest in etwa radial über dem Druckausgleichsraum 612 der Servoeinrichtung 610 der (radial inneren) Kupplung F angeordnet. Gebildet wird der Druckraum 211 durch den Kolben 214, die Stützscheibe 218 und einen Teil der äußeren Mantelfläche des Lamellenträgers ZYLBF. Hierzu ist die Stützscheibe 218 geometrisch in Form eines in Richtung Lamellenpaket 200 (bzw. in Richtung Vorschaltradsatz VS) hin geöffneten Topfes ausgebildet, dessen Mantelfläche den Kolben 214 außen umschließt, und dessen Topfboden an seinem Innendurchmesser am Außendurchmesser des scheibenförmigen Abschnitts des Lamellenträgers ZYLBF befestigt ist. Im dargestellten Beispiel ist für die Befestigung der Stützscheibe 218 an dem Lamellenträger ZYLBF ein drehmomentübertragendes, druckmitteldicht abgedichtetes Mitnahmeprofil und zur axialen Festlegung ein Sicherungsring vorgesehen. Somit ist der Kolben 214 zwischen dem Innendurchmesser des zylindrischen Abschnitts der Stützscheibe 218 und dem Außendurchmesser des gestuften zylindrischen Abschnitts des Lamellenträgers ZYLBF druckmitteldicht axial verschiebbar gelagert und über das Rückstellelement 213 axial gegen den Lamellenträger ZYLBF vorgespannt. Das Rückstellelement 213 ist hier beispielhaft als Federpaket aus ringförmig angeordneten Spiralfedern ausgeführt.

Eine Druckmittelzuführung 216 zu dem Druckraum 211 der Servoeinrichtung 210 der Kupplung B verläuft abschnittsweise innerhalb der getriebegehäusefesten Nabe GN und abschnittsweise innerhalb des Lamellenträgers ZYLBF. Der Druckausgleichsraum 212 der Servoeinrichtung 210 der (radial äußeren) Kupplung B wird hier in baulängensparender Weise direkt über den Druckausgleichsraum 612 der Servoeinrichtung 610 der (radial inneren) Kupplung F drucklos mit Schmiermittel befüllt. Hierzu ist am Außendurchmesser des Kolbens 614 der Servoeinrichtung 610 mindestens eine Radialbohrung vorgesehen, die einerseits im Druckausgleichsraum 612 der Servoeinrichtung 610 und andererseits in einem nach außen hin schmiermitteldicht abgedichteten Ringkanal am Innendurchmesser des gestuften zylindrischen Abschnitts des Lamellenträgers ZYLBF mündet. Weiterhin ist in dem gestuften zylindrischen Abschnitt des Lamellenträgers ZYLBF mindestens eine Radialbohrung vorgesehen, die einerseits im genannten Ringkanal am Innendurchmesser des gestuften zylindrischen Abschnitts des Lamellenträgers ZYLBF und andererseits im Druckausgleichsraum 212 der Servoeinrichtung 210 mündet. Die entsprechenden Bohrungen bzw. Kanäle zwischen den beiden Druckausgleichsräumen 612, 212 sind in Fig. 3 mit 217 bezeichnet. Wird der Druckraum 211 der Servoeinrichtung 210 zum Schließen der Kupplung B mit Druckmittel befüllt, so bewegt sich der Kolben 214 axial in Richtung Vorschaltradsatz VS (bzw. Hauptradsatz HS) und betätigt das ihm zugeordnete Lamellenpaket 200 gegen die Federkraft des Rückstellelementes 213.

Zur Drehzahl- und Drehmomentübertragung zwischen dem Lamellenträger ZYLBF, der ja das Ausgangselement der beiden Kupplungen B, F bildet, und dem ersten Sonnenrad S1_HS des Hauptradsatzes HS ist - ähnlich wie in Fig. 2- ein zylinderförmiges Verbindungselement ZYL vorgesehen, welches geometrisch als ein in Richtung Gehäusewand GW hin geöffneter Topf ausgebildet ist, mit einer ringförmigen Mantelfläche, welche die Baugruppe der beiden Kupplungen B, F teilweise und den Vorschaltradsatz VS sowie die beiden Kupplungen E und A in axialer Richtung vollständig radial übergreift und an ihrem der Gehäusewand GW zugewandten Ende über ein geeignetes Mitnahmeprofil verdrehfest mit der Stützscheibe 218 verbunden ist, sowie mit einem scheibenförmigen Topfboden, der sich neben der Kupplung A auf deren dem Hauptradsatz HS zugewandten Seite radial nach innen erstreckt und in seinem Nabenbereich mit der ersten Sonnenwelle 240 verdrehfest verbunden ist. Diese erste Sonnenwelle 240 wiederum ist mit dem Ausgangselement 330 der Bremse C und dem vorschaltradsatznahen ersten Sonnenrad S1_HS des Hauptradsatzes HS verbunden.

Anhand Fig. 4 wird nun ein drittes beispielhaftes Getriebeschema gemäß der vorliegenden Erfindung erläutert, basierend auf dem zuvor anhand Fig. 3 beschriebenen zweiten erfindungsgemäßen Getriebeschema. Der wesentliche Unterschied zu Fig. 3 betrifft die räumliche Lage der Kupplung A. Zumindest das Lamellenpaket 100 der Kupplung A ist nunmehr auf der dem Hauptrad HS abgewandten Seite des Vorschaltradsatzes VS angeordnet, axial zwischen diesem Vorschaltradsatz VS und der aus den beiden Kupplungen B und F bestehenden Baugruppe. Hieraus ergibt sich die Möglichkeit einer guten Lagerung des Eingangselementes 620 der Kupplung F in Verbindung mit einer guten Lagerung der Eingangselemente 120, 220 der Kupplungen A und B.

In dem in Fig. 4 dargestellten Beispiel weist das hier als Innenlamellenträger ausgebildete Eingangselement 620 der Kupplung F einen scheibenförmigen Abschnitt 622 auf, welcher sich ausgehend von dem Lamellenpaket 600 der Kupplung F radial nach innen erstreckt bis knapp oberhalb der getriebegehäusefesten Nabe GN, sowie eine Nabe 623, welche sich an dem genannten scheibenförmigen Abschnitt 622 im Bereich dessen Innendurchmessers anschließt und sich axial in Richtung Vorschaltradsatz VS bis knapp vor dessen Sonnenrad SO_VS erstreckt und in diesem Bereich mit dem hauptradsatzfernen Stegblech des gekoppelten Stegs ST_VS des Vorschaltradsatzes VS verdrehfest verbunden ist. Dabei ist diese Nabe 623 des Eingangselementes 620 auf der genannten getriebegehäusefesten Nabe GN mit relativ breiter Lagerbasis verdrehbar gelagert.

Für die beiden Kupplungen A, B ist ein gemeinsamer Lamellenträger ZYLAB vorgesehen, der für beide Kupplungen A. B deren Eingangselement (120, 220) bildet. Geometrisch ist dieser Lamellenträger ZYLAB im wesentlichen in Form eines Zylinders ausgebildet. Eine Nabe 123 dieses Lamellenträgers ZYLAB ist verdrehbar auf der Nabe 623 des Eingangselementes 620 der Kupplung F gelagert. Ein scheibenförmiger Abschnitt dieses Lamellenträgers ZYLAB schließt sich an die genannte Nabe 123 an und erstreckt sich radial nach außen bis zu einem Durchmesser, der etwas größer ist als der Durchmesser des Hohlrades HO_VS des Vorschaltradsatzes und in etwa dem Innendurchmesser der Lamellenpakete 100, 200 der beiden Kupplungen A, B entspricht. Am Außendurchmesser des genannten scheibenförmigen Abschnitts des Lamellenträgers ZYLAB schließt sich zum einen ein erster zylindrischer Abschnitt an, welcher dem Eingangselement 120 der Kupplung A zugeordnet ist, sich axial in Richtung Vorschaltradsatz VS erstreckt und an seinem Außendurchmesser die (hier beispielhaft als innenverzahnte Stahllamellen ausgeführten) Innenlamellen des Lamellenpaketes 100 der Kupplung A aufnimmt. Zum anderen schließt sich am Außendurchmesser des genannten scheibenförmigen Abschnitts des Lamellenträgers ZYLAB ein zweiter zylindrischer Abschnitt an, welcher dem Eingangselement 220 der Kupplung B zugeordnet ist, sich axial in zum Vorschaltradsatz VS entgegengesetzter Richtung erstreckt und an seinem Außendurchmesser die (hier beispielhaft als innenverzahnte Belaglamellen ausgeführten) Innenlamellen des Lamellenpaketes 200 der Kupplung B aufnimmt. Zur kinematischen Anbindung des Lamellenträgers ZYLAB, der ja für die beiden Kupplungen A, B deren Eingangselement bildet, an das Ausgangselement des Vorschaltradsatzes VS - also an das Hohlrad HO_VS - ist eine Mitnahmescheibe 150 vorgesehen, die sich unmittelbar angrenzend an den Vorschaltradsatz VS parallel auf dessen hauptradsatzfernen Seite erstreckt und über geeignete Verbindungsmittel mit dem Hohlrad HO_VS des Vorschaltradsatzes VS und der Nabe 123 des Lamellenträgers ZYLAB verbunden ist.

Das Ausgangselement 130 der Kupplung A ist als Außenlamellenträger ausgebildet, geometrisch in Form eines in zum Hauptradsatz HS entgegengesetzter Richtung hin geöffneten Topfes, der das Lamellenpaket 100 und eine Servoeinrichtung 110 der Kupplung A, den Vorschaltradsatz VS und die Kupplung E in axialer Richtung radial übergreift. Am hauptradsatzfernen Ende seines zylindrischen Abschnitts nimmt dieser Außenlamellenträger 130 die (hier beispielhaft als außenverzahnte Belaglamellen ausgeführten) Außenlamellen des Lamellenpaketes 100 der Kupplung A auf. Am hauptradsatznahen Ende des zylindrischen Abschnitts des Außenlamellenträgers 130 schließt sich ein scheibenförmiger Abschnitt ("Topfboden") an, erstreckt sich angrenzend parallel zum Ausgangselement 530 der Kupplung E radial nach innen und ist in seinem Nabenbereich mit der zweiten Sonnenwelle 140 verdrehfest verbunden. Diese zweite Sonnenwelle 140 wiederum umschließt die mit dem Ausgangselement 530 der Kupplung E verbundene Stegwelle 540 und erstreckt sich radial innerhalb der mit dem ersten Sonnenrad S1_HS des Hauptradsatzes HS verbundenen ersten Sonnenwelle 240 axial in Richtung Hauptradsatz HS, durchgreift das erste Sonnenrad S1_HS zentrisch und ist mit dem zweiten Sonnenrad S2_HS des Hauptradsatzes HS verbunden.

Die zur Betätigung des Lamellenpaketes 100 der Kupplung A vorgesehene Servoeinrichtung 110 ist hier beispielhaft radial oberhalb der Nabe 123 des Lamellenträgers ZYLAB angeordnet, rotiert stets mit Drehzahl des Ausgangselementes - also des Hohlrads HO_VS - des Vorschaltradsatzes VS und betätigt das ihr zugeordnete Lamellenpaket 100 beim Schließen der Kupplung A axial in zum Vorschaltradsatz VS (bzw. Hauptradsatz HS) entgegengesetzter Richtung. Selbstverständlich kann die zur Vereinfachung hier nur schematisch dargestellte Servoeinrichtung 110 einen dynamischen Druckausgleich aufweisen. Eine (hier nicht näher dargestellte) Druck- und Schmiermittelzufuhr zu der Servoeinrichtung 110 verläuft zweckmäßigerweise über entsprechende Kanäle bzw. Bohrungen abschnittsweise innerhalb der getriebegehäusefesten Nabe GN, abschnittsweise innerhalb der Nabe 623 des Innenlamellenträgers 620 der Kupplung F und abschnittsweise innerhalb der Nabe 123 des für die Kupplungen A, B gemeinsamen Lamellenträgers ZYLAB.

In einer anderen Ausgestaltungsvariante zur räumlichen Lage der Servoeinrichtung 110 der Kupplung A kann beispielsweise auch vorgesehen sein, dass ein Kolben dieser Servoeinrichtung 110 im Ausgangselement 130 der Kupplung A axial verschiebbar gelagert ist und ein Druckraum bzw. ein Druckausgleichsraum dieser Servoeinrichtung 110 im Bereich axial neben dem Ausgangselement 530 der Kupplung E angeordnet ist. In diesem Fall ist es zweckmäßig, dass die Außenlamellen des Lamellenpaketes 100 der Kupplung A als außenverzahnte Stahllamellen und die Innenlamellen des Lamellenpaketes 100 als innenverzahnte Belaglamellen ausgeführt sind.

Die räumliche Anordnung der übrigen Getriebebauelemente des dritten erfindungsgemäßen Getriebeschemas gemäß Fig. 4 entspricht der in Fig. 3 dargestellten Anordnung, insofern kann auf deren nochmalige Beschreibung an dieser Stelle verzichtet werden.

Anhand Fig. 5 wird nun ein viertes beispielhaftes Getriebeschema gemäß der vorliegenden Erfindung erläutert, basierend auf dem zuvor anhand Fig. 2 beschriebenen ersten erfindungsgemäßen Getriebeschema. Die wesentlichen Unterschiede zu Fig. 2 betreffen die konstruktive Ausbildung des für die beiden Kupplungen B und F gemeinsamen Lamellenträgers ZYLBF und die Betätigungsrichtung der Servoeinrichtung 210 der Kupplung B beim Schließen, sowie die räumliche Lage von Antrieb und Abtrieb des Getriebes relativ zueinander. In dem in Fig. 5 dargestellten Beispiel sind Antriebswelle AN und Abtriebswelle AB nunmehr nicht koaxial zueinander angeordnet, sondern achsparallel. Der Abtrieb des Getriebes ist nunmehr nahe einem mit der Antriebswelle AN des Getriebes verbundenen (hier nicht näher dargestellten) Antriebsmotor angeordnet. Ein mit dem Ausgangselement - also hier dem Hohlrad HO_HS - des Hauptradsatzes HS verbundenes erstes Stirnrad des Getriebe-Abtriebs und ein mit diesem ersten Stirnrad kämmendes zweites Stirnrad des Getriebe-Abtriebs sind an einer antriebsmotomahen getriebegehäusefesten Gehäusewand GW verdrehbar gelagert. Das genannte zweite Stirnrad ist vereinfacht mit der Abtriebswelle AB verbunden. Selbstverständlich kann zwischen diesem zweiten Stirnrad und der Abtriebswelle AB auch ein Differential kinematisch zwischengeschaltet sein. Die Antriebswelle AN durchdringt die genannte Gehäusewand GW zentrisch. Aus Fig. 5 ist jedoch sofort ersichtlich, dass, obwohl sich dieses vierte erfindungsgemäße Getriebeschema aufgrund der besonderen konstruktiven Ausbildung der Baugruppe mit den beiden Kupplungen B, F besonders gut für den Einsatz in einem Kraftfahrzeug mit sogenanntem "Front-Quer-Antrieb" eignet, der Fachmann diese Anordnung von Antriebs- und Abtriebswelle AN, AB bei Bedarf ohne besonderen konstruktiven Aufwand für einen Antriebsstrang mit koaxialer Anordnung von Antriebs- und Abtriebswelle modifizieren wird.

Wie aus Fig. 5 weiterhin ersichtlich, ist der Hauptradsatz HS nunmehr antriebsmotornah angeordnet und wird von der mit dem gekoppelten Steg ST_VS des Vorschaltradsatzes VS verbundenen Antriebswelle AN in axialer Richtung zentrisch vollkommen durchdrungen. Entsprechend ist der Vorschaltradsatz VS nunmehr auf dem Antriebsmotor abgewandten Seite des Hauptradsatzes HS angeordnet. Die räumliche Lage der Schaltelemente E, A, C und D - insbesondere die Reibelemente dieser Schaltelemente E, A, C, D - im Bereich axial zwischen Vorschaltradsatz VS und Hauptradsatz HS wurde aus Fig. 2 übernommen. Ähnlich wie in Fig. 2 bilden die Kupplungen B und F eine fertigungstechnisch einfach vormontierbare Baugruppe, die auf der dem Hauptradsatz HS abgewandten Seite des Vorschaltradsatzes VS angeordnet ist, unmittelbar angrenzend an diesen Vorschaltradsatz VS und nunmehr axial zwischen Vorschaltradsatz VS und einem getriebegehäusefesten Gehäusedeckel GD. Dieser Gehäusedeckel GD bildet die dem Antriebsmotor gegenüberliegende Außenwand des Getriebegehäuses GG. Selbstverständlich können Gehäusedeckel GD und Getriebegehäuse GG auch einstückig ausgeführt sein. Dabei weist der Gehäusedeckel GD eine getriebegehäusefeste Nabe GN auf, welche sich axial in Richtung Vorschaltradsatz VS erstreckt und auf welcher der für die beiden Kupplungen B, F gemeinsame Lamellenträgers ZYLBF verdrehbar gelagert ist. Das Sonnenrad SO_VS des Vorschaltradsatzes VS ist an dieser Nabe GN am Getriebegehäuse GG festgesetzt.

Der Lamellenträger ZYLBF bildet für beide Kupplungen B, F deren mit dem ersten Eingangselement (Sonnenrad S1_HS) des Hauptradsatzes HS verbundenes Ausgangselement, ist im Unterschied zu Fig. 2 jedoch für beide Kupplungen B, F nunmehr als Außenlamellenträger zur Aufnahme der Außenlamellen der jeweiligen Lamellenpaket 200 bzw. 600. ausgebildet. Entsprechend sind die Eingangselemente 220, 620 beider Kupplungen B, F nunmehr beide als Innenlamellenträger zur Aufnahme der Innenlamellen des jeweiligen Lamellenpaketes 200 bzw. 600 ausgeführt. Dabei ist das Lamellenpaket 200 der Kupplung B auf einem größeren Durchmesser angeordnet als das Lamellenpaket 600 der Kupplung F, räumlich gesehen in einem Bereich in etwa radial über diesem Lamellenpaket 600.

Geometrisch weist der für die Kupplungen B, F gemeinsame Lamellenträger ZYLBF eine im wesentlichen zylinderförmige Struktur auf. Eine Nabe des Lamellenträgers ZYLBF ist auf der getriebegehäusefesten Nabe GN der Gehäusewand GW verdrehbar gelagert. Ausgehend von dieser Nabe des Lamellenträgers ZYLBF erstreckt sich in etwa nabenmittig ein erster scheibenförmiger Abschnitt des Lamellenträgers ZYLBF radial nach außen in etwa bis zum Außendurchmesser des Lamellenpaketes 600 der Kupplung F (hier beispielhaft in etwa bis zum Durchmesser des Hohlrades HO_VS des Vorschaltradsatzes VS) und trennt dabei diese Nabe des Lamellenträgers ZYLBF geometrisch in zwei Nabenabschnitte 633 und 233. Der Nabenabschnitt 633 erstreckt sich axial in Richtung Vorschaltradsatz VS bis zu dessen Sonnenrad SO_VS und ist - wie aus der gewählten Nomenklatur ersichtlich - dem Ausgangselement der Kupplung F zugeordnet. Der andere Nabenabschnitt 233 ist dem Ausgangselement der Kupplung B zugeordnet und erstreckt sich axial in Richtung Gehäusedeckel GD. Am Außendurchmesser des genannten ersten scheibenförmigen Abschnitts des Lamellenträgers ZYLBF schließt sich ein erster zylindrischer Abschnitt des Lamellenträgers ZYLBF an, erstreckt sich axial in Richtung Vorschaltradsatz VS bis über das an den Vorschaltradsatz VS axial angrenzende Lamellenpaket 600 der Kupplung F und weist an seinem Innendurchmesser ein geeignetes Mitnahmeprofil auf zur Aufnahme der Außenlamellen dieses Lamellenpaketes 600. Am Außendurchmesser dieses ersten zylindrischen Abschnitts des Lamellenträgers ZYLBF - hier beispielhaft räumlich gesehen in etwa abschnittsmittig - schließt sich ein zweiter scheibenförmiger Abschnitt des Lamellenträgers ZYLBF an und erstreckt sich radial nach außen in etwa bis zum Außendurchmesser des (radial äußeren) Lamellenpaketes 200 der Kupplung B. Am Außendurchmesser dieses zweiten scheibenförmigen Abschnitts des Lamellenträgers ZYLBF schließt sich ein zweiter zylindrischer Abschnitt des Lamellenträgers ZYLBF an, erstreckt sich axial in Richtung Vorschaltradsatz VS bis über das dem Vorschaltradsatz VS benachbarte Lamellenpaket 200 der Kupplung B und weist an seinem Innendurchmesser ein geeignetes Mitnahmeprofil auf zur Aufnahme der Außenlamellen dieses Lamellenpaketes 200.

Die Servoeinrichtung 610 der Kupplung F, umfassend einen Druckraum 611, einen Druckausgleichsraum 612, einen Kolben 614, ein Rückstellelement 613 und eine Stauscheibe 615, ist vollständig innerhalb eines Zylinderraums angeordnet, der durch den ersten scheibenförmigen und den ersten zylindrischen Abschnitt des Lamellenträgers ZYLBF gebildet wird, im wesentlichen radial oberhalb des Nabenabschnitts 633. Der Kolben 614 ist am Lamellenträger ZYLBF (konkret am Nabenabschnitt 633 und am ersten zylindrischen Abschnitt des Lamellenträgers ZYLBF) druckmitteldicht axial verschiebbar gelagert. Entsprechend rotiert die Servoeinrichtung 610 ständig mit Drehzahl des ersten Eingangselementes (also hier des Sonnenrades S1_HS) des Hauptradsatzes HS. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, wobei dieser Druckausgleichsraum 612 näher am Vorschaltradsatz VS (bzw. Hauptradsatz HS) angeordnet ist als der genannte Druckraum 611. Dabei wird der Druckraum 611 durch eine Mantelfläche des Lamellenträgers ZYLBF (konkret durch den ersten scheibenförmigen Abschnitt des Lamellenträgers ZYLBF, einen Teil des ersten zylindrischen Abschnitts des Lamellenträgers ZYLBF und einen Teil des Nabenabschnitts 633) und den Kolben 614 gebildet. Der Druckausgleichsraum 612 wird gebildet durch den Kolben 614 und die Stauscheibe 615, welche axial an dem Nabenabschnitt 633 des Lamellenträgers ZYLBF fixiert ist und gegenüber dem Kolben 614 axial verschiebbar schmiermitteldicht abgedichtet ist. Der Kolben 614 ist über das hier beispielhaft als Tellerfeder ausgebildete Rückstellelement 613 axial gegen den Nabenabschnitt 633 des Lamellenträgers ZYLBF vorgespannt. Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613.

Räumlich gesehen ist die Servoeinrichtung 210 der Kupplung B zumindest überwiegend in einem Bereich radial über dem zweiten Nabenabschnitt 233 des Lamellenträgers ZYLBF angeordnet und auch an dem Lamellenträger ZYLBF axial verschiebbar gelagert. Entsprechend rotiert auch die Servoeinrichtung 210 ständig mit Drehzahl des ersten Eingangselementes (also hier des ersten Sonnenrades S1_HS) des Hauptradsatzes HS. Die Servoeinrichtung 210 der Kupplung B umfasst einen Druckraum 211, einen Druckausgleichsraum 212, einen abschnittsweise meanderförmig ausgebildeten Kolben 214, ein Rückstellelement 213 und Stauscheibe 215. Zum Ausgleich des rotatorischen Drucks des rotierenden Druckraums 211 der Servoeinrichtung 210 ist ein dynamischer Druckausgleich mit dem drucklos mit Schmiermittel befüllbaren Druckausgleichsraum 212 vorgesehen. Zur Bildung des Druckraums 211 weist der Lamellenträger ZYLBF einen dritten zylindrischen Abschnitt auf, der sich auf einem definierten Durchmesser ausgehend vom ersten scheibenförmigen Abschnitt des Lamellenträgers ZYLBF axial in Richtung Gehäusewand GW erstreckt. Der Kolben 214 ist am Lamellenträger ZYLBF, konkret am Nabenabschnitt 233 und am genannte dritten zylindrischen Abschnitt des Lamellenträgers ZYLBF druckmitteldicht axial verschiebbar gelagert. Entsprechend wird der Druckraum 211 durch eine Mantelfläche des Lamellenträgers ZYLBF (konkret durch einen Teil des ersten scheibenförmigen Abschnitt des Lamellenträgers ZYLBF, einen Teil des dritten zylindrischen Abschnitts des Lamellenträgers ZYLBF und einen Teil des Nabenabschnitts 233) und den Kolben 214 gebildet. In seinem weiteren geometrischen Verlauf umgreift der Kolben 214 den genannten dritten zylindrischen Abschnitt des Lamellenträgers ZYLBF in axialer und radialer Richtung meanderförmig und erstreckt sich im wesentlichen entlang der Außenkontur des Lamellenträgers ZYLBF radial nach außen bis über dessen Außendurchmesser, übergreift anschließend das Lamellenpaket 200 der Kupplung B in axialer und radialer Richtung, wobei ein mit diesem Kolben verbundener Betätigungsfinger oder Betätigungsring von der dem Vorschaltradsatz VS zugewandten Seite des Lamellenpaketes 200 her auf dieses Lamellenpaket 200 wirkt. Der Kolben 214 ist dabei über das hier beispielhaft als Tellerfeder ausgebildete Rückstellelement 213 axial gegen den Nabenabschnitt 233 des Lamellenträgers ZYLBF vorgespannt. Bei einer Beaufschlagung des Druckraums 211 mit Druckmittel zum Schließen der Kupplung B bewegt sich der Kolben 214 axial in zum Vorschaltradsatz VS (bzw. Hauptradsatz HS) entgegengesetzter Richtung und betätigt das ihm zugeordnete Lamellenpaket 200 gegen die Federkraft des Rückstellelementes 213.

Im Unterschied zu Fig. 2 ist der Druckraum 211 der Servoeinrichtung 210 der Kupplung B also nunmehr unmittelbar benachbart zum Druckraum 611 der Servoeinrichtung 610 der Kupplung F angeordnet und von diesem nur durch eine Mantelfläche des für die Kupplungen B, F gemeinsamen Lamellenträgers ZYLBF getrennt. Die Betätigungsrichtungen dieser beiden Servoeinrichtungen 210, 610 beim Schließen der jeweiligen Kupplung B bzw. F sind dabei verschieden. Bezogen auf die räumliche Lage von Druckraum 211 und Lamellenpaket 200 wird die Kupplung B beim Schließen nunmehr "ziehend" betätigt.

Wie bereits erwähnt, weist die Servoeinrichtung 210 der Kupplung B auch einen dynamischen Druckausgleich auf. Räumlich gesehen ist der entsprechende Druckausgleichsraum 212 auf der dem Druckraum 211 der Servoeinrichtung 210 abgewandten Seite des Kolbens 214 der Servoeinrichtung 210 angeordnet in einem Bereich radial unterhalb des dritten zylindrischen Abschnitts des Lamellenträgers ZYLBF. Gebildet wird dieser Druckausgleichsraum 212 durch den genannten Kolben 214 und die Stauscheibe 215, welche gegenüber dem Kolben 214 axial verschiebbar schmiermitteldicht abgedichtet ist und an dem Nabenabschnitt 233 des Lamellenträgers ZYLBF axial festgesetzt ist.

Aufgrund der Lagerung des Lamellenträgers ZYLBF auf der getriebegehäusefesten Nabe GN der Gehäusewand GW ergibt sich eine konstruktiv relativ einfache Druck- und Schmiermittelzufuhr zu beiden Kupplungen B, F über entsprechende Kanäle bzw. Bohrungen, die abschnittsweise innerhalb der genannten Gehäusenabe GN und abschnittsweise innerhalb der Nabe des Lamellenträger ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Zur Drehzahl- und Drehmomentübertragung zwischen dem Lamellenträger ZYLBF, der ja das Ausgangselement der beiden Kupplungen B, F bildet, und dem Sonnenrad S1_HS des Hauptradsatzes HS ist ein zylinderförmiges Verbindungselement ZYL vorgesehen, welches geometrisch als ein in Richtung Hauptradsatz HS hin geöffneter Topf ausgebildet ist. Ein Topfboden dieses Verbindungselementes ZYL erstreckt sich in radialer Richtung zwischen Gehäusedeckel GD und dem Kolben 214 der Servoeinrichtung 210 der Kupplung B und ist insbesondere im radial äußeren Bereich im wesentlichen an die Kontur dieses Kolbens 214 angepasst. Das führt in dem dargestellten Beispiel zu der mehrfach abgewinkelten, im wesentlichen aber noch scheibenförmigen Kontur dieses Topfbodens. So befindet sich das radial äußere Ende des Topfbodens hier beispielhaft in etwa radial über dem ersten scheibenförmigen Abschnitt des Lamellenträgers ZYLBF. Auch die Gehäusewand GW ist zum größeren Durchmesser hin axial in Richtung Vorschaltradsatz VS abgeschrägt, was wiederum besonders vorteilhaft ist für den Einbau des Getriebes in einem Kraftfahrzeug mit "Front-Quer-Antrieb", da der für das Getriebe zur Verfügung stehende Einbauraum in diesem Bereich üblicherweise durch einen Fahrzeuglängsrahmen deutlich eingeschränkt ist. In seinem Nabenbereich ist der Topfboden des Verbindungselementes ZYL verdrehfest mit dem gehäusedeckelseitigen Ende der Nabe bzw. des Nabenabschnitts 233 des Lamellenträgers ZYLBF verbunden, hier beispielhaft formschlüssig über ein geeignetes Mitnahmeprofil. Am Außendurchmesser des Topfbodens, auf einem Durchmesser größer dem Außendurchmesser des Kolbens 214, schließt sich eine ringförmige Mantelfläche des zylinderförmigen Verbindungselementes ZYL an diesen Topfboden an und erstreckt sich axial in Richtung Hauptradsatz HS und übergreift dabei die (im wesentlichen radial übereinander angeordneten) Lamellenpakete 200 und 600 der Kupplungen B und F, den Vorschaltradsatz VS sowie die Kupplungen E und A in axialer Richtung vollständig. An seinem hauptradsatznahen Ende, räumlich gesehen in einem Bereich axial zwischen dem Lamellenpaket 100 der Kupplung A und dem Lamellenpaket 300 der Bremse C, ist das zylinderförmige Verbindungselement ZYL verdrehfest mit einem Mitnahmeblech 250 verbunden, beispielsweise formschlüssig über eine geeignetes Mitnahmeprofil. Dieses Mitnahmeblech 250 wiederum ist mit dem als Innenlamellenträger ausgebildeten Ausgangselement 330 der Bremse C verbunden. Das Ausgangselement 330 der Bremse C wiederum erstreckt sich axial angrenzend an das Ausgangselement 130 der Kupplung A radial nach innen und ist in seinem Nabenbereich mit einer Sonnenwelle 240 verdrehfest verbunden. Diese Sonnenwelle 240 wiederum ist mit dem vorschaltradsatznahen Sonnenrad S1_HS des Hauptradsatzes HS verbunden.

In einer anderen Ausgestaltung kann beispielsweise auch vorgesehen sein, dass - bei unveränderter räumlichen Lage des Lamellenpaketes 300 der Bremse C in einem Bereich und axial zwischen Kupplung A und Bremse D - das zylinderförmige Verbindungselement ZYL gleichzeitig den Innenlamellenträger 330 der Bremse bildet. Ist das Lamellenpaket 300 der Bremse C radial unterhalb des Außendurchmessers des Verbindungselementes ZYL angeordnet, so muß der vormals mit Topfboden bezeichnete Abschnitt des Verbindungselementes ZYL als separates Bauelement ausgeführt sein. Selbstverständlich kann die Bremse C aber auch auf einem Durchmesser größer dem Außendurchmesser des Verbindungselementes ZYL angeordnet sein. In noch einer anderen Ausgestaltung kann die Bremse C räumlich gesehen auch auf der dem Hauptradsatz HS abgewandten Seite des Vorschaltradsatzes VS angeordnet sein, beispielsweise in einem Bereich radial über der Kupplung B oder in einem Bereich zwischen Gehäusedeckel GD und Topfboden des Verbindungselementes ZYL radial über dem Druckausgleichsraum 212 der Servoeinrichtung 210 der Kupplung B.

Anhand Fig. 6 wird nun ein fünftes beispielhaftes Getriebeschema gemäß der vorliegenden Erfindung erläutert, wiederum basierend auf dem anhand Fig. 2 beschriebenen ersten erfindungsgemäßen Getriebeschema. Die wesentlichen Unterschiede zu Fig. 2 betreffen die konstruktive Ausbildung des für die beiden Kupplungen B und F gemeinsamen Lamellenträgers ZYLBF sowie die Anordnung der Lamellenpakete 200, 600 der beiden Kupplungen B, F relativ zueinander. In dem in Fig. 6 dargestellten Beispiel ist die vormontierbare Baugruppe mit den beiden Kupplungen B und F unverändert auf der dem Hauptradsatz HS abgewandten Seite des Vorschaltradsatzes VS in einem Bereich axial zwischen Vorschaltradsatz VS und einer getriebegehäusefesten Gehäusewand GW angeordnet. Unverändert umfasst diese Baugruppe mit den beiden Kupplungen B, F auch einen für diese beiden Kupplungen B, F gemeinsamen Lamellenträger ZYLBF, die Lamellenpakete 200 und 600 dieser beiden Kupplungen B, F sowie die Servoeinrichtungen 210 und 610 zur Betätigung dieser Lamellenpakete 200, 600. Ein wesentlicher Unterschied zu Fig. 2 ist, dass das Lamellenpaket 200 der Kupplung B nunmehr auf einem kleineren Durchmesser angeordnet ist als das Lamellenpaket 600 der Kupplung F, räumlich gesehen in einem Bereich radial unterhalb dieses Lamellenpaketes 600. Dabei sind die beiden radial übereinander angeordneten Lamellenpakete 200, 600 nunmehr auf der Seite der Baugruppe angeordnet sind, die dem Vorschaltradsatz VS abgewandt bzw. der getriebegehäusefesten Gehäusewand GW zugewandt ist.

Der für beide Kupplungen B, F gemeinsame Lamellenträger ZYLBF bildet deren Ausgangselement und ist für die Kupplung F als Innenlamellenträger zur Aufnahme von innenverzahnten Lamellen des (radial äußeren) Lamellenpaketes 600 und für die Kupplung B als Außenlamellenträger zur Aufnahme von außenverzahnten Lamellen des (radial inneren) Lamellenpaketes 200 ausgebildet. Entsprechend ist das mit dem gekoppelten Steg ST_VS des Vorschaltradsatzes VS und über diesen Steg ST_VS mit der Antriebswelle AN verbundene Eingangselement 620 der Kupplung F als Außenlamellenträger zur Aufnahme von außenverzahnten Lamellen des Lamellenpaketes 600 dieser Kupplung F ausgebildet. Das mit dem Hohlrad HO_VS des Vorschaltradsatzes VS verbundene Eingangselement 220 der Kupplung B ist als Innenlamellenträger zur Aufnahme der innenverzahnten Innenlamellen des Lamellenpaketes 200 dieser Kupplung B ausgebildet. Entsprechend der räumlichen Lage der beiden radial übereinander angeordneten Lamellenpakete 200, 600 auf der dem Vorschaltradsatz VS abgewandten bzw. auf der der getriebegehäusefesten Gehäusewand GW zugewandten Seite der Baugruppe umgreift das Eingangselement 220 der Kupplung B dabei das Eingangselement 620 und das (radial äußere) Lamellenpaket 600 der Kupplung F sowie das (radial innere) Lamellenpaket 200 der Kupplung B in axialer und radialer Richtung vollständig.

Geometrisch weist der für die Kupplungen B, F gemeinsame Lamellenträger ZYLBF eine im Wesentlichen zylinderförmige Struktur auf und ist auf einer getriebegehäusefesten Nabe GN, die sich ausgehend von der Gehäusewand GW in den Getriebeinnenraum axial in Richtung Vorschaltradsatz VS erstreckt, verdrehbar gelagert. An dieser Nabe GN ist das Sonnenrad SO_VS des Vorschaltradsatzes VS über eine geeignete Verbindung festgesetzt. Selbstverständlich können Nabe GN und Gehäusewand GW auch einstückig ausgeführt sein. Beispielsweise kann die Nabe GN auch eine Leitradwelle eines im Kraftfluß zwischen Antriebswelle AN und Antriebsmotor des Getriebes angeordneten Drehmomentwandlers sein. Am Außendurchmesser des Lamellenträgers ZYLBF ist ein erster zylindrischer Abschnitt vorgesehen, an dessen Innendurchmesser die Außenlamellen des Lamellenpaketes 200 der Kupplung B und an dessen Außendurchmesser die Innenlamellen des Lamellenpaketes 600 der Kupplung F angeordnet sind, wobei beide Lamellenpakete 600 und 200 - wie gesagt - nahe der getriebegehäusefesten Gehäusewand GW angeordnet sind. Ausgehend vom vorschaltradsatznahen Ende des genannten ersten zylindrischen Abschnitts des Lamellenträgers ZYLBF, also auf der vorschaltradsatznahen Seite des Lamellenpaketes 200, erstreckt sich ein zumindest weitgehend scheibenförmiger Abschnitt des Lamellenträgers ZYLBF radial nach innen bis zur Nabe des Lamellenträgers ZYLBF. Dabei ist diese Nabe in zwei Nabenabschnitte 633 und 233 unterteilt. Ausgehend vom Innendurchmesser des scheibenförmigen Abschnitts des Lamellenträgers ZYLBF erstreckt sich der Nabenabschnitt 633 axial in Richtung Vorschaltradsatz VS und ist - wie aus der gewählten Nomenklatur ersichtlich - dem Ausgangselement der Kupplung F zugeordnet. Der andere Nabenabschnitt 233 ist dem Ausgangselement der Kupplung B zugeordnet und erstreckt sich, ausgehend Innendurchmesser des scheibenförmigen Abschnitts des Lamellenträgers ZYLBF, axial in Richtung Gehäusewand GW.

Die Servoeinrichtung 610 der Kupplung F zur Betätigung des radial äußeren Lamellenpaketes 600 umfasst einen Druckraum 611, einen Druckausgleichsraum 612, einen abschnittsweise meanderförmig ausgebildeten Kolben 614, ein Rückstellelement 613 und eine abschnittsweise zylindrische Stützscheibe 618 und ist im wesentlichen radial oberhalb des (vorschaltradsatznahen) Nabenabschnitts 633 des Lamellenträgers ZYLBF angeordnet. Der Kolben 614 ist am Lamellenträger ZYLBF axial verschiebbar gelagert. Entsprechend rotiert die Servoeinrichtung 610 ständig mit Drehzahl des ersten Eingangselementes (also hier des ersten Sonnenrades S1_HS) des Hauptradsatzes HS. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, wobei der genannte Druckraum 611 näher am Vorschaltradsatz VS (bzw. Hauptradsatz HS) angeordnet ist als dieser Druckausgleichsraum 612. Zur Bildung des Druckraums 611 ist die Stützscheibe 618 druckmitteldicht am vorschaltradsatznahen Ende des Nabenabschnitts 633 des Lamellenträgers ZYLBF mit diesem Nabenabschnitt 633 befestigt und axial gesichert. Der zylindrische Abschnitt der Stützscheibe 618 erstreckt sich dabei axial in zum Vorschaltradsatz VS entgegengesetzter Richtung. Der Kolben 614 der Servoeinrichtung 610 ist gegen diesen zylindrischen Abschnitt der Stützscheibe 618 und gegen den Nabenabschnitt 633 des Lamellenträgers ZYLBF axial verschiebbar druckmitteldicht abgedichtet und weist in diesem Bereich eine meanderförmige Kontur auf. Entsprechend wird der Druckraum 611 der Servoeinrichtung 610 durch den Kolben 614, den zylindrischen Abschnitt der Stützscheibe 618, den radial unterhalb dieses zylindrischen Abschnitts der Stützscheibe 618 befindlichen scheibenförmigen Abschnitt der Stützscheibe 618, sowie einen Teil des Nabenabschnitts 633 des Lamellenträgers ZYLBF gebildet. Zur Bildung des Druckausgleichsraums 612 der Servoeinrichtung 610 weist der Lamellenträger ZYLBF auf einem definierten Durchmesser größer dem Durchmesser des zylindrischen Abschnitt der Stützscheibe 618 einen zweiten zylindrischen Abschnitt auf, der sich ausgehend von dem scheibenförmigen Abschnitt des hier beispielhaft einstückigen Lamellenträgers ZYLBF axial in Richtung Vorschaltradsatz VS erstreckt. Der in diesem Bereich meanderförmige Kolben 614 ist gegen diesen zweiten zylindrischen Abschnitt des Lamellenträgers ZYLBF axial verschiebbar schmiermitteldicht abgedichtet. Entsprechend wird der Druckausgleichsraum 612 durch den Kolben 614, den genannten zweiten zylindrischen Abschnitt des Lamellenträgers ZYLBF und den radial unterhalb dieses zweiten zylindrischen Abschnitts des Lamellenträgers ZYLBF befindlichen scheibenförmigen Abschnitt des Lamellenträgers ZYLBF gebildet. In seinem weiteren geometrischen Verlauf erstreckt sich der Kolben 614 zumindest weitgehend entlang der Außenkontur des radial oberem Bereichs des Lamellenträgers ZYLBF radial nach außen und axial in Richtung Gehäusewand GW bis zu der vorschaltradsatznahen Seite des ihm zugeordneten Lamellenpaketes 600 der Kupplung F. Axial vorgespannt wird der Kolben 614 durch das Rückstellelement 613, das hier beispielhaft als ein axial zwischen dem scheibenförmigen Abschnitt des Lamellenträgers ZYLBF und dem Kolben 614 angeordnetes Spiralfederpaket ausgebildet ist. Bei einer Beaufschlagung des Druckraums 611 mit Druckmittel zum Schließen der Kupplung V bewegt sich der Kolben 614 axial in Richtung Gehäusewand GW (bzw. axial in zum Vorschaltradsatz VS und Hauptradsatz HS entgegengesetzer Richtung) und betätigt das ihm zugeordnete Lamellenpaket 600 gegen die Federkraft des Rückstellelementes 613. Der Kolben 614 umgreift also den für beide Kupplungen B, F gemeinsamen Lamellenträger ZYLBF fast vollständig.

Räumlich gesehen ist die Servoeinrichtung 610 der Kupplung F näher an Haupt- und Vorschaltradsatz HS, VS angeordnet als die Servoeinrichtung 210 der Kupplung B. Diese Servoeinrichtung 210 der Kupplung B, umfassend einen Druckraum 211, einen Druckausgleichsraum 212, einen Kolben 214, ein Rückstellelement 213 und eine Stauscheibe 215, ist vollständig innerhalb eines Zylinderraums angeordnet, der durch den gehäusewandnahen ersten zylindrischen Abschnitt und den scheibenförmigen Abschnitt des Lamellenträgers ZYLBF gebildet wird, im wesentlichen radial oberhalb des (vorschaltradsatzfernen) Nabenabschnitts 233. Der Kolben 214 ist am Lamellenträger ZYLBF axial verschiebbar gelagert. Entsprechend rotiert auch die Servoeinrichtung 210 ständig mit Drehzahl des ersten Eingangselementes (also hier des ersten Sonnenrades S1_HS) des Hauptradsatzes HS. Zum Ausgleich des rotatorischen Drucks des rotierenden Druckraums 211 der Servoeinrichtung 210 ist ein dynamischer Druckausgleich mit dem drucklos mit Schmiermittel befüllbaren Druckausgleichsraum 212 vorgesehen, wobei der genannte Druckraum 211 näher am Vorschaltradsatz VS (bzw. Hauptradsatz HS) angeordnet ist als dieser Druckausgleichsraum 212. Dabei wird der Druckraum 211 durch eine Mantelfläche des Lamellenträgers ZYLBF (konkret durch einen Teil des gehäusewandnahen ersten zylindrischen Abschnitts des Lamellenträgers ZYLBF, den scheibenförmigen Abschnitt des Lamellenträgers ZYLBF und einen Teil des gehäusewandnahen Nabenabschnitts 233 des Lamellenträgers ZYLBF) und den Kolben 214 gebildet. Der Druckausgleichsraum 212 wird gebildet durch den Kolben 214 und die Stauscheibe 215, welche axial an dem Nabenabschnitt 233 des Lamellenträgers ZYLBF fixiert und gegenüber dem Kolben 214 axial verschiebbar schmiermitteldicht abgedichtet ist. Der Druckraum 211 der Servoeinrichtung 210 der Kupplung B ist also näher am Vorschaltradsatz VS (bzw. Hauptradsatz HS) angeordnet als der Druckausgleichsraum 212 dieser Servoeinrichtung 210, wobei der Druckraum 211 der Kupplung B und der Druckausgleichsraum 612 der Servoeinrichtung 610 der Kupplung F unmittelbar benachbart zueinander angeordnet und nur durch eine Mantelfläche des für beide Kupplungen B, F gemeinsamen Lamellenträgers ZYLBF voneinander getrennt sind. Der Kolben 214 der Servoeinrichtung 210 ist über das hier beispielhaft als Tellerfeder ausgebildete Rückstellelement 213 axial gegen den Nabenabschnitt 233 des Lamellenträgers ZYLBF vorgespannt. Bei einer Beaufschlagung des Druckraums 211 mit Druckmittel zum Schließen der Kupplung B bewegt sich der Kolben 214 axial in zum Vorschaltradsatz VS (bzw. Hauptradsatz HS) entgegengesetzter Richtung und betätigt das ihm zugeordnete Lamellenpaket 200 gegen die Federkraft des Rückstellelementes 213.

Aufgrund der Lagerung des Lamellenträgers ZYLBF auf der getriebegehäusefesten Nabe GN ergibt sich eine konstruktiv relativ einfache Druck- und Schmiermittelzufuhr zu beiden Kupplungen B, F über entsprechende Kanäle bzw. Bohrungen, die abschnittsweise innerhalb der genannten Gehäusenabe GN und abschnittsweise innerhalb der Nabe des Lamellenträgers ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Zur Verbindung des Lamellenträgers ZYLBF, der wie gesagt das Ausgangselement beider Kupplungen B, F bildet, mit dem ersten Eingangselement des Hauptradsatzes HS - hier also mit dem vorschaltradsatznahen Sonnenrad S1_HS des beispielhaft wiederum als Ravigneaux-Planetenradsatz ausgebildeten Hauptradsatzes HS - ist ähnlich wie in Fig. 5 ein zylinderförmiges Verbindungselement ZYL vorgesehen, welches geometrisch als ein in Richtung Hauptradsatz HS hin geöffneter Topf ausgebildet ist. Axial angrenzend an die Gehäusewand GW und im wesentlichen parallel zu dieser Gehäusewand GW erstreckt sich ein im wesentlichen scheibenförmiger Topfboden dieses Verbindungselementes ZYL in radialer Richtung, axial zwischen der Gehäusewand GW und einem scheibenförmigen Abschnitt des Eingangselementes (Innenlamellenträgers) 220 der Kupplung B, welcher auf der vorschaltradsatzfernen Seite der radial übereinander angeordneten Lamellenpakete 200, 600 der Kupplungen B, F verläuft. An seinem Innendurchmesser ist der Topfboden des Verbindungselementes ZYL mit der Nabe des Lamellenträgers ZYLBF verdrehfest verbunden, im dargestellten Beispiel formschlüssig über ein geeignetes Mitnahmeprofil am gehäusewandseitigen Ende des Nabenabschnitts 233. Am Außendurchmesser des Topfbodens, auf einem Durchmesser größer dem Außendurchmesser des Lamellenpaketes 600 und des Außenlamellenträgers 620 der Kupplung F, schließt sich eine ringförmige Mantelfläche des zylinderförmigen Verbindungselementes ZYL an diesen Topfboden an und erstreckt sich axial in Richtung Hauptradsatz HS und übergreift dabei die (im wesentlichen radial übereinander angeordneten) Lamellenpakete 200 und 600 der Kupplungen B und F, den Vorschaltradsatz VS sowie die Kupplungen E und A in axialer Richtung vollständig. An seinem hauptradsatznahen Ende ist das zylinderförmige Verbindungselement ZYL verdrehfest mit einem Mitnahmeblech 250 verbunden, beispielsweise formschlüssig über eine geeignetes Mitnahmeprofil. Dieses Mitnahmeblech 250 erstreckt sich in einem Bereich axial zwischen dem Ausgangselement 130 der Kupplung A und dem Ausgangselement 330 der Bremse C und ist im Bereich seines Innendurchmessers mit einer Sonnenwelle 240 verdrehfest verbunden. Diese Sonnenwelle 240 wiederum ist mit dem vorschaltradsatznahen Sonnenrad S1_HS des Hauptradsatzes HS verbunden. Selbstverständlich ist diese konstruktive Lösung der kinematischen Anbindung des Lamellenträgers ZYLBF an das Sonnenrad S1_HS als beispielhaft anzusehen; beispielsweise mögliche alternative konstruktive Lösungen wurden bereits anhand Fig. 5 erläutert.

Die räumliche Anordnung der übrigen Getriebebauelemente des fünften erfindungsgemäßen Getriebeschemas gemäß Fig. 6 entspricht der in Fig. 2 dargestellten Anordnung, insofern kann auf deren nochmalige Beschreibung an dieser Stelle verzichtet werden.

Anhand Fig. 7 wird nun ein sechstes beispielhaftes Getriebeschema gemäß der vorliegenden Erfindung erläutert, basierend auf dem zuvor anhand Fig. 6 beschriebenen fünften erfindungsgemäßen Getriebeschema. Die Änderungen gegenüber Fig. 6 betreffen lediglich die konstruktive Ausgestaltung des für die beiden Kupplungen B, F gemeinsamen Lamellenträgers ZYLBF und die räumliche Lage der Servoeinrichtungen 210, 610 dieser beiden Kupplungen B, F. Insofern kann auf die nochmalige Beschreibung der übrigen Getriebebauelemente an dieser Stelle verzichtet werden. Wie in Fig. 7 ersichtlich, wurde das anhand Fig. 3 beschriebene Prinzip der radial übereinander angeordneten Servoeinrichtungen der Baugruppe mit den beiden Kupplungen B, F nunmehr angewendet auf die Ausgestaltung des für die beiden Kupplungen B, F gemeinsamen Lamellenträgers ZYLBF, bei der das Lamellenpaket 600 der Kupplung F radial über dem Lamellenpaket 200 der Kupplung B angeordnet ist und beide Lamellenpakete 200, 600 auf der dem Vorschaltradsatz VS abgewandten Seite der Baugruppe angeordnet sind.

Nunmehr ist die Servoeinrichtung 610 der Kupplung F räumlich gesehen radial über der Servoeinrichtung 210 der Kupplung E angeordnet. Dabei ist ein Druckraum 611 der (radial äußeren) Servoeinrichtung 610 in etwa radial über einem Druckraum 211 der (radial inneren) Servoeinrichtung 210 und ein Druckausgleichsraum 612 eines dynamischen Druckausgleichs der (radial äußeren) Servoeinrichtung 610 in etwa radial über einem Druckausgleichsraum 212 eines dynamischen Druckausgleichs der (radial inneren) Servoeinrichtung 210 angeordnet. Dabei sind die Druckräume 211, 611 näher am Vorschaltradsatz VS (bzw. am Hauptradsatz HS) angeordnet als die jeweiligen Druckausgleichsräume 212, 612.

Wie aus Fig. 7 weiterhin ersichtlich, ist der für die beiden Kupplungen B, F gemeinsame Lamellenträger ZYLBF geometrisch in Form eines in Richtung Gehäusewand GW geöffneten Topfes ausgebildet. Am Außendurchmesser dieses Lamellenträgers ZYLBF ist ein gestufter zylindrischer Abschnitt vorgesehen, an dessen gehäusewandnahen Ende am Innendurchmesser die Außenlamellen des Lamellenpaketes 200 der (radial inneren) Kupplung B und am Außendurchmesser die Innenlamellen des Lamellenpaketes 600 der (radial äußeren) Kupplung F angeordnet sind. Beide Lamellenpakete 600, 200 sind benachbart zur Gehäusewand GW angeordnet. Ausgehend vom vorschaltradsatznahen Ende des gestuften zylindrischen Abschnitts des Lamellenträgers ZYLBF erstreckt sich ein scheibenförmiger Abschnitt des Lamellenträgers ZYLBF angrenzend an den gekoppelten Steg ST_VS des Vorschaltradsatzes VS radial nach innen bis zu einer Nabe 233 des Lamellenträgers ZYLBF. Diese Nabe 233 erstreckt sich, ausgehend vom Innendurchmesser des scheibenförmigen Abschnitts des Lamellenträgers ZYLBF, axial in Richtung Gehäusewand GW und ist auf einer getriebegehäusefesten Nabe GN, an der auch das Sonnenrads SO_VS des Vorschaltradsatzes VS festgesetzt ist, verdrehbar gelagert.

Die Servoeinrichtung 210 der Kupplung B ist vollständig innerhalb eines Zylinderraums angeordnet, der durch den gestuften zylindrischen Abschnitt und den scheibenförmigen Abschnitt des Lamellenträgers ZYLBF gebildet wird, und rotiert entsprechend ständig mit Drehzahl des ersten Eingangselementes (also hier des ersten Sonnenrades S1_HS) des Hauptradsatzes HS. Dabei umfasst diese Servoeinrichtung 210 den Druckraum 211, den Druckausgleichsraum 212, einen Kolben 214, ein Rückstellelement 213 und eine Stauscheibe 215. Der Kolben 214 ist im Lamellenträger ZYLBF druckmitteldicht axial verschiebbar gelagert und über das hier beispielhaft als Tellerfeder ausgebildete Rückstellelement 213 axial gegen den Nabenabschnitt 233 des Lamellenträgers ZYLBF vorgespannt. Der Druckraum 211 wird gebildet durch den Kolben 214 und einen Teil der inneren Mantelfläche des Lamellenträgers ZYLBF. Der Druckausgleichsraum 212 zum Ausgleich des rotatorischen Drucks des rotierenden Druckraums 211 ist auf der dem Vorschaltradsatz VS abgewandten Seite des Druckraums 211 angeordnet und wird durch den Kolben 614 und die Stauscheibe 215 gebildet.

Die Druckmittel- und Schmiermittel-Versorgung der Servoeinrichtung 210 der Kupplung B erfolgt in konstruktiv relativ einfacher Weise über die getriebegehäusefeste Nabe GN, wobei die entsprechenden Kanäle bzw. Bohrungen abschnittsweise innerhalb der genannten Gehäusenabe GN und abschnittsweise innerhalb der Nabe 233 des Lamellenträgers ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217. Wird der Druckraum 211 zum Schließen der Kupplung B mit Druckmittel beaufschlagt, so bewegt sich der Kolben 214 axial in zum Vorschaltradsatz VS (bzw. Hauptradsatz HS) entgegengesetzter Richtung und betätigt das ihm zugeordnete Lamellenpaket 200 gegen die Federkraft des Rückstellelementes 213.

Wie bereits erwähnt, ist die Servoeinrichtung 610 der (radial äußeren) Kupplung F räumlich gesehen in einem Bereich radial über der Servoeinrichtung 210 der (radial inneren) Kupplung B angeordnet. Diese Servoeinrichtung 610 umfasst den Druckraum 611, den Druckausgleichsraum 612, einen Kolben 614, ein.Rückstellelement 613 und eine Stützscheibe 618. Dabei ist der Druckraum 611 der (radial äußeren) Servoeinrichtung 610 zumindest in etwa radial über dem Druckraum 211 der (radial inneren) Servoeinrichtung 210 und der Druckausgleichsraum 612 der (radial äußeren) Servoeinrichtung 610 zumindest in etwa radial über dem Druckausgleichsraum 212 der (radial inneren) Servoeinrichtung 210 angeordnet. Gebildet wird der Druckraum 611 durch den Kolben 614, die Stützscheibe 618 und einen Teil der äußeren Mantelfläche des Lamellenträgers ZYLBF. Hierzu ist die Stützscheibe 618 geometrisch in Form eines in Richtung Lamellenpaket 600 (bzw. in Richtung Gehäusewand GW) hin geöffneten Topfes ausgebildet, dessen Mantelfläche den Kolben 614 außen umschließt, und dessen Topfboden an seinem Innendurchmesser am Außendurchmesser des scheibenförmigen Abschnitts des Lamellenträgers ZYLBF druckmitteldicht befestigt ist. Im dargestellten Beispiel ist für die Befestigung der Stützscheibe 618 an dem Lamellenträger ZYLBF ein druckmitteldicht abgedichtetes Mitnahmeprofil und zur axialen Festlegung ein Sicherungsring vorgesehen. Somit ist der Kolben 614 zwischen dem Innendurchmesser des zylindrischen Abschnitts der Stützscheibe 618 und dem Außendurchmesser des gestuften zylindrischen Abschnitts des Lamellenträgers ZYLBF druckmitteldicht axial verschiebbar gelagert und über das Rückstellelement 613 axial gegen den Lamellenträger ZYLBF vorgespannt. Das Rückstellelement 613 ist hier beispielhaft als Federpaket aus ringförmig angeordneten Spiralfedern ausgeführt.

Eine Druckmittelzuführung 616 zu dem Druckraum 611 der Servoeinrichtung 610 der Kupplung F verläuft abschnittsweise innerhalb der getriebegehäusefesten Nabe GN und abschnittsweise innerhalb des Lamellenträgers ZYLBF. Der Druckausgleichsraum 612 der Servoeinrichtung 610 der (radial äußeren) Kupplung F wird hier in baulängensparender Weise direkt über den Druckausgleichsraum 212 der Servoeinrichtung 210 der (radial inneren) Kupplung B drucklos mit Schmiermittel befüllt. Hierzu ist am Außendurchmesser des Kolbens 214 der (radial inneren) Servoeinrichtung 210 mindestens eine Radialbohrung vorgesehen, die einerseits im Druckausgleichsraum 212 der Servoeinrichtung 610 und andererseits in einem nach außen hin schmiermitteldicht abgedichteten Ringkanal am Innendurchmesser des gestuften zylindrischen Abschnitts des Lamellenträgers ZYLBF mündet. Weiterhin ist in dem gestuften zylindrischen Abschnitt des Lamellenträgers ZYLBF mindestens eine Radialbohrung vorgesehen, die einerseits im genannten Ringkanal am Innendurchmesser des gestuften zylindrischen Abschnitts des Lamellenträgers ZYLBF und andererseits im Druckausgleichsraum 612 der (radial äußeren) Servoeinrichtung 610 mündet. Die entsprechenden Bohrungen bzw. Kanäle zwischen den beiden Druckausgleichsräumen 212, 612 sind in Fig. 7 mit 617 bezeichnet. Wird der Druckraum 611 der Servoeinrichtung 610 zum Schließen der Kupplung F mit Druckmittel befüllt, so bewegt sich der Kolben 614 axial in Richtung Gehäusewand GW (bzw. axial in zum Vorschaltradsatz VS und Hauptradsatz HS entgegengesetzer Richtung) und betätigt das ihm zugeordnete Lamellenpaket 600 gegen die Federkraft des Rückstellelementes 613.

Zur Verbindung des das Ausgangselement beider Kupplungen B, F bildenden Lamellenträgers ZYLBF mit dem vorschaltradsatznahen Sonnenrad S1_HS des Hauptradsatzes HS ist ein zylinderförmiges Verbindungselement ZYL vorgesehen, welches geometrisch als ein in Richtung Gehäusewand GW hin geöffneter Topf ausgebildet ist. Ein Topfboden dieses Verbindungselementes ZYL erstreckt sich axial zwischen dem Ausgangselement 130 der Kupplung A und dem Ausgangselement 330 der Bremse C und ist im Bereich seines Innendurchmessers mit einer Sonnenwelle 240 verdrehfest verbunden. Diese Sonnenwelle 240 wiederum ist sowohl mit dem Ausgangselement 330 der Bremse C als auch mit dem vorschaltradsatznahen Sonnenrad S1_HS des Hauptradsatzes HS verbunden. Am Außendurchmesser des Topfbodens des Verbindungselementes ZYL, auf einem Durchmesser größer dem Außendurchmesser der Kupplung A, schließt sich eine ringförmige Mantelfläche des Verbindungselementes ZYL an diesen Topfboden an und erstreckt sich axial in Richtung Gehäusewand GW und übergreift dabei die beiden Kupplungen A und E, den Vorschaltradsatz VS sowie die Kupplung F (und damit auch die radial unterhalb der Kupplung F angeordnete Kupplung B) in axialer Richtung vollständig. An seinem gehäusewandnahen Ende ist das zylinderförmige Verbindungselement ZYL verdrehfest mit der Stauscheibe 215 der Servoeinrichtung 210 der Kupplung B verbunden. Wie in Fig. 7 ersichtlich, erstreckt sich ein radial äußerer Abschnitt dieser Stauscheibe 215 im Bereich der Verbindung zum Verbindungselement ZYL axial zwischen der Gehäusewand GW und einem scheibenförmigen Abschnitt des Eingangselementes (Innenlamellenträgers) 220 der Kupplung B, welcher auf der vorschaltradsatzfernen Seite der radial übereinander angeordneten Lamellenpakete 200, 600 der Kupplungen B, F verläuft. An ihrem Innendurchmesser ist die Stauscheibe - wie bereits erwähnt - über ein drehmomentführendes Mitnahmeprofil mit der Nabe 233 des Lamellenträgers ZYLBF verdrehfest verbunden.

Anhand Fig. 8 wird nun ein siebtes beispielhaftes Getriebeschema gemäß der vorliegenden Erfindung erläutert, basierend auf dem zuvor anhand Fig. 7 beschriebenen sechsten erfindungsgemäßen Getriebeschema. Die Änderungen gegenüber Fig. 7 betreffen die konstruktive Ausgestaltung des Eingangselementes 620 der Kupplung F und die konstruktive Ausgestaltung der Servoeinrichtung 610 der Kupplung F. Ähnlich wie in Fig. 7 sind die beiden Kupplungen B und F auf der dem Hauptradsatz HS abgewandten Seite des Vorschaltradsatzes VS angeordnet, axial unmittelbar zwischen Vorschaltradsatz VS und der getriebegehäusefesten Gehäusewand GW, welche im dargestellten Beispiel in Verbindung mit der koaxialen Anordnung von Antriebs- und Abtriebswelle AN, AB eine einem hier nicht näher dargestellten Antriebsmotor des Getriebes zugewandte Außenwand des Getriebegehäuses GG bildet. Dabei ist die Kupplung F räumlich gesehen unverändert radial über der Kupplung B angeordnet, das Lamellenpaket 600 der Kupplung F also radial über dem Lamellenpaket 200 der Kupplung B und die Servoeinrichtung 610 der Kupplung F zumindest weitgehend radial über der Servoeinrichtung 210 der Kupplung B. Ähnlich wie in Fig. 7 ist für die beiden Kupplungen B, F ein gemeinsamer Lamellenträger ZYLBF vorgesehen, der das mit dem ersten Eingangselement - hier dem Sonnenrad S1_HS - des Hauptradsatzes HS verbundene Ausgangselement beider Kupplungen B, F bildet, der geometrisch in Form eines in Richtung Gehäusewand GW hin geöffneten und Topfes ausgebildet ist, der für die Kupplung F deren Innenlamellenträger und für die Kupplung B deren Außenlamellenträger bildet, und der auf der getriebegehäusefesten Nabe GN verdrehbar gelagert ist, an der auch das Sonnenrad SO_VS des Vorschaltradsatzes VS festgesetzt ist. Die Servoeinrichtung 210 der radial inneren Kupplung B, umfassend einen Druckraum 211, einen Druckausgleichsraum 212 zum Ausgleich des dynamischen Drucks des rotierenden Druckraums 211, einen Kolben 214, ein Rückstellelement 213 und eine drehmomentführende Stauscheibe 215, ist bis auf einen Abschnitt der drehmomentführenden Stauscheibe 215 vollständig innerhalb eines Zylinderraums angeordnet, der durch den für beide Kupplungen B, F gemeinsamen Lamellenträger ZYLBF gebildet wird, und rotiert stets mit Drehzahl des ersten Eingangselementes (S1_HS) des Hauptradsatzes HS.

Im Unterschied zu Fig. 7 ist das Eingangselement 620 der Kupplung F nunmehr als zweiteiliges Bauelement ausgeführt, mit einem inneren Zylinder und einem an diesem inneren Zylinder festgesetzten äußeren Zylinder. Beide dieser Zylinder sind als in Richtung Gehäusewand GW hin geöffneter Topf ausgebildet. Der innere Zylinder des Eingangselement 620 ist axial unmittelbar zwischen dem Vorschaltradsatz VS und dem Lamellenträger ZYLBF angeordnet und bildet dabei einen Zylinderraum, der den zylindrischen Abschnitt des Lamellenträgers ZYLBF zumindest teilweise umschließt, innerhalb dessen Druckraum 211 und Druckausgleichsraum 212 der Servoeinrichtung 210 angeordnet sind. Dabei erstreckt sich der scheibenförmige Topfboden dieses inneren Zylinders einerseits parallel zum Topfboden des Lamellenträgers ZYLBF und andererseits parallel zum Vorschaltradsatz VS und ist auf der getriebegehäusefesten Nabe GN im Bereich axial zwischen der Nabe 233 des Lamellenträgers ZYLBF und dem Sonnenrad SO_VS verdrehbar gelagert. Weiterhin ist der innere Zylinder des Eingangselementes 620 mit dem gekoppelten Steg ST_VS des Vorschaltradsatzes VS (und damit über diesen Steg ST_VS mit der Antriebswelle AN) verbunden. Insofern kann der innere Zylinder des Eingangselementes 620 konstruktiv auch als hauptradsatzfernes Stegblech des Stegs ST_VS ausgeführt sein. Der äußere Zylinder des Eingangselementes 620 bildet den Außenlamellenträger der Kupplung F und nimmt am Innendurchmesser seines zylindrischen Abschnitts im Bereich seines gehäusewandnahen Endes die Außenlamellen des Lamellenpaketes 600 der Kupplung F auf. Der scheibenförmige Topfboden dieses äußeren Zylinders erstreckt sich ebenfalls parallel angrenzend zum Vorschaltradsatz VS und ist im Bereich seines Innendurchmessers mit dem scheibenförmigen Topfboden des inneren Zylinders des Eingangselementes 620 verdrehfest und druckmitteldicht verbunden.

Die Servoeinrichtung 610 zur Betätigung des Lamellenpaketes 600 der Kupplung F ist innerhalb des durch den äußeren Zylinder des Eingangselementes 620 gebildeten Zylinderraums angeordnet, axial zwischen dem Topfboden dieses äußeren Zylinders und dem Lamellenpaket 600. Andererseits ist die Servoeinrichtung 610 räumlich gesehen zumindest weitgehend radial über dem inneren Zylinder des Eingangselementes 620 angeordnet. Dabei umfasst diese Servoeinrichtung 610 einen Druckraum 611, einen Druckausgleichsraum 612 zum Ausgleich des dynamischen Drucks des rotierenden Druckraums 611, einen Kolben 614, ein Rückstellelement 613 und eine Stauscheibe 615. Der Kolben 614 ist am Innendurchmesser des äußeren Zylinders des Eingangselementes 620 und am Außendurchmesser des inneren Zylinders des Eingangselementes 620 druckmitteldicht axial verschiebbar gelagert. Im Unterschied zu Fig. 7 ist rotiert die Servoeinrichtung 610 der Kupplung F gemäß Fig. 8 somit stets mit Drehzahl der Antriebswelle AN. Der Druckraum 611 der Servoeinrichtung 610 wird durch einen Teil der Mantelfläche des äußeren Zylinders des Eingangselementes 620, einen Teil der Mantelfläche des inneren Zylinders des Eingangselementes 620 und den Kolben 614 gebildet. Der Druckausgleichsraum 612 ist auf der dem Vorschaltradsatz VS abgewandten Seite des Kolbens 614 angeordnet und wird durch einen Teil der äußeren Mantelfläche des inneren Zylinders des Eingangselementes 620, den Kolben 614 und die Stauscheibe 615 gebildet. Das Rückstellelement 613 ist hier beispielhaft als Federpaket aus ringförmig angeordneten kinematisch parallelgeschalteten Spiralfedern ausgeführt und axial zwischen Kolben 614 und Stauscheibe 615 eingespannt, gegen eine axial am Außendurchmesser des inneren Zylinders des Eingangselementes 620 vorgesehene Abstützung der Stauscheibe 615.

Eine Druckmittelzuführung 616 zu dem Druckraum 611 der Servoeinrichtung 610 der Kupplung F verläuft abschnittsweise innerhalb der getriebegehäusefesten Nabe GN und abschnittsweise innerhalb des inneren Zylinders des Eingangselementes 620 der Kupplung F. Wird der Druckraum 611 der Servoeinrichtung 610 zum Schließen der Kupplung F mit Druckmittel befüllt, so bewegt sich der Kolben 614 axial in Richtung Gehäusewand GW (bzw. axial in zum Vorschaltradsatz VS und Hauptradsatz HS entgegengesetzer Richtung) und betätigt das ihm zugeordnete Lamellenpaket 600 gegen die Federkraft des Rückstellelementes 613. Eine Schmiermittelzuführung 617 zum Druckausgleichsraum 612 der Servoeinrichtung 610 der Kupplung F verläuft abschnittsweise innerhalb der getriebegehäusefesten Nabe GN, abschnittsweise über einen Spalt zwischen dem Lamellenträger ZYLBF und dem inneren Zylinder des Eingangselementes 620 der Kupplung F und abschnittsweise über mindestens eine Radialbohrung im zylindrischen Abschnitt des inneren Zylinders des Eingangselementes 620 der Kupplung F. In vorteilhafter Weise kann zur Kühlung des Lamellenpaketes 600 erforderliches Schmiermittel diesem Lamellenpaket 600 ebenfalls über den genannten Spalt zwischen dem Lamellenträger ZYLBF und dem inneren Zylinder des Eingangselementes 620 zugeführt werden. Hierdurch kann die Kühlung der radial äußeren Kupplung F in vorteilhafter Weise weitgehend unabhängig von der Kühlung der radial inneren Kupplung B gestaltet werden.

Die räumliche Anordnung der übrigen Getriebebauelemente des siebten erfindungsgemäßen Getriebeschemas gemäß Fig. 8 entspricht der in Fig. 7 dargestellten Anordnung, insofern kann auf deren nochmalige Beschreibung an dieser Stelle verzichtet werden.

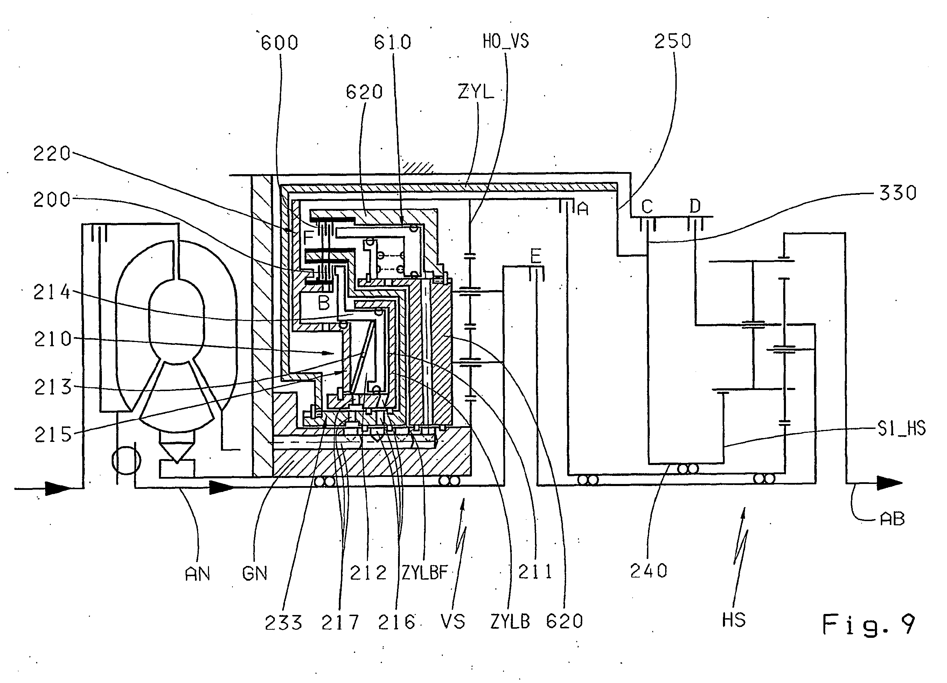

Anhand Fig. 9 wird nun ein achtes beispielhaftes Getriebeschema gemäß der vorliegenden Erfindung erläutert, basierend auf dem zuvor anhand Fig. 8 beschriebenen siebten erfindungsgemäßen Getriebeschema. Die Änderungen gegenüber Fig. 8 betreffen die konstruktive Ausgestaltung der Servoeinrichtung 210 der Kupplung B mit dem Ziel, dass nunmehr die Servoeinrichtungen 210, 610 beider Kupplungen B und F stets mit Drehzahl der Antriebswelle AN rotieren, unter Beibehaltung der Bauteilanordnung des siebten erfindungsgemäßen Getriebeschemas gemäß Fig. 8. Wie in Fig. 9 ersichtlich, wurde hierzu ein gegenüber Fig. 8 zusätzliches Bauelement ZYLB zur Aufnahme der Servoeinrichtung 210 der Kupplung B vorgesehen, welches in den für beide Kupplungen B, F gemeinsamen Lamellenträger ZYLBF gebildeten Zylinderraum eingesetzt ist.

Geometrisch ist dieses zusätzliche Bauelement ZYLB als ein in zum Vorschaltradsatz VS entgegengesetzter Richtung hin geöffneter Zylinder ausgebildet. Eine Nabe dieses Zylinders ZYLB ist auf der Nabe 233 des Lamellenträgers ZYLBF verdrehbar gelagert. Die Servoeinrichtung 210 der Kupplung B umfasst ähnlich wie in Fig. 8 einen Druckraum 211, einen Druckausgleichsraum 212 zum Ausgleich des dynamischen Drucks des rotierenden Druckraums 211, einen Kolben 214, ein beispielhaft als Tellerfeder ausgebildetes Rückstellelement 213 und eine Stauscheibe 215. Der Kolben 214 ist dabei am Innendurchmesser des (äußeren) zylindrischen Abschnitts des Zylinders ZYLB und am Außendurchmesser der Nabe des Zylinders ZYLB druckmitteldicht axial verschiebbar gelagert. Der Druckraum 211 ist innerhalb des Zylinders ZYLB auf der dem Vorschaltradsatz VS abgewandten Seite des Zylinders ZYLB angeordnet und wird durch den Kolben 214 und eine Mantelfläche des Zylinders ZYLB gebildet. Der Druckausgleichsraum 212 ist auf der dem Druckraum 211 gegenüberliegenden Seite des Kolbens 214 angeordnet und wird durch den Kolben 214 und die gegen diesen Kolben 214 axial verschiebbar schmiermitteldicht abgedichtete Stauscheibe 215 gebildet. Diese Stauscheibe 215 ist über einen Sicherungsring am vorschaltradsatzfernen Ende der Nabe des Zylinders ZYLB an dieser Nabe des Zylinders ZYLB axial festgelegt. Das Rückstellelement 213 ist axial zwischen Kolben 214 und Stauscheibe 215 eingespannt und spannt so den Kolben gegen den Zylinder ZYLB vor. Die Druckmittel- und Schmiermittel-Versorgung der Servoeinrichtungen 210 der Kupplung B erfolgt über die getriebegehäusefeste Nabe GN, wobei die entsprechenden Kanäle bzw. Bohrungen abschnittsweise innerhalb der genannten Gehäusenabe GN, abschnittsweise innerhalb der Nabe 233 des Lamellenträgers ZYLBF und abschnittsweise innerhalb der Nabe des Zylinders ZYLB verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217. Bei einer Beaufschlagung des Druckraums 211 mit Druckmittel zum Schließen des der Servoeinrichtung 210 zugeordneten Lamellenpaketes 200 der Kupplung B bewegt sich der Kolben 214 gegen die Federkraft des Rückstellelementes 213 axial in zum Vorschaltradsatz VS entgegengesetzer Richtung und betätigt das Lamellenpaket 200. In dem dargestellten Ausführungsbeispiel sind Stauscheibe 215 und Eingangselement 220 beispielhaft einstückig ausgeführt. Die Servoeinrichtung 210 der Kupplung B rotiert nunmehr stets mit Drehzahl des Hohlrades HO_VS des Vorschaltradsatzes VS.

Wie in Fig. 9 weiterhin ersichtlich, sind der für beide Kupplungen B, F gemeinsame Lamellenträger ZYLBF, die Lamellenpakete 200, 600 und die Servoeinrichtungen 210, 610 dieser beiden Kupplungen B,F wie in Fig. 8 zumindest weitgehend innerhalb eines Zylinderraums angeordnet, der durch das Eingangselement bzw. den Außenlamellenträger 620 der Kupplung F gebildet wird, wobei das Eingangselement bzw. der Außenlamellenträger 620 der Kupplung F im Bereich axial zwischen Lamellenträger ZYLBF und Vorschaltradsatz VS auf der getriebegehäusefesten Nabe GN verdrehbar gelagert ist und die Servoeinrichtung 610 der Kupplung F entsprechend stets mit Drehzahl der Antriebswelle AN rotiert. Die Druck- und Schmiermittelversorgung der Servoeinrichtung 610 und die Kühlmittelversorgung des Lamellenpaketes 600 der Kupplung F entspricht der in Fig. 8 dargestellten Versorgung. Wie in Fig. 8 bildet der Lamellenträger ZYLBF das Ausgangselement für beide Kupplungen B, F und ist entsprechend mit dem ersten Eingangselement des Hauptradsatzes HS verbunden, hier beispielhaft - ähnlich wie in Fig. 5 - über ein Verbindungselement ZYL, ein Mitnahmeblech 250, ein Ausgangselement 330 der Bremse C und eine Sonnenwelle 240 mit dem vorschaltradsatznahen Sonnenrad S1_HS des Hauptradsatzes HS. Hinsichtlich möglicher Anordnungen und konstruktiven Ausgestaltungen der weiteren Schaltelemente E, A, C und D, des Hauptradsatzes HS und der Abtriebswelle AB wird auf die anderen in dieser Anmeldung dargestellten erfindungsgemäßen Getriebeschemata verwiesen.

Anhand Fig. 10 wird nun ein neuntes beispielhaftes Getriebeschema gemäß der vorliegenden Erfindung erläutert, basierend auf dem anhand Fig. 2 beschriebenen ersten erfindungsgemäßen Getriebeschema. Die Änderungen gegenüber Fig. 2 betreffen die konstruktive Ausgestaltung der vormontierbaren Baugruppe mit den beiden Kupplungen B und F, wobei diese Baugruppe unverändert auf der dem Hauptradsatz HS abgewandeten Seite des Vorschaltradsatzes VS angeordnet ist, räumlich gesehen axial zwischen dem Vorschaltradsatz VS und einer getriebegehäusefesten Außenwand GW des Getriebes. Wie in Fig. 10 ersichtlich, sind die beiden Kupplungen B und F nunmehr im wesentlichen axial nebeneinander angeordnet. Insbesondere die Lamellenpakete 200, 600 der beiden Kupplungen B, F und die Servoeinrichtungen 210, 610 der beiden Kupplungen B, F zur Betätigung des jeweiligen Lamellenpaketes 200 bzw. 600 sind axial nebeneinander angeordnet, wobei das Lamellenpaket 200 und die ihm zugeordnete Servoeinrichtung 210 näher am Hauptradsatz HS angeordnet ist als das Lamellenpaket 600 und die ihm zugeordnete Servoeinrichtung 610. Die Eingangselemente 220, 620 beider Kupplungen B, F sind jeweils als Außenlamellenträger zur Aufnahme der Außenlamellen des jeweiligen Lamellenpaketes 200 bzw. 600 ausgebildet, geometrisch jeweils in Form eines in Richtung Hauptradsatz HS hin geöffneten zylinderförmigen Topfes. Die Servoeinrichtungen 210, 610 beider Kupplungen 210 sind jeweils vollständig innerhalb eines Zylinderraums angeordnet, der durch den jeweiligen Außenlamellenträger 220 bzw. 620 gebildet wird. Dabei rotiert die Servoeinrichtung 210 der Kupplung B stets mit Drehzahl des Hohlrades HS_VS des Vorschaltradsatzes VS und die Servoeinrichtung 610 der Kupplung F stets mit Drehzahl der Antriebswelle AN.

Ausgehend von der Gehäusewand GW erstreckt sich eine von der Antriebswelle AN des Getriebes in axialer Richtung zentrisch durchdrungene getriebegehäusefeste Nabe GN in den Getriebeinnenraum räumlich gesehen bis zum Vorschaltradsatz VS. Das Sonnenrad SO_VS dieses Vorschaltradsatzes VS ist über diese getriebegehäusefeste Nabe GN am Getriebegehäuse GG festgesetzt. Eine auf der getriebegehäusefesten Nabe GN verdrehbar gelagerte Nabe 623 des Außenlamellenträgers 620 der Kupplung F umschließt diese getriebegehäusefeste Nabe GN auf fast der gesamten axialen Länge dieser Nabe GN. Diese Nabe 623 ist an ihrem vorschaltradsatznahen Ende mit einem hauptradsatzfernen Stegblech des gekoppelten Stegs ST_VS des Vorschaltradsatzes verbunden. Ein hauptradsatznahes Stegblech dieses Stegs ST_VS ist mit der Antriebswelle AN verbunden. Der Topfboden des zylinderförmigen Außenlamellenträgers 620 erstreckt sich, ausgehend vom gehäusewandnahen Ende der Nabe 623, axial angrenzend zur Gehäusewand GW. Auf der der Gehäusewand GW abgewandten Seite dieses Topfboden ist die Servoeinrichtung 610 der Kupplung F angeordnet. Dabei umfasst diese Servoeinrichtung 610 einen Druckraum 611, einen Druckausgleichsraum 612, einen Kolben 614, ein Rückstellelement 613 und eine Stauscheibe 615. Der Druckraum 611 und der zum Ausgleich dessen dynamischen Drucks vorgesehene Druckausgleichraum 612 werden durch den Kolben 614 voneinander getrennt, wobei der Druckausgleichsraum 612 näher am Vorschaltradsatz VS (bzw. Hauptradsatz HS) angeordnet ist als der Druckraum 611. Der Kolben 614 ist im Außenlamellenträger 620 druckmitteldicht axial verschiebbar gelagert und wirkt auf das Lamellenpaket 600 der Kupplung F von der dem Vorschaltradsatz VS (bzw. Hauptradsatz HS) abgewandten Seite des Lamellenpaketes 600 her. Der auf der gehäusewandnahen Seite des Kolbens 614 angeordnete Druckraum 611 wird gebildet durch diesen Kolben 614 und eine innere Mantelfläche des Außenlamellenträgers 620. Der auf der vorschaltradsatznahen Seite des Kolbens 614 angeordnete Druckausgleichsraum 612 wird gebildet durch diesen Kolben 614 und die zum Kolben 614 hin axial verschiebbar schmiermitteldicht abgedichtete Stauscheibe 615. Die Stauscheibe 615 ist an der Nabe 623 des Außenlamellenträgers 620 räumlich gesehen in etwa nabenmittig über einen Sicherungsring axial festgesetzt. Das hier beispielhaft als Tellerfeder ausgebildete Rückstellelement 613 ist axial zwischen Kolben 614 und Stauscheibe 615 eingespannt und spannt so den Kolben 614 axial gegen den Außenlamellenträger 620 vor. Zur Druckmittelzuführung zum Druckraum 611 weisen die getriebegehäusefeste Nabe GN und die Nabe 623 des Eingangselementes 620 der Kupplung F entsprechende Kanäle bzw. Bohrungen 616 auf. Eine Schmiermittelzuführung zum Druckausgleichsraum 612 erfolgt ebenfalls über die getriebegehäusefeste Nabe GN und die Nabe 623 des Eingangselementes 620, die entsprechenden Kanäle bzw. Bohrungen sind mit 617 bezeichnet. Wird der Druckraum 611 zum Schließen der Kupplung F mit Druckmittel befüllt, so bewegt sich der Kolben 614 der Servoeinrichtung 610 gegen die Federkraft des Rückstellelementes 613 axial in Richtung Vorschaltradsatz VS (bzw. axial in Richtung Hauptradsatz HS) und betätigt das ihm zugeordnete Lamellenpaket 600.

Der zylindrische Außenlamellenträger 220 der Kupplung B ist räumlich gesehen axial zwischen der Servoeinrichtung 610 der Kupplung F und dem Vorschaltradsatz VS angeordnet, wobei das Lamellenpaket 200 der Kupplung B einerseits axial neben dem Lamellenpaket 600 der Kupplung F und andererseits zumindest weitgehend auf der dem Hauptradsatz HS abgewandten Seite des Vorschaltradsatzes VS angeordnet ist. Beide Lamellenpakete 200, 600 weisen hier beispielhaft den gleichen Durchmesser auf, wodurch die Möglichkeit zum Gleichteile-Einsatz gegeben ist. Dabei ist der Durchmesser der Lamellenpakete 200, 600 größer als der Außendurchmesser des Vorschaltradsatzes VS. Entsprechend der genannten räumlichen Anordnung von Außenlamellenträger 220 der Kupplung B und Nabe 623 des Außenlamellenträgers 620 der Kupplung F ist der Außenlamellenträgers 220 auf einem zylindrischen Abschnitt dieser Nabe 623, der sich räumlich gesehen axial zwischen der Stauscheibe 615 der Servoeinrichtung 610 der Kupplung F und dem gehäusewandseitigen Stegblech des Stegs ST_VS des Vorschaltradsatzes VS befindet, verdrehbar gelagert. Die zu dieser Lagerung korrespondierende Nabe des Außenlamellenträgers 220 der Kupplung B ist mit 223 bezeichnet. Der Topfboden des zylinderförmigen Außenlamellenträgers 220 erstreckt sich - ausgehend vom vorschaltradsatzfernen Ende der Nabe 223 - parallel angrenzend zur Stauscheibe 615 der Servoeinrichtung 610 der Kupplung F radial nach außen. Auf der der Stauscheibe 615 bzw. der Gehäusewand GW abgewandten Seite dieses Topfbodens ist die Servoeinrichtung 210 der Kupplung B angeordnet. Dabei umfasst diese Servoeinrichtung 210 einen Druckraum 211, einen Druckausgleichsraum 212, einen Kolben 214, ein Rückstellelement 213 und eine Stauscheibe 215. Der Druckraum 211 und der zum Ausgleich dessen dynamischen Drucks vorgesehene Druckausgleichsraum 212 werden durch den Kolben 214 voneinander getrennt, wobei der Druckausgleichraum 212 näher am Vorschaltradsatz VS (bzw. Hauptradsatz HS) angeordnet ist als der Druckraum 211. Der Kolben 214 ist im Außenlamellenträger 220 druckmitteldicht axial verschiebbar gelagert und wirkt auf das Lamellenpaket 200 der Kupplung B von der dem Vorschaltradsatz VS (bzw. Hauptradsatz HS) abgewandten Seite des Lamellenpaketes 200 her. Der auf der gehäusewandnahen Seite des Kolbens 214 angeordnete Druckraum 211 wird gebildet durch diesen Kolben 214 und eine innere Mantelfläche des Außenlamellenträgers 220. Der auf der vorschaltradsatznahen Seite des Kolbens 214 angeordnete Druckausgleichsraum 212 wird gebildet durch diesen Kolben 214 und die zum Kolben 214 hin axial verschiebbar schmiermitteldicht abgedichtete Stauscheibe 215. Diese Stauscheibe 215 ist an der Nabe 223 des Außenlamellenträgers 220 räumlich gesehen am vorschaltradsatznahen Ende dieser Nabe 223 über einen Sicherungsring axial festgesetzt. Das hier beispielhaft als Tellerfeder ausgebildete Rückstellelement 213 ist axial zwischen Kolben 214 und Stauscheibe 215 eingespannt und spannt so den Kolben 214 axial gegen den Außenlamellenträger 220 vor. Die drehmoment- und drehzahlführenden Anbindung des Außenlamellenträgers 220, der ja das Eingangselement der Kupplung B bildet, an das Hohlrad HO_VS, das ja das Ausgangselement des Vorschaltradsatzes VS bildet, erfolgt über die ringscheibenförmige Stauscheibe 215, die hierzu an ihrem Außendurchmesser verdrehfest mit dem Hohlrad HO_VS verbunden ist und an ihrem Innendurchmesser verdrehfest mit der Nabe 223 des Außenlamellenträgers 220 verbunden ist.

Eine Druckmittel- und Schmiermittel-Zuführung zur Servoeinrichtung 210 der Kupplung B erfolgt abschnittsweise über die getriebegehäusefeste Nabe GN, abschnittsweise über die Nabe 623 des Eingangselementes bzw. Außenlamellenträgers 620 der Kupplung F und abschnittsweise über die Nabe 223 des Eingangselementes bzw. Außenlamellenträgers 220 der Kupplung B. Die entsprechenden Kanäle bzw. Bohrungen der Druckmittelzuführung zum Druckraum 211 der Servoeinrichtung 210 sind mit 216 bezeichnet, die entsprechenden Kanäle bzw. Bohrungen der Schmiermittelzuführung zum Druckausgleichsraum 212 der Servoeinrichtung 210 mit 217. Wird der Druckraum 211 zum Schließen der Kupplung B mit Druckmittel befüllt, so bewegt sich der Kolben 214 der Servoeinrichtung 210 gegen die Federkraft des Rückstellelementes 213 axial in Richtung Vorschaltradsatz VS (bzw. axial in Richtung Hauptradsatz HS) und betätigt das ihm zugeordnete Lamellenpaket 200.

Die Ausgangselemente 230, 630 beider Kupplungen B, F sind als Innenlamellenträger ausgebildet zur Aufnahme der innenverzahnten Lamellen des jeweiligen Lamellenpaketes 200 bzw. 600. Kinematisch sind diese beiden Ausgangselemente 230, 630 und auch das ebenfalls als Innenlamellenträger ausgebildete Ausgangselement 330 der Bremse C mit dem vorschaltradsatznahen Sonnenrad S1_HS des Hauptradsatzes HS, welches ja das erste Eingangselement des Hauptradsatzes HS bildet, verbunden. Hierzu übergreift der Innenlamellenträger 630 der Kupplung F den Außenlamellenträger 220 und das darin angeordnete Lamellenpaket 200 der Kupplung B in axialer Richtung und ist auf der dem Hauptradsatz HS zugewandten Seite des Lamellenpaketes 200, räumlich gesehen in einem Bereich radial über dem Vorschaltradsatz VS, mit dem Innenlamellenträger 230 der Kupplung B verbunden. In diesem Bereich schließt sich ein zylinderringförmiges Verbindungselement ZYL an den Innenlamellenträger 630 bzw. den Innenlamellenträger 230 an und erstreckt sich axial in Richtung Hauptradsatz HS bis zur Bremse C und übergreift dabei den Vorschaltradsatz VS und die beiden Kupplungen E und A. An seinem hauptradsatznahen Ende ist das zylinderringförmiges Verbindungselement ZYL mit dem Innenlamellenträger 330 der Bremse C verbunden. Der Innenlamellenträger 330 wiederum ist mit dem Sonnenrad S1_HS des Hauptradsatzes verbunden.

Selbstverständlich ist die in Fig. 10 dargestellte räumliche Lage der Lamellenpakete 200, 600 der Kupplungen B, F in einem Bereich auf der dem Hauptradsatzes HS abgewandten Seite des Vorschaltradsatzes VS als beispielhaft anzusehen. Insbesondere bei einem hohen vom Getriebe zu übertragenden Antriebsdrehmoment kann es erforderlich sein, die Lamellenpakete der Schaltelemente auch mit einer vergleichsweise hohen Anzahl an Lamellen zu bestücken. Hieraus kann sich beispielsweise auch ergeben, dass sich das Lamellenpaket 600 der Kupplung F axial bis über Teile der Servoeinrichtung 210 der Kupplung B erstreckt, und dass sich das Lamellenpaket 200 der Kupplung B axial bis über den Vorschaltradsatz VS erstreckt.

Die (beispielhaft anzusehende) räumliche Anordnung, Ausbildung und kinematische Anbindung der übrigen Getriebebauelemente (Schaltelemente E, A, C und D, Hauptradsatz HS) des neunten erfindungsgemäßen Getriebeschemas gemäß Fig. 10 entspricht im wesentlichen der in Fig. 2 dargestellten Anordnung, insofern kann auf deren nochmalige Beschreibung an dieser Stelle verzichtet werden.

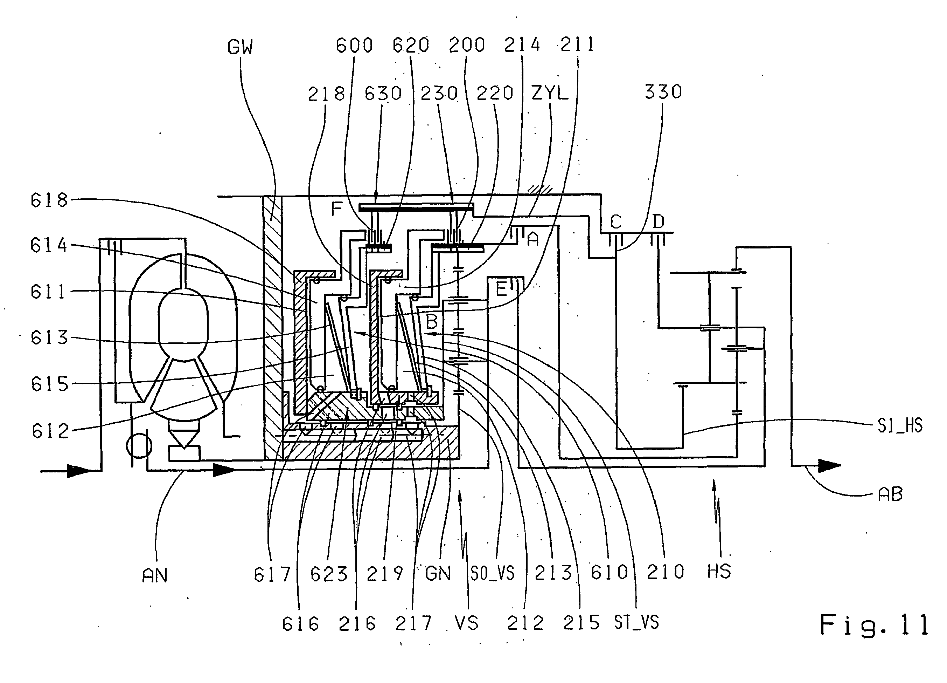

Anhand Fig. 11 wird nun ein zehntes beispielhaftes Getriebeschema gemäß der vorliegenden Erfindung erläutert, basierend auf dem zuvor anhand Fig. 10 beschriebenen neunten erfindungsgemäßen Getriebeschema. Im Unterschied zu Fig. 10 sind die Eingangselemente 220, 620 der Kupplungen B, F nunmehr beide als Innenlamellenträger und die Ausgangselemente 230, 630 der Kupplungen B, F entsprechend beide als Außenlamellenträger ausgebildet. Entsprechend konstruktiv modifiziert sind die Verbindung zwischen Eingangselement 220 der Kupplung B und dem Hohlrad HO_VS des Vorschaltradsatzes VS und die Verbindung zwischen Eingangselement 620 der Kupplung F und Steg ST_VS des Vorschaltradsatzes VS.

Wie in Fig. 11 ersichtlich, grenzt die Kupplung B wie in Fig. 10 unmittelbar an den Vorschaltradsatz VS auf dessen dem Hauptradsatz HS abgewandten Seite an. Die Kupplung F grenzt unmittelbar an die Kupplung B auf deren dem Hauptradsatz HS abgewandten Seite an. Dabei ist die Kupplung F axial zwischen der Gehäusewand GW und dem Vorschaltradsatz angeordnet, räumlich gesehen radial über einer getriebegehäusefesten Nabe GN, die sich in den Getriebeinnenraum bis zum Vorschaltradsatz VS erstreckt und mit dem Sonnenrad SO_VS des Vorschaltradsatzes VS verdrehfest verbunden ist. Dem Eingangselement 620 der Kupplung F ist eine Nabe 623 zugeordnet, die auf dieser getriebegehäusefesten Nabe GN verdrehbar gelagert und formschlüssig mit dem gehäusewandseitigen Stegblech des gekoppelten Stegs ST_VS des Vorschaltradsatzes VS verbunden ist. Die Nabe 623 erstreckt sich also in axialer Richtung über fast die ganze axiale Länge der gehäusefesten Nabe GN. Am gehäusewandnahen Ende dieser Nabe 623 ist eine der Servoeinrichtung 610 der Kupplung F zugeordnete und sich radial nach außen erstreckende Stützscheibe 618 mit der Nabe 623 verbunden. Dabei ist diese Stützscheibe 618 als ein zylinderförmiger Topf ausgebildet, dessen zylindrischer Abschnitt sich ausgehend vom scheibenförmigen Topfboden der Stützscheibe 618 axial in Richtung Vorschaltradsatz VS erstreckt. Selbstverständlich können Nabe 623 und Stützscheibe 618 auch einstückig ausgeführt sein. In etwa der Mitte dieser Nabe 623 ist eine der Servoeinrichtung 610 der Kupplung F zugeordnete und sich radial nach außen erstreckende Stauscheibe 615 mit der Nabe 623 verdrehfest verbunden, hier beispielhaft über ein Mitnahmeprofil. Im Bereich ihres Außendurchmessers ist diese Stauscheibe 615 auf ihrer dem Vorschaltradsatz VS zugewandeten Seite mit dem als Innenlamellenträger zur Aufnahme von innenverzahnten Lamellen des Lamellenpaketes 600 der Kupplung F ausgebildeten Eingangselement 620 der Kupplung F verdrehfest verbunden, beispielsweise verschweißt. Selbstverständlich können Stauscheibe 615 und Innenlamellenträger 620 auch einstückig ausgeführt sein. Somit ist der Innenlamellenträger 620 der Kupplung F über die Stauscheibe 615 der Servoeinrichtung 610 der Kupplung F, über die Nabe 623 und den Steg ST_VS des Vorschaltradsatzes VS drehmomentführend mit der Antriebswelle AN verbunden.

Im Bereich axial zwischen der genannten Stützscheibe 618 und der genannten Stauscheibe 615 ist ein auf das Lamellenpaket 600 der Kupplung F wirkender Kolben 614 der Servoeinrichtung 610 angeordnet und an der Stützscheibe 618 und der Nabe 623 druckmitteldicht axial verschiebbar gelagert. Beispielhaft ist das Lamellenpaket 600 räumlich gesehen in etwa radial über der Mitte der Nabe 623 angeordnet. Selbstverständlich richtet sich das Maß der axialen Erstreckung des Lamellenpaketes 600 letztlich nach der zur Drehmomentübertragung erforderlichen Anzahl an Lamellen. Ein beispielhaft als Tellerfeder ausgebildetes Rückstellelement 613 der Servoeinrichtung 610 ist axial zwischen Kolben 614 und Stauscheibe 615 angeordnet und spannt den Kolben 614 axial gegen die Nabe 623 vor. Ein Druckraum 611 der Servoeinrichtung 610 ist auf der vorschaltradsatzfernen Seite des Kolbens 614 angeordnet und wird durch den Kolben 614, die Stützscheibe 618 und einen Abschnitt der Nabe 623 gebildet. Ein drucklos mit Schmiermittel befüllbarer Druckausgleichsraum 612 der Servoeinrichtung 610 zum Ausgleich des dynamischen Drucks der stets mit Drehzahl der Antriebswelle AN rotierenden Druckraums 611 ist auf der vorschaltradsatznahen Seite des Kolbens 614 angeordnet und wird durch den Kolben 614 und die zum Kolben 614 hin axial verschiebbar schmiermitteldicht abgedichtete Stauscheibe 615 gebildet. Wird der Druckraum 611 zum Schließen der Kupplung F mit Druckmittel befüllt, so bewegt sich der Kolben 614 gegen die Federkraft des Rückstellelementes 613 axial in Richtung Vorschaltradsatz VS und betätigt das ihm zugeordnete Lamellenpaket 600. Die Druckmittel- und Schmiermittelzuführung zur Servoeinrichtung 610 der Kupplung F erfolgt über entsprechende Kanäle und Bohrungen der getriebegehäusefesten Nabe GN und der Nabe 623 der Kupplung F. Die entsprechenden Kanäle bzw. Bohrungen der Druckmittelzuführung zum Druckraum 611 der Servoeinrichtung 610 sind mit 616 bezeichnet, die entsprechenden Kanäle bzw. Bohrungen der Schmiermittelzuführung zum Druckausgleichsraum 612 der Servoeinrichtung 610 mit 617.

In dem in Fig. 11 dargestellten Beispiel ist das Lamellenpaket 200 der Kupplung B räumlich gesehen in einem Bereich radial über dem Hohlrad HO_VS des Vorschaltradsatzes VS angeordnet, wobei sich das Maß der axialen Erstreckung dieses Lamellenpaketes 200 letztlich nach der zur Drehmomentübertragung erforderlichen Anzahl an Lamellen richtet. Entsprechend ist das als Innenlamellenträger zur Aufnahme von innenverzahnten Lamellen des Lamellenpaketes 200 ausgebildete Eingangselement 220 der Kupplung B räumlich gesehen radial über dem Hohlrad HO_VS angeordnet und verdrehfest mit diesem Hohlrad HO_VS verbunden. Beispielsweise können Innenlamellenträger 220 und Hohlrad HO_VS auch einstückig ausgeführt sein. Die Servoeinrichtung 210 der Kupplung B, umfassend einen Druckraum 211, einen Druckausgleichsraum 212, einen Kolben 214, ein Rückstellelement 213, eine Stauscheibe 215, eine Nabe 219 und eine Stützscheibe 218, grenzt unmittelbar an den Vorschaltradsatz VS auf dessen gehäusewandnahen Seite an und ist räumlich gesehen - bis auf einen unmittelbar auf das Lamellenpaket 200 wirkenden Druckteller des Kolben 214 - in einem Bereich radial unter dem Lamellenpaket 600 der Kupplung F angeordnet. Die ringscheibenförmige Stauscheibe 215 grenzt unmittelbar an den Vorschaltradsatz VS auf dessen der Gehäusewand GW bzw. der Kupplung F zugewandten Seite und ist mit dem Innenlamellenträger 220 der Kupplung B verdrehfest verbunden, beispielsweise verschweißt oder über ein Mitnahmeprofil. Es kann auch vorgesehen sein, dass Stauscheibe 215 und Innenlamellenträger 220 einstückig ausgeführt sind. Im Bereich ihres Innendurchmessers ist die Stauscheibe 215 am vorschaltradsatznahen Ende der Nabe 219 axial festgelegt. Diese Nabe 219 erstreckt sich räumlich gesehen in einem Bereich axial zwischen dem gehäusewandseitigen Stegblech des Stegs ST_VS des Vorschaltradsatzes VS und der Stauscheibe 615 der Servoeinrichtung 610 der Kupplung F, radial oberhalb eines vorschaltradsatznahen zylindrischen Abschnitts der Nabe 623 des Eingangselementes 620 der Kupplung F und ist auf diesem zylindrischen Abschnitt der Nabe 623 verdrehbar gelagert. Am gehäusewandseitigen Ende der Nabe 219 schließt sich die Stützscheibe 218 an diese Nabe 219 an, wobei Stützscheibe 218 und Nabe 219 hier beispielhaft einstückig ausgeführt sind. Geometrisch ist die Stützscheibe 218 als ein in Richtung Vorschaltradsatz VS geöffneter zylinderförmige Topf ausgebindet, dessen scheibenförmiger Topfboden sich axial angrenzend an die Stauscheibe 615 der Servoeinrichtung 610 der Kupplung F auf der vorschaltradsatznahen Seite dieser Stauscheibe 615 radial nach außen erstreckt bis zu einem Durchmesser knapp unterhalb des Innenlamellenträgers 620 der Kupplung F, und dessen zylindrischer Abschnitt sich radial unterhalb des Innenlamellenträgers 620 bzw. radial unter dem Lamellenpaket 600 der Kupplung F axial in Richtung Vorschaltradsatz VS erstreckt. Axial zwischen der genannten Stützscheibe 218 und der genannten Stauscheibe 215 sind Druckraum 211 und Druckausgleichsraum 212 der Servoeinrichtung 210 der Kupplung B angeordnet, wobei Druckraum 211 und Druckausgleichsraum 212 durch den Kolben 214 der Servoeinrichtung 210 voneinander getrennt sind und der Druckausgleichsraum 212 näher am Vorschaltradsatz VS angeordnet ist als der Druckraum 211. Der Kolben 214 ist dabei am Innendurchmesser des zylindrischen Abschnitts der Stützscheibe 218 und an einem zylindrischen Abschnitt der Nabe 219 druckmitteldicht axial verschiebbar gelagert. Das hier beispielhaft als Tellerfeder ausgebildete Rückstellelement 213 spannt den Kolben 214 gegen die an der Nabe 219 mittels Sicherungsring axial festgelegte Stauscheibe 215 vor. Der Druckraum 211 wird gebildet durch eine innere Mantelfläche der Stützscheibe 218, den Kolben 214 und einen zylindrischen Abschnitt der Nabe 219. Der zum Ausgleich des dynamischen Drucks des stets mit Drehzahl des Hohlrades HS_VS des Vorschaltradsatzes VS rotierenden Druckraums 211 vorgesehene, drucklos mit Schmiermittel befüllbare Druckausgleichsraum 212 wird gebildet durch den Kolben 214 und die an ihrem Außendurchmesser zum Kolben 214 hin axial verschiebbar schmiermitteldicht abgedichtete Stauscheibe 215.

Zur Druckmittel- und Schmiermittel-Zuführung zur Servoeinrichtung 210 der Kupplung B weisen die getriebegehäusefeste Nabe GN (bzw. Leitradwelle des Getriebes), die Nabe 623 des Eingangselementes 620 der Kupplung F und die Nabe 219 der Servoeinrichtung 210 der Kupplung B entsprechende Kanäle und Bohrungen auf. Die entsprechenden Kanäle bzw. Bohrungen der Druckmittelzuführung zum Druckraum 211 der Servoeinrichtung 210 sind mit 216 bezeichnet, die entsprechenden Kanäle bzw. Bohrungen der Schmiermittelzuführung zum Druckausgleichsraum 212 der Servoeinrichtung 210 mit 217.

Um das ihm zugeordnete Lamellenpaket 200 betätigen zu können, erstreckt sich ein Abschnitt des Kolbens 214 der Servoeinrichtung 210 radial bis in den Bereich axial zwischen den beiden nebeneinander angeordneten Lamellenpaketen 600 und 200. Ein unmittelbar auf das Lamellenpaket 200 wirkender Druckteller des Kolbens 214 greift also von innen her radial zwischen diese Lamellenpakete 600, 200 und betätigt das ihm zugeordnete Lamellenpaket 200 beim Schließen der Kupplung B von der dem Lamellenpaket 600 zugewandten Seite des Lamellenpaketes 200 her axial in Richtung Hauptradsatz HS. Wird der Druckraum 211 zum Schließen der Kupplung B mit Druckmittel befüllt, so bewegt sich der Kolben 214 der Servoeinrichtung 210 gegen die Federkraft des Rückstellelementes 213 axial in Richtung Hauptradsatz HS. Die Betätigungsrichtung der Servoeinrichtungen 210, 610 der beiden nebeneinander angeordneten Kupplungen B, F sind beim Kupplungsschließen also gleich.

Entsprechend der Ausbildung der Eingangselemente 220, 620 der beiden Kupplungen B, F als Innenlamellenträger sind die Ausgangselemente 230, 630 beider Kupplungen B, F jeweils als Außenlamellenträger zur Aufnahme der außenverzahnten Lamellen des jeweiligen Lamellenpaketes 200 bzw. 600 ausgebildet. In fertigungstechnisch vorteilhafter Weise sind diese beiden Außenlamellenträger 630, 230 einstückig ausgeführt und über ein zylinderringförmiges Verbindungselement ZYL, welches sich in axialer Richtung radial über den Kupplungen E und A erstreckt, mit dem als Innenlamellenträger ausgebildeten Ausgangselement 330 der Bremse C verbunden. Dieser Innenlamellenträger 330 wiederum ist mit dem vorschaltradsatznahen Sonnenrad S1_HS des Hauptradsatzes verdrehfest verbunden, wobei dieses Sonnenrad S1_HS im dargestellten Beispiel das erste Eingangselement des Hauptradsatzes HS bildet.

Die räumliche Anordnung, Ausbildung und kinematische Anbindung der übrigen Getriebebauelemente (Schaltelemente E, A, C und D, Hauptradsatz HS) des zehnten erfindungsgemäßen Getriebeschemas gemäß Fig. 11 entspricht der in Fig. 10 dargestellten Anordnung, insofern kann auf deren nochmalige Beschreibung an dieser Stelle verzichtet werden.

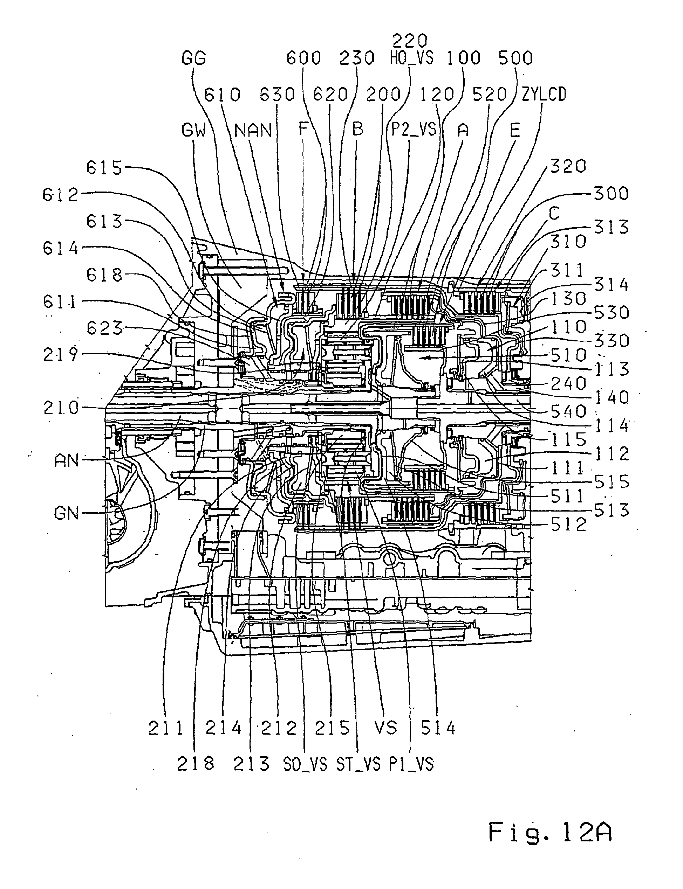

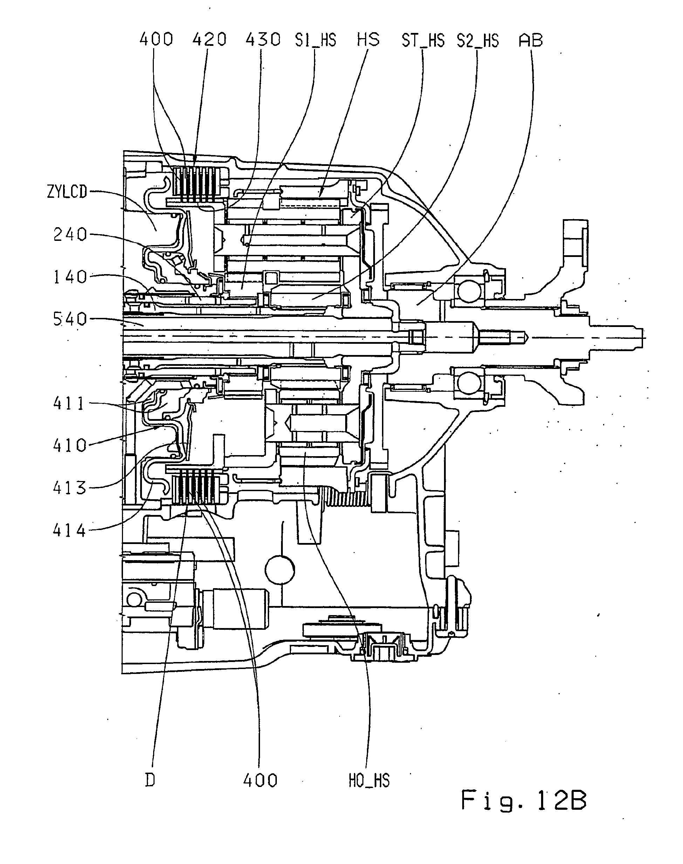

In den Figuren 12A und 12B ist eine beispielhafte Detailkonstruktion eines Automatgetriebes gemäß dem anhand Fig. 11 beschriebenen zehnten erfindungsgemäßen Getriebeschema dargestellt, wobei Fig. 12A einen antriebsseitigen ersten Teilschnitt und Fig. 12B einen abtriebsseitigen zweiten Teilschnitt dieser Getriebekonstruktion zeigt. Dabei wurden die Bezugszeichen im wesentlichen aus Fig. 11 übernommen, ergänzt um die wichtigsten Bezugszeichen für die Schaltelemente E, A, C, D und für den Hauptradsatz HS und dessen kinematischer Anbindung an die Schaltelemente.

Antriebswelle AN und Abtriebswelle AB verlaufen koaxial zueinander. Das Getriebegehäuse GG ist hier abtriebsseitig bis auf eine Durchführung für die Abtriebswelle AB geschlossen. Antriebsseitig ist das Getriebegehäuse durch die getriebegegehäusefeste Gehäusewand GW verschlossen, wobei diese Gehäusewand GW zentrisch von der getriebegehäusefesten Nabe GN durchdrungen wird, die hier gleichzeitig eine Leitradwelle für einen kinematisch zwischen Antriebswelle AN und einem nicht näher dargestellten Antriebsmotor des Getriebes bildet und ihrerseits von der Antriebswelle AN in axialer Richtung zentrisch durchdrungen wird. Am getriebeinneren Ende der Nabe GN ist das Sonnenrad SO_VS des Vorschaltradsatzes VS formschlüssig mit dieser Nabe GN verbunden. Die Antriebswelle AN ist mit einem dem Antrieb abgewandten Stegblech des gekoppelten Stegs ST_VS des Vorschaltradsatzes VS formschlüssig verbunden. An dieser antriebsabgewandten Seite des ' Stegs ST_VS schließt sich die Kupplung E axial an den Vorschaltradsatz VS an, wobei das als Außenlamellenträger zur Aufnahme von außenverzahnten Stahllamellen des Lamellenpaketes 500 der Kupplung E ausgebildete Eingangselement 520 dieser Kupplung E hier mit der Antriebswelle AN verschweißt ist. Um die am Steg ST_VS verdrehbar gelagerten Planetenräder P1_VS, P2_VS des Vorschaltradsatzes VS optimal mit Schmiermittel versorgen zu können, ist das antriebsfeme Stegblech des Stegs ST_VS auf einem Durchmesser größer dem Bolzendurchmesser der äußeren Planetenräder P2_HS zum Außenlamellenträger 520 hin schmiermitteldicht abgedichtet. Da zwischen Steg ST_VS und Außenlamellenträger 520 keine Relativdrehzahl herrscht, kann diese Abdichtung konstruktiv einfach als statische Dichtung ausgeführt sein, beispielsweise mittels O-Ring oder einer anvulkanisierten Dichtlippe. Die so zwischen Steg ST_VS und Außenlamellenträger 520 gebildete Kammer wird drucklos mit Schmiermittel befüllt und dient als Schmiermittelsammelraum, von dem das Schmiermittel in entsprechend ausgeführte axiale und radiale Schmierölbohrungen der Planetenbolzen des Vorschaltradsatzes VS zugeführt wird.

Die vollständig innerhalb des Außenlamellenträgers 520 angeordnete Servoeinrichtung 510 der Kupplung E umfasst einen Druckraum 511, einen Druckausgleichsraum 512, einen Kolben 514, ein Rückstellelement 513 und eine Stauscheibe 515. Der Kolben 514 ist dabei druckmitteldicht axial verschiebbar an dem Außenlamellenträger 520 und der Antriebswelle AN gelagert. Entsprechend rotiert die Servoeinrichtung 510 stets mit Drehzahl der Antriebswelle AN. Der Druckraum 511 ist auf der dem Vorschaltradsatz VS zugewandten Seite des Kolbens 514 angeordnet und wird durch eine Mantelfläche des Außenlamellenträgers 520 und einen zylindrischen Abschnitt der Antriebswelle AN und den Kolben 514 gebildet. Der drucklos mit Schmiermittel befüllbare Druckausgleichraum 512 zum Ausgleich des dynamischen Drucks des rotierenden Druckraums 511 ist auf der dem Vorschaltradsatz VS abgewandten Seite des Kolbens 514 angeordnet und wird durch den Kolben 514 und die zum Kolben 514 hin axial verschiebbar schmiermitteldicht abgedichtete Stauscheibe 515 gebildet. Das hier als Tellerfeder ausgebildete Rückstellelement 513 ist axial zwischen dem Kolben 514 und der mittels Sicherungsring axial an der Antriebswelle AN festgelegten Stauscheibe 515 eingespannt und spannt so den Kolben 514 gegen die Antriebswelle AN vor. Wird der Druckraum 511 zum Schließen der Kupplung E mit Druckmittel beaufschlagt, so bewegt sich der Kolben 514 gegen die Federkraft der Tellerfeder 513 axial in zum Vorschaltradsatz VS entgegengesetzter Richtung und betätigt das ihm zugeordnete Lamellenpaket 500. Die Druckmittel- und Schmiermittelzuführung zur Servoeinrichtung 510 der Kupplung E erfolgt über eine Zentralbohrung der Antriebswelle AN.

Das Ausgangselement 530 der Kupplung E ist als Innenlamellenträger zur Aufnahme von innenverzahnten Belaglamellen des Lamellenpaketes 500 der Kupplung E ausgebildet, radial unterhalb des Lamellenpaketes 500 angeordnet und in seinem Nabenbereich mit einer Stegwelle 540 verschweißt. Diese Stegwelle 540 wiederum ist in der Antriebswelle AN verdrehbar gelagert, erstreckt sich axial in Richtung Abtrieb des Getriebes und durchgreift dabei den hier als Ravigneaux-Planetenradsatz ausgebildeten Hauptradsatz HS zentrisch vollständig, und ist auf der dem Vorschaltradsatz VS abgewandten Seite des Hauptradsatzes HS formschlüssig mit dem gekoppelten Steg ST_HS des Hauptradsatzes HS verbunden. Kinematisch bildet dieser Steg ST_HS das dritte Eingangselement des als Zweisteg-Vierwellen-Planetengetriebe ausgeführten Hauptradsatzes HS.

In fertigungstechnisch günstiger Weise sind das Hohlrad HO_VS des Vorschaltradsatzes VS, das als Innenlamellenträger zur Aufnahme von innenverzahnten Belaglamellen des Lamellenpaketes 200 der Kupplung B ausgebildete Eingangselement 220 der Kupplung B und das als Innenlamellenträger zur Aufnahme von innenverzahnten Belaglamellen des Lamellenpaketes 100 der Kupplung A ausgebildete Eingangselement 120 einstückig ausgeführt, geometrisch in Form eines zylindrischen Rings, der den Außenlamellenträger 520 der Kupplung E teilweise in axialer Richtung radial umschließt. Räumlich gesehen ist das Lamellenpaket 200 der Kupplung B dabei radial über dem Hohlrad HO_VS und das Lamellenpaket 100 der Kupplung A radial über der Kupplung E angeordnet. Die Lamellenpakete 100 und 200 weisen einen zumindest ähnlichen Durchmesser auf. Das Ausgangselement 130 der Kupplung A ist als Außenlamellenträger zur Aufnahme von außenverzahnten Stahllamellen des Lamellenpaketes 100 der Kupplung A ausgebildet. Geometrisch ist dieser Außenlamellenträger 130 als ein in Richtung Vorschaltradsatz VS geöffneter zylindrischer Topf ausgebildet, innerhalb dessen auch die dem Lamellenpaket 100 zugeordnete Servoeinrichtung 110 der Kupplung A angeordnet ist. Dabei ist ein weitgehend zylindrischer Abschnitt des Außenlamellenträgers 130 mehrfach gestuft, derart, dass das Lamellenpaket 100 innen am vorschaltradsatznahen Ende des Außenlamellenträgers 130 angeordnet ist, dass die Servoeinrichtung 110 innerhalb des Außenlamellenträgers 130 auf der vorschaltradsatzfernen Seite des Lamellenpaketes 100 axial neben und bis auf einen direkt auf das Lamellenpaket 100 wirkenden Druckteller des Kolbens 114 der Servoeinrichtung 110 gleichzeitig radial unterhalb des Lamellenpaketes 100 angeordnet ist, und dass das Lamellenpaket 300 der Bremse C außerhalb des Außenlamellenträgers 130 radial über der Servoeinrichtung 110 der Kupplung A angeordnet ist. Die Lamellenpakete 100 und 300 weisen dabei einen zumindest ähnlichen Durchmesser auf. Im Bereich seiner Nabe ist der Außenlamellenträger 130 der Kupplung A mit einer zweiten Sonnenwelle 140 verschweißt. Diese zweite Sonnenwelle 140 wiederum ist als Hohlwelle ausgebildet, erstreckt sich axial in Richtung Abtrieb des Getriebes und umschließt dabei die Stegwelle 540 in axialer Richtung abschnittsweise und durchgreift dabei das vorschaltradsatznahe erste Sonnenrad S1_HS des Hauptradsatzes HS zentrisch vollständig und ist mit dem vorschaltradsatzfernen zweiten Sonnenrad S2_HS des Hauptradsatzes HS formschlüssig verbunden. Kinematisch bildet dieses zweite Sonnenrad S2_HS das zweite Eingangselement des als Zweisteg-Vierwellen-Getriebe ausgeführten Hauptradsatzes HS.

Die vollständig innerhalb des Außenlamellenträgers 130 angeordnete Servoeinrichtung 110 der Kupplung A umfasst einen Druckraum 111, einen Druckausgleichsraum 112, einen Kolben 114, ein Rückstellelement 113 und eine Stauscheibe 115. Der Kolben 114 ist dabei druckmitteldicht axial verschiebbar an dem Außenlamellenträger 130 und der zweiten Sonnenwelle 140 gelagert. Entsprechend rotiert die Servoeinrichtung 110 stets mit Drehzahl des zweiten Sonnenrades S2_HS des Hauptradsatzes HS. Der Druckraum 111 ist auf der dem Vorschaltradsatz VS abgewandten Seite des Kolbens 114 angeordnet und wird durch eine Mantelfläche des Außenlamellenträgers 130 und einen zylindrischen Abschnitt der zweiten Sonnenwelle 240 und den Kolben 114 gebildet. Der drucklos mit Schmiermittel befüllbare Druckausgleichsraum 112 zum Ausgleich des dynamischen Drucks des rotierenden Druckraums 111 ist auf der dem Vorschaltradsatz VS zugewandten Seite des Kolbens 114 angeordnet und wird durch den Kolben 114 und die zum Kolben 114 hin axial verschiebbar schmiermitteldicht abgedichtete Stauscheibe 115 gebildet. Das hier als Tellerfeder ausgebildete Rückstellelement 113 ist hier auf der vorschaltradsatznahen Seite der Servoeinrichtung 110 angeordnet und axial zwischen dem Kolben 114 und der zweiten Sonnenwelle 140 eingespannt. Wird der Druckraum 111 zum Schließen der Kupplung A mit Druckmittel beaufschlagt, so bewegt sich der Kolben 114 gegen die Federkraft der Tellerfeder 113 axial in Richtung Vorschaltradsatz VS und betätigt das ihm zugeordnete Lamellenpaket 100. Die Schmiermittelzuführung zur Servoeinrichtung 110 der Kupplung A erfolgt über eine Zentralbohrung der Stegwelle 540.

Die Kupplung F ist axial zwischen der Gehäusewand GW und dem Vorschaltradsatz angeordnet, räumlich gesehen radial über der getriebegehäusefesten Nabe GN bzw. radial über dem Abschnitt der Leitradwelle, der sich in den Getriebeinnenraum erstreckt. Eine dem Eingangselement 620 der Kupplung F zugeordnete Nabe 623 ist auf dieser getriebegehäusefesten Nabe GN verdrehbar gelagert und formschlüssig mit dem gehäusewandseitigen Stegblech des gekoppelten Stegs ST_VS des Vorschaltradsatzes VS verbunden. Am gehäusewandnahen Ende dieser Nabe 623 ist eine der Servoeinrichtung 610 der Kupplung F zugeordnete und sich radial nach außen erstreckende Stützscheibe 618 auf der Nabe 623 festgesetzt. Dabei ist diese Stützscheibe 618 als ein zylinderförmiger Topf ausgebildet, dessen zylindrischer Abschnitt sich ausgehend vom scheibenförmigen Topfboden der Stützscheibe 618 axial in Richtung Vorschaltradsatz VS erstreckt. In etwa der Mitte dieser Nabe 623 ist eine der Servoeinrichtung 610 der Kupplung F zugeordnete und sich radial nach außen erstreckende Stauscheibe 615 mit der Nabe 623 verschweißt. Im Bereich ihres Außendurchmessers ist die Stauscheibe 615 auf ihrer dem Vorschaltradsatz VS zugewandeten Seite mit dem Eingangselement 620 verschweißt, das als Innenlamellenträger zur Aufnahme von innenverzahnten Stahllamellen des Lamellenpaketes 600 der Kupplung F ausgebildet ist. Im Prinzip ist der Innenlamellenträger 620 der Kupplung F also über die Stauscheibe 615 der Servoeinrichtung 610 der Kupplung F, über die Nabe 623 und den Steg ST_VS des Vorschaltradsatzes VS drehmomentführend mit der Antriebswelle AN verbunden.

Im Bereich axial zwischen der genannten Stützscheibe 618 und dem Lamellenpaket 600 ist ein auf dieses Lamellenpaket 600 wirkender Kolben 614 der Servoeinrichtung 610 angeordnet und an der Stützscheibe 618 und der Nabe 623 druckmitteldicht axial verschiebbar gelagert. Dabei ist das Lamellenpaket 600 räumlich gesehen radial über dem vorschaltradsatznahen Ende der Nabe 623 angeordnet. Ein als Tellerfeder ausgebildetes Rückstellelement 613 der Servoeinrichtung 610 ist axial zwischen Kolben 614 und Stauscheibe 615 angeordnet und spannt den Kolben 614 axial gegen die Nabe 623 vor. Ein Druckraum 611 der Servoeinrichtung 610 ist auf der vorschaltradsatzfernen Seite des Kolbens 614 angeordnet und wird durch den Kolben 614, die Stützscheibe 618 und einen Abschnitt der Nabe 623 gebildet. Ein drucklos mit Schmiermittel befüllbarer Druckausgleichsraum 612 der Servoeinrichtung 610 zum Ausgleich des dynamischen Drucks des stets mit Drehzahl des Antriebswelle AN rotierenden Druckraums 611 ist auf der vorschaltradsatznahen Seite des Kolbens 614 angeordnet und wird durch den Kolben 614 und die zum Kolben 614 hin axial verschiebbar schmiermitteldicht abgedichtete Stauscheibe 615 gebildet. Wird der Druckraum 61 zum Schließen der Kupplung F mit Druckmittel befüllt, so bewegt sich der Kolben 614 gegen die Federkraft des Rückstellelementes 613 axial in Richtung Vorschaltradsatz VS und betätigt das ihm zugeordnete Lamellenpaket 600. Die Druckmittel- und Schmiermittelzuführung zur Servoeinrichtung 610 der Kupplung F erfolgt über entsprechende Kanäle und Bohrungen der getriebegehäusefesten Nabe GN (bzw. Leitradwelle des Getriebes) und der Nabe 623 der Kupplung F.

In vorteilhaft konstruktiv einfacher Weise kann die Drehzahl (und bedarfsweise auch die Drehrichtung) der Antriebswelle AN über die rotierende Servoeinrichtung 610 der Kupplung F bestimmt werden. Hierzu ist am Außendurchmesser des Kolbens 614 dieser Servoeinrichtung 610 ein Zahnprofil NAN vorgesehen, das von einem hier nicht näher dargestellten handelsüblichen Drehzahlsensor beispielsweise nach dem induktiven Messprinzip oder Hall-Messprinzip radial oder axial berührungslos abgetastet wird und hierbei der Getriebeeingangsdrehzahl proportionale Messsignale liefert.

Wie bereits erwähnt, ist das Lamellenpaket 200 der Kupplung B räumlich gesehen radial über dem Hohlrad HO_VS des Vorschaltradsatzes VS angeordnet. Die Servoeinrichtung 210 der Kupplung B, umfassend einen Druckraum 211, einen Druckausgleichsraum 212, einen Kolben 214, ein Rückstellelement 213, eine Stauscheibe 215, eine Nabe 219 und eine Stützscheibe 218, grenzt unmittelbar an den Vorschaltradsatz VS auf dessen gehäusewandnahen Seite an und ist räumlich gesehen - bis auf einen unmittelbar auf das Lamellenpaket 200 wirkenden Druckteller des Kolben 214 - in einem Bereich radial unter dem Lamellenpaket 600 der Kupplung F angeordnet. Die ringscheibenförmige Stauscheibe 215 grenzt unmittelbar an den Vorschaltradsatz VS auf dessen der Gehäusewand GW bzw. der Kupplung F zugewandten Seite und ist mit dem Hohlrad HO_VS des Vorschaltradsatzes VS verschweißt. Im Bereich ihres Innendurchmessers, der etwas größer ist als der Außendurchmesser des Sonnenrades SO_VS des Vorschaltradsatzes VS, ist die Stauscheibe 215 formschlüssig mit der Nabe 219 der Servoeinrichtung 210 verbunden. Diese Nabe 219 erstreckt sich räumlich gesehen in einem Bereich axial zwischen dem gehäusewandseitigen Stegblech des Stegs ST_VS des Vorschaltradsatzes VS und der für den Kolben 615 der Servoeinrichtung 610 der Kupplung F vorgesehenen zylindrischen Lauffläche der Nabe 623, radial oberhalb eines vorschaltradsatznahen zylindrischen Abschnitts der Nabe 623 des Eingangselementes 620 der Kupplung F und ist auf diesem zylindrischen Abschnitt der Nabe 623 verdrehbar gelagert. Am gehäusewandseitigen Ende der Nabe 219 ist die Stützscheibe 218 mit dieser Nabe 219 verschweißt. Diese geometrisch als ein in Richtung Vorschaltradsatz VS geöffneter Topf ausgebildete zylinderförmige Stützscheibe 218 erstreckt sich axial angrenzend an die Stauscheibe 615 der Servoeinrichtung 610 der Kupplung F auf der vorschaltradsatznahen Seite dieser Stauscheibe 615 radial nach außen bis zu einem Durchmesser knapp unterhalb des Innenlamellenträgers 620 der Kupplung F, wobei sich ein zylindrischer Abschnitt dieser Stützscheibe 218 radial unterhalb dieses Innenlamellenträgers 620 (bzw. radial unter dem Lamellenpaket 600 der Kupplung F) axial in Richtung Vorschaltradsatz VS erstreckt. Axial zwischen der genannten Stützscheibe 218 und der genannten Stauscheibe 215 sind Druckraum 211 und Druckausgleichsraum 212 der Servoeinrichtung 210 der Kupplung B angeordnet, wobei Druckraum 211 und Druckausgleichsraum 212 durch den Kolben 214 der Servoeinrichtung 210 voneinander getrennt sind und der Druckausgleichsraum 212 näher am Vorschaltradsatz VS angeordnet ist als der Druckraum 211. Der Kolben 214 ist dabei am Innendurchmesser des zylindrischen Abschnitts des Stützscheibe 218 und an einem zylindrischen Abschnitt der Nabe 219 druckmitteldicht axial verschiebbar gelagert. Das hier als Tellerfeder ausgebildete Rückstellelement 213 spannt den Kolben 214 gegen die mit der Nabe 219 verschweißte Stauscheibe 215 vor. Der Druckraum 211 wird gebildet durch eine innere Mantelfläche der Stützscheibe 218, den Kolben 214 und einen zylindrischen Abschnitt der Nabe 219. Der drucklos mit Schmiermittel befüllbare Druckausgleichsraum 212 zum Ausgleich des dynamischen Drucks des stets mit Drehzahl des Hohlrades HS_VS des Vorschaltradsatzes VS rotierenden Druckraums 211 wird gebildet durch den Kolben 214 und die an ihrem Außendurchmesser zum Kolben 214 hin axial verschiebbar schmiermitteldicht abgedichtete Stauscheibe 215.

Zur Druckmittelzuführung zum Druckraum 211 der Servoeinrichtung 210 der Kupplung B weisen die getriebegehäusefeste Nabe GN (bzw. Leitradwelle des Getriebes), die Nabe 623 des Eingangselementes 620 der Kupplung F und die Nabe 219 der Servoeinrichtung 210 der Kupplung B entsprechende Kanäle und Bohrungen auf. Die Schmiermittelzuführung zum Druckausgleichsraum 212 der Servoeinrichtung 210 der Kupplung B erfolgt über Bohrungen der Nabe 623 des Eingangselementes 620 der Kupplung F und Bohrungen der Nabe 219 der Servoeinrichtung 210 der Kupplung B und dem Vorschaltradsatz VS. Wird der Druckraum 211 zum Schließen der Kupplung B mit Druckmittel befüllt, so bewegt sich der Kolben 214 der Servoeinrichtung 210 gegen die Federkraft des Rückstellelementes 213 axial in Richtung Hauptradsatz HS, wobei der bereits erwähnte Druckteller des Kolbens 214 räumlich gesehen in einem Bereich radial über der Stauscheibe 215 und dem gehäusewandnahen Stegblech des Stegs ST_VS radial von innen her axial zwischen die nebeneinander angeordneten Lamellenpaketen 600, 200 der Kupplungen F, B greift und auf die der Kupplung F zugewandten Seite des Lamellenpaketes 200 der Kupplung B wirkt.

Das Ausgangselement 630 der Kupplung F ist als Außenlamellenträger zur Aufnahme von außenverzahnten Belaglamellen des Lamellenpaketes 600 ausgebildet. Das Ausgangselement 230 der Kupplung B ist als Außenlamellenträger zur Aufnahme von außenverzahnten Belaglamellen des Lamellenpaketes 200 ausgebildet. Das Ausgangselement 330 der Bremse C ist als Innenlamellenträger zur Aufnahme von innenverzahnten Belaglamellen des Lamellenpaketes 300 ausgebildet. In fertigungstechnisch vorteilhafter Weise sind Außenlamellenträger 630 der Kupplung F, Außenlamellenträger 230 der Kupplung B und Innenlamellenträger 330 der Bremse C einstückig ausgeführt, geometrisch in Form eines zylindrischen Rings, der das Lamellenpaket 600, die Kupplung B (bis auf den kleinen Bereich der Servoeinrichtung 210, der axial auf der vorschaltradsatzfernen Seite des Lamellenpaketes 600 angeordnet ist), den radial unter dem Lamellenpaket 200 angeordneten Vorschaltradsatz VS, die Kupplung E und die Kupplung A in axialer Richtung radial umschließt.

Für die Bremsen C und D ist ein gemeinsamer Außenlamellenträger ZYLCD vorgesehen, der formschlüssig mit dem Getriebegehäuse GG verbunden ist. Geometrisch ist dieser Lamellenträger als ein Zylinder mit innerem Mittelsteg ausgebildet, wobei sich ein erster zylindrischer Abschnitt 320 ausgehend vom Mittelsteg axial in Richtung Vorschaltradsatz VS erstreckt und an seinem Innendurchmesser die außenverzahnten Stahllamellen des Lamellenpaketes 300 der Bremse C aufnimmt. Der genannte erste zylindrische Abschnitt 320 des Lamellenträgers ZYLCD kann also als Eingangselement der Bremse C interpretiert werden. Ein zweiter zylindrischer Abschnitt 420 des Lamellenträgers ZYLCD erstreckt sich ausgehend vom Mittelsteg axial in Richtung Hauptradsatz HS und nimmt an seinem Innendurchmesser die außenverzahnte Stahllamellen des Lamellenpaketes 400 der Bremse D auf. Der genannte zweite zylindrische Abschnitt 420 des Lamellenträgers ZYLCD kann also als Eingangselement der Bremse D interpretiert werden. Das entsprechend als Innenlamellenträger zur Aufnahme von innenverzahnten Belaglamellen des Lamellenpaketes 400 der Bremse D ausgebildete Ausgangselement 430 der Bremse D ist räumlich gesehen radial unterhalb des Lamellenpaketes 400 angeordnet und mit dem gekoppelten Steg ST_HS des Hauptradsatzes HS verbunden, wobei das vorschaltradsatznahe Stegblech dieses Stegs ST_HS und der Innenlamellenträger 430 in fertigungstechnisch vorteilhafter Weise einstückig ausgebildet sind. Eine Servoeinrichtung 310 zur Betätigung des Lamellenpaketes 300 der Bremse C und eine Servoeinrichtung 410 zur Betätigung des Lamellenpaketes 400 der Bremse D sind in den für beide Bremsen C und D gemeinsamen Lamellenträger ZYLCD integriert. Dabei sind die beide Servoeinrichtungen 310, 410 in einem Bereich axial zwischen den Lamellenpaketen 300, 400 angeordnet, grenzen axial unmittelbar aneinander an und sind nur durch eine Mantelfläche des Lamellenträgers ZYLCD voneinander getrennt. Entsprechend ihrer Zuordnung ist die Servoeinrichtung 310 der Bremse C näher am Vorschaltradsatz VS angeordnet als die Servoeinrichtung 410 der Bremse D. Entsprechend ist auch die Servoeinrichtung 410 der Bremse D näher am Hauptradsatz HS angeordnet als die Servoeinrichtung 310 der Bremse C. Die Betätigungsrichtung der beiden Servoeinrichtungen 310, 410 beim Schließen des jeweils zugeordneten Lamellenpaketes 300 bzw. 400 ist verschieden. Wird ein Druckraum 311 der Servoeinrichtung 310 zum Schließen der Bremse C mit Druckmittel beaufschlagt, so bewegt sich ein Kolben 314 dieser Servoeinrichtung 310 gegen die Federkraft eines hier als Tellerfeder ausgebildeten Rückstellelementes 313 dieser Servoeinrichtung 310 axial in Richtung Vorschaltradsatz VS und betätigt das ihm zugeordnete Lamellenpaket 300. Entsprechend der Schaltlogik des Getriebes muß die Bremse D bei sehr unterschiedlichen Druckniveaus geschaltet werden. Um die Bremse D dennoch sehr feinfühlig und komfortabel schließen zu können, weist die Servoeinrichtung 410 zwei voneinander unabhängig ansteuerbare Druckräume 411 auf. Auf einen Kolben 414 der Servoeinrichtung 410 wirkt hierbei der Differenzdruck dieser beiden Druckräume. Beim Schließen der Bremse D bewegt sich der Kolben 414 gegen die Federkraft eines hier als Tellerfeder ausgebildeten Rückstellelementes 413 dieser Servoeinrichtung 410 axial in Richtung Hauptradsatz HS und betätigt das ihm zugeordnete Lamellenpaket 400. Zur Druckmittelzuführung zu den Servoeinrichtungen 410 und 510 der Bremsen C, D sind im Getriebegehäuses GG und im Lamellenträger ZYLCD entsprechende Kanäle und Bohrungen vorgesehen.

Kinematisch bildet das Hohlrad HO_HS des Hauptradsatzes HS das Ausgangselement des als Zweisteg-Vierwellen-Getriebe ausgeführten Hauptradsatzes HS und ist auf der dem Vorschaltradsatz VS abgewandten Seite des Hauptradsatzes HS mit der Abtriebswelle AB des Getriebes verbunden.

Anhand Fig. 13 wird nun ein elftes beispielhaftes Getriebeschema gemäß der vorliegenden Erfindung erläutert. Ähnlich wie bei den zuvor beschriebenen erfindungsgemäßen Getriebeschemata bzw. Bauteilanordnungen bilden die beiden Kupplungen B und F eine in fertigungstechnisch vorteilhafter Weise vormontierbare Baugruppe, die auf der dem Hauptradsatz HS abgewandten Seite des Vorschaltradsatzes VS angeordnet ist, räumlich gesehen axial zwischen dem Vorschaltradsatz VS und einer getriebegehäusefesten Außenwand GW des Getriebes, radial über einer sich axial zwischen dieser Außenwand GW und dem Vorschaltradsatz VS erstreckenden getriebegehäusefesten Nabe GN. Diese Baugruppe umfasst einen für beide Kupplungen B, F als Außenlamellenträger ausgebildeten gemeinsamen Lamellenträger ZYLBF, ein Lamellenpaket 200 der Kupplung B und eine diesem Lamellenpaket 200 zugeordnete Servoeinrichtung 210 der Kupplung B, ein Lamellenpaket 600 der Kupplung F und eine diesem Lamellenpaket 600 zugeordnete Servoeinrichtung 610 der Kupplung F, einen Innenlamellenträger 220 der Kupplung B sowie einen Innenlamellenträger 620 der Kupplung F. Zum einen sind dabei die Lamellenpakete 200, 600 der beiden Kupplungen B, F axial nebeneinander angeordnet, wobei das Lamellenpaket 200 der Kupplung B näher am Vorschaltradsatz VS (bzw. am Hauptradsatz HS) angeordnet ist als das Lamellenpaket 600 der Kupplung F. Zum anderen sind die Servoeinrichtungen 210, 610 der beiden Kupplungen B, F zumindest weitgehend ebenfalls axial nebeneinander angeordnet, wobei aber die Servoeinrichtung 610 der Kupplung F (bis auf einen unmittelbar auf das Lamellenpaket 600 wirkenden Druckteller dieser Servoeinrichtung 610) näher am Vorschaltradsatz VS (bzw. am Hauptradsatz HS) angeordnet ist als die Servoeinrichtung 210 der Kupplung B, was später noch im Detail erläutert wird. Der Lamellenträger ZYLBF bildet für beide Kupplungen B, F deren Ausgangselement und ist entsprechend der vorgegebenen kinematischen Kopplung mit dem ersten Eingangselement (also hier dem ersten Sonnenrad S1_HS) des Hauptradsatzes HS verdrehfest verbunden, was ebenfalls später noch im Detail erläutert wird.

Geometrisch weist der für die Kupplungen B, F gemeinsame Lamellenträger ZYLBF eine im wesentlichen zylinderförmige Struktur auf und ist auf der getriebegehäusefesten Nabe GN, die sich ausgehend von der Gehäusewand GW in den Getriebeinnenraum axial in Richtung Vorschaltradsatz VS erstreckt, verdrehbar gelagert. An dieser Nabe GN ist das Sonnenrad SO_VS des Vorschaltradsatzes VS über eine geeignete Verbindung festgesetzt. Im Unterschied zu der beispielhaften Darstellung in Fig. 13 können Nabe GN und Gehäusewand GW auch einstückig ausgeführt sein; beispielsweise kann die Nabe GN auch eine Leitradwelle eines im Kraftfluß zwischen Antriebswelle AN und Antriebsmotor des Getriebes angeordneten Drehmomentwandlers sein. Am Außendurchmesser des Lamellenträgers ZYLBF ist ein zylindrischer Abschnitt vorgesehen, an dessen Innendurchmesser sowohl die Außenlamellen des Lamellenpaketes 200 der Kupplung B als auch die Außenlamellen des Lamellenpaketes 600 der Kupplung F angeordnet sind, wobei - wie schon gesagt - das Lamellenpakete 200 näher am Vorschaltradsatz VS angeordnet ist als das Lamellenpaket 600. Ausgehend vom vorschaltradsatznahen Ende des genannten zylindrischen Abschnitts des Lamellenträgers ZYLBF erstreckt sich ein meanderförmiger Abschnitt des Lamellenträgers ZYLBF radial nach innen bis zur Nabe des Lamellenträgers ZYLBF. Dabei ist diese Nabe in zwei Nabenabschnitte 633 und 233 unterteilt. Ausgehend vom Innendurchmesser des meanderförmigen Abschnitts des Lamellenträgers ZYLBF erstreckt sich der Nabenabschnitt 633 axial in Richtung Vorschaltradsatz VS und ist - wie aus der gewählten Nomenklatur ersichtlich - dem Ausgangselement der Kupplung F zugeordnet. Der andere Nabenabschnitt 233 ist dem Ausgangselement der Kupplung B zugeordnet und erstreckt sich, ausgehend Innendurchmesser des meanderförmigen Abschnitts des Lamellenträgers ZYLBF, axial in Richtung Gehäusewand GW.

Die Servoeinrichtung 210 der Kupplung B, umfassend einen Druckraum 211, einen Druckausgleichsraum 212, einen Kolben 214, ein Rückstellelement 213 und eine Stauscheibe 215, ist vollständig innerhalb eines Zylinderraums angeordnet, der durch den Lamellenträger ZYLBF gebildet wird, im wesentlichen radial oberhalb des Nabenabschnitts 233. Der Kolben 214 ist am Lamellenträger ZYLBF druckmitteldicht axial verschiebbar gelagert. Der Druckraum 211 ist auf der dem Vorschaltradsatz VS abgewandten Seite des meanderförmigen Abschnitts des Lamellenträgers ZYLBF angeordnet und wird gebildet durch eine Mantelfläche des Lamellenträgers ZYLBF (konkret durch einen Teil des meanderförmigen Abschnitts des Lamellenträgers ZYLBF und einen Teil des Nabenabschnitts 233) und den Kolben 214. Zum Ausgleich des rotatorischen Drucks des rotierenden Druckraums 211 der Servoeinrichtung 210 ist ein dynamischer Druckausgleich mit dem drucklos mit Schmiermittel befüllbaren Druckausgleichsraum 212 vorgesehen, der auf der dem Vorschaltradsatz VS abgewandten Seite des Kolbens 214 angeordnet ist. Gebildet wird der Druckausgleichsraum 212 durch den Kolben 214 und die Stauscheibe 215, welche axial an dem gehäusewandnahen Ende des Nabenabschnitt 233 des Lamellenträgers ZYLBF fixiert und gegenüber dem Kolben 214 axial verschiebbar schmiermitteldicht abgedichtet ist. Der Druckraum 211 ist also näher am Vorschaltradsatz VS (bzw. Hauptradsatz HS) angeordnet als der Druckausgleichsraum 212. Der Kolben 214 ist über das hier beispielhaft als Tellerfeder ausgebildete Rückstellelement 213 axial gegen den Nabenabschnitt 233 des Lamellenträgers ZYLBF vorgespannt. Bei einer Beaufschlagung des Druckraums 211 mit Druckmittel zum Schließen der Kupplung B bewegt sich der Kolben 214 axial in zum Vorschaltradsatz VS (bzw. Hauptradsatz HS) entgegengesetzte Richtung und betätigt das ihm zugeordnete Lamellenpaket 200 gegen die Federkraft des Rückstellelementes 213.

Räumlich gesehen ist die Servoeinrichtung 610 der Kupplung F zumindest weitgehend näher an Vorschaltradsatz VS bzw. Hauptradsatz HS angeordnet als die Servoeinrichtung 210 der Kupplung B, räumlich gesehen zumindest überwiegend in einem Bereich radial über dem vorschaltradsatznahen Nabenabschnitt 633 des Lamellenträgers ZYLBF angeordnet. Die Servoeinrichtung 610 der Kupplung F umfasst einen Druckraum 611, einen Druckausgleichsraum 612, einen abschnittsweise meanderförmig ausgebildeten Kolben 614, ein Rückstellelement 613 und eine scheibenförmige Stauscheibe 615. Der Kolben 614 ist geometrisch weitgehend der dem Vorschaltradsatz VS zugewandten Außenkontur des Lamellenträgers ZYLBF angepasst und am Lamellenträger ZYLBF axial verschiebbar gelagert. Dabei sind der Nabenabschnitt 633 und der meanderförmige Abschnitt des Lamellenträgers ZYLBF gegen den Kolben 614 druckmitteldicht abgedichtet. Der Druckraum 611 ist auf der dem Vorschaltradsatz VS zugewandten Seite des meanderförmigen Abschnitts des Lamellenträgers ZYLBF angeordnet und wird gebildet durch eine Mantelfläche des Lamellenträgers ZYLBF (konkret durch einen Teil des meanderförmigen Abschnitts des Lamellenträgers ZYLBF und einen Teil des Nabenabschnitts 633) und den Kolben 614. In seinem weiteren geometrischen Verlauf erstreckt sich der Kolben 614 radial nach außen bis zu einem Durchmesser größer dem Außendurchmesser des Lamellenträgers ZYLBF und umgreift die beiden axial nebeneinander angeordneten Lamellenpakete 200, 600 in axialer und radialer Richtung und wirkt von der dem Vorschaltradsatz VS abgewandten Seite des Lamellenpaketes 600 her auf dieses ihm zugeordnete Lamellenpaket 600 der Kupplung F. Der Abschnitt des Kolbens 614, der die beiden axial nebeneinander angeordneten Lamellenpakete 200, 600 umgreift, wurde zuvor schon als "Druckteller der Servoeinrichtung 610" bezeichnet und ist aus Gründen der Montierbarkeit als separates Bauteil ausgebildet, dessen eines Ende auf das Lamellenpaket 600 wirkt und dessen anderes Ende am Außendurchmesser des Kolbens der Servoeinrichtung 610 über geeignete Mittel - beispielsweise formschlüssig - befestigt ist. Anstelle eines rotationssymmetrischen Drucktellers können selbstverständlich auch auf dem Umfang verteilt am Außendurchmesser des Kolbens der Servoeinrichtung 610 befestigte Betätigungsfinger vorgesehen sein. Zum Ausgleich des rotatorischen Drucks des rotierenden Druckraums 611 der Servoeinrichtung 610 ist ein dynamischer Druckausgleich mit dem drucklos mit Schmiermittel befüllbaren Druckausgleichsraum 612 vorgesehen, der auf der dem Vorschaltradsatz VS zugewandten Seite des Kolbens 614 angeordnet ist. Gebildet wird der Druckausgleichsraum 612 durch den Kolben 614 und die Stauscheibe 615, welche axial an dem vorschaltradsatznahen Ende des Nabenabschnitts 633 des Lamellenträgers ZYLBF fixiert und gegenüber dem Kolben 614 axial verschiebbar schmiermitteldicht abgedichtet ist. Der Druckausgleichsraum 612 ist also näher am Vorschaltradsatz VS (bzw. Hauptradsatz HS) angeordnet als der Druckraum 611. Der Kolben 614 ist über das hier beispielhaft als Tellerfeder ausgebildete Rückstellelement 613 axial gegen den Nabenabschnitt 633 des Lamellenträgers ZYLBF vorgespannt, wobei diese Tellerfeder 613 hier außerhalb des Druckausgleichsraums 612 angeordnet ist, also auf der dem Vorschaltradsatz VS zugewandten Seite der Stauscheibe 615. Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613.

Der Druckraum 611 der Servoeinrichtung 610 der Kupplung F ist also nur durch eine Mantelfläche des für beide Kupplungen B, F gemeinsamen Lamellenträgers ZYLBF von dem Druckraum 211 der Servoeinrichtung 210 der Kupplung B getrennt. Die Betätigungsrichtung der Servoeinrichtungen 210, 610 beim Kupplungsschließen des jeweils zugeordneten Lamellenpaketes 200 bzw. 600 ist entgegengesetzt.

Aufgrund der Lagerung des Lamellenträgers ZYLBF auf der getriebegehäusefesten Nabe GN ergibt sich eine konstruktiv einfache Druck- und Schmiermittelzufuhr zu beiden Kupplungen B, F über entsprechende Kanäle bzw. Bohrungen, die abschnittsweise innerhalb dem genannten Gehäusenabe GN und abschnittsweise innerhalb der Nabe des Lamellenträgers ZYLBF verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Der Innenlamellenträger 620 der Kupplung F bildet das Eingangselement der Kupplung F. Geometrisch ist dieser Innenlamellenträger 620 als ein Zylinder ausgebildet. Ein zylinderringförmiger Abschnitt dieses Innenlamellenträgers 620 weist an seinem Außendurchmesser ein Mitnahmeprofil zur Aufnahme von innenverzahnten Lamellen des (gehäusewandnahen) Lamellenpaketes 600 der Kupplung F auf und erstreckt sich ausgehend vom vorschaltradsatznahen Ende dieses Lamellenpaketes 600 axial in Richtung Gehäusewand. Ein scheibenförmiger Abschnitt dieses Innenlamellenträgers 620 schließt sich am gehäusewandnahen Ende des genannten zylinderringförmigen Abschnitts des Innenlamellenträgers 620 an diesen an und erstreckt sich ausgehend von diesem zylinderringförmigen Abschnitt des Innenlamellenträgers 620 radial nach außen bis zu einem Durchmesser größer dem Außendurchmesser des Kolbens 615 bzw. Drucktellers der Servoeinrichtung 610 der Kupplung F. An seinem Außendurchmesser ist der genannte scheibenförmige Abschnitt des Innenlamellenträgers 620 verdrehfest mit einem zylinderförmigen Verbindungselement ZYLF verbunden, beispielsweise formschlüssig über ein Mitnahmeprofil. Dieses zylinderförmige Verbindungselement ZYLF wiederum umschließt zumindest die nebeneinander angeordneten Lamellenpakete 200, 600 der beiden Kupplungen B, F und die Servoeinrichtung 610 der Kupplung F in axialer Richtung vollständig (und damit auch den für beiden Kupplungen B, F gemeinsamen Außenlamellenträger ZYLBF in axialer Richtung zumindest weitgehend) und ist an seinem vorschaltradsatznahen Ende mit einem dem Hauptradsatz HS abgewandten Stegblech des gekoppelten Stegs ST_VS des Vorschaltradsatzes VS verbunden. Bespielsweise kann auch vorgesehen sein, dass der Innenlamellenträger 620 der Kupplung F und das zylinderringförmige Verbindungselement ZYLF einstückig ausgeführt sind. Da der Steg ST_VS über sein dem Hauptradsatz HS zugewandtes Stegblech mit der Antriebswelle AN verdrehfest verbunden ist, rotiert der Innenlamellenträger bzw. das Eingangselement 620 der Kupplung F stets mit Drehzahl der Antriebswelle AN.

Der Innenlamellenträger 220 der Kupplung B bildet das Eingangselement der Kupplung B. Geometrisch ist dieser Innenlamellenträger 220 als ein Zylinder ausgebildet. Ein zylinderringförmiger Abschnitt dieses Innenlamellenträgers 220 weist an seinem Außendurchmesser ein Mitnahmeprofil zur Aufnahme von innenverzahnten Lamellen des (vorschaltradsatznahen) Lamellenpaketes 200 der Kupplung B auf und erstreckt sich ausgehend vom vorschaltradsatznahen Ende dieses Lamellenpaketes 200 axial in Richtung Gehäuse- ' wand bis in einen Bereich zwischen dem radial äußeren Abschnitt der Stauscheibe 215 der Servoeinrichtung 210 der Kupplung B und dem scheibenförmigen Abschnitt des Innenlamellenträgers 620 der Kupplung F. Ein scheibenförmiger Abschnitt dieses Innenlamellenträgers 220 schließt sich am gehäusewandnahen Ende des genannten zylinderringförmigen Abschnitts des Innenlamellenträgers 220 an diesen an und erstreckt sich ausgehend von diesem zylinderringförmigen Abschnitt des Innenlamellenträgers 220 axial zwischen dem genannten radial äußeren Abschnitt der Stauscheibe 215 und dem genannten scheibenförmigen Abschnitt des Innenlamellenträgers 620 radial nach außen bis zu einem Durchmesser größer dem Außendurchmesser des Innenlamellenträgers 620 bzw. des zylinderförmigen Verbindungselementes ZYLF. An seinem Außendurchmesser ist der genannte scheibenförmige Abschnitt des Innenlamellenträgers 220 verdrehfest mit einem zylinderringförmigen Verbindungselement ZYLB verbunden, beispielsweise formschlüssig über ein Mitnahmeprofil. Dieses zylinderringförmige Verbindungselement ZYLB wiederum umschließt das zylinderförmige Verbindungselement ZYLF in axialer Richtung vollständig und ist verdrehfest mit dem Hohlrad HO_HS des Vorschaltradsatzes VS verbunden. Somit rotiert der Innenlamellenträger bzw. das Eingangselement 220 der Kupplung B stets mit Drehzahl dieses Hohlrads HO_HS. Da sich das ebenfalls mit diesem Hohlrad HO_HS verdrehfest verbundene Eingangselement 120 der Kupplung A auf der dem Hauptradsatz HS zugewandten Seite des Vorschaltradsatzes VS an das genannte Hohlrad HO_HS axial anschließt, können das Eingangselement 120 (hier beispielhaft der Außenlamellenträger) der Kupplung A und das zylinderringförmige Verbindungselement ZYLB einstückig ausgeführt sein, beispielsweise auch zusammen mit dem Hohlrad HO_VS. Es kann aber auch vorgesehen sein, dass der Innenlamellenträger 220 der Kupplung B und das zylinderringförmige Verbindungselement ZYLB einstückig ausgeführt sind.

Als konstruktive Besonderheit wird die Stauscheibe 215 der Servoeinrichtung 210 der Kupplung B auch zur Drehzahl- und Drehmomentübertragung zwischen dem Lamellenträger ZYLBF, der ja das Ausgangselement beider Kupplungen B, F bildet, und dem vorschaltradsatznahen Sonnenrad S1_HS des Hauptradsatzes HS, das ja hier beispielhaft das erste Eingangselement des Hauptradsatzes HS bildet, verwendet. Hierzu ist die Stauscheibe 215 an dem gehäusewandnahen Ende der Nabe des Lamellenträgers ZYLBF mit dem Nabenabschnitt 233 des Lamellenträgers ZYLBF verdrehfest verbunden, hier beispielhaft über ein Mitnahmeprofil. In ihrem geometrischen Verlauf erstreckt sich die Stauscheibe 215 axial angrenzend an die Gehäusewand GW radial nach außen und ist im Bereich ihres Außendurchmessers mit dem zylinderförmigen Verbindungselement ZYL verbunden, beispielsweise über ein Mitnahmeprofil. Dieses zylinderförmige Verbindungselement ZYL wiederum ist geometrische als ein in Richtung Gehäusewand GW hin geöffneter Topf ausgebildet. Eine ringförmige Mantelfläche dieses Verbindungselementes ZYL umschließt die Baugruppe der beiden Kupplungen B, F bzw. das zylinderringförmige Verbindungselement ZYLB, den Vorschaltradsatz VS sowie die beiden Kupplungen E, A in axialer Richtung vollständig. Ein scheibenförmiger Topfboden dieses Verbindungselementes ZYL schließt sich an die genannte ringförmige Mantelfläche des Verbindungselementes ZYL an dessen hauptradsatznahem Ende an und erstreckt sich im Bereich axial neben der Kupplung A auf deren dem Hauptradsatz HS zugewandten Seite radial nach innen. In seinem Nabenbereich ist das zylinderförmige Verbindungselement ZYL sowohl mit dem Ausgangselement 330 der Bremse C als auch (über eine Sonnenwelle 240) mit dem (hier wieder beispielhaft das erste Eingangselement des Hauptradsatzes HS bildenden) vorschaltradsatznahen Sonnenrad S1_HS des Hauptradsatzes HS verdrehfest verbunden. Infolgedessen rotieren die Servoeinrichtungen 210, 610 beider Kupplungen B, F stets mit Drehzahl dieses Sonnenrades S1_HS.

Die räumliche Anordnung, Ausbildung und kinematische Anbindung der übrigen Getriebebauelemente (Schaltelemente E, A, C und D, Hauptradsatz HS) des elften erfindungsgemäßen Getriebeschemas gemäß Fig. 13 entspricht der in Fig. 2 dargestellten Anordnung, insofern kann auf deren nochmalige Beschreibung an dieser Stelle verzichtet werden.

Bei den folgenden drei Ausführungsbeispielen einer erfindungsgemäßen Bauteileanordnung gemäß der Figuren 14, 15 und 16 ist - in Verbindung mit dem gattungsgemäßen Radsatzschema gemäß Fig. 1A und Fig. 1B - vorgesehen, dass eine die Schaltelemente B, F und C umfassende Baugruppe zumindest überwiegend auf der dem Hauptradsatz HS abgewandeten Seite des Vorschaltradsatzes VS angeordnet ist, räumlich gesehen zumindest überwiegend axial zwischen dem Vorschaltradsatz VS und einer getriebegehäusefesten Außenwand GW des Getriebes und zumindest überwiegend radial über einer sich axial zwischen dieser Außenwand GW und dem Vorschaltradsatz VS erstreckenden getriebegehäusefesten Nabe GN. Dabei weist das Lamellenpaket 200 der Kupplung B stets einen größeren Durchmesser auf als das Lamellenpaket 600 der Kupplung F, und die Kupplung F ist stets innerhalb eines durch ein Ausgangselement 230 der Kupplung B gebildeten Zylinderraums angeordnet. In diesen drei Ausführungsbeispielen ist der Hauptradsatz HS wiederum beispielhaft als Ravigneaux-Planetenradsatz ausgeführt, der koaxial zu dem als Einfach-Planetenradsatz in Doppelplanetenbauweise ausgeführten Vorschaltradsatz VS angeordnet ist. Beispielhaft sind Antriebswelle AN und Abtriebswelle AB koaxial zueinander angeordnet, wobei der Fachmann bei Bedarf auch ohne besonderen Umkonstruktionsaufwand eine achsparallele oder zueinander winklige Lage von Antriebs- und Abtriebswelle vorsehen wird.

Anhand Fig. 14 wird nun ein zwölftes beispielhaftes Getriebeschema gemäß der vorliegenden Erfindung im Detail erläutert. Wie bereits angedeutet, bilden die beiden Kupplungen B, F eine Baugruppe, die überwiegend auf der dem Hauptradsatz HS abgewandten Seite des Vorschaltradsatzes VS angeordnet ist, räumlich gesehen überwiegend axial zwischen dem Vorschaltradsatz VS und der einem (nicht näher dargestellten) mit der Antriebswelle AN wirkverbundenen Antriebsmotor des Getriebes zugewandten getriebegehäusefesten Gehäusewand GW, dabei unmittelbar an Vorschaltradsatz VS und Gehäusewand GW angrenzend. Dabei umfasst diese Baugruppe der beiden Kupplungen B, F für beide Kupplungen B, F jeweils ein als Außenlamellenträger ausgebildetes Ausgangselement 230 bzw. 630, je ein Lamellenpaket 200 bzw. 600 sowie je eine Servoeinrichtung 210 bzw. 610 zum Betätigen des jeweiligen Lamellenpaketes 200 bzw. 600. Entsprechend der vorgegebenen kinematischen Kopplung sind diese beiden Außenlamellenträger 230, 630 mit dem ersten Eingangselement des Hauptradsatzes HS - hier also mit dessen ersten Sonnenrad S1_HS - verdrehfest verbunden, was später noch im Detail erläutert wird. Das Lamellenpaket 200 der Kupplung B weist einen größeren Durchmesser auf als das Lamellenpaket 600 der Kupplung F. Im wesentlichen ist die Kupplung F innerhalb eines Zylinderraums angeordnet, der durch das Ausgangselement 230 bzw. den Außenlamellenträger der Kupplung B gebildet wird. Im Unterschied zu den zuvor beschriebenen erfindungsgemäßen Bauteilanordnungen bzw. Getriebeschemata ist nunmehr auch die beispielhaft als Lamellenbremse ausgebildete Bremse C auf der dem Hauptradsatz HS abgewandten Seite des Vorschaltradsatzes VS angeordnet, in einem Bereich axial zwischen dem Vorschaltradsatz VS und der getriebegehäusefesten Gehäusewand GW, axial angrenzend an die genannte Gehäusewand GW. Selbstverständlich können Gehäusewand GW und Getriebegehäuse GG auch einstückig ausgeführt sein. Die Kupplung A und die Bremse D sind axial zwischen Vorschaltradsatz VS und Hauptradsatz HS angeordnet. Die Kupplung E ist im Unterschied zu den zuvor beschriebenen erfindungsgemäßen Bauteilanordnungen bzw. Getriebeschemata nunmehr auf der dem Vorschaltradsatz VS abgewandten Seite des Hauptradsatzes, HS angeordnet.

Die entsprechend dem Radsatzschema des gattungsgemäßen Standes der Technik gemäß Fig. 1A kinematisch zwischen der Antriebswelle AN und dem dritten Eingangselement des Hauptradsatzes HS angeordnete Kupplung E grenzt axial unmittelbar an den Hauptradsatz HS an dessen dem Vorschaltradsatz VS abgewandten Seite an. Entsprechend ist ein Eingangselement 520 der Kupplung E mit der Antriebswelle AN und ein Ausgangselement 530 der Kupplung E mit dem gekoppelten Steg ST_HS des Hauptradsatzes HS verbunden. Dabei ist das Eingangselement 520 hier beispielhaft als Außenlamellenträger zur Aufnahme von außenverzahnten Lamellen des Lamellenpaketes 500 der Kupplung E ausgebildet. Entsprechend ist das Ausgangselement 530 der Kupplung E als Innenlamellenträger zur Aufnahme von innenverzahnten Lamellen des Lamellenpaketes 500 der Kupplung E ausgebildet. Im dargestellten Beispiel ist das Lamellenpaket 500 auf einem Durchmesser angeordnet, der in etwa dem Durchmesser des Hohlrads HO_HS des Hauptradsatzes HS entspricht. Dieser Lamellendurchmesser erfordert zwar eine relativ große Anzahl an Lamellen für das Lamellenpaket 500, ermöglicht jedoch im Bereich der Getriebeabtriebs eine für einen sogenannten Standardantrieb günstige schlanke Gehäusebauform. In Verbindung mit einer nicht-koaxialen Anordnung von Antriebs- und Abtriebswelle AN, AB wird der Fachmann die Lamellen der Kupplung E bei Bedarf auch auf einem größeren Durchmesser anordnen. Geometrisch ist der zylinderförmige Außenlamellenträger 520 der Kupplung E als ein in Richtung Hauptradsatz HS hin geöffneter Topf ausgebildet, innerhalb dessen das Lamellenpaket 500 und eine Servoeinrichtung 510 zur Betätigung dieses Lamellenpaketes 500 angeordnet sind. Die mit einer Nabe des Außenlamellenträgers 520 verbundene Antriebswelle AN durchdringt das Getriebe in ihrem axialen Verlauf vollständig bis auf die abtriebsseitige Außenwand des Getriebegehäuses GG. Ein mit dem Hohlrad HO_HS verbundener Abschnitt der Abtriebswelle AB übergreift die Kupplung E in axialer Richtung radial vollständig. Die hier zur Vereinfachung nur schematisch dargestellte Servoeinrichtung 510 ist auf der hauptradsatzfernen Seite des Lamellenpaketes 500 angeordnet und betätigt dieses beim Schließen der Kupplung E axial in Richtung Hauptradsatz HS. Vorzugsweise weist die Servoeinrichtung 510 auch einen dynamischen Druckausgleich auf, da ein nicht näher dargestellter Druckraum dieser Servoeinrichtung 510 stets mit Drehzahl der Antriebswelle AN rotiert.

Die entsprechend dem Radsatzschema des gattungsgemäßen Standes der Technik gemäß Fig. 1A kinematisch zwischen dem gekoppelten Steg ST_HS des Hauptradsatzes HS und dem Getriebegehäuse GG angeordnete Bremse D ist beispielhaft als Lamellenbremse ausgeführt. Räumlich gesehen ist diese Bremse D nahe dem Hauptradsatz HS im Bereich des Innendurchmessers des Getriebegehäuses GG angeordnet, wobei ein als Innenlamellenträger zur Aufnahme von innenverzahnten Lamellen des Lamellenpaketes 400 der Bremse D ausgebildetes Ausgangselement 430 mit dem Stegblech des gekoppelten Stegs ST_HS des Hauptradsatzes HS verdrehfest verbunden ist, welcher dem Vorschaltradsatz VS zugewandt ist. Ein Außenlamellenträger zur Aufnahme von außenverzahnten Lamellen des Lamellenpaketes 400 der Bremse D ist hier beispielhaft direkt in das Getriebegehäuse GG integriert, kann selbstverständlich aber auch als separates Bauelement ausgeführt sein, das dann mit dem Getriebegehäuse GG verdrehfest verbunden ist. Mit 410 ist eine vereinfacht dargestellte Servoeinrichtung der Bremse D zur Betätigung des Lamellenpaketes 400 bezeichnet, die hier beispielhaft ebenfalls in das Getriebegehäuse GG integriert ist, beispielsweise aber auch in einem separaten Außenlamellenträger der Bremse D integriert sein kann. Beim Schließen der Bremse D betätigt die genannte Servoeinrichtung 410 das ihr zugeordnete Lamellenpaket 400 axial in Richtung Vorschaltradsatz VS.

In Richtung Hauptradsatz HS gesehen, grenzt die Kupplung A axial an den Vorschaltradsatz VS an. Entsprechend dem Radsatzschema des gattungsgemäßen Standes der Technik gemäß Fig. 1A ist die Kupplung A kinematisch zwischen dem Ausgangselement des Vorschaltradsatzes VS und dem zweiten Eingangselement des Hauptradsatzes HS angeordnet. Entsprechend ist ein Eingangselement 120 der Kupplung A mit dem Hohlrad HO_VS des Vorschaltradsatzes VS und ein Ausgangselement 130 der Kupplung A mit dem (vorschaltradsatzfernen) zweiten Sonnenrad S2_HS des Hauptradsatzes HS verbunden. Dabei ist das Eingangselement 120 hier beispielhaft als Innenlamellenträger zur Aufnahme von innenverzahnten Lamellen des Lamellenpaketes 100 der Kupplung A ausgebildet. Selbstverständlich können Hohlrad HO_VS und Eingangselement bzw. Innenlamellenträger 120 einstückig ausgeführt sein. Im dargestellten Beispiel ist das Lamellenpaket 100 auf einem größeren Durchmesser angeordnet als das Hohlrad HO_VS. Das Ausgangselement 130 der Kupplung A ist hier als Außenlamellenträger zur Aufnahme von außenverzahnten Lamellen des Lamellenpaketes 100 ausgebildet und über eine Sonnenwelle 140 mit dem vorschaltradsatzfernen zweiten Sonnenrad S2_HS des Hauptradsatzes HS verbunden. Dabei umschließt diese Sonnenwelle 140 die Antriebswelle AN abschnittsweise und durchgreift in ihrem axial Verlauf das vorschaltradsatznahe erste Sonnenrad S1_HS des Hauptradsatzes HS zentrisch. Selbstverständlich können Sonnenwelle 140 und Sonnenrad S2_HS auch einstückig ausgeführt sein. Geometrisch ist der zylinderförmige Außenlamellenträger 130 der Kupplung A als ein in Richtung Vorschaltradsatz VS hin geöffneter Topf ausgebildet, innerhalb dessen das Lamellenpaket 100 und eine Servoeinrichtung 110 zur Betätigung dieses Lamellenpaketes 100 angeordnet sind. Diese hier zur Vereinfachung nur schematisch dargestellte Servoeinrichtung 110 ist auf der hauptradsatznahen Seite des Lamellenpaketes 100 angeordnet und betätigt dieses beim Schließen der Kupplung A axial in Richtung Vorschaltradsatz VS. Vorzugsweise weist die Servoeinrichtung 110 auch einen dynamischen Druckausgleich auf, da ein nicht näher dargestellter Druckraum der Servoeinrichtung 110 stets mit Drehzahl des zweiten Sonnenrades S2_HS des Hauptradsatzes HS rotiert.

Die Kupplung B ist räumlich gesehen überwiegend radial über der getriebegehäusefesten Nabe GN angeordnet, an der auch das Sonnenrad SO_VS des Vorschaltradsatzes VS am Getriebegehäuse GG festgesetzt ist. Das Lamellenpaket 200 der Kupplung B ist dabei zumindest teilweise in einem Bereich radial über dem Hohlrad HO_VS des Vorschaltradsatzes VS auf einem vergleichsweise großen Durchmesser angeordnet. Entsprechend ist das als Innenlamellenträger zur Aufnahme von innenverzahnten Lamellen des Lamellenpaketes 200 ausgebildete Eingangselement 220 der Kupplung B zumindest teilweise ebenfalls im Bereich radial über dem Hohlrad HO_VS des Vorschaltradsatzes VS angeordnet und mit diesem Hohlrad HO_VS verdrehfest verbunden. Selbstverständlich können Innenlamellenträger 220 und Hohlrad HO_VS einstückig ausgeführt sein. Selbstverständlich ist die räumliche Lage des Lamellenpaketes 200 der Kupplung B nicht auf die Darstellung in Fig. 14 beschränkt und kann in axialer Richtung auch nach beiden Seiten hin verschoben sein.

Geometrisch ist das als Außenlamellenträger ausgebildete Ausgangselement 230 der Kupplung B als ein in Richtung Vorschaltradsatz VS bzw. Hauptradsatz HS hin geöffneter zylinderförmiger Topf ausgebildet, mit einem weitgehend zylinderringförmigen Mantel, einem scheibenförmigen Topfboden und einer Nabe 233. Der scheibenförmige Topfboden des Außenlamellenträgers 230 grenzt unmittelbar axial an die Gehäusewand GW an und erstreckt weitgehend parallel zu dieser sich in radialer Richtung. Am Innendurchmesser des genannten Topfbodens schließt sich die Nabe 233 des Außenlamellenträgers 230 an und erstreckt radial über der getriebegehäusefesten Nabe GN in axialer Richtung in etwa bis zur Mitte dieser Nabe GN und ist dabei auf dieser Nabe GN verdrehbar gelagert. Am Außendurchmesser des genannten Topfbodens schließt sich der genannte Mantel des Außenlamellenträgers 230 an und erstreckt sich - im dargestellten Beispiel radial gestuft - axial in Richtung Vorschaltradsatz VS bzw. Hauptradsatz HS bis über das hier radial über den Hohlrad HO_VS des Vorschaltradsatzes VS angeordnete Lamellenpaket 200. Dabei ist der gehäusewandnahe Abschnitt des Mantels des Außenlamellenträgers 230 dabei gleichzeitig als Ausgangselement 330 für die Bremse C ausgebildet und weist an seinem Außendurchmesser ein geeignetes Mitnahmeprofil zur Aufnahme von innenverzahnten Lamellen der Lamellenpaketes 300 dieser Bremse C auf. Am Innendurchmesser des vorschaltradsatznahen Abschnitts des Mantels des Außenlamellenträgers 230 ist ein geeignetes Mitnahmeprofil zur Aufnahme von außenverzahnte Lamellen des Lamellenpaketes 200 der Kupplung B vorgesehen. Die Servoeinrichtung 210 der Kupplung B, umfassend einen Druckraum 211, einen Druckausgleichsraum 212, einen Kolben 214 und ein Rückstellelement 213, ist vollständig innerhalb eines Zylinderraums angeordnet, der durch den Außenlamellenträger 230 der Kupplung B gebildet wird, im wesentlichen radial oberhalb der Nabe 233 des Außenlamellenträgers 230. Der Kolben 214 ist am Außenlamellenträger 230 axial verschiebbar gelagert und dabei gegen diesen druckmitteldicht abgedichtet. Der Druckraum 211 wird durch eine innere Mantelfläche des Außenlamellenträgers 230 und den Kolben 214 gebildet. Entsprechend rotiert der Druckraum 211 ständig mit Drehzahl des Außenlamellenträgers 230. Zum Ausgleich des rotatorischen Drucks des rotierenden Druckraums 211 ist ein dynamischer Druckausgleich mit dem drucklos mit Schmiermittel befüllbaren Druckausgleichsraum 212 vorgesehen, wobei dieser Druckausgleichsraum 212 näher am Vorschaltradsatz VS (bzw. Hauptradsatz HS) angeordnet ist als der genannte Druckraum 211. Der Druckausgleichsraum 212 ist auf der dem Vorschaltradsatz VS zugewandten Seite des Kolbens 214 angeordnet und wird gebildet durch den Kolben 214 und einer dem Druckraum 211 zugewandten Mantelfläche 215 des Ausgangselementes bzw. Außenlamellenträgers 630 der Kupplung F, wobei dieser Außenlamellenträger 630 gegenüber dem Kolben 214 axial verschiebbar schmiermitteldicht abgedichtet ist. Aus der gewählten Nomenklatur für die zur Bildung des Druckausgleichsraums 212 relevanten Mantelfläche 215 des Außenlamellenträgers 630 ist ersichtlich, dass der Außenlamellenträger 630 der Kupplung F gleichzeitig die Funktion einer Stauscheibe für die Servoeinrichtung 210 der Kupplung B übernimmt. Der Kolben 214 ist über das hier beispielhaft als Tellerfeder ausgebildete Rückstellelement 213 axial gegen die Nabe 233 des Außenlamellenträgers 230 vorgespannt. Bei einer Beaufschlagung des Druckraums 211 mit Druckmittel zum Schließen der Kupplung B bewegt sich der Kolben 214 axial in Richtung Vorschaltradsatz VS bzw. Hauptradsatz HS und betätigt das ihm zugeordnete Lamellenpaket 200 gegen die Federkraft des Rückstellelementes 213. Aufgrund der Lagerung des Außenlamellenträgers 230 der Kupplung B auf der getriebegehäusefesten Nabe GN ergibt sich eine konstruktiv relativ einfache Druck- und Schmiermittelzufuhr zur Kupplung B über entsprechende Kanäle bzw. Bohrungen, die abschnittsweise innerhalb der genannten Gehäusenabe GN und abschnittsweise innerhalb der Nabe 233 des Außenlamellenträgers 230 verlaufen. Eine Druckmittelzuführung zum Druckraum 211 der Servoeinrichtung 210 der Kupplung B ist mit 216 bezeichnet, eine Schmiermittelzuführung zum Druckausgleichsraum 212 der Servoeinrichtung 210 der Kupplung B mit 217.

Die Kupplungen B und F sind ineinander verschachtelt, wobei die Kupplung F im Prinzip innerhalb der Kupplung B angeordnet ist. Entsprechend der Lage des Lamellenpaketes 200 der Kupplung B in einem Bereich radial über dem Vorschaltradsatz ist die Kupplung F räumlich gesehen vollständig innerhalb eines Zylinderraums angeordnet, der durch den Kolben 214 der Servoeinrichtung 210 der Kupplung B gebildet wird. Dabei grenzt das Lamellenpaket 600 der Kupplung F axial unmittelbar an den Vorschaltradsatz VS an und ist im dargestellten Beispiel in etwa auf dem Durchmesser des Hohlrades HO_VS des Vorschaltradsatzes VS angeordnet.

Das Eingangselement 620 der Kupplung F ist als Innenlamellenträger zur Aufnahme von innenverzahnten Lamellen des Lamellenpaketes 600 dieser Kupplung F ausgebildet und mit einem hauptradsatzfernen Stegblech des gekoppelten Stegs ST_VS des Vorschaltradsatzes VS verdrehfest verbunden. Selbstverständlich können das genannte Stegblech und der genannte Innenlamellenträger 620 auch einstückig ausgebildet sein. Auf seiner hauptradsatznahen Seite ist der gekoppelten Steg ST_VS des Vorschaltradsatzes VS verdrehfest mit der Antriebswelle AN verbunden.

Der das Lamellenpaket 600 und die Servoeinrichtung 610 aufnehmende Außenlamellenträger 630 der Kupplung F ist geometrisch als ein in Richtung Vorschaltradsatz VS bzw. Hauptradsatz HS hin geöffneter zylinderförmiger Topf ausgebildet, mit einem weitgehend zylinderringförmigen Mantel, einem scheibenförmigen Topfboden und einer Nabe 633. Der im dargestellten Beispiel radial gestufte zylinderringförmige Mantel des Außenlamellenträgers 630 erstreckt sich ausgehend vom vorschaltradsatzseitigen Ende des Lamellenpaketes 600 axial in Richtung Gehäusewand GW bis zu dem Kolben 214 der Servoeinrichtung 210 der Kupplung B. Am Innendurchmessers seines dem Vorschaltradsatz VS zugewandeten Endes weist der genannte Mantel des Außenlamellenträgers 630 ein geeignetes Mitnahmeprofil zur Aufnahme von außenverzahnten Lamellen des Lamellenpaketes 600 der Kupplung F auf. Zur Bildung des Druckausgleichsraums 212 der Servoeinrichtung 210 der Kupplung B ist der genannte Mantel des Außenlamellenträgers 630 an seinem gehäusewandseitigen Ende gegen den Kolben 214 axial verschiebbar schmiermitteldicht abgedichtet. Etwa in Mitte des zylinderringförmigen Mantels des Außenlamellenträgers 630 schließt sich der scheibenförmige Topfboden des Außenlamellenträgers 630 an und erstreckt sich radial nach innen bis knapp oberhalb der getriebegehäusefesten Nabe GN. Am Innendurchmesser des genannten Topfbodens schließt sich die Nabe 633 des Außenlamellenträgers 630 an, erstreckt axial in Richtung Vorschaltradsatz VS bis knapp vor das Sonnenrad SO_VS und ist dabei auf der getriebegehäusefesten Nabe GN verdrehbar gelagert.

Die Servoeinrichtung 610 der Kupplung F, umfassend einen Druckraum 611, einen Druckausgleichsraum 612, einen Kolben 614, ein Rückstellelement 613 und eine Stauscheibe 615, ist vollständig innerhalb eines Zylinderraums angeordnet, der durch den Außenlamellenträger 630 der Kupplung F gebildet wird, und radial oberhalb der Nabe 633 angeordnet. Der Kolben 614 ist am Außenlamellenträger 630 axial verschiebbar gelagert und dabei gegen diesen druckmitteldicht abgedichtet. Der Druckraum 611 wird durch eine dem Vorschaltradsatz VS zugewandte innere Mantelfläche des Außenlamellenträgers 630 und den Kolben 614 gebildet. Entsprechend rotiert der Druckraum 611 ständig mit Drehzahl des Außenlamellenträgers 630. Zum Ausgleich des rotatorischen Drucks des rotierenden Druckraums 611 ist ein dynamischer Druckausgleich mit dem drucklos mit Schmiermittel befüllbaren Druckausgleichsraum 612 vorgesehen, wobei dieser Druckausgleichsraum 612 näher am Vorschaltradsatz VS (bzw. Hauptradsatz HS) angeordnet ist als der genannte Druckraum 611. Gebildet wird der Druckausgleichsraum 612 durch den Kolben 614 und die Stauscheibe 615, welche axial am vorschaltradsatznahen Ende der Nabe 633 des Außenlamellenträgers 630 fixiert und gegenüber dem Kolben 614 axial verschiebbar schmiermitteldicht abgedichtet ist. Der Kolben 614 ist über das hier beispielhaft als Tellerfeder ausgebildete Rückstellelement 613 axial gegen die Nabe 633 vorgespannt. Bei einer Beaufschlagung des Druckraums 611 mit Druckmittel zum Schließen der Kupplung F bewegt sich der Kolben 614 axial in Richtung Vorschaltradsatz VS (bzw. Hauptradsatz HS) und betätigt das ihm zugeordnete Lamellenpaket 600 gegen die Federkraft des Rückstellelementes 613. Aufgrund der Lagerung des Außenlamellenträgers 630 der Kupplung F auf der getriebegehäusefesten Nabe GN ergibt sich eine konstruktiv relativ einfache Druck- und Schmiermittelzufuhr zur Kupplung F über entsprechende Kanäle bzw. Bohrungen, die abschnittsweise innerhalb dem genannten Gehäusenabe GN und abschnittsweise innerhalb der Nabe 633 des Außenlamellenträgers 630 verlaufen. Eine Druckmittelzuführung zum Druckraum 611 der Servoeinrichtung 610 der Kupplung F ist mit 616 bezeichnet, eine Schmiermittelzuführung zum Druckausgleichsraum 612 der Servoeinrichtung 610 der Kupplung F mit 617.

Räumlich gesehen ist die Servoeinrichtung 610 der Kupplung F also näher an Haupt- und Vorschaltradsatz HS, VS angeordnet als die Servoeinrichtung 210 der Kupplung B, wobei der Druckraum 611 der Servoeinrichtung 610 und der Druckausgleichsraum 211 der Servoeinrichtung 210 nur durch eine Mantelfläche des Ausgangselementes bzw. Außenlamellenträgers 630 der Kupplung F voneinander getrennt sind.

Entsprechend dem Radsatzschema des gattungsgemäßen Standes der Technik gemäß Fig. 1A ist das vorschaltradsatznahe erste Sonnenrad S1_HS des Hauptradsatzes HS das erste Eingangselement des Hauptradsatzes HS. Zur kinematischen Anbindung der Außenlamellenträger 230, 630 der Kupplungen B, F an dieses Sonnenrad S1_HS ist zum einen vorgesehen, dass die Naben 633, 233 der beiden Außenlamellenträger 630, 230 verdrehfest miteinander verbunden sind, hier beispielhaft formschlüssig über ein geeignetes Mitnahmeprofil. Zum anderen ist vorgesehen, dass der Außenlamellenträger 230 der Kupplung B im Bereich seines dem Hauptradsatz HS zugewandten Endes mit einem zylinderförmigen Verbindungselement ZYL verdrehfest - beispielsweise formschlüssig - verbunden ist. Dieses Verbindungselement ZYL wiederum ist geometrisch als ein in Richtung Gehäusewand GW hin geöffneter Topf ausgebildet, mit einem zylinderringförmigen Mantel, der die Kupplung A in axialer Richtung radial umschließt, sowie mit einem scheibenförmigen Topfboden, der sich auf der dem Hauptradsatz HS zugewandten Seite des Ausgangselementes bzw. Außenlamellenträgers 130 der Kupplung A angrenzend an dieses Ausgangselement bzw. diesen Außenlamellenträgers 130 radial nach innen bis auf einen Durchmesser knapp oberhalb der Sonnenwelle 140 erstreckt und in seinem Nabenbereich mit dem vorschaltradsatznahen Sonnenrad S1_HS des Hauptradsatzes HS verbunden ist. Der Außenlamellenträger 630 der Kupplung F ist also über den Außenlamellenträger 230 der Kupplung B verdrehfest mit dem genannten Sonnenrad S1_HS verbunden. Entsprechend rotieren die Servoeinrichtungen 210, 610 beider Kupplungen B, F ständig mit Drehzahl des ersten Eingangselementes - also hier des ersten Sonnenrades S1_HS - des Hauptradsatzes HS.

Ein Außenlamellenträger zur Aufnahme von außenverzahnten Außenlamellen des Lamellenpaketes 300 der Bremse C ist hier beispielhaft direkt in das Getriebegehäuse GG integriert, kann selbstverständlich aber auch als separates Bauelement ausgeführt sein, das dann mit dem Getriebegehäuse GG verdrehfest verbunden ist. Mit 310 ist eine vereinfacht dargestellte Servoeinrichtung der Bremse C zur Betätigung des Lamellenpaketes 300 bezeichnet, die hier beispielhaft in die Gehäusewand GW integriert ist, beispielsweise aber auch in einem separaten Außenlamellenträger der Bremse C integriert sein kann. Beim Schließen der Bremse C betätigt die genannte Servoeinrichtung 310 das ihr zugeordnete Lamellenpaket 300 axial in Richtung Vorschaltradsatz VS bzw. Hauptradsatz HS.

Anhand Fig. 15 wird nun ein dreizehntes beispielhaftes Getriebeschema gemäß der vorliegenden Erfindung erläutert, das auf dem zuvor anhand Fig. 14 erläuterten zwölften erfindungsgemäßen Getriebeschema basiert. Die wesentlichen Unterschiede zu Fig. 14 betreffen die konstruktive Ausbildung der Kupplung F und deren mechanische Anbindung an die Antriebswelle AN und an das erste Eingangselement des Hauptradsatzes HS. Räumlich gesehen sind die drei Schaltelemente B, C, F - wie in Fig. 14 - zumindest überwiegend in einem Bereich axial zwischen der getriebegehäusefesten Gehäusewand GW und dem Vorschaltradsatz VS angeordnet, wobei das Lamellenpaket 200 der Kupplung B beispielhaft zumindest teilweise radial über dem Vorschaltradsatz VS angeordnet ist und die Kupplung F axial unmittelbar an den Vorschaltradsatz VS angrenzt.

Das mit dem Hohlrad HO_VS des Vorschaltradsatzes VS verbundene und als Innenlamellenträger ausgebildete Eingangselement 220 der Kupplung B wurde unverändert aus Fig. 14 übernommen. Das über das zylinderförmige Verbindungselement ZYL mit dem vorschaltradsatznahen Sonnenrad S1_HS des Hauptradsatzes HS verbundene und als Außenlamellenträger ausgebildete Ausgangselementes 230 der Kupplung B entspricht im wesentlichen dem in Fig. 14 dargestellten Ausführungsbeispiel, wobei die verdrehfeste Verbindung zwischen dem Ausgangselement 630 der Kupplung F und der Nabe 233 des Ausgangselementes 230 der Kupplung B via Mitnahmeprofil konstruktiv im Detail anders gelöst ist. Im wesentlichen wurde auch die innerhalb des Außenlamellenträgers 230 angeordnete Servoeinrichtung 210 der Kupplung B aus Fig. 14 übernommen, wobei lediglich die Bildung des auf der vorschaltradsatznahen Seite des Kolbens 214 der Servoeinrichtung 210 angeordneten Druckausgleichsraums 212 der Servoeinrichtung 210 konstruktiv anders gelöst ist. Im Unterschied zu Fig. 14 wird dieser Druckausgleichsraums 212 nunmehr durch den genannten Kolben 214 und einen entsprechend seiner Funktion mit 215 bezeichneten Abschnitt des Innenlamellenträgers der Kupplung F gebildet, was später noch genauer erläutert wird. Wie in Fig. 14 rotiert die Servoeinrichtung 210 der Kupplung B stets mit Drehzahl des ersten Eingangselementes des Hauptradsatzes HS, hier also stets mit Drehzahl des vorschaltradsatznahen Sonnenrades S1_HS des Hauptradsatzes HS.

Im Unterschied zu Fig. 14 ist das mit der Antriebswelle AN verbundene Eingangselement 620 der Kupplung F nunmehr als Außenlamellenträger zur Aufnahme von außenverzahnten Lamellen des Lamellenpaketes 600 der Kupplung F ausgebildet. Geometrisch ist dieser Außenlamellenträger 620 als ein zur Gehäusewand GW hin geöffneter zylinderförmiger Topf ausgebildet. Ein weitgehend scheibenförmiger Topfboden dieses Außenlamellenträgers 620 grenzt unmittelbar axial an den Vorschaltradsatz VS an, ist mit dem gekoppelten Steg ST_VS des Vorschaltradsatzes VS fest verbunden und erstreckt sich parallel zum Vorschaltradsatz VS in radialer Richtung in einem Bereich radial zwischen der getriebegehäusefesten Nabe GN, an der das Sonnenrad SO_VS des Vorschaltradsatzes VS festgesetzt ist, und einem Durchmesser, der in etwa dem Durchmesser des Hohlrades HO_VS des Vorschaltradsatzes VS entspricht. Dieser Topfboden des Außenlamellenträgers 620 kann gleichzeitig ein Stegblech des genannten Stegs ST_VS sein. Ein weitgehend zylinderringförmiger Mantel des Außenlamellenträgers 620 schließt sich am Außendurchmesser des genannten Topfbodens an und erstreckt sich axial in Richtung Gehäusewand GW bis über das Lamellenpaket 600 der Kupplung F, in axialer Richtung gesehen in etwa bis zur Mitte der gehäusefesten Nabe GN. Am Innendurchmesser seines gehäusewandseitigen Endes weist der Mantel des Außenlamellenträgers 620 ein geeignetes Mitnahmeprofil zur Aufnahme von außenverzahnten Lamellen dieses Lamellenpaketes 600 auf. In axialer Richtung gesehen ist das Lamellenpaket 600 hier beispielhaft etwa in Mitte zwischen Gehäusewand GW und Vorschaltradsatz VS angeordnet. Eine Nabe 623 des Außenlamellenträgers 620 schließt sich am Innendurchmesser des genannten Topfbodens des Außenlamellenträgers 620 an, erstreckt sich axial in Richtung Gehäusewand GW bis zum vorschaltradsatznahen Ende der Nabe 233 des Ausgangselementes bzw. Außenlamellenträgers 230 der Kupplung B, hier beispielhaft in etwa bis zur Mitte der gehäusefesten Nabe GN. Dabei umschließt die Nabe 623 des Außenlamellenträgers 620 diese gehäusefeste Nabe GN und ist an ihr verdrehbar gelagert. Im Unterschied zu Fig. 14 ist zwischen den beiden auf der gehäusefesten Nabe GN verdrehbar gelagerten Naben 623 und 233 kein Mitnahmeprofil vorgesehen, sondern ein Axiallager.

Die Servoeinrichtung 610 der Kupplung F ist vollständig innerhalb eines durch den Außenlamellenträger 620 der Kupplung F gebildeten Zylinderraums angeordnet, räumlich gesehen radial über der Nabe 623 dieses Außenlamellenträgers 620, und wirkt auf das Lamellenpaket 600 der Kupplung F von dessen dem Vorschaltradsatz VS zugewandten Seite her. Die Servoeinrichtung 610 umfaßt einen Druckraum 611, einen Druckausgleichsraum 612, einen Kolben 614, ein Rückstellelement 613 und eine Stauscheibe 615. Der Kolben 614 ist am Außenlamellenträger 620 axial verschiebbar gelagert und dabei gegen diesen druckmitteldicht abgedichtet. Der Druckraum 611 wird durch eine der Gehäusewand GW zugewandte innere Mantelfläche des Außenlamellenträgers 620 und den Kolben 614 gebildet. Im Unterschied zu Fig. 14 rotiert der Druckraum 611 nunmehr also ständig mit Drehzahl der Antriebswelle AN. Zum Ausgleich des rotatorischen Drucks des rotierenden Druckraums 611 ist ein dynamischer Druckausgleich mit dem drucklos mit Schmiermittel befüllbaren Druckausgleichsraum 612 vorgesehen, wobei der Druckraum 611 näher am Vorschaltradsatz VS (bzw. Hauptradsatz HS) angeordnet ist als der Druckausgleichsraum 612. Gebildet wird der Druckausgleichsraum 612 durch den Kolben 614 und die Stauscheibe 615, welche axial am gehäusewandnahen Ende der Nabe 623 des Außenlamellenträgers 620 fixiert und gegenüber dem Kolben 614 axial verschiebbar schmiermitteldicht abgedichtet ist. Der Kolben 614 ist über das hier beispielhaft als Tellerfeder ausgebildete Rückstellelement 613 axial gegen die Nabe 623 vorgespannt. Bei einer Beaufschlagung des Druckraums 611 mit Druckmittel zum Schließen der Kupplung F bewegt sich der Kolben 614 axial in Richtung Gehäusewand GW bzw. in zum Vorschaltradsatz VS entgegengesetzter Richtung und betätigt das ihm zugeordnete Lamellenpaket 600 gegen die Federkraft des Rückstellelementes 613. Aufgrund der Lagerung des Außenlamellenträgers 620 der Kupplung F auf der getriebegehäusefesten Nabe GN ergibt sich eine konstruktiv relativ einfache Druck- und Schmiermittelzufuhr zur Kupplung F über entsprechende Kanäle bzw. Bohrungen, die abschnittsweise innerhalb der genannten Gehäusenabe GN und abschnittsweise innerhalb der Nabe 623 des Außenlamellenträgers 620 verlaufen. Eine Druckmittelzuführung zum Druckraum 611 der Servoeinrichtung 610 der Kupplung F ist mit 616 bezeichnet, eine Schmiermittelzuführung zum Druckausgleichsraum 612 der Servoeinrichtung 610 der Kupplung F mit 617.

Das mit dem ersten Eingangselement des Hauptradsatzes HS, also hier mit dem vorschaltradsatznahen Sonnenrad S1_HS des Hauptradsatzes HS verbundene Ausgangselement 630 der Kupplung F ist im Unterschied zu Fig. 14 nunmehr als Innenlamellenträger zur Aufnahme von innenverzahnten Lamellen des Lamellenpaketes 600 der Kupplung F ausgebildet. Hierzu ist dieser Innenlamellenträger 630 in seinem Nabenbereich verdrehfest mit der Nabe 233 des Außenlamellenträgers 230 der Kupplung B verbunden, hier beispielhaft formschlüssig über ein geeignetes drehmomentführendes Mitnahmeprofil. Als konstruktive Besonderheit übernimmt der Innenlamellenträger 630 der Kupplung F gleichzeitig die Funktion einer Stauscheibe zur Bildung des Druckausgleichsraums 211 des dynamischen Druckausgleichs der Servoeinrichtung 210 der Kupplung B. Hierzu ist ein entsprechend seiner Funktion mit 215 bezeichneter Abschnitt dieses Innenlamellenträgers 630 zum Kolben 214 der Servoeinrichtung 210 hin axial verschiebbar schmiermitteldicht abgedichtet.

Die räumliche Anordnung und konstruktive Ausgestaltung der übrigen Getriebebauelemente des zwölften erfindungsgemäßen Getriebeschemas gemäß Fig. 15 entspricht der in Fig. 14 dargestellten Anordnung, insofern kann auf deren nochmalige Beschreibung an dieser Stelle verzichtet werden.

Anhand Fig. 16 wird nun ein vierzehntes beispielhaftes Getriebeschema gemäß der vorliegenden Erfindung erläutert, das auf dem zuvor anhand Fig. 15 erläuterten dreizehnten erfindungsgemäßen Getriebeschema basiert. Die wesentlichen Unterschiede zu Fig. 15 betreffen die konstruktive Ausbildung der Kupplung F und deren mechanische Anbindung an die Antriebswelle AN und an das erste Eingangselement des Hauptradsatzes HS. Räumlich gesehen sind die drei Schaltelemente B, C, F -wie in Fig. 15 - zumindest überwiegend in einem Bereich axial zwischen der getriebegehäusefesten Gehäusewand GW und dem Vorschaltradsatz VS angeordnet, wobei das Lamellenpaket 200 der Kupplung B beispielhaft zumindest teilweise radial über dem Vorschaltradsatz VS angeordnet ist und die Kupplung F axial unmittelbar an den Vorschaltradsatz VS angrenzt.

Das mit dem Hohlrad HO_VS des Vorschaltradsatzes VS verbundene und als Innenlamellenträger ausgebildete Eingangselement 220 der Kupplung B wurde ebenso unverändert aus Fig. 15 übernommen wie das über das zylinderförmige Verbindungselement ZYL mit dem vorschaltradsatznahen Sonnenrad S1_HS des Hauptradsatzes HS verbundene und als Außenlamellenträger ausgebildete Ausgangselement 230 der Kupplung B. Im wesentlichen wurde auch die innerhalb des Außenlamellenträgers 230 angeordnete Servoeinrichtung 210 der Kupplung B aus Fig. 15 bzw. Fig. 14 übernommen, wobei lediglich die Bildung des auf der vorschaltradsatznahen Seite des Kolbens 214 der Servoeinrichtung 210 angeordneten Druckausgleichsraums 212 der Servoeinrichtung 210 konstruktiv anders gelöst ist. Im Unterschied zu Fig. 15 bzw. Fig. 14 wird dieser Druckausgleichsraums 212 nunmehr durch den genannten Kolben 214 und einen entsprechend seiner Funktion mit 215 bezeichneten Abschnitt des Außenlamellenträgers der Kupplung F gebildet, was später noch genauer erläutert wird. Wie in Fig. 15 bzw. Fig. 14 rotiert die Servoeinrichtung 210 der Kupplung B stets mit Drehzahl des ersten Eingangselementes des Hauptradsatzes HS, hier also stets mit Drehzahl des vorschaltradsatznahen Sonnenrades S1_HS des Hauptradsatzes HS.

Wie in Fig. 15 ist das Lamellenpaket 600 der Kupplung F in axialer Richtung gesehen in einem Bereich etwa in Mitte zwischen Gehäusewand GW und Vorschaltradsatz VS angeordnet, wobei die diesem Lamellenpaket 600 zugeordnete Servoeinrichtung 610 der Kupplung F stets mit Drehzahl der Antriebswelle AN rotiert und das Lamellenpaket 600 beim Schließen axial in Richtung Gehäusewand GW betätigt. Im Unterschied zu Fig. 15 ist das über den gekoppelten Steg ST_VS des Vorschaltradsatzes VS mit der Antriebswelle AN verbundene Eingangselement 620 der Kupplung F nunmehr als Innenlamellenträger zur Aufnahme von innenverzahnten Lamellen des Lamellenpaketes 600 der Kupplung F ausgebildet. Hierbei ist dieser räumlich gesehen im wesentlich radial unterhalb des Lamellenpaketes 600 angeordnete Innenlamellenträger 620 gleichzeitig als Stauscheibe 615 eines dynamischen Druckausgleichs der Servoeinrichtung 610 der Kupplung F ausgebildet. In seinem Nabenbereich ist der Innenlamellenträger 620 bzw. die Stauscheibe 615 verdrehfest mit einer Nabe 623 verbunden, hier beispielhaft formschlüssig über ein Mitnahmeprofil am gehäusewandseitigen Ende dieser Nabe 623. Zur axialen Festlegung des Innenlamellenträgers 620 bzw. der Stauscheibe 615 an der genannten Nabe 623 ist ein Sicherungsring vorgesehen. Diese Nabe 623 wiederum ist räumlich gesehen axial zwischen der Nabe 233 des Ausgangselementes bzw. Außenlamellenträgers 230 der Kupplung B und dem Vorschaltradsatz VS angeordnet und auf der getriebegehäusefesten Nabe GN verdrehbar gelagert, an der auch die genannte Nabe 233 verdrehbar gelagert und das Sonnenrad SO_VS des Vorschaltradsatzes VS festgesetzt ist. Axial zwischen Nabe 233 und Nabe 623 sowie axial zwischen Nabe 623 und Sonnenrad SO_VS ist dabei jeweils ein Axiallager vorgesehen. Am vorschaltradsatznahen Ende der Nabe 623 ist ein Stützscheibe 618 mit der Nabe 623 verdrehfest verbunden, hier beispielhaft verschweißt. Selbstverständlich können Stützscheibe 618 und Nabe 623 auch einstückig ausgeführt sein. Die genannte Stützscheibe 618 erstreckt sich axial unmittelbar neben dem Vorschaltradsatz VS radial nach außen bis etwa zu dem Außendurchmesser des Stegs ST_VS und ist mit diesem verdrehfest verbunden. Insofern kann die genannte Stützscheibe 618 auch ein dem Hauptradsatz HS abgewandtes Stegblech des gekoppelten Stegs ST_VS des Vorschaltradsatzes VS sein.

Ein der Servoeinrichtung 610 der Kupplung F zugeordneter Kolben 614 ist räumlich gesehen weitgehend auf der dem Vorschaltradsatz VS abgewandten Seite der Stützscheibe 618 angeordnet, axial verschiebbar an der Nabe 623 und der Stützscheibe 618 gelagert und dabei gegen Nabe 623 und Stützscheibe 618 druckmitteldicht abgedichtet. Ein Druckraum 611 der Servoeinrichtung 610 wird gebildet durch diesen Kolben 614 und eine Mantelfläche der Stützscheibe 618 und einen kleinen axialen Abschnitt des Außendurchmessers der Nabe 623. Eine Druckmittelzuführung 616 zum Druckraum 611 verläuft abschnittsweise innerhalb der Nabe 623 und abschnittsweise innerhalb der getriebegehäusefesten Nabe GN. Zum Ausgleich des dynamischen Drucks des stets mit Drehzahl der Antriebswelle AN rotierenden Druckraums 611 weist die Servoeinrichtung 610 einen drucklos mit Schmiermittel befüllbaren Druckausgleichsraum 612 auf, der auf der dem Druckraum 611 gegenüberliegenden Seite des Kolbens 614 angeordnet ist und durch den Kolben 614 und die Stauscheibe 615 gebildet wird. Hierzu ist der Kolben 614 an der Stauscheibe 215, die wie schon gesagt an der Nabe 623 festgesetzt und gleichzeitig als drehmomentführender Innenlamellenträger 620 der Kupplung F ausgebildet ist, axial verschiebbar schmiermitteldicht abgedichtet. Eine Schmiermittelzuführung 617 zum Druckausgleichsraum 612 verläuft abschnittsweise innerhalb der Nabe 623 und abschnittsweise innerhalb der getriebegehäusefesten Nabe GN. Zur Rückstellung des Kolbens 615 ist ein beispielhaft als baulängensparende Tellerfeder ausgeführtes Rückstellelement 613 vorgesehen, welches axial zwischen Kolben 615 und Stauscheibe 615 eingespannt ist.

Das Ausgangselement 630 der Kupplung F ist nunmehr entsprechend als Außenlamellenträger zur Aufnahme von außenverzahnten Lamellen des Lamellenpaketes 600 der Kupplung F ausgebildet. Geometrisch ist dieser Außenlamellenträger 630 als ein in Richtung Vorschaltradsatz VS hin geöffneter zylinderförmiger Topf ausgebildet, mit einem weitgehend zylinderringförmigen Mantel, an dessen Innendurchmesser ein Mitnahmeprofil zur Aufnahme der genannten Außenlamellen des Lamellenpaketes 600 vorgesehen ist, sowie mit einem scheibenförmigen Topfboden, der sich auf der vorschaltradsatzfernen Seite des Lamellenpaketes 600 ausgehend von dem genannten weitgehend zylinderringförmigen Mantel parallel zu Druckraum 211 der Servoeinrichtung 210 der Kupplung B radial nach innen erstreckt und in seinem Nabenbereich verdrehfest mit der Nabe 233 des Ausgangselementes bzw. Außenlamellenträgers 230 der Kupplung B verbunden ist, hier beispielhaft über ein Mitnahmeprofil am vorschaltradsatzseitigen Ende dieser Nabe 233. Zur axialen Festlegung des Außenlamellenträgers 630 an der genannten Nabe 233 ist ein Sicherungsring vorgesehen. Als konstruktive Besonderheit übernimmt der Außenlamellenträger 630 der Kupplung F gleichzeitig die Funktion einer Stauscheibe zur Bildung des auf der vorschaltradsatznahen Seite des Kolbens 214 der Servoeinrichtung 210 angeordneten Druckausgleichsraums 212 der Servoeinrichtung 210. Der entsprechende, gegenüber dem Kolben 214 axial verschiebbar schmiermitteldicht abgedichtete Abschnitt des Außenlamellenträgers 630 ist mit 215 bezeichnet.

Die räumliche Anordnung und konstruktive Ausgestaltung der übrigen Getriebebauelemente des vierzehnten erfindungsgemäßen Getriebeschemas gemäß Fig. 16 entspricht der in Fig. 15 bzw. im wesentlichen der in Fig. 14 dargestellten Anordnung, insofern kann auf deren nochmalige Beschreibung an dieser Stelle verzichtet werden.

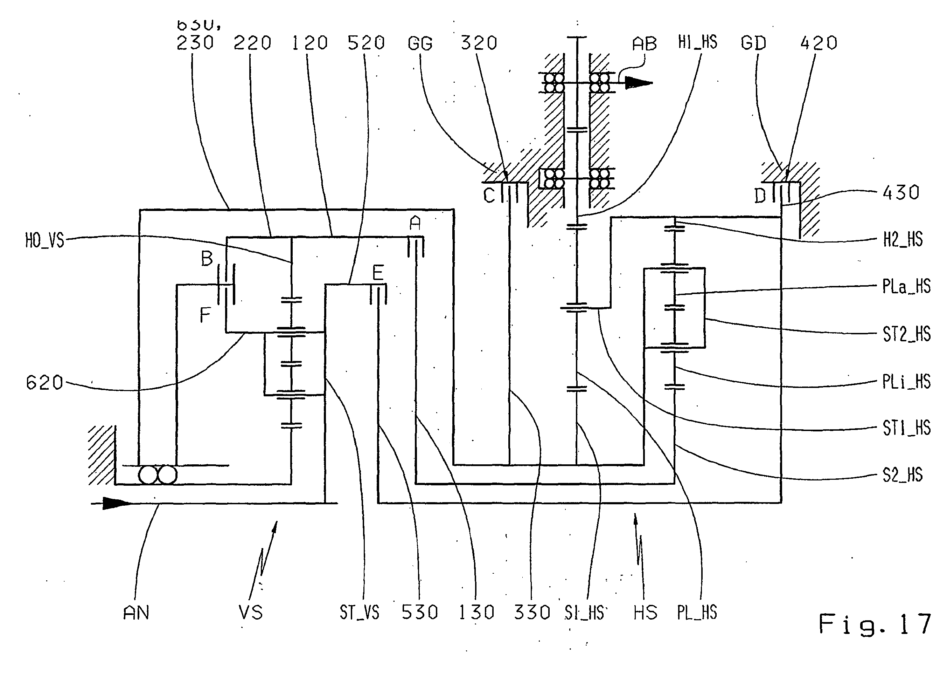

Anhand Fig. 17 wird nun ein beispielhaftes fünfzehntes erfindungsgemäßes Getriebeschema erläutert, basierend auf dem Getriebeschema gemäß Fig. 2, jedoch mit einem ersten alternativen Hauptradsatz. Nach wie vor ist der Hauptradsatz HS als ein Zweisteg-Vierwellen-Planetengetriebe mit drei Eingangselementen und einem Ausgangselement ausgebildet, weist nunmehr aber zwei miteinander gekoppelte Einfach-Planetenradsätze auf, von denen der erste in Einfach-Planetenbauweise und der zweite in Doppel-Planetenbauweise ausgeführt ist. Der erste Einfach-Planetenradsatz des Hauptradsatzes HS ist dem Vorschaltradsatz VS zugewandt und umfasst ein Sonnenrad S1_HS, ein Hohlrad H1_S, sowie einen Steg ST1_HS mit daran verdrehbar gelagerten Planetenrädern PL_HS. Dabei kämmen die Planetenräder PL_HS mit dem Sonnenrad S1_HS und dem Hohlrad H1_HS. Der zweite Einfach-Planetenradsatz des Hauptradsatzes HS ist auf der dem Vorschaltradsatz VS abgewandten Seite des ersten Einfach-Planetenradsatzes des Hauptradsatzes HS angeordnet und umfasst ein Sonnenrad S2_HS, ein Hohlrad H2_S, sowie einen gekoppelten Steg ST2_HS mit daran verdrehbar gelagerten inneren und äußeren Planetenrädern PLi_HS, PLa_HS. Die inneren Planetenräder PLi_HS kämmen dabei mit dem Sonnenrad S2_HS und den äußeren Planetenrädern PLa_HS, die äußeren Planetenrädern PLa_HS mit den inneren Planetenrädern PLi_HS und dem Hohlrad H2_HS.

Sonnenrad S1_HS und gekoppelter Steg ST2_HS sind miteinander verbunden und bilden das erste Eingangselement des Hauptradsatzes HS, welches wiederum mit den Ausgangselementen 230, 630 der beiden Kupplungen B, F und dem Ausgangselement 330 der Bremse C verbunden ist. Wie in Fig. 2 sind Ausgangselement 230 der Kupplung B und Ausgangselement 630 der Kupplung F als gemeinsames Bauteil ausgebildet, das Eingangselement 220 der Kupplung B mit dem Hohlrad HO_VS des Vorschaltradsatzes VS verbunden, das Eingangselement 620 der Kupplung F über den gekoppelten Steg ST_VS des Vorschaltradsatzes VS mit der Antriebswelle AN verbunden, und das Eingangselement 320 der Bremse C mit dem Getriebegehäuse GG verbunden. Das vorschaltradsatzferne Sonnenrad S2_HS bildet das zweite Eingangselement des Hauptradsatzes HS, welches wiederum mit dem Ausgangselement 130 der Kupplung A verbunden ist. Wie in Fig. 2 ist das Eingangselement 120 der Kupplung A mit dem Hohlrad HO_VS des Vorschaltradsatzes VS verbunden. Steg ST1_HS und Hohlrad H2_HS sind miteinander verbunden und bilden das dritte Eingangselement des Hauptradsatzes HS, welches wiederum mit dem Ausgangselement 530 der Kupplung E und dem Ausgangselement 430 der Bremse D verbunden ist. Wie in Fig. 2 ist das Eingangselement 520 der Kupplung E mit der Antriebswelle AN und das Eingangselement 420 der Bremse D (hier über einen getriebegehäusefesten Gehäusedeckel GD) mit dem Getriebegehäuse GG verbunden. Das vorschaltradsatznahe Hohlrad H1_HS bildet das Ausgangselement des Hauptradsatzes HS, welches wiederum mit der Abtriebswelle AB verbunden ist. Die Schaltlogik dieses fünfzehnten erfindungsgemäßen Getriebeschemas gemäß Fig. 17 entspricht der in Fig. 1B dargestellten Schaltlogik des gattungsgemäßen Getriebes.

Hinsichtlich der räumlichen Anordnung der einzelnen Getriebebauteile greift das in Fig. 17 dargestellte Ausführungsbeispiel im wesentlichen auf die in Fig. 2 dargestellte Anordnung zurück, wobei im Unterschied zu Fig. 2 die Abtriebswelle AB nunmehr beispielhaft achsparallel zur Antriebswelle AN und die Bremse D auf der dem Vorschaltradsatz VS abgewandten Seite des Hauptradsatzes HS angeordnet ist. Wie schon mehrfach vorher angedeutet, ist es bei allen zuvor dargestellten erfindungsgemäßen Getriebeschemata bzw. Bauteilanordnungen ohne besonderen konstruktiven Aufwand möglich, die koaxiale Anordnung von Antriebs- und Abtriebswelle dahingehend zu modifizieren, dass Antriebs- und Abtriebeswelle achsparallel oder winklig zueinander verlaufen. Fig. 17 zeigt nun ein entsprechendes Ausführungsbeispiel mit einem kinematisch zwischen dem Hohlrad H1_HS des Hauptradsatzes HS und der Abtriebswelle AB angeordneten Stirntrieb, wobei ein üblicherweise zwischen der Ausgangsseite des Stirntriebs und der Abtriebswelle AB vorgesehenes Differential hier zur Vereinfachung nicht näher dargestellt ist.

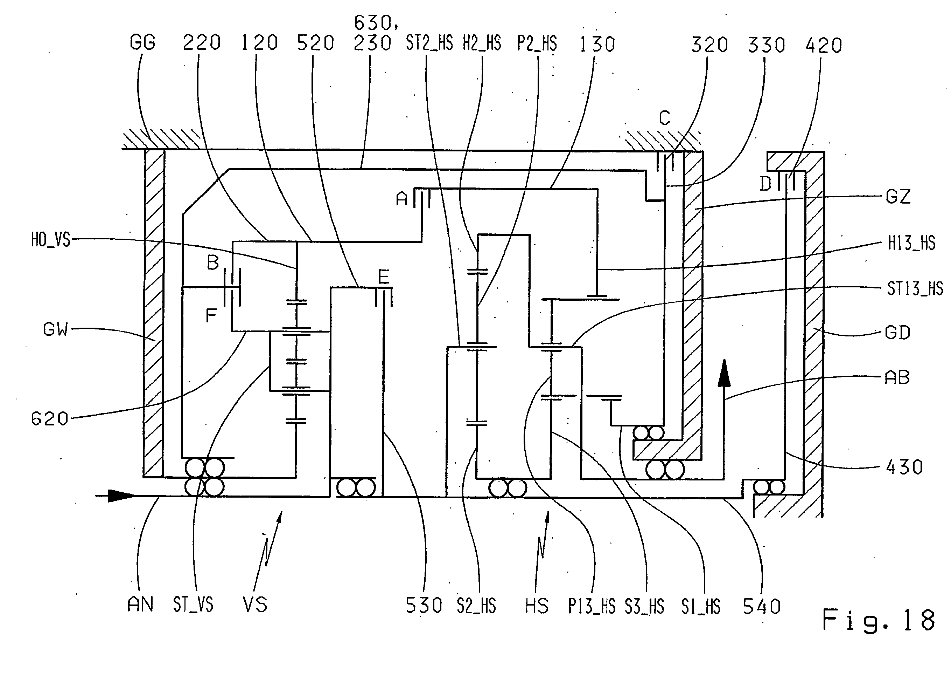

Anhand Fig. 18 wird nun ein sechzehntes beispielhaftes Getriebeschema gemäß der vorliegenden Erfindung erläutert, wiederum basierend auf dem Getriebeschema gemäß Fig. 2, jedoch mit einem zweiten alternativen Hauptradsatz. Der "neue" Hauptradsatz HS ist nunmehr als ein "auf eine Zweisteg-Einheit reduziertes Dreisteg-Fünfwellen-Planetengetriebe" ausgeführt mit drei Einzel-Planetenradsätzen, von denen zwei zu einer Einsteg-Einheit zusammengefasst sind. Diese aus zwei Einzel-Planetenradsätzen zusammengefasste Einsteg-Einheit des Hauptradsatzes HS umfasst zwei getrennte Sonnenräder S1_HS, S3_HS, nur ein Hohlrad H13_HS sowie einen gekoppelten Steg ST13_HS mit daran verdrehbar gelagerten langen Planetenrädern P13_HS und kann auch als ein "Planetenradsatz mit geteiltem Sonnenrad" interpretiert werden. Der verbleibende andere Einzel-Planetenradsatz des Hauptradsatzes HS umfasst ein Sonnenrad S2_HS, ein Hohlrad H2_HS sowie einen Steg ST2_HS mit daran verdrehbar gelagerten kurzen Planetenrädern P2_HS und ist vorschaltradsatznah angeordnet. Wie in Fig. 2 hat der "neue" Hauptradsatz HS drei nicht miteinander verbunden Eingangselemente und ein Ausgangselement. Die Schaltlogik dieses sechzehnten erfindungsgemäßen Getriebeschemas gemäß Fig. 18 entspricht der in Fig. 1B dargestellten Schaltlogik des gattungsgemäßen Getriebes.

Das Sonnenrad S3_HS ist axial zwischen dem vorschaltradnahen Sonnenrad S2_HS und dem auf der dem Vorschaltradsatz VS gegenüberliegenden Seite des Hauptradsatzes HS angeordnete Sonnenrad S1_HS angeordnet und einerseits mit dem Sonnenrad S2_HS fest verbunden und andererseits über die langen Planetenräder P13_HS mit dem Sonnenrad S1_HS wirkverbunden. Die beiden Sonnenräder S1_HS, S2_HS können beispielsweise auch einstückig ausgeführt sein. Das vorschaltradsatzferne Sonnenrad S1_HS bildet das erste Eingangselement des Hauptradsatzes HS, welches wiederum mit den Ausgangselementen 230, 630 der beiden Kupplungen B, F und dem Ausgangselement 330 der Bremse C verbunden ist. Wie in Fig. 2 sind Ausgangselement 230 der Kupplung B und Ausgangselement 630 der Kupplung F als gemeinsames Bauteil ausgebildet, das Eingangselement 220 der Kupplung B mit dem Hohlrad HO_VS des Vorschaltradsatzes VS verbunden, das Eingangselement 620 der Kupplung F über den gekoppelten Steg ST_VS des Vorschaltradsatzes VS mit der Antriebswelle AN verbunden, und das Eingangselement 320 der Bremse C (hier über eine getriebegehäusefeste Gehäusezwischenwand GZ) mit dem Getriebegehäuse GG verbunden. Das vorschaltradsatzferne Hohlrad H13_HS bildet das zweite Eingangselement des Hauptradsatzes HS, welches wiederum mit dem Ausgangselement 130 der Kupplung A verbunden ist. Wie in Fig. 2 ist das Eingangselement 120 der Kupplung A mit dem Hohlrad HO_VS des Vorschaltradsatzes VS verbunden. Der vorschaltradsatznahe Steg ST2_HS bildet das dritte Eingangselement des Hauptradsatzes HS, welches wiederum mit dem Ausgangselement 530 der Kupplung E und dem Ausgangselement 430 der Bremse D verbunden ist. Wie in Fig. 2 ist das Eingangselement 520 der Kupplung E mit der Antriebswelle AN und das Eingangselement 420 der Bremse D (hier über einen getriebegehäusefesten Gehäusedeckel GD) mit dem Getriebegehäuse GG verbunden. Das vorschaltradsatznahe Hohlrad H2_HS und der vorschaltradsatzferne Steg ST13_HS sind miteinander fest verbunden und bilden das Ausgangselement des Hauptradsatzes HS, welches wiederum mit der Abtriebswelle AB verbunden ist.

Die in Fig. 18 dargestellte räumliche Anordnung des Vorschaltradsatzes VS und der vier Kupplungen A, B, E und F relativ zum Hauptradsatz HS und relativ zueinander entspricht im Prinzip den in Fig. 2 bzw. Fig. 17 dargestellten beispielhaften Anordnungen. Die besondere Ausgestaltung des Hauptradsatzes HS mit "geteiltem Sonnenrad" ermöglicht nunmehr die Anordnung beider Bremsen C und D auf der dem Vorschaltradsatz VS abgewandten Seite. Dabei ist die Bremse C näher am Hauptradsatz HS angeordnet als die Bremse D, wobei die Bremse D im Bereich einer Außenwand des Getriebes - hier im Bereich des Gehäusedeckels GD - angeordnet ist. Die Bremse C ist benachbart zum Hauptradsatz HS angeordnet und grenzt auf ihrer dem Hauptradsatz HS abgewandten Seite axial an die Gehäusezwischenwand GZ an, die wiederum axial zwischen Hauptradsatz HS und Gehäusedeckel GD angeordnet ist, wobei das Sonnenrad S1_HS des Hauptradsatzes HS an der Gehäusezwischenwand GZ verdrehbar gelagert ist. Zur kinematischen Anbindung des mit dem Hohlrad H2_HS gekoppelten Stegs ST13_HS des Hauptradsatzes HS an die Abtriebswelle AB greift ein dem Vorschaltradsatz VS abgewandtes Stegblech des Stegs ST13_HS in radialer Richtung gesehen axial zwischen den beiden Sonnenrädern S3_HS, S1_HS hindurch. Dabei durchgreift eine mit der Abtriebswelle AB verbundene Nabe dieses Stegblechs bzw. ein mit diesem Stegblech verbundener Nabenabschnitt der Abtriebswelle AB sowohl das vorschaltradsatzferne Sonnenrad S1_HS des Hauptradsatzes HS als auch die Gehäusezwischenwand in axialer Richtung zentrisch und ist an der Gehäusezwischenwand GZ verdrehbar gelagert. Zur kinematischen Anbindung des Ausgangselementes 430 der Bremse D an das Ausgangselement 530 der Kupplung E und ein vorschaltradsatznahes Stegblech des Stegs ST2_HS des Hauptradsatzes HS ist eine Stegwelle 540 vorgesehen, die den Hauptradsatz HS zentrisch vollständig durchdringt. Die Abtriebswelle AB bzw. ein hier nicht näher dargestellter Stirntrieb, der kinematisch zwischen dem Ausgangselement des Hauptradsatzes HS und der Abtriebswelle zwischengeschaltet ist greift also räumlich gesehen in radialer Richtung axial zwischen der Gehäusezwischenwand GZ und dem Ausgangselement 430 der Bremse D hindurch.

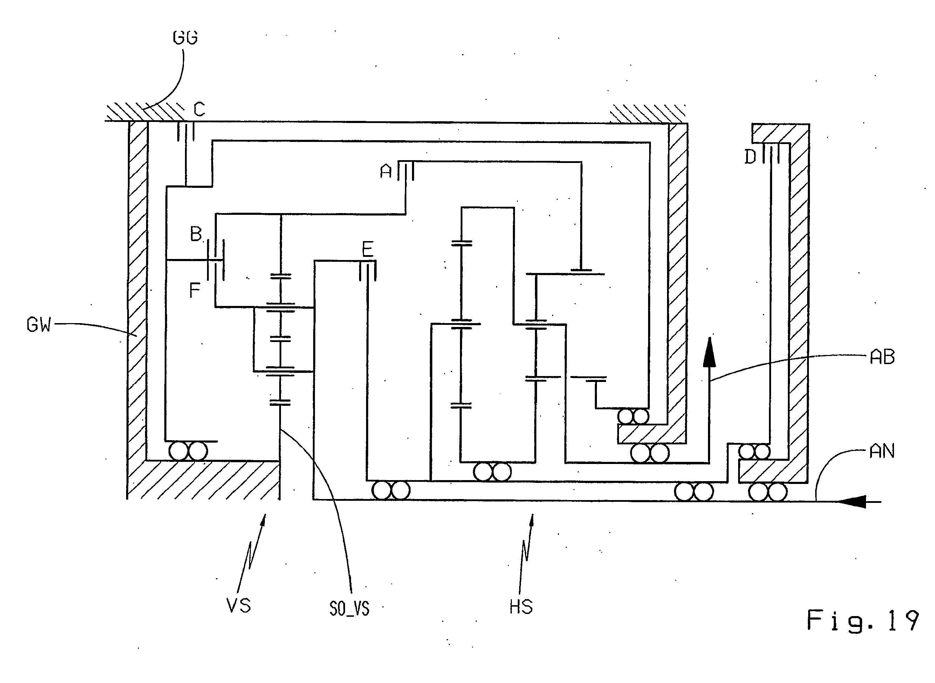

Dem Fachmann ist aus Fig. 18 leicht ersichtlich, dass es keiner besonderen Modifikationen bedarf, um die räumliche Lage des mit der Antriebswelle AN wirkverbundenen (nicht näher dargestellten) Antriebsmotors des Getriebes relativ zu den Planetenradsätzen VS, HS zu verändern. Dies wird anhand Fig. 19 verdeutlicht, in der ein siebzehntes beispielhaftes Getriebeschema gemäß der vorliegenden Erfindung dargestellt ist. Im Unterschied zu Fig. 18 ist der mit der Antriebswelle AN wirkverbundene Antriebsmotor nunmehr auf der Seite des Hauptradsatzes HS angeordnet, die dem Vorschaltradsatz VS gegenüber liegt. Entsprechend sind jetzt auch die Bremse D sowie der als Stirntrieb angedeutete Abtrieb des Getriebes bzw. die Abtriebswelle AB des Getriebes antriebsmotornah angeordnet.

Ein weiterer Detail-Unterschied zu Fig. 18 betrifft die räumliche Lage der Bremse C. Wie aus Fig. 19 ersichtlich, ist diese Bremse C nunmehr beispielhaft auf der dem Hauptradsatz HS abgewandten Seite des Vorschaltradsatzes VS angeordnet, nahe der Kupplung B im Bereich der getriebegehäusefesten Gehäusewand GW bzw. des getriebegehäusefesten Gehäusedeckels, an dem auch das Sonnenrad SO_VS des Vorschaltradsatzes VS festgesetzt ist. Selbstverständlich ist eine solche räumliche Lage der Bremse C auch mit der in Fig. 18 dargestellten Bauteileanordnung kombinierbar.

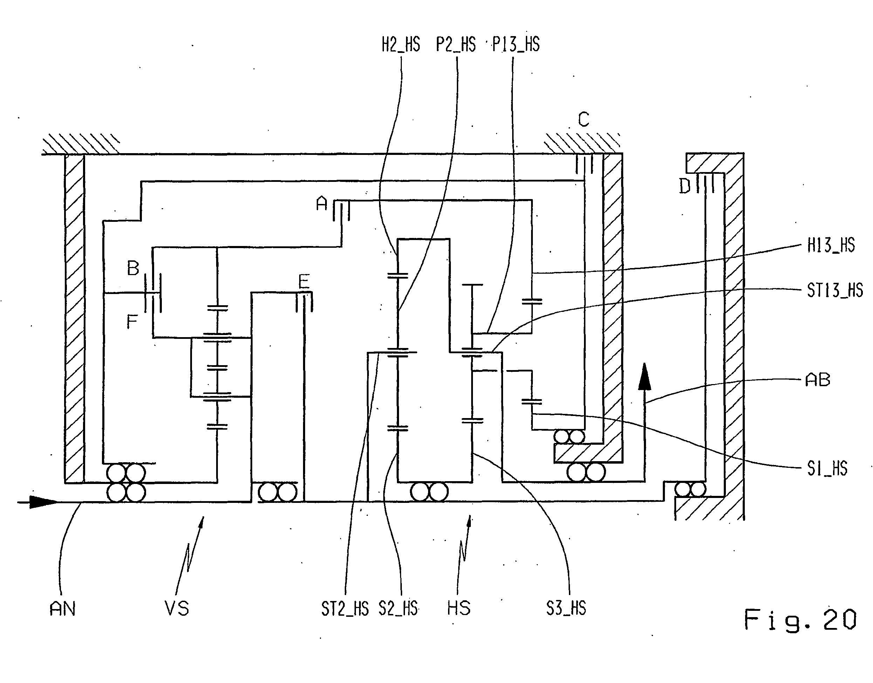

Wie bereit im Rahmen der Beschreibung von Fig. 18 angedeutet, ermöglicht die Teilung eines Zentralrades (also eines Sonnen- oder Hohlrades) eines Einzel-Planetenradsatzes in zwei getrennte Zentralräder nicht nur hinsichtlich einer Bauteilankoppelung an dieses ursprünglich ungeteilte Zentralrad einen zusätzlichen Freiheitsgrad, sondern auch einen zusätzlichen Freiheitsgrad hinsichtlich der Gangsprünge des Getriebes. Dies soll nun an einem achtzehnten Ausführungsbeispiel für ein Getriebeschema gemäß der vorliegenden Erfindung näher erläutert werden, welches in Fig. 20 dargestellt ist. Dabei basiert dieses achtzehnte Ausführungsbeispiel auf dem zuvor in Fig. 18 beschriebenen Getriebeschema, jedoch mit einer alternativen konstruktiven Ausgestaltung des Hauptradsatzes HS.

Wie in Fig. 20 ersichtlich, wurden in diesem achtzehnten Ausführungsbeispiel sowohl räumliche Bauteilanordnung als auch die kinematische Kopplung der Planetenradsätze VS und HS, der sechs Schaltelemente A bis F, sowie der Antriebs- und Abtriebswelle AN, AB vollständig von dem zuvor im Detail beschriebenen sechzehnten Ausführungsbeispiel gemäß Fig. 18 übernommen. Der "neue" Hauptradsatz HS ist ähnlich wie in Fig. 18 als ein "auf eine Zweisteg-Einheit reduziertes Dreisteg-Fünfwellen-Planetengetriebe" ausgeführt mit drei Einzel-Planetenradsätzen, von denen zwei zu einer Einsteg-Einheit zusammengefasst sind, die getrennte Sonnenräder (S1_HS, S3_HS), einen gekoppelten Steg (ST13_HS) und nur ein Hohlrad (H13_HS) aufweist. Im Unterschied zu Fig. 18 sind die am gekoppelten Steg ST13_HS verdrehbar gelagerten langen Planetenräder P13_HS des Hauptradsatzes HS nunmehr als Stufenplanet ausgebildet mit unterschiedlichen Verzahnungen für die beiden Sonnenräder S1_HS und S3_HS des Hauptradsatzes HS. Entsprechend haben das erste und dritte Sonnenrad S1_HS, S3_HS des Hauptradsatzes HS nunmehr eine unterschiedliche Zähnezahl. Beispielhaft kämmt das gekoppelte Hohlrad H13_HS des Hauptradsatzes HS mit der gleichen Verzahnung der langen Planetenräder P13_HS des Hauptradsatzes HS, mit der auch das erste Sonnenrad S1_HS des Hauptradsatzes HS kämmt. Selbstverständlich könnte in einer anderen Ausgestaltung auch vorgesehen sein, dass das gekoppelte Hohlrad (H13_HS) des Hauptradsatzes mit der gleichen Verzahnung der langen Planetenräder (P13_HS) des Hauptradsatzes kämmt, mit der auch das dritte Sonnenrad (S3_HS) des Hauptradsatzes kämmt. Wie in Fig. 18 hat der "neue" Hauptradsatz HS also drei nicht miteinander verbundene Eingangselemente und ein Ausgangselement.

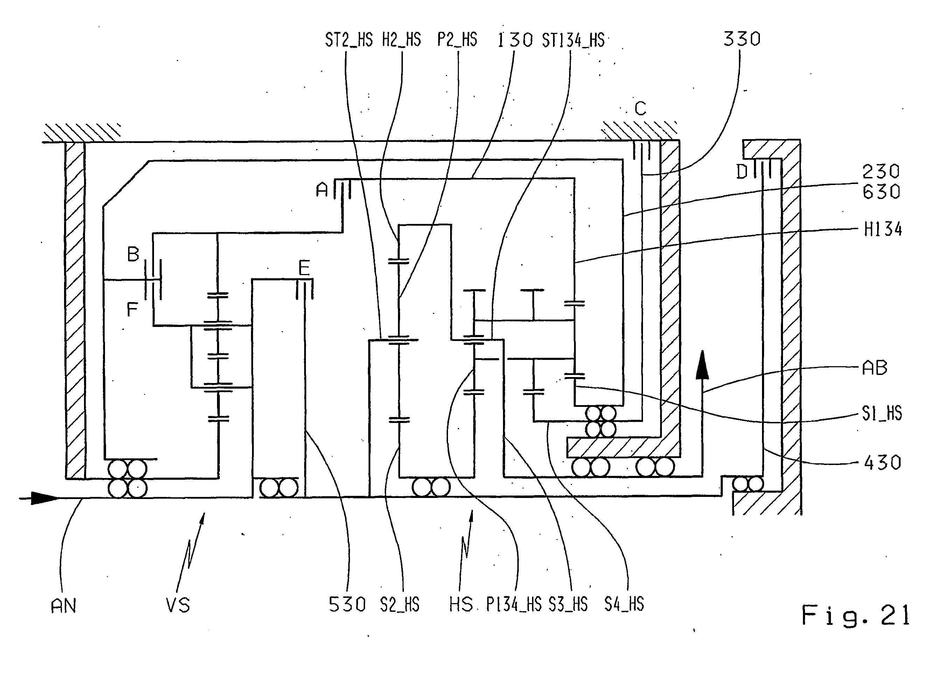

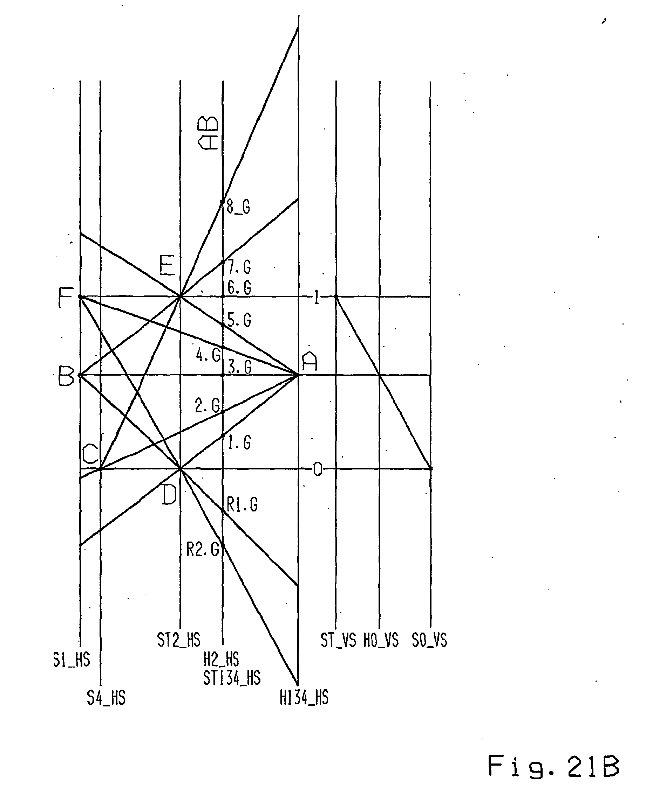

Die Teilung eines Zentralrades (also eines Sonnen- oder Hohlrades) eines Einzel-Planetenradsatzes in zwei getrennte Zentralräder bietet nicht nur hinsichtlich einer Bauteilankoppelung an dieses ursprünglich ungeteilte Zentralrad einen zusätzlichen Freiheitsgrad, sondern auch einen zusätzlichen Freiheitsgrad hinsichtlich des Drehzahlplans des Getriebes. Dies soll nun an einem neunzehnten Ausführungsbeispiel für ein Getriebeschema gemäß der vorliegenden Erfindung näher erläutert werden, welches in Fig. 21 dargestellt ist. Dabei basiert dieses neunzehnte Ausführungsbeispiel wiederum auf dem zuvor in Fig. 18 beschriebenen Getriebeschema, jedoch mit einer weiteren alternativen konstruktiven Ausgestaltung des Hauptradsatzes HS. Im Prinzip ist es ohne Probleme möglich ist, alle Zentralräder (Sonnenräder, Hohlräder) des mehrgliedrigen Hauptradsatzes HS ähnlich den in den Figuren 18, 19 und 20 dargestellten Beispielen bauteilseitig in zwei oder mehr Bauteile zu teilen unter Beibehaltung der Anzahl der Hauptradsatz-Stege von zwei, sodass diese geteilten Zentralräder dann jeweils über die ihnen zugeordneten Planetenräder kinematisch miteinander wirkverbunden sind. Selbstverständlich können die zu diesem geteilten Zentralrad korrespondierenden Planetenräder dabei als ungestufte oder gestufte Planetenräder ausgeführt sein. In dem in Fig. 21A dargestellten Ausführungsbeispiel wurden durch eine Teilung des Zentralrades, welches zuvor mit den Ausgangselementen 230, 330, 630 der drei Schaltelemente B, C, F verbunden war, zwei der drei im Drehzahlplan der Getriebes zuvor deckungsgleichen Linien dieser drei Schaltelemente auseinandergezogen, was später anhand eines in Fig. 21B dargestellten Drehzahlplans noch genauer beschrieben wird.

Wie aus Fig. 21 ersichtlich, ist der Hauptradsatz HS nunmehr als ein "auf eine Zweisteg-Einheit reduziertes Viersteg-Planetengetriebe" ausgebildet, umfassend vier gekoppelte Einzel-Planetenradsätze mit insgesamt vier nicht gekoppelten Eingangselementen und einem Ausgangselement. Dabei weist der Hauptradsatz HS vier Sonnenräder S1_HS, S2_HS, S3_HS, S4_HS, ein einfaches Hohlrad H2_HS, ein gekoppeltes Hohlrad H134_HS, einen einfachen Steg ST2_HS mit daran verdrehbar gelagerten kurzen Planetenrädern P2_HS, sowie einen gekoppelten Steg ST134_HS mit daran verdrehbar gelagerten langen Planetenrädern P134_HS auf. Die beiden Sonnenräder S3_HS, S4_HS sind räumlich gesehen axial nebeneinander zwischen den beiden anderen Sonnenrädern S2_HS und S1_HS angeordnet, wobei das Sonnenrad S3_HS an das vorschaltradsatznahe Sonnenrad S2_HS angrenzt und das Sonnenrad S4_HS an das vorschaltradsatzferne Sonnenrad S1_HS angrenzt. Die beiden Sonnenräder S2_HS, S3_HS sind miteinander gekoppelt. Die in Fig. 21A dargestellten langen Planetenräder P134_HS sind beispielhaft gestufte Planetenräder und kämmen mit den drei Sonnenrädern S1_HS, S3_HS und S4_HS. Das gekoppelte Hohlrad H134_HS kämmt hier beispielhaft mit der Planetenverzahnung, mit der auch das Sonnenrad S1_HS kämmt. Die genannten kurzen Planetenräder P2_HS kämmen mit dem einfachen Hohlrad H2_HS und dem Sonnenrad S2_HS. Ein mit der Abtriebswelle AB verbundenes Stegblech des gekoppelten Stegs ST134_HS greift axial zwischen den Sonnenrädern S3_HS und S4_HS radial nach innen hindurch.

Das erste Sonnenrad S1_HS des Hauptradsatzes HS bildet dessen erstes Eingangselement und ist ständig verdrehfest mit dem gemeinsamen Ausgangselement 230, 630 der beiden Kupplungen B und F verbunden. Das gekoppelte Hohlrad H134_HS des Hauptradsatzes HS bildet dessen zweites Eingangselement und ist ständig verdrehfest mit dem Ausgangselement 130 der Kupplung A verbunden. Der einfache Steg ST2_HS des Hauptradsatzes HS bildet dessen drittes Eingangselement und ist ständig verdrehfest sowohl mit dem Ausgangselement 530 der Kupplung E und dem Ausgangselement 430 der Bremse D verbunden. Das Sonnenrad S4_HS bildet das gegenüber Fig. 18 zusätzliche vierte Eingangselement des Hauptradsatzes HS und ist ständig verdrehfest mit dem Ausgangselement 330 der Bremse C verbunden. Das einfache Hohlrad H2_HS und der gekoppelte Steg ST134_HS des Hauptradsatzes sind miteinander gekoppelt und bilden das ständig mit der Abtriebswelle AB verbundene Ausgangselement des Hauptradsatzes HS.

Ist die in dem in Fig. 21A dargestellten Beispiel die Standgetriebeübersetzung des ersten der vier gekoppelten Planetenradsätze des Hauptradsatzes HS, definiert durch das Verhältnis der Zähnezahlen von Hohlrad H134_HS und Sonnenrad S1_HS, betragsmäßig größer als die Standgetriebeübersetzung des vierten der vier gekoppelten Planetenradsätze des Hauptradsatzes HS, definiert durch das Verhältnis der Zähnezahlen von Hohlrad H134_HS und Sonnenrad S4_HS sowie durch das Verhältnis der Zähnezahlen der Stufen der Stufenplanetenräder P134_HS des Hauptradsatzes HS, so ergibt sich einerseits, dass die "neue" Linie des vierten Eingangselementes (S4_HS) des Hauptradsatzes im Drehzahlplan benachbart zur Linie des ersten Eingangselementes (S1_HS) des Hauptradsatzes rechts von dieser liegt, also näher an der Linie des Abtriebselementes (H2_HS bzw. ST134_HS) des Hauptradsatzes als die genannte Linie des ersten Eingangselementes (S1_HS) des Hauptradsatzes. Andererseits ergibt sich daraus auch, dass die Linie des dritten Eingangselementes (ST2_HS) des Hauptradsatzes im Drehzahlplan rechts von der Linie des vierten Eingangselementes (S4_HS) des Hauptradsatzes liegt, also noch näher an der Linie des Abtriebselementes (H2_HS bzw. ST134_HS) des Hauptradsatzes als die genannte "neue" Linie des vierten Eingangselementes (S4_HS) des Hauptradsatzes. Bezogen auf die Eingangselemente des Hauptradsatzes liegen also nur noch die beiden Schaltelemente B, F sowie die beiden Schaltelemente D, E im Drehzahlplan jeweils auf gleicher Linie, wohingegen das Schaltelement C auf einer eigenen Linie liegt.

Es sei noch ausdrücklich darauf hingewiesen, dass die anhand der Figuren 17 bis 21 beschriebenen alternativen Hauptradsatztypen ohne weiteres mit allen zuvor in den Figuren 2 bis 16 beschriebenen Bauteilanordnungen kombinierbar sind.

### Bezugszeichen

- A: erstes Schaltelement, Kupplung
- B: zweites Schaltelement, Kupplung
- C: drittes Schaltelement, Bremse
- D: viertes Schaltelement, Bremse
- E: fünftes Schaltelement, Kupplung
- F: sechstes Schaltelement, Kupplung

- AN: Antriebswelle
- AB: Abtriebswelle
- GD: Gehäusedeckel
- GG: Getriebegehäuse
- GN: Nabe der Gehäusewand
- GW: Gehäusewand
- GZ: Gehäusezwischenwand
- NAN: Zahnprofil zur Antriebsdrehzahlbestimmung
- ZYL: zylinderförmiges Verbindungselement
- ZYLB: zylinderförmiges Verbindungselement
- ZYLF: zylinderförmiges Verbindungselement
- ZYLAB: gemeinsamer Lamellenträger des ersten und zweiten Schaltelementes
- ZYLBF: gemeinsamer Lamellenträger des zweiten und sechsten Schaltelementes
- ZYLCD: gemeinsamer Lamellenträger des dritten und vierten Schaltelementes
- VS: Vorschaltradsatz
- HO_VS: Hohlrad des Vorschaltradsatzes
- SO_VS: Sonnenrad des Vorschaltradsatzes
- ST_VS: (gekoppelter) Steg des Vorschaltradsatzes
- P1_VS: inneres Planetenrad des Vorschaltradsatzes
- P2_VS: äußeres Planetenrad des Vorschaltradsatzes

- HS: Hauptradsatz
- HO_HS: (einziges) Hohlrad des Hauptradsatzes
- H1_HS: erstes Hohlrad des Hauptradsatzes
- H13_HS: gekoppeltes (erstes) Hohlrad des Hauptradsatzes
- H134_HS: gekoppeltes (erstes) Hohlrad des Hauptradsatzes
- H2_HS: zweites Hohlrad des Hauptradsatzes
- S1_HS: erstes Sonnenrad des Hauptradsatzes
- S2_HS: zweites Sonnenrad des Hauptradsatzes
- S3_HS: drittes Sonnenrad des Hauptradsatzes
- S4_HS: viertes Sonnenrad des Hauptradsatzes
- ST_HS: gekoppelter (einziger) Steg des Hauptradsatzes
- ST1_HS: erster Steg des Hauptradsatzes
- ST13_HS: gekoppelter (erster) Steg des Hauptradsatzes
- ST134_HS: gekoppelter (erster) Steg des Hauptradsatzes
- ST2_HS: zweiter Steg des Hauptradsatzes
- P1_HS: langes Planetenrad des Hauptradsatzes
- P13_HS: gekoppeltes langes Planetenrad des Hauptradsatzes
- P2_HS: kurzes Planetenrad des Hauptradsatzes
- PL_HS: erstes Planetenrad des Hauptradsatzes
- PLa_HS: äußeres Planetenrad des Hauptradsatzes
- PLi_HS: inneres Planetenrad des Hauptradsatzes

- 100: Lamellen des ersten Schaltelementes
- 110: Servoeinrichtung des ersten Schaltelementes
- 111: Druckraum der Servoeinrichtung des ersten Schaltelementes
- 112: Druckausgleichsraum der Servoeinrichtung des ersten Schaltelementes
- 113: Rückstellelement der Servoeinrichtung des ersten Schaltelementes
- 114: Kolben der Servoeinrichtung des ersten Schaltelementes
- 115: Stauscheibe der Servoeinrichtung des ersten Schaltelementes
- 120: Eingangselement des ersten Schaltelementes
- 123: Nabe des Eingangselementes des ersten (und zweiten) Schaltelementes
- 130: Ausgangselement des ersten Schaltelementes
- 140: zweite Sonnenwelle
- 150: Mitnahmescheibe

- 200: Lamellen des zweiten Schaltelementes
- 210: Servoeinrichtung des zweiten Schaltelementes
- 211: Druckraum der Servoeinrichtung des zweiten Schaltelementes
- 212: Druckausgleichsraum der Servoeinrichtung des zweiten Schaltelementes
- 213: Rückstellelement der Servoeinrichtung des zweiten Schaltelementes
- 214: Kolben der Servoeinrichtung des zweiten Schaltelementes
- 215: Stauscheibe der Servoeinrichtung des zweiten Schaltelementes
- 216: Druckmittelzuführung zum Druckraum der Servoeinrichtung des zweiten Schaltelementes
- 217: Schmiermittelzuführung zum Druckausgleichsraum der Servoeinrichtung des zweiten Schaltelementes
- 218: Stützscheibe der Servoeinrichtung des zweiten Schaltelementes
- 219: Nabe der Servoeinrichtung des zweiten Schaltelementes
- 220: Eingangselement des zweiten Schaltelementes
- 223: Nabe des Eingangselementes des zweiten Schaltelementes
- 230: Ausgangselement des zweiten Schaltelementes
- 233: Nabe des Ausgangselementes des zweiten Schaltelementes
- 240: erste Sonnenwelle
- 250: Mitnahmeblech

- 300: Lamellen des dritten Schaltelementes
- 310: Servoeinrichtung des dritten Schaltelementes
- 311: Druckraum der Servoeinrichtung des dritten Schaltelementes
- 313: Rückstellelement der Servoeinrichtung des dritten Schaltelementes
- 314: Kolben der Servoeinrichtung des dritten Schaltelementes
- 320: Eingangselement des dritten Schaltelementes
- 330: Ausgangselement des dritten Schaltelementes

- 400: Lamellen des vierten Schaltelementes
- 410: Servoeinrichtung des vierten Schaltelementes
- 411: Druckräume der Servoeinrichtung des vierten Schaltelementes
- 413: Rückstellelement der Servoeinrichtung des vierten Schaltelementes
- 414: Kolben der Servoeinrichtung des vierten Schaltelementes
- 420: Eingangselement des vierten Schaltelementes
- 430: Ausgangselement des vierten Schaltelementes

- 500: Lamellen des fünften Schaltelementes
- 510: Servoeinrichtung des fünften Schaltelementes
- 511: Druckraum der Servoeinrichtung des fünften Schaltelementes
- 512: Druckausgleichsraum der Servoeinrichtung des fünften Schaltelementes
- 513: Rückstellelement der Servoeinrichtung des fünften Schaltelementes
- 514: Kolben der Servoeinrichtung des fünften Schaltelementes
- 515: Stauscheibe der Servoeinrichtung des fünften Schaltelementes
- 520: Eingangselement des fünften Schaltelementes
- 530: Ausgangselement des fünften Schaltelementes
- 540: Stegwelle

- 600: Lamellen des sechsten Schaltelementes
- 610: Servoeinrichtung des sechsten Schaltelementes
- 611: Druckraum der Servoeinrichtung des sechsten Schaltelementes
- 612: Druckausgleichsraum der Servoeinrichtung des sechsten Schaltelementes
- 613: Rückstellelement der Servoeinrichtung des sechsten Schaltelementes
- 614: Kolben der Servoeinrichtung des sechsten Schaltelementes
- 615: Stauscheibe der Servoeinrichtung des sechsten Schaltelementes
- 616: Druckmittelzuführung zum Druckraum der Servoeinrichtung des sechsten Schaltelementes
- 617: Schmiermittelzuführung zum Druckausgleichsraum der Servoeinrichtung des sechsten Schaltelementes
- 618: Stützscheibe der Servoeinrichtung des sechsten Schaltelementes
- 620: Eingangselement des sechsten Schaltelementes
- 622: scheibenförmiger Abschnitt des Eingangselementes des sechsten Schaltelementes
- 623: Nabe des Eingangselementes des sechsten Schaltelementes
- 630: Ausgangselement des sechsten Schaltelementes
- 633: Nabe des Ausgangselementes des sechsten Schaltelementes

## Patentansprüche (Patentansprüche für folgende(n) Vertragsstaat(en): DE, FR, GB)

1. Mehrstufen-Automatgetriebe, mit einer Antriebswelle (AN), einer Abtriebswelle (AB), einem Vorschaltradsatz (VS), einem Hauptradsatz (HS) und sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
**dadurch gekennzeichnet, dass**
• der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind,
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet,
• das Sonnenrad (SO_VS) des Vorschaltradsatzes (VS) am Getriebegehäuse (GG) festgesetzt ist,
• der Hauptradsatz (HS) als Zweisteg-Vierwellen-Getriebe mit zwei gekoppelten Einzel-Planetenradsätzen ausgeführt ist, umfassend zwei Sonnenräder (S1_HS, S2_HS), zwei Hohlräder (H1_HS, H2_HS), einen ersten Steg (ST1_HS), an dem erste Planetenräder (PL_HS) verdrehbar gelagert sind, sowie einen gekoppelten zweiten Steg (ST2_HS), an dem innere und äußere Planetenräder (PLi_HS, PLa_HS) verdrehbar gelagert sind,
• die ersten Planetenräder (PL_HS) des Hauptradsatzes (HS) mit dem ersten Hohlrad (H1_HS) und dem ersten Sonnenrad (S1_HS) des Hauptradsatzes (HS) kämmen,
• die inneren Planetenräder (PLi_HS) des Hauptradsatzes (HS) mit den äußeren Planetenräder (PLa_HS) und dem zweiten Sonnenrad (S2_HS) des Hauptradsatzes (HS) kämmen,
• die äußeren Planetenräder (PLa_HS) des Hauptradsatzes (HS) mit den inneren Planetenräder (PLi_HS) und dem zweiten Hohlrad (H2_HS) des Hauptradsatzes (HS) kämmen,
• das erste Sonnenrad (S1_HS) und der gekoppelte zweite Steg (ST2_HS) des Hauptradsatzes (HS) miteinander verbunden sind und das erste Eingangselement des Hauptradsatzes (HS) bilden und mit den Ausgangselementen (230, 330, 630) des zweiten, dritten und sechsten Schaltelementes (B, C, F) verbunden sind,
• das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
• der erste Steg (ST1_HS) und das zweite Hohlrad (H2_HS) des Hauptradsatzes (HS) miteinander verbunden sind und das dritte Eingangselement des Hauptradsatzes (HS) bilden und mit den Ausgangselementen (430, 530) des vierten und fünften Schaltelementes (D, E) verbunden sind,
• das erste Hohlrad (H1_HS) des Hauptradsatzes (HS) das Ausgangselement des Hauptradsatzes (HS) bildet und mit der Abtriebswelle (AB) verbunden ist,
wobei das zweite und sechste Schaltelement (B, F) eine Baugruppe bilden, welche räumlich gesehen zumindest überwiegend auf der dem Hauptradsatz (HS) abgewandten Seite des Vorschaltradsatzes (VS) angeordnet ist, zumindest umfassend
• einen Lamellenträger des zweiten Schaltelementes (B) zur Aufnahme eines Lamellenpaketes (200) des zweiten Schaltelementes (B),
• eine Servoeinrichtung (210) des zweiten Schaltelementes (B) zur Betätigung des Lamellenpaketes (200) des zweiten Schaltelementes (B),
• ein Lamellenpaket (600) des sechsten Schaltelementes (F),
• einen Lamellenträger des sechsten Schaltelementes (F) zur Aufnahme dieses Lamellenpaketes (600) des sechsten Schaltelementes (F) sowie
• eine Servoeinrichtung (610) des sechsten Schaltelementes (F) zur Betätigung dieses Lamellenpaketes (600) des sechsten Schaltelementes (F).

2. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
**dadurch gekennzeichnet, dass**
• der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind,
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse festgesetzt ist,
• der Hauptradsatz (HS) als Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädem (P13_HS), sowie mit einem zweiten Steg (ST2_HS) mit daran verdrehbar gelagerten kurzen Planetenrädern (P2_HS),
• das dritte Sonnenrad (S3_HS) des Hauptradsatzes (HS) axial zwischen dem zweiten und ersten Sonnenrad (S2_HS, S1_HS) des Hauptradsatzes (HS) angeordnet ist,
• die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
• die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
• das zweite und dritte Sonnenrad (S2_HS, S3_HS) des Hauptradsatzes (HS) fest miteinander verbunden sind,
• das erste Sonnenrad (S1_HS) des Hauptradsatzes (HS) das erste Eingangselement des Hauptradsatzes (HS) bildet und mit den Ausgangselementen (230, 330, 630) des zweiten, dritten und sechsten Schaltelementes (B, C, F) verbunden ist,
• das gekoppelte Hohlrad (H13_HS) des Hauptradsatzes (HS) das zweite Eingangselement des Hauptradsatzes (HS) bildet und mit dem Ausgangselement (130) des ersten Schaltelementes (A) verbunden ist,
• der zweite Steg (ST2_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
• das zweite Hohlrad (H2_HS) und der gekoppelte Steg (ST13_HS) des Hauptradsatzes (HS) fest miteinander verbunden sind und das Ausgangselement des Hauptradsatzes (HS) bilden und mit der Abtriebswelle (AB) verbunden sind,
wobei das zweite und sechste Schaltelement (B, F) eine Baugruppe bilden, welche räumlich gesehen zumindest überwiegend auf der dem Hauptradsatz (HS) abgewandten Seite des Vorschaltradsatzes (VS) angeordnet ist, zumindest umfassend
• einen Lamellenträger des zweiten Schaltelementes (B) zur Aufnahme eines Lamellenpaketes (200) des zweiten Schaltelementes (B),
• eine Servoeinrichtung (210) des zweiten Schaltelementes (B) zur Betätigung des Lamellenpaketes (200) des zweiten Schaltelementes (B),
• ein Lamellenpaket (600) des sechsten Schaltelementes (F),
• einen Lamellenträger des sechsten Schaltelementes (F) zur Aufnahme dieses Lamellenpaketes (600) des sechsten Schaltelementes (F) sowie
• eine Servoeinrichtung (610) des sechsten Schaltelementes (F) zur Betätigung dieses Lamellenpaketes (600) des sechsten Schaltelementes (F).

3. Mehrstufen-Automatgetriebe nach Anspruch 2, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) nach innen hindurchgreift, wobei eine Nabe, die mit diesem Stegblech verdrehfest und mit der Abtriebswelle (AB) wirkverbunden ist, das erste Sonnenrad (S1_HS) des Hauptradsatzes (HS) in axialer Richtung zentrisch durchdringt.

4. Mehrstufen-Automatgetriebe nach Anspruch 2 oder 3, **dadurch gekennzeichnet, dass** die langen Planetenräder (P13_HS) des Hauptradsatzes (HS) als Stufenplanetenräder ausgebildet sind.

5. Mehrstufen-Automatgetriebe nach einem der Ansprüche 1 bis 4, **dadurch gekennzeichnet, dass** das Ausgangselement (630) des sechsten Schaltelementes (F) über das Ausgangselement (230) des zweiten Schaltelementes (B) mit dem ersten Eingangselement des Hauptradsatzes (HS) verbunden ist.

6. Mehrstufen-Automatgetriebe nach einem der Ansprüche 1 bis 4, **dadurch gekennzeichnet, dass** das sechste Schaltelement (F) und das zweite Schaltelement (B) über ein gemeinsames Ausgangselement (ZYLBF) mit dem ersten Eingangselement des Hauptradsatzes (HS) verbunden sind.

7. Mehrstufen-Automatgetriebe nach einem der Ansprüche 1 bis 6, **dadurch gekennzeichnet, dass** das zweite und sechste Schaltelement (B, F) eine Baugruppe bilden, die in einem Bereich axial zwischen dem Vorschaltradsatz (VS) und einer sich radial erstreckenden und auf der dem Hauptradsatz (HS) abgewandten Seite des Vorschaltradsatzes (VS) angeordnete Gehäusewand (GW) des Getriebegehäuses (GG) angeordnet ist.

8. Mehrstufen-Automatgetriebe nach einem der Ansprüche 1 bis 7, **dadurch gekennzeichnet, dass** das zweite und sechste Schaltelement (B, F) eine Baugruppe bilden, die räumlich gesehen axial an den Vorschaltradsatz (VS) angrenzt, wobei das erste Schaltelement (A) räumlich gesehen zumindest teilweise in einem Bereich axial zwischen dem Vorschaltradsatz (VS) und dem Hauptradsatz (HS) angeordnet ist.

9. Mehrstufen-Automatgetriebe nach einem der Ansprüche 1 bis 7, **dadurch gekennzeichnet, dass** das zweite und sechste Schaltelement (B, F) eine Baugruppe bilden, die räumlich gesehen axial an das erste Schaltelement (A) angrenzt, insbesondere an eine Servoeinrichtung (110) oder an ein Lamellenpaket (100) des ersten Schaltelementes (A).

10. Mehrstufen-Automatgetriebe nach einem der Ansprüche 1 bis 9, **dadurch gekennzeichnet, dass** das fünfte Schaltelement (E) räumlich gesehen axial zwischen dem Vorschaltradsatz (VS) und dem Hauptradsatz (HS) angeordnet ist, axial angrenzend an den Vorschaltradsatz (VS).

11. Mehrstufen-Automatgetriebe nach Anspruch 10, **dadurch gekennzeichnet, dass** das mit dem Ausgangselement (630) des sechsten Schaltelementes (F) verbundene Ausgangselement (230) des zweiten Schaltelementes (B) den Vorschaltradsatz (VS) und das erste Schaltelement (A) und das fünfte Schaltelement (E) in axialer Richtung radial außen vollständig übergreift.

12. Mehrstufen-Automatgetriebe nach Anspruch 10, **dadurch gekennzeichnet, dass** das mit dem ersten Eingangselement des Hauptradsatzes (HS) verbundenes Ausgangselement (230) des zweiten Schaltelementes (B) und das mit dem ersten Eingangselement des Hauptradsatzes (HS) verbundenes Ausgangselement (630) des sechsten Schaltelementes (F) den Vorschaltradsatz (VS) und das erste Schaltelement (A) und das fünfte Schaltelement (E) in axialer Richtung radial außen vollständig übergreifen.

13. Mehrstufen-Automatgetriebe nach einem der Ansprüche 1 bis 9, **dadurch gekennzeichnet, dass** das fünfte Schaltelement (E) räumlich gesehen axial auf der dem Vorschaltradsatz (VS) abgewandten Seite des Hauptradsatzes (HS) angeordnet ist, axial angrenzend an den Hauptradsatz (HS).

14. Mehrstufen-Automatgetriebe nach Anspruch 13, **dadurch gekennzeichnet, dass** das mit dem Ausgangselement (630) des sechsten Schaltelementes (F) verbundene Ausgangselement (230) des zweiten Schaltelementes (B) den Vorschaltradsatz (VS) und das erste Schaltelement (A) in axialer Richtung radial außen vollständig übergreift.

15. Mehrstufen-Automatgetriebe nach Anspruch 13, **dadurch gekennzeichnet, dass** das mit dem ersten Eingangselement des Hauptradsatzes (HS) verbundenes Ausgangselement (230) des zweiten Schaltelementes (B) und das mit dem ersten Eingangselement des Hauptradsatzes (HS) verbundenes Ausgangselement (630) des sechsten Schaltelementes (F) den Vorschaltradsatz (VS) und das erste Schaltelement (A) in axialer Richtung radial außen vollständig übergreifen.

16. Mehrstufen-Automatgetriebe nach einem der Ansprüche 1 bis 15, **dadurch gekennzeichnet, dass** das Lamellenpaket (200) des zweiten Schaltelementes (B) in axialer Richtung gesehen zumindest teilweise radial über dem Lamellenpaket (600) des sechsten Schaltelementes (F) angeordnet ist.

17. Mehrstufen-Automatgetriebe nach einem der Ansprüche 1 bis 15, **dadurch gekennzeichnet, dass** das Lamellenpaket (600) des sechsten Schaltelementes (F) in axialer Richtung gesehen zumindest teilweise radial oberhalb des Lamellenpaketes (200) des zweiten Schaltelementes (B) angeordnet ist.

18. Mehrstufen-Automatgetriebe nach einem der Ansprüche 1 bis 15, **dadurch gekennzeichnet, dass** das Lamellenpaket (200) des zweiten Schaltelementes (B) axial neben dem Lamellenpaketes (600) des sechsten Schaltelementes (F) angeordnet ist.

19. Mehrstufen-Automatgetriebe nach einem der Ansprüche 1 bis 15, **dadurch gekennzeichnet, dass** das Lamellenpaket (200) des zweiten Schaltelementes (B) in axialer Richtung gesehen zumindest teilweise radial über dem Vorschaltradsatz (VS) angeordnet ist.

20. Mehrstufen-Automatgetriebe nach einem der Ansprüche 1 bis 19, **dadurch gekennzeichnet, dass** das Lamellenpaket (200) des zweiten Schaltelementes (B) näher am Hauptradsatz (HS) angeordnet ist als das Lamellenpaket (600) des sechsten Schaltelementes (F).

21. Mehrstufen-Automatgetriebe nach einem der Ansprüche 1 bis 20, **dadurch gekennzeichnet, dass** das zweite und sechste Schaltelement (B, F) zur Aufnahme von Lamellen des zweiten und sechsten Schaltelementes (B, F) einen gemeinsamen Lamellenträger (ZYLBF) aufweisen, der mit dem ersten Eingangselement des Hauptradsatzes (HS) verbunden ist.

22. Mehrstufen-Automatgetriebe nach einem der Ansprüche 1 bis 21, **dadurch gekennzeichnet, dass** die Servoeinrichtung (610) des sechsten Schaltelementes (F), insbesondere ein Druckraum (611) und ein Druckausgleichsraum (612) der Servoeinrichtung (610) des sechsten Schaltelementes (F), ständig mit der Drehzahl des ersten Eingangselementes des Hauptradsatzes (HS) rotiert.

23. Mehrstufen-Automatgetriebe nach einem der Ansprüche 1 bis 21, **dadurch gekennzeichnet, dass** die Servoeinrichtung (610) des sechsten Schaltelementes (F), insbesondere ein Druckraum (611) und ein Druckausgleichsraum (612) der Servoeinrichtung (610) des sechsten Schaltelementes (F), ständig mit der Drehzahl der Antriebswelle (AN) rotiert.

24. Mehrstufen-Automatgetriebe nach einem der Ansprüche 1 bis 23, **dadurch gekennzeichnet, dass** die Servoeinrichtung (210) des zweiten Schaltelementes (B), insbesondere ein Druckraum (211) und ein Druckausgleichsraum (212) der Servoeinrichtung (210) des zweiten Schaltelementes (B), ständig mit der Drehzahl des ersten Elementes des Hauptradsatzes (HS) rotiert.

25. Mehrstufen-Automatgetriebe nach einem der Ansprüche 1 bis 23, **dadurch gekennzeichnet, dass** die Servoeinrichtung (210) des zweiten Schaltelementes (B), insbesondere ein Druckraum (211) und ein Druckausgleichsraum (212) der Servoeinrichtung (210) des zweiten Schaltelementes (B), ständig mit der Drehzahl des Ausgangselementes des Vorschaltradsatzes (VS) rotiert.

26. Mehrstufen-Automatgetriebe nach einem der Ansprüche 1 bis 25, **dadurch gekennzeichnet, dass** das sechste Schaltelement (F), insbesondere das Lamellenpaket (600) und die Servoeinrichtung (610) des sechsten Schaltelementes (F) zumindest weitgehend innerhalb eines Kupplungsraumes des zweiten Schaltelementes (B) angeordnet sind, der durch einen Außenlamellenträger des zweiten Schaltelementes (B) gebildet wird.

27. Mehrstufen-Automatgetriebe nach einem der Ansprüche 1 bis 25, **dadurch gekennzeichnet, dass** das zweite Schaltelement (B), insbesondere das Lamellenpaket (200) und die Servoeinrichtung (210) des zweiten Schaltelementes (B) zumindest weitgehend innerhalb eines Kupplungsraumes des zweiten Schaltelementes (B) angeordnet sind, der durch einen Außenlamellenträger des sechsten Schaltelementes (F) gebildet wird.

28. Mehrstufen-Automatgetriebe nach einem der Ansprüche 1 bis 27, **dadurch gekennzeichnet, dass** die Servoeinrichtungen (210, 610) des zweiten und sechsten Schaltelementes (B, F) zumindest überwiegend auf der dem Vorschaltradsatzes (VS) abgewandten Seite des ihr jeweils zugeordneten Lamellenpaketes (200, 600) des zweiten bzw. sechsten Schaltelementes (B, F) angeordnet sind.

29. Mehrstufen-Automatgetriebe nach einem der Ansprüche 1 bis 27, **dadurch gekennzeichnet, dass** die Servoeinrichtungen (210, 610) des zweiten und sechsten Schaltelementes (B, F) zumindest überwiegend auf der dem Vorschaltradsatzes (VS) zugewandten Seite des ihr jeweils zugeordneten Lamellenpakete (200, 600) des zweiten bzw. sechsten Schaltelementes (B, F) angeordnet sind.

30. Mehrstufen-Automatgetriebe nach einem der Ansprüche 1 bis 27, **dadurch gekennzeichnet, dass** die Servoeinrichtung (210) des zweiten Schaltelementes (B) zumindest überwiegend auf der dem Vorschaltradsatzes (VS) abgewandten Seite des Lamellenpaketes (200) des zweiten Schaltelementes (B) angeordnet ist,
und dass die Servoeinrichtung (610) des sechsten Schaltelementes (F) zumindest überwiegend auf der dem Vorschaltradsatzes (VS) zugewandten Seite des Lamellenpaketes (600) des sechsten Schaltelementes (F) angeordnet ist.

31. Mehrstufen-Automatgetriebe nach einem der Ansprüche 1 bis 30, **dadurch gekennzeichnet, dass** das Eingangselement (620) des sechsten Schaltelementes (F) auf einer verdrehfesten Nabe (GN) der Gehäusewand (GW) des Getriebegehäuses (GG) gelagert ist.

32. Mehrstufen-Automatgetriebe nach einem der Ansprüche 1 bis 31, **dadurch gekennzeichnet, dass** das Ausgangselement (630) des sechsten Schaltelementes (F) und/oder das Ausgangselement (230) des zweiten Schaltelementes (B) auf einer verdrehfesten Nabe (GN) der Gehäusewand (GW) des Getriebegehäuses (GG) gelagert ist.

33. Mehrstufen-Automatgetriebe nach einem der Ansprüche 1 bis 32, **dadurch gekennzeichnet, dass** das Eingangselement (220) des zweiten Schaltelementes (B) an dem Eingangselement (620) des sechsten Schaltelementes (F) gelagert ist.

34. Mehrstufen-Automatgetriebe nach einem der Ansprüche 1 bis 32, **dadurch gekennzeichnet, dass** das Eingangselement (220) des zweiten Schaltelementes (B) an dem Ausgangselement (630) des sechsten Schaltelementes (F) oder an dem Ausgangselement (230) des zweiten Schaltelementes (B) gelagert ist.

35. Mehrstufen-Automatgetriebe nach einem der Ansprüche 1 bis 34, **dadurch gekennzeichnet, dass** ein mit dem Ausgangselement des Vorschaltradsatzes (VS) verbundenes Eingangselement (130) des ersten Schaltelementes (A) an dem Eingangselement (620) des sechsten Schaltelementes (F) gelagert ist.

36. Mehrstufen-Automatgetriebe nach einem der Ansprüche 1 bis 35, **dadurch gekennzeichnet, dass** die Nabe (GN) der Gehäusewand (GW) Kanäle aufweist zur Zufuhr von Druck- und/oder Schmiermittel zur Servoeinrichtung (610, 210, 110) des sechsten und/oder zweiten und/oder ersten Schaltelementes (F, B, A).

37. Mehrstufen-Automatgetriebe nach einem der Ansprüche 1 bis 36, **dadurch gekennzeichnet, dass** die Lamellenpakete (100, 200) des ersten und zweiten Schaltelementes (A, B) auf gleichem oder zumindest ähnlichem Durchmesser angeordnet sind.

38. Mehrstufen-Automatgetriebe nach einem der Ansprüche 1 bis 37, **dadurch gekennzeichnet, dass** das erste und zweite Schaltelement (A, B) einen gemeinsamen Lamellenträger (ZYLAB) aufweisen, der mit dem Ausgangselement des Vorschaltradsatzes (VS) verbunden ist.

39. Mehrstufen-Automatgetriebe nach einem der Ansprüche 1 bis 38, **dadurch gekennzeichnet, dass** durch selektives Schließen der Schaltelemente (A bis F) zumindest acht Vorwärtsgänge derart schaltbar sind, dass die Drehzahl der Antriebswelle (AN) derart auf die Abtriebswelle (AB) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird, wobei
• im ersten Vorwärtsgang das erste und vierte Schaltelement (A, D),
• im zweiten Vorwärtsgang das erste und dritte Schaltelement (A, C),
• im dritten Vorwärtsgang das erste und zweite Schaltelement (A, B),
• im vierten Vorwärtsgang das erste und sechste Schaltelement (A, F),
• im fünften Vorwärtsgang das erste und fünfte Schaltelement (A, E),
• im sechsten Vorwärtsgang das fünfte und sechste Schaltelement (E, F),
• im siebten Vorwärtsgang das zweite und fünfte Schaltelement (B, E) und
• im achten Vorwärtsgang das dritte und fünfte Schaltelement (C, E) geschlossen sind,
und wobei in einem Rückwärtsgang das vierte Schaltelement (D) und zusätzlich entweder das zweite Schaltelement (B) oder das sechste Schaltelement (F) geschlossen sind.

## Patentansprüche (Patentansprüche für folgende(n) Vertragsstaat(en): AT, BE, BG, CH, CY, CZ, DK, EE, ES, FI, HU, IE, IS, IT, LI, LT, LU, LV, MC, NL, PL, PT, RO, SE, SI, SK, TR)

1. Mehrstufen-Automatgetriebe, mit einer Antriebswelle (AN), einer Abtriebswelle (AB), sechs Schaltelementen (A bis F), einem als Planetenradsatz ausgebildeten Vorschaltradsatz (VS) und einem als gekoppelter Planetenradsatz ausgebildeten Hauptradsatz (HS) mit mehreren nicht miteinander gekoppelten Eingangselementen und einem Ausgangselement, wobei
• ein Eingangselement des Vorschaltradsatzes (VS) ständig mit der Antriebswelle (AN) verbunden ist,
• ein Ausgangselement des Vorschaltradsatzes (VS) mit einer Drehzahl kleiner der Eingangsdrehzahl der Antriebswelle (AN) rotiert und ständig mit einem Eingangselement (120) des ersten Schaltelementes (A) und ständig mit einem Eingangselement (220) des zweiten Schaltelementes (B) verbunden ist,
• ein erstes Eingangselement des Hauptradsatzes (HS) ständig mit einem Ausgangselement (230) des zweiten Schaltelementes (B) und ständig mit einem Ausgangselement (330) des dritten Schaltelementes (C) und ständig mit einem Ausgangselement (630) des sechsten Schaltelementes (F) verbunden ist,
• ein zweites Eingangselement des Hauptradsatzes (HS) ständig mit einem Ausgangselement (130) des ersten Schaltelementes (A) verbunden ist,
• ein drittes Eingangselement des Hauptradsatzes (HS) ständig mit einem Ausgangselement (430) des vierten Schaltelementes (D) und ständig mit einem Ausgangselement (530) des fünften Schaltelementes (E) verbunden ist,
• das Ausgangselement des Hauptradsatzes (HS) ständig mit der Abtriebswelle (AB) verbunden ist,
• ein Eingangselement des dritten Schaltelementes (C) und ein Eingangselement des vierten Schaltelementes (D) mit einem Getriebegehäuse (GG) verbunden sind,
• ein Eingangselement (520) des fünften Schaltelementes (E) und ein Eingangselement (620) des sechsten Schaltelementes (F) mit der Antriebswelle (AN) verbunden sind,
**dadurch gekennzeichnet,**
**dass** das zweite und sechste Schaltelement (B, F) eine Baugruppe bilden, welche räumlich gesehen zumindest überwiegend auf der dem Hauptradsatz (HS) abgewandten Seite des Vorschaltradsatzes (VS) angeordnet ist, zumindest umfassend
• einen Lamellenträger des zweiten Schaltelementes (B) zur Aufnahme eines Lamellenpaketes (200) des zweiten Schaltelementes (B),
• eine Servoeinrichtung (210) des zweiten Schaltelementes (B) zur Betätigung des Lamellenpaketes (200) des zweiten Schaltelementes (B),
• ein Lamellenpaket (600) des sechsten Schaltelementes (F),
• einen Lamellenträger des sechsten Schaltelementes (F) zur Aufnahme dieses Lamellenpaketes (600) des sechsten Schaltelementes (F) sowie
• eine Servoeinrichtung (610) des sechsten Schaltelementes (F) zur Betätigung dieses Lamellenpaketes (600) des sechsten Schaltelementes (F).

2. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
**dadurch gekennzeichnet,**
**dass** das zweite und sechste Schaltelement (B, F) eine Baugruppe bilden, welche räumlich gesehen zumindest überwiegend auf der dem Hauptradsatz (HS) abgewandten Seite des Vorschaltradsatzes (VS) angeordnet ist, zumindest umfassend
• einen Lamellenträger des zweiten Schaltelementes (B) zur Aufnahme eines Lamellenpaketes (200) des zweiten Schaltelementes (B),
• eine Servoeinrichtung (210) des zweiten Schaltelementes (B) zur Betätigung des Lamellenpaketes (200) des zweiten Schaltelementes (B),
• ein Lamellenpaket (600) des sechsten Schaltelementes (F),
• einen Lamellenträger des sechsten Schaltelementes (F) zur Aufnahme dieses Lamellenpaketes (600) des sechsten Schaltelementes (F) sowie
• eine Servoeinrichtung (610) des sechsten Schaltelementes (F) zur Betätigung dieses Lamellenpaketes (600) des sechsten Schaltelementes (F).

3. Mehrstufen-Automatgetriebe nach Anspruch 1 oder 2, **dadurch gekennzeichnet, dass** das zweite und sechste Schaltelement (B, F) eine Baugruppe bilden, die in einem Bereich axial zwischen dem Vorschaltradsatz (VS) und einer sich radial erstreckenden und auf der dem Hauptradsatz (HS) abgewandten Seite des Vorschaltradsatzes (VS) angeordnete Gehäusewand (GW) des Getriebegehäuses (GG) angeordnet ist.

4. Mehrstufen-Automatgetriebe nach Anspruch 1 oder 2, **dadurch gekennzeichnet, dass** das zweite und sechste Schaltelement (B, F) eine Baugruppe bilden, die räumlich gesehen axial an den Vorschaltradsatz (VS) angrenzt, wobei das erste Schaltelement (A) räumlich gesehen zumindest teilweise in einem Bereich axial zwischen dem Vorschaltradsatz (VS) und dem Hauptradsatz (HS) angeordnet ist.

5. Mehrstufen-Automatgetriebe nach Anspruch 1 oder 2, **dadurch gekennzeichnet, dass** das zweite und sechste Schaltelement (B, F) eine Baugruppe bilden, die räumlich gesehen axial an das erste Schaltelement (A) angrenzt, insbesondere an eine Servoeinrichtung (110) oder an ein Lamellenpaket (100) des ersten Schaltelementes (A).

6. Mehrstufen-Automatgetriebe nach einem der Ansprüche 1 bis 5, **dadurch gekennzeichnet, dass** das fünfte Schaltelement (E) räumlich gesehen axial zwischen dem Vorschaltradsatz (VS) und dem Hauptradsatz (HS) angeordnet ist, axial angrenzend an den Vorschaltradsatz (VS).

7. Mehrstufen-Automatgetriebe nach Anspruch 6, **dadurch gekennzeichnet, dass** das mit dem Ausgangselement (630) des sechsten Schaltelementes (F) verbundene Ausgangselement (230) des zweiten Schaltelementes (B) den Vorschaltradsatz (VS) und das erste Schaltelement (A) und das fünfte Schaltelement (E) in axialer Richtung radial außen vollständig übergreift.

8. Mehrstufen-Automatgetriebe nach Anspruch 6, **dadurch gekennzeichnet, dass** das mit dem ersten Eingangselement des Hauptradsatzes (HS) verbundenes Ausgangselement (230) des zweiten Schaltelementes (B) und das mit dem ersten Eingangselement des Hauptradsatzes (HS) verbundenes Ausgangselement (630) des sechsten Schaltelementes (F) den Vorschaltradsatz (VS) und das erste Schaltelement (A) und das fünfte Schaltelement (E) in axialer Richtung radial außen vollständig übergreifen.

9. Mehrstufen-Automatgetriebe nach einem der Ansprüche 1 bis 5, **dadurch gekennzeichnet, dass** das fünfte Schaltelement (E) räumlich gesehen axial auf der dem Vorschaltradsatz (VS) abgewandten Seite des Hauptradsatzes (HS) angeordnet ist, axial angrenzend an den Hauptradsatz (HS).

10. Mehrstufen-Automatgetriebe nach Anspruch 9, **dadurch gekennzeichnet, dass** das mit dem Ausgangselement (630) des sechsten Schaltelementes (F) verbundene Ausgangselement (230) des zweiten Schaltelementes (B) den Vorschaltradsatz (VS) und das erste Schaltelement (A) in axialer Richtung radial außen vollständig übergreift.

11. Mehrstufen-Automatgetriebe nach Anspruch 9, **dadurch gekennzeichnet, dass** das mit dem ersten Eingangselement des Hauptradsatzes (HS) verbundenes Ausgangselement (230) des zweiten Schaltelementes (B) und das mit dem ersten Eingangselement des Hauptradsatzes (HS) verbundenes Ausgangselement (630) des sechsten Schaltelementes (F) den Vorschaltradsatz (VS) und das erste Schaltelement (A) in axialer Richtung radial außen vollständig übergreifen.

12. Mehrstufen-Automatgetriebe nach einem der Ansprüche 1 bis 11, **dadurch gekennzeichnet, dass** das Lamellenpaket (200) des zweiten Schaltelementes (B) in axialer Richtung gesehen zumindest teilweise radial über dem Lamellenpaket (600) des sechsten Schaltelementes (F) angeordnet ist.

13. Mehrstufen-Automatgetriebe nach einem der Ansprüche 1 bis 11, **dadurch gekennzeichnet, dass** das Lamellenpaket (600) des sechsten Schaltelementes (F) in axialer Richtung gesehen zumindest teilweise radial oberhalb des Lamellenpaketes (200) des zweiten Schaltelementes (B) angeordnet ist.

14. Mehrstufen-Automatgetriebe nach einem der Ansprüche 1 bis 11, **dadurch gekennzeichnet, dass** das Lamellenpaket (200) des zweiten Schaltelementes (B) axial neben dem Lamellenpaketes (600) des sechsten Schaltelementes (F) angeordnet ist.

15. Mehrstufen-Automatgetriebe nach einem der Ansprüche 1 bis 11, **dadurch gekennzeichnet, dass** das Lamellenpaket (200) des zweiten Schaltelementes (B) in axialer Richtung gesehen zumindest teilweise radial über dem Vorschaltradsatz (VS) angeordnet ist.

16. Mehrstufen-Automatgetriebe nach einem der Ansprüche 1 bis 15, **dadurch gekennzeichnet, dass** das Lamellenpaket (200) des zweiten Schaltelementes (B) näher am Hauptradsatz (HS) angeordnet ist als das Lamellenpaket (600) des sechsten Schaltelementes (F).

17. Mehrstufen-Automatgetriebe nach einem der Ansprüche 1 bis 16, **dadurch gekennzeichnet, dass** das zweite und sechste Schaltelement (B, F) zur Aufnahme von Lamellen des zweiten und sechsten Schaltelementes (B, F) einen gemeinsamen Lamellenträger (ZYLBF) aufweisen, der mit dem ersten Eingangselement des Hauptradsatzes (HS) verbunden ist.

18. Mehrstufen-Automatgetriebe nach einem der Ansprüche 1 bis 17, **dadurch gekennzeichnet, dass** das Ausgangselement (630) des sechsten Schaltelementes (F) über das Ausgangselement (230) des zweiten Schaltelementes (B) mit dem ersten Eingangselement des Hauptradsatzes (HS) verbunden ist.

19. Mehrstufen-Automatgetriebe nach einem der Ansprüche 1 bis 17, **dadurch gekennzeichnet, dass** das sechste Schaltelement (F) und das zweite Schaltelement (B) über ein gemeinsames Ausgangselement mit dem ersten Eingangselement des Hauptradsatzes (HS) verbunden sind.

20. Mehrstufen-Automatgetriebe nach einem der Ansprüche 1 bis 19, **dadurch gekennzeichnet, dass** die Servoeinrichtung (610) des sechsten Schaltelementes (F), insbesondere ein Druckraum (611) und ein Druckausgleichsraum (612) der Servoeinrichtung (610) des sechsten Schaltelementes (F), ständig mit der Drehzahl des ersten Eingangselementes des Hauptradsatzes (HS) rotiert.

21. Mehrstufen-Automatgetriebe nach einem der Ansprüche 1 bis 19, **dadurch gekennzeichnet, dass** die Servoeinrichtung (610) des sechsten Schaltelementes (F), insbesondere ein Druckraum (611) und ein Druckausgleichsraum (612) der Servoeinrichtung (610) des sechsten Schaltelementes (F), ständig mit der Drehzahl der Antriebswelle (AN) rotiert.

22. Mehrstufen-Automatgetriebe nach einem der Ansprüche 1 bis 21, **dadurch gekennzeichnet, dass** die Servoeinrichtung (210) des zweiten Schaltelementes (B), insbesondere ein Druckraum (211) und ein Druckausgleichsraum (212) der Servoeinrichtung (210) des zweiten Schaltelementes (B), ständig mit der Drehzahl des ersten Elementes des Hauptradsatzes (HS) rotiert.

23. Mehrstufen-Automatgetriebe nach einem der Ansprüche 1 bis 21, **dadurch gekennzeichnet, dass** die Servoeinrichtung (210) des zweiten Schaltelementes (B), insbesondere ein Druckraum (211) und ein Druckausgleichsraum (212) der Servoeinrichtung (210) des zweiten Schaltelementes (B), ständig mit der Drehzahl des Ausgangselementes des Vorschaltradsatzes (VS) rotiert.

24. Mehrstufen-Automatgetriebe nach einem der Ansprüche 1 bis 23, **dadurch gekennzeichnet, dass** das sechste Schaltelement (F), insbesondere das Lamellenpaket (600) und die Servoeinrichtung (610) des sechsten Schaltelementes (F) zumindest weitgehend innerhalb eines Kupplungsraumes des zweiten Schaltelementes (B) angeordnet sind, der durch einen Außenlamellenträger des zweiten Schaltelementes (B) gebildet wird.

25. Mehrstufen-Automatgetriebe nach einem der Ansprüche 1 bis 23, **dadurch gekennzeichnet, dass** das zweite Schaltelement (B), insbesondere das Lamellenpaket (200) und die Servoeinrichtung (210) des zweiten Schaltelementes (B) zumindest weitgehend innerhalb eines Kupplungsraumes des zweiten Schaltelementes (B) angeordnet sind, der durch einen Außenlamellenträger des sechsten Schaltelementes (F) gebildet wird.

26. Mehrstufen-Automatgetriebe nach einem der Ansprüche 1 bis 25, **dadurch gekennzeichnet, dass** die Servoeinrichtungen (210, 610) des zweiten und sechsten Schaltelementes (B, F) zumindest überwiegend auf der dem Vorschaltradsatzes (VS) abgewandten Seite des ihr jeweils zugeordneten Lamellenpaketes (200, 600) des zweiten bzw. sechsten Schaltelementes (B, F) angeordnet sind.

27. Mehrstufen-Automatgetriebe nach einem der Ansprüche 1 bis 25, **dadurch gekennzeichnet, dass** die Servoeinrichtungen (210, 610) des zweiten und sechsten Schaltelementes (B, F) zumindest überwiegend auf der dem Vorschaltradsatzes (VS) zugewandten Seite des ihr jeweils zugeordneten Lamellenpakete (200, 600) des zweiten bzw. sechsten Schaltelementes (B, F) angeordnet sind.

28. Mehrstufen-Automatgetriebe nach einem der Ansprüche 1 bis 25, **dadurch gekennzeichnet,**
**dass** die Servoeinrichtung (210) des zweiten Schaltelementes (B) zumindest überwiegend auf der dem Vorschaltradsatzes (VS) abgewandten Seite des Lamellenpaketes (200) des zweiten Schaltelementes (B) angeordnet ist,
und **dass** die Servoeinrichtung (610) des sechsten Schaltelementes (F) zumindest überwiegend auf der dem Vorschaltradsatzes (VS) zugewandten Seite des Lamellenpaketes (600) des sechsten Schaltelementes (F) angeordnet ist.

29. Mehrstufen-Automatgetriebe nach einem der Ansprüche 1 bis 28, **dadurch gekennzeichnet, dass** das Eingangselement (620) des sechsten Schaltelementes (F) auf einer verdrehfesten Nabe (GN) der Gehäusewand (GW) des Getriebegehäuses (GG) gelagert ist.

30. Mehrstufen-Automatgetriebe nach einem der Ansprüche 1 bis 29, **dadurch gekennzeichnet, dass** das Ausgangselement (630) des sechsten Schaltelementes (F) und/oder das Ausgangselement (230) des zweiten Schaltelementes (B) auf einer verdrehfesten Nabe (GN) der Gehäusewand (GW) des Getriebegehäuses (GG) gelagert ist.

31. Mehrstufen-Automatgetriebe nach einem der Ansprüche 1 bis 30, **dadurch gekennzeichnet, dass** das Eingangselement (220) des zweiten Schaltelementes (B) an dem Eingangselement (620) des sechsten Schaltelementes (F) gelagert ist.

32. Mehrstufen-Automatgetriebe nach einem der Ansprüche 1 bis 30, **dadurch gekennzeichnet, dass** das Eingangselement (220) des zweiten Schaltelementes (B) an dem Ausgangselement (630) des sechsten Schaltelementes (F) oder an dem Ausgangselement (230) des zweiten Schaltelementes (B) gelagert ist.

33. Mehrstufen-Automatgetriebe nach einem der Ansprüche 1 bis 32, **dadurch gekennzeichnet, dass** ein mit dem Ausgangselement des Vorschaltradsatzes (VS) verbundenes Eingangselement (130) des ersten Schaltelementes (A) an dem Eingangselement (620) des sechsten Schaltelementes (F) gelagert ist.

34. Mehrstufen-Automatgetriebe nach einem der Ansprüche 1 bis 33, **dadurch gekennzeichnet, dass** die Nabe (GN) der Gehäusewand (GW) Kanäle aufweist zur Zufuhr von Druck- und/oder Schmiermittel zur Servoeinrichtung (610, 210, 110) des sechsten und/oder zweiten und/oder ersten Schaltelementes (F, B, A).

35. Mehrstufen-Automatgetriebe nach einem der Ansprüche 1 bis 34, **dadurch gekennzeichnet, dass** die Lamellenpakete (100, 200) des ersten und zweiten Schaltelementes (A, B) auf gleichem oder zumindest ähnlichem Durchmesser angeordnet sind.

36. Mehrstufen-Automatgetriebe nach einem der Ansprüche 1 bis 35, **dadurch gekennzeichnet, dass** das erste und zweite Schaltelement (A, B) einen gemeinsamen Lamellenträger (ZYLAB) aufweisen, der mit dem Ausgangselement des Vorschaltradsatzes (VS) verbunden ist.

37. Mehrstufen-Automatgetriebe nach einem der Ansprüche 1 bis 36, **dadurch gekennzeichnet, dass** der Vorschaltradsatz (VS) ein Sonnenrad (SO_VS), ein Hohlrad (HO_VS) sowie einen gekoppelten Steg (ST_VS), an dem innere und äußere Planetenräder (P1_VS, P2_VS) verdrehbar gelagert sind, aufweist, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse (GG) festgesetzt ist,
und dass der Hauptradsatz (HS) als Zweisteg-Vierwellen-Getriebe in Bauart eines Ravigneaux-Radsatzes ausgeführt ist mit zwei Sonnenrädern (S1_HS, S2_HS), einem Hohlrad (HO_HS), sowie einem gekoppelten Steg (ST_HS), an dem lange Planetenräder (P1_HS) und kurze Planetenräder (P2_HS) verdrehbar gelagert sind, wobei
• die langen Planetenräder (P1_HS) des Hauptradsatzes (HS) mit dem Hohlrad (HO_HS) und dem ersten Sonnenrad (S1_HS) des Hauptradsatzes (HS) kämmen,
• die kurzen Planetenräder (P2_HS) des Hauptradsatzes (HS) mit den langen Planetenräder (P1_HS) und dem zweiten Sonnenrad (S2_HS) des Hauptradsatzes (HS) kämmen,
• das erste Sonnenrad (S1_HS) des Hauptradsatzes (HS) das erste Eingangselement des Hauptradsatzes (HS) bildet und mit den Ausgangselementen (230, 330, 630) des zweiten, dritten und sechsten Schaltelementes (B, C, F) verbunden ist,
• das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
• der Steg (ST_HS) des Hauptradsatzes (HS) das dritte Eingangselement des Hauptradsatzes (HS) bildet und mit den Ausgangselementen (430, 530) des vierten und fünften Schaltelementes (D, E) verbunden ist, und
• das Hohlrad (HO_HS) des Hauptradsatzes (HS) das Ausgangselement des Hauptradsatzes (HS) bildet und mit der Abtriebswelle (AB) verbunden ist.

38. Mehrstufen-Automatgetriebe nach einem der Ansprüche 1 bis 36,
**dadurch gekennzeichnet,**
**dass** der Vorschaltradsatz (VS) ein Sonnenrad (SO_VS), ein Hohlrad (HO_VS) sowie einen gekoppelten Steg (ST_VS), an dem innere und äußere Planetenräder (P1_VS, P2_VS) verdrehbar gelagert sind, aufweist, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse (GG) festgesetzt ist,
und **dass** der Hauptradsatz (HS) als Zweisteg-Vierwellen-Getriebe mit zwei gekoppelten Einzel-Planetenradsätzen ausgeführt ist, umfassend zwei Sonnenräder (S1_HS, S2_HS), zwei Hohlräder (H1_HS, H2_HS), einen ersten Steg (ST1_HS), an dem erste Planetenräder (PL_HS) verdrehbar gelagert sind, sowie einen gekoppelten zweiten Steg (ST2_HS), an dem innere und äußere Planetenräder (PLi_HS, PLa_HS) verdrehbar gelagert sind, wobei
• die ersten Planetenräder (PL_HS) des Hauptradsatzes (HS) mit dem ersten Hohlrad (H1_HS) und dem ersten Sonnenrad (S1_HS) des Hauptradsatzes (HS) kämmen,
• die inneren Planetenräder (PLi_HS) des Hauptradsatzes (HS) mit den äußeren Planetenräder (PLa_HS) und dem zweiten Sonnenrad (S2_HS) des Hauptradsatzes (HS) kämmen,
• die äußeren Planetenräder (PLa_HS) des Hauptradsatzes (HS) mit den inneren Planetenräder (PLi_HS) und dem zweiten Hohlrad (H2_HS) des Hauptradsatzes (HS) kämmen,
• das erste Sonnenrad (S1_HS) und der gekoppelte zweite Steg (ST2_HS) des Hauptradsatzes (HS) miteinander verbunden sind und das erste Eingangselement des Hauptradsatzes (HS) bilden und mit den Ausgangselementen (230, 330, 630) des zweiten, dritten und sechsten Schaltelementes (B, C, F) verbunden sind,
• das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
• der erste Steg (ST1_HS) und das zweite Hohlrad (H2_HS) des Hauptradsatzes (HS) miteinander verbunden sind und das dritte Eingangselement des Hauptradsatzes (HS) bilden und mit den Ausgangselementen (430, 530) des vierten und fünften Schaltelementes (D, E) verbunden sind, und
• das erste Hohlrad (H1_HS) des Hauptradsatzes (HS) das Ausgangselement des Hauptradsatzes (HS) bildet und mit der Abtriebswelle (AB) verbunden ist.

39. Mehrstufen-Automatgetriebe nach einem der Ansprüche 1 bis 36,
**dadurch gekennzeichnet,**
**dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse festgesetzt ist,
und **dass** der Hauptradsatz (HS) als Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
• das dritte Sonnenrad (S3_HS) des Hauptradsatzes (HS) axial zwischen dem zweiten und ersten Sonnenrad (S2_HS, S1_HS) des Hauptradsatzes (HS) angeordnet ist,
• die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
• die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
• das zweite und dritte Sonnenrad (S2_HS, S3_HS) des Hauptradsatzes (HS) fest miteinander verbunden sind,
• das erste Sonnenrad (S1_HS) des Hauptradsatzes (HS) dessen erstes Eingangselement des Hauptradsatzes (HS) bildet und mit den Ausgangselementen (230, 330, 630) des zweiten, dritten und sechsten Schaltelementes (B, C, F) verbunden ist,
• das gekoppelte Hohlrad (H13_HS) des Hauptradsatzes (HS) das zweite Eingangselement des Hauptradsatzes (HS) bildet und mit dem Ausgangselement (130) des ersten Schaltelementes (A) verbunden ist,
• der zweite Steg (ST2_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
• das zweite Hohlrad (H2_HS) und der gekoppelte Steg (ST13_HS) des Hauptradsatzes (HS) fest miteinander verbunden sind und das Ausgangselement des Hauptradsatzes (HS) bilden und mit der Abtriebswelle (AB) verbunden sind.

40. Mehrstufen-Automatgetriebe nach Anspruch 39, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) nach innen hindurchgreift, wobei eine Nabe, die mit diesem Stegblech verdrehfest und mit der Abtriebswelle (AB) wirkverbunden ist, das erste Sonnenrad (S1_HS) des Hauptradsatzes (HS) in axialer Richtung zentrisch durchdringt.

41. Mehrstufen-Automatgetriebe nach Anspruch 39 oder 40, **dadurch gekennzeichnet, dass** die langen Planetenräder (P13_HS) des Hauptradsatzes (HS) als Stufenplanetenräder ausgebildet sind.

42. Mehrstufen-Automatgetriebe nach einem der Ansprüche 1 bis 41, **dadurch gekennzeichnet, dass** durch selektives Schließen der Schaltelemente (A bis F) zumindest acht Vorwärtsgänge derart schaltbar sind, dass die Drehzahl der Antriebswelle (AN) derart auf die Abtriebswelle (AB) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird, wobei
• im ersten Vorwärtsgang das erste und vierte Schaltelement (A, D),
• im zweiten Vorwärtsgang das erste und dritte Schaltelement (A, C),
• im dritten Vorwärtsgang das erste und zweite Schaltelement (A, B),
• im vierten Vorwärtsgang das erste und sechste Schaltelement (A, F),
• im fünften Vorwärtsgang das erste und fünfte Schaltelement (A, E),
• im sechsten Vorwärtsgang das fünfte und sechste Schaltelement (E, F),
• im siebten Vorwärtsgang das zweite und fünfte Schaltelement (B, E) und
• im achten Vorwärtsgang das dritte und fünfte Schaltelement (C, E) geschlossen sind,
und wobei in einem Rückwärtsgang das vierte Schaltelement (D) und zusätzlich entweder das zweite Schaltelement (B) oder das sechste Schaltelement (F) geschlossen sind.

## Claims (Claims for the following Contracting State(s): DE, FR, GB)

1. Multistage automatic transmission, comprising a drive shaft (AN), an output shaft (AB), a front-mounted gearset (VS), a main gearset (HS) and six shift elements (A to F), having the following features:
• the front-mounted gearset (VS) is realized as a double planetary gearset,
• an output element of the front-mounted gearset (VS) rotates at a rotational speed which is less than the input rotational speed of the drive shaft (AN),
• an input element of the front-mounted gearset (VS) is permanently connected to the drive shaft (AN),
• an element of the front-mounted gearset (VS) is connected to a transmission housing (GG) of the multistage automatic transmission,
• the main gearset (HS) is realized as a coupled planetary gearset which has a plurality of input elements that are not coupled to each other and has an output element,
• the output element of the main gearset (HS) is permanently connected to the output shaft (AB),
• an input element (120) of the first shift element (A) is connected to the output element of the front-mounted gearset (VS),
• an output element (130) of the first shift element (A) is connected to the second input element of the main gearset (HS),
• an input element (220) of the second shift element (B) is connected to the output element of the front-mounted gearset (VS),
• an output element (230) of the second shift element (B) is connected to the first input element of the main gearset (HS),
• an input element of the third shift element (C) is connected to the transmission housing (GG),
• an output element (330) of the third shift element (C) is connected to the first input element of the main gearset (HS) or to an input element of the main gearset (HS) that is adjacent to this first input element in a rotational speed plan,
• an input element of the fourth shift element (D) is connected to the transmission housing (GG),
• an output element (430) of the fourth shift element (D) is connected to a third input element of the main gearset (HS),
• an input element (520) of the fifth shift element (E) is connected to the drive shaft (AN),
• an output element (530) of the fifth shift element (E) is connected to the third input element of the main gearset (HS),
• an input element (620) of the sixth shift element (F) is connected to the drive shaft (AN),
• an output element (630) of the sixth shift element (F) is connected to the first input element of the main gearset (HS) or to an input element of the main gearset (HS) that is adjacent to this first input element in a rotational speed plan,
**characterized in that**
• the front-mounted gearset (VS) has a sun gear (SO_VS), a ring gear (HO_VS), and a coupled planet carrier (ST_VS) on which inner and outer planet gears (P1_VS, P2_VS) are rotatably mounted,
• the inner planet gears (P1_VS) of the front-mounted gearset (VS) mesh with the sun gear (SO_VS) and with the outer planet gears (P2_VS) of the front-mounted gearset (VS),
• the outer planet gears (P2_VS) of the front-mounted gearset (VS) mesh with the inner planet gears (P1_VS) and with the ring gear (HO_VS) of the front-mounted gearset (HS),
• the planet carrier (ST_VS) of the front-mounted gearset (VS) constitutes the input element of the front-mounted gearset (VS) that is permanently connected to the drive shaft (AN),
• the ring gear (HO_VS) of the front-mounted gearset (VS) constitutes the output element of the front-mounted gearset (VS) that can be connected to input elements of the main gearset (HS),
• the sun gear (SO_VS) of the front-mounted gearset (VS) is fixed to the transmission housing (GG),
• the main gearset (HS) is realized as a two-planet-carrier, four-shaft transmission having two coupled single planetary gearsets, comprising two sun gears (S1_HS, S2_HS), two ring gears (H1_HS, H2_HS), a first planet carrier (ST1_HS) on which first planetary gears (PL_HS) are rotatably mounted, as well as comprising a coupled second planet carrier (ST2_HS) on which inner and outer planet gears (PLi_HS, PLa_HS) are rotatably mounted,
• the first planet gears (PL_HS) of the main gearset (HS) mesh with the first ring gear (H1_HS) and with the first sun gear (S1_HS) of the main gearset (HS),
• the inner planet gears (PLi_HS) of the main gearset (HS) mesh with the outer planet gears (PLa_HS) and with the second sun gear (S2_HS) of the main gearset (HS),
• the outer planet gears (PLa_HS) of the main gearset (HS) mesh with the inner planet gears (PLi_HS) and with the second ring gear (H2_HS) of the main gearset (HS),
• the first sun gear (S1_HS) and the coupled planet carrier (ST2_HS) of the main gearset (HS) are connected to each other and constitute the first input element of the main gearset (HS), and are connected to the output elements (230, 330, 630) of the second, the third and the sixth shift element (B, C, F),
• the second sun gear (S2_HS) of the main gearset (HS) constitutes the second input element of the main gearset (HS) and is connected to the output element (130) of the first shift element (A),
• the first planet carrier (ST1_HS) and the second ring gear (H2_HS) of the main gearset (HS) are connected to each other and constitute the third input element of the main gearset (HS), and are connected to the output elements (430, 530) of the fourth and the fifth shift element (D, E),
• the first ring gear (H1_HS) of the main gearset (HS) constitutes the output element of the main gearset (HS) and is connected to the output shaft (AB),
the second and the sixth shift element (B, F) constituting an assembly which is disposed, as viewed three-dimensionally, at least predominantly on that side of the front-mounted gearset (VS) which faces away from the main gearset (HS), comprising at least
• a plate carrier of the second shift element (B), for accommodating a plate set (200) of the second shift element (B),
• a servo device (210) of the second shift element (B), for actuating the plate set (200) of the second shift element (B),
• a plate set (600) of the sixth shift element (F),
• a plate carrier of the sixth shift element (F), for accommodating this plate set (600) of the sixth shift element (F), and
• a servo device (610) of the sixth shift element (F), for actuating this plate set (600) of the sixth shift element (F).

2. Multistage automatic transmission, comprising a drive shaft (AN), an output shaft (AB), a front-mounted gearset (VS), a main gearset (HS) and at least six shift elements (A to F), having the following features:
• the front-mounted gearset (VS) is realized as a double planetary gearset,
• an output element of the front-mounted gearset (VS) rotates at a rotational speed which is less than the input rotational speed of the drive shaft (AN),
• an input element of the front-mounted gearset (VS) is permanently connected to the drive shaft (AN),
• an element of the front-mounted gearset (VS) is connected to a transmission housing (GG) of the multistage automatic transmission,
• the main gearset (HS) is realized as a coupled planetary gearset which has a plurality of input elements that are not coupled to each other and has an output element,
• the output element of the main gearset (HS) is permanently connected to the output shaft (AB),
• an input element (120) of the first shift element (A) is connected to the output element of the front-mounted gearset (VS),
• an output element (130) of the first shift element (A) is connected to the second input element of the main gearset (HS),
• an input element (220) of the second shift element (B) is connected to the output element of the front-mounted gearset (VS),
• an output element (230) of the second shift element (B) is connected to the first input element of the main gearset (S),
• an input element of the third shift element (C) is connected to the transmission housing (GG),
• an output element (330) of the third shift element (C) is connected to the first input element of the main gearset (HS) or to an input element of the main gearset (HS) that is adjacent to this first input element in a rotational speed plan,
• an input element of the fourth shift element (D) is connected to the transmission housing (GG),
• an output element (430) of the fourth shift element (D) is connected to a third input element of the main gearset (HS),
• an input element (520) of the fifth shift element (E) is connected to the drive shaft (AN),
• an output element (530) of the fifth shift element (E) is connected to the third input element of the main gearset (HS),
• an input element (620) of the sixth shift element (F) is connected to the drive shaft (AN),
• an output element (630) of the sixth shift element (F) is connected to the first input element of the main gearset (HS) or to an input element of the main gearset (HS) that is adjacent to this first input element in a rotational speed plan,
**characterized in that**
• the front-mounted gearset (VS) has a sun gear (SO_VS), a ring gear (HO_VS), and a coupled planet carrier (ST_VS) on which inner and outer planet gears (P1_VS, P2_VS) are rotatably mounted,
• the inner planet gears (P1_VS) of the front-mounted gearset (VS) mesh with the sun gear (SO_VS) and with the outer planet gears (P2_VS) of the front-mounted gearset (VS),
• the outer planet gears (P2_VS) of the front-mounted gearset (VS) mesh with the inner planet gears (P1_VS) and with the ring gear (HO_VS) of the front-mounted gearset (HS),
• the planet carrier (ST_VS) of the front-mounted gearset (VS) constitutes the input element of the front-mounted gearset (VS) that is permanently connected to the drive shaft (AN),
• the ring gear (HO_VS) of the front-mounted gearset (VS) constitutes the output element of the front-mounted gearset (VS) that can be connected to input elements of the main gearset (HS), and
• the sun gear (SO_VS) of the front-mounted gearset (VS) is fixed to the transmission housing (GG),
• the main gearset (HS) is realized as a three-planet-carrier, five-shaft transmission having three sun gears (S1_HS, S2_HS, S3_HS), a coupled ring gear (H13_HS), a second ring gear (H2_HS), a coupled planet carrier (ST13_HS) with long planet gears (P13_HS) rotatably mounted thereon, as well as having a second planet carrier (ST2_HS) with short planet carriers (P2_HS) rotatably mounted thereon,
• the third sun gear (S3_HS) of the main gearset (HS) is disposed axially between the second and the first sun gear (S2_HS, S1_HS) of the main gearset (HS),
• the long planet gears (P13_HS) of the main gearset (HS) mesh with the coupled ring gear (H13_HS) and with the first and the third sun gear (S1_HS, S3_HS) of the main gearset (HS),
• the short planet gears (P2_HS) of the main gearset (HS) mesh with the second ring gear (H2_HS) and with the second sun gear (S2_HS) of the main gearset (HS),
• the second and the third sun gear (S2_HS, S3_HS) of the main gearset (HS) are fixedly connected to each other,
• the first sun gear (S1_HS) of the main gearset (HS) constitutes the first input element of the main gearset (HS) and is connected to the output elements (230, 330, 630) of the second, the third and the sixth shift element (B, C, F),
• the coupled ring gear (H13_HS) of the main gearset (HS) constitute the second input element of the main gearset and is connected to the output element (130) of the first shift element (A),
• the second planet carrier (ST2_HS) of the main gearset (HS) constitutes the third input element of the main gearset (HS) and is connected to the output elements (430, 530) of the fourth and the fifth shift element (D, E),
• the second ring gear (H2_HS) and the coupled planet carrier (ST13_HS) of the main gearset (HS) are fixedly connected to each other and constitute the output element of the main gearset (HS), and are connected to the output shaft (AB),
the second and the sixth shift element (B, F) constituting an assembly which is disposed, as viewed three-dimensionally, at least predominantly on that side of the front-mounted gearset (VS) which faces away from the main gearset (HS), comprising at least
• a plate carrier of the second shift element (B), for accommodating a plate set (200) of the second shift element (B),
• a servo device (210) of the second shift element (B), for actuating the plate set (200) of the second shift element (B),
• a plate set (600) of the sixth shift element (F),
• a plate carrier of the sixth shift element (F), for accommodating this plate set (600) of the sixth shift element (F), and
• a servo device (610) of the sixth shift element (F), for actuating this plate set (600) of the sixth shift element (F).

3. Multistage automatic transmission according to Claim 2, **characterized in that** the coupled planet carrier (ST13_HS) of the main gearset (HS) has a planet-carrier plate which extends through inwardly in the radial direction axially between the first and the third sun gear (S1_HS, S3_HS) of the main gearset (HS), a hub that is operatively connected to this planet-carrier plate in a rotationally rigid manner and operatively connected to the output shaft (AB) extending centrally through the first sun gear (S1_HS) of the main gearset (HS) in the axial direction.

4. Multistage automatic transmission according to either of Claims 2 or 3, **characterized in that** the long planet gears (P13_HS) of the main gearset (HS) are realized as stepped planet gears.

5. Multistage automatic transmission according to any one of Claims 1 to 4, **characterized in that** the output element (630) of the sixth shift element (F) is connected to the first input element of the main gearset (HS) via the output element (230) of the second shift element (B).

6. Multistage automatic transmission according to any one of Claims 1 to 4, **characterized in that** the sixth shift element (F) and the second shift element (B) are connected to the first input element of the main gearset (HS) via a common output element (ZYLBF).

7. Multistage automatic transmission according to any one of Claims 1 to 6, **characterized in that** the second and the sixth shift element (B, F) constitute an assembly which is disposed in a region axially between the front-mounted gearset (VS) and a radially extending housing wall (GW) of the transmission housing (GG) disposed on that side of the front-mounted gearset (VS) which faces away from the main gearset (HS).

8. Multistage automatic transmission according to any one of Claims 1 to 7, **characterized in that** the second and the sixth shift element (B, F) constitute an assembly which, as viewed three-dimensionally, is axially adjacent to the front-mounted gearset (VS), the first shift element (A) being disposed, as viewed three-dimensionally, at least partially in a region axially between the front-mounted gearset (VS) and the main gearset (HS).

9. Multistage automatic transmission according to any one of Claims 1 to 7, **characterized in that** the second and the sixth shift element (B, F) constitute an assembly which, as viewed three-dimensionally, is axially adjacent to the first shift element (A), in particular to a servo device (110) or to a plate set (100) of the first shift element (A).

10. Multistage automatic transmission according to any one of Claims 1 to 9, **characterized in that** the fifth shift element (E) is disposed, as viewed three-dimensionally, axially between the front-mounted gearset (VS) and the main gearset (HS), axially adjacent to the front-mounted gearset (VS).

11. Multistage automatic transmission according to Claim 10, **characterized in that** the output element (230) of the second shift element (B) that is connected to the output element (630) of the sixth shift element (F) overlaps radially outwards in their entirety the front-mounted gearset (VS) and the first shift element (A) and the fifth shift element (E) in the axial direction.

12. Multistage automatic transmission according to Claim 10, **characterized in that** the output element (230) of the second shift element (B) that is connected to the first input element of the main gearset (HS) and the output element (630) of the sixth shift element (F) that is connected to the first input element of the main gearset (HS) overlap radially outwards in their entirety the front-mounted gearset (VS) and the first shift element (A) and the fifth shift element (E) in the axial direction.

13. Multistage automatic transmission according to any one of Claims 1 to 9, **characterized in that** the fifth shift element (E) is disposed, as viewed three-dimensionally, axially on that side of the main gearset (HS) which faces away from the front-mounted gearset (VS), axially adjacent to the main gearset (HS).

14. Multistage automatic transmission according to Claim 13, **characterized in that** the output element (230) of the second shift element (B) that is connected to the output element (630) of the sixth shift element (F) overlaps radially outwards in their entirety the front-mounted gearset (VS) and the first shift element (A) in the axial direction.

15. Multistage automatic transmission according to Claim 13, **characterized in that** the output element (230) of the second shift element (B) that is connected to the first input element of the main gearset (HS) and the output element (630) of the sixth shift element (F) that is connected to the first input element of the main gearset (HS) overlap radially outwards in their entirety the front-mounted gearset (VS) and the first shift element (A) in the axial direction.

16. Multistage automatic transmission according to any one of Claims 1 to 15, **characterized in that** the plate set (600) of the second shift element (B) is disposed, as viewed in the axial direction, at least partially radially over the plate set (600) of the sixth shift element (F).

17. Multistage automatic transmission according to any one of Claims 1 to 15, **characterized in that** the plate set (200) of the sixth shift element (F) is disposed, as viewed in the axial direction, at least partially radially above the plate set (200) of the second shift element (B).

18. Multistage automatic transmission according to any one of Claims 1 to 15, **characterized in that** the plate set (200) of the second shift element (B) is disposed axially next to the plate set (600) of the sixth shift element (F).

19. Multistage automatic transmission according to any one of Claims 1 to 15, **characterized in that** the plate set (200) of the second shift element (B) is disposed, as viewed in the axial direction, at least partially radially over the front-mounted gearset (VS).

20. Multistage automatic transmission according to any one of Claims 1 to 19, **characterized in that** the plate set (200) of the second shift element (B) is disposed closer to the main gearset (HS) than is the plate set (600) of the sixth shift element (F).

21. Multistage automatic transmission according to any one of Claims 1 to 20, **characterized in that** the second and the sixth shift element (B, F) have a common plate carrier (ZYLBF) for accommodating plates of the second and the sixth shift element (BF), which plate carrier is connected to the first input element of the main gearset (HS).

22. Multistage automatic transmission according to any one of Claims 1 to 21, **characterized in that** the servo device (610) of the sixth shift element (F), in particular a pressure chamber (611) and a pressure equalization chamber (612) of the servo device (610) of the sixth shift element (F), always rotates at the rotational speed of the first input element of the main gearset (HS).

23. Multistage automatic transmission according to any one of Claim 1 to 21, **characterized in that** the servo device (610) of the sixth shift element (F), in particular a pressure chamber (611) and a pressure equalization chamber (612) of the servo device (610) of the sixth shift element (F), always rotates at the rotational speed of the drive shaft (AN).

24. Multistage automatic transmission according to any one of Claims 1 to 23, **characterized in that** the servo device (210) of the second shift element (B), in particular a pressure chamber (211) and a pressure equalization chamber (212) of the servo device (210) of the second shift element (B), always rotates at the rotational speed of the first element of the main gearset (HS).

25. Multistage automatic transmission according to any one of Claims 1 to 23, **characterized in that** the servo device (210) of the second shift element (B), in particular a pressure chamber (211) and a pressure equalization chamber (212) of the servo device (210) of the second shift element (B), always rotates at the rotational speed of the output element of the front-mounted gearset (VS).

26. Multistage automatic transmission according to any one of Claims 1 to 25, **characterized in that** the sixth shift element (F), in particular the plate set (600) and the servo device (610) of the sixth shift element (F), is disposed, at least to a large extent, within a clutch chamber of the second shift element (B), which clutch chamber is constituted by an outer plate carrier of the second shift element (B).

27. Multistage automatic transmission according to any one of Claims 1 to 25, **characterized in that** the second shift element (B), in particular the plate set (200) and the servo device (210) of the second shift element (B), is disposed, at least to a large extent, within a clutch chamber of the second shift element (B), which clutch chamber is constituted by an outer plate carrier of the sixth shift element (F).

28. Multistage automatic transmission according to any one of Claims 1 to 27, **characterized in that** the servo devices (210, 610) of the second and the sixth shift element (B, F) are disposed, at least predominantly, on that side of the plate set (200, 600), respectively assigned to the servo device, of the second and the sixth shift element (B, F) which faces away from the front-mounted gearset (VS).

29. Multistage automatic transmission according to any one of Claims 1 to 27, **characterized in that** the servo devices (210, 610) of the second and the sixth shift element (B, F) are disposed, at least predominantly, on that side of the plate set (200, 600), respectively assigned to the servo device, of the second and the sixth shift element (B, F) which faces towards the front-mounted gearset (VS).

30. Multistage automatic transmission according to any one of Claims 1 to 27, **characterized in that** the servo device (210) of the second shift element (B) is disposed, at least predominantly, on that side of the plate set (200) of the second shift element (B) which faces away from the front-mounted gearset (VS), and the servo device (610) of the sixth shift element (F) is disposed, at least predominantly, on that side of the plate set (600) of the sixth shift element (F) which faces towards the front-mounted gearset (VS).

31. Multistage automatic transmission according to any one of Claims 1 to 30, **characterized in that** the input element (620) of the sixth shift element (F) is mounted on a rotationally rigid hub (GN) of the housing wall (GW) of the transmission housing (GG).

32. Multistage automatic transmission according to any one of Claims 1 to 31, **characterized in that** the output element (630) of the sixth shift element (F) and/or the output element (230) of the second shift element (B) are/is mounted on a rotationally rigid hub (GN) of the housing wall (GW) of the transmission housing (GG).

33. Multistage automatic transmission according to any one of Claims 1 to 32, **characterized in that** the input element (220) of the second shift element (B) is mounted on the input element (620) of the sixth shift element (F).

34. Multistage automatic transmission according to any one of Claims 1 to 32, **characterized in that** the input element (220) of the second shift element (B) is mounted on the output element (630) of the sixth shift element (F) or on the output element (230) of the second shift element (B).

35. Multistage automatic transmission according to any one of Claims 1 to 34, **characterized in that** an input element (130) of the first shift element (A) that is connected to the output element of the front-mounted gearset (VS) is mounted on the input element (620) of the sixth shift element (F).

36. Multistage automatic transmission according to any one of Claims 1 to 35, **characterized in that** the hub (GN) of the housing wall (GW) has channels for supplying pressure medium and/or lubricant to the servo device (610, 210, 110) of the sixth and/or the second and/or the first shift element (F, B, A).

37. Multistage automatic transmission according to any one of Claims 1 to 36, **characterized in that** the plate sets (100, 200) of the first and the second shift element (A, B) are disposed on the same or at least a similar diameter.

38. Multistage automatic transmission according to any one of Claims 1 to 37, **characterized in that** the first and the second shift element (A, B) have a common plate carrier (ZYLAB), which is connected to the output element of the front-mounted gearset (VS).

39. Multistage automatic transmission according to any one of Claims 1 to 38, **characterized in that**, through selective closing of the shift elements (A to F), at least eight forward gears can be shifted in such a way that the rotational speed of the drive shaft (AN) can be transmitted to the output shaft in such a way that, for the purpose of shifting from one gear to the sequentially next higher or sequentially next lower gear, of the shift element just then actuated respectively only one shift element is opened, and a further shift element is closed, wherein
• in the first forward gear the first and the fourth shift element (A, D) are closed,
• in the second forward gear the first and the third shift element (A, C) are closed,
• in the third forward gear the first and the second shift element (A, B) are closed,
• in the fourth forward gear the first and the sixth shift element (A, F) are closed,
• in the fifth forward gear the first and the fifth shift element (A, E) are closed,
• in the sixth forward gear the fifth and the sixth shift element (E, F) are closed,
• in the seventh forward gear the second and the fifth shift element (B, E) are closed, and
• in the eighth forward gear the third and the fifth shift element (C, E) are closed,
and wherein in a reverse gear the fourth shift element (D) and, in addition, either the second shift element (B) or the sixth shift element (F) are closed.

## Claims (Claims for the following Contracting State(s): AT, BE, BG, CH, CY, CZ, DK, EE, ES, FI, HU, IE, IS, IT, LI, LT, LU, LV, MC, NL, PL, PT, RO, SE, SI, SK, TR)

1. Multistage automatic transmission, comprising a drive shaft (AN), an output shaft (AB), six shift elements (A to F), a front-mounted gearset (VS), realized as a planetary gearset, and a main gearset (HS), realized as a coupled planetary gearset which has a plurality of input element that are not coupled to each other and has an output element, wherein
• an input element of the front-mounted gearset (VS) is permanently connected to the drive shaft (AN),
• an output element of the front-mounted gearset (VS) rotates at a rotational speed which is less than the input rotational speed of the drive shaft (AN), and is permanently connected to an input element (120) of the first shift element (A) and permanently connected to an input element (220) of the second shift element (B),
• a first input element of the main gearset (HS) is permanently connected to an output element (230) of the second shift element (B) and permanently connected to an output element (3300 of the third shift element (C) and permanently connected to an output element (630) of the sixth shift element (F),
• a second input element of the main gearset (HS0 is permanently connected to an output element (130) of the first shift element (A),
• a third input element of the main gearset (HS) is permanently connected to an output element (430) of the fourth shift element (D) and permanently connected to an output element (530) of the fifth shift element (E),
• the output element of the main gearset (HS) is permanently connected to the output shaft (AB),
• an input element of the third shift element (C) and an input element of the fourth shift element (D) are connected to a transmission housing (GG),
• an input element (520) of the fifth shift element (E) and an input element (620) of the sixth shift element (F) are connected to the drive shaft (AN),
**characterized in that**
the second and the sixth shift element (B, F) constitute an assembly which is disposed, as viewed three-dimensionally, at least predominantly on that side of the front-mounted gearset (VS) which faces away from the main gearset (HS), comprising at least
• a plate carrier of the second shift element (B), for accommodating a plate set (200) of the second shift element (B),
• a servo device (210) of the second shift element (B), for actuating the plate set (200) of the second shift element (B),
• a plate set (600) of the sixth shift element (F),
• a plate carrier of the sixth shift element (F), for accommodating this plate set (600) of the sixth shift element (F), and
• a servo device (610) of the sixth shift element (F), for actuating this plate set (600) of the sixth shift element (F).

2. Multistage automatic transmission, comprising a drive shaft (AN), an output shaft (AB), a front-mounted gearset (VS), a main gearset (HS) and at least six shift elements (A to F), having the following features:
• the front-mounted gearset (VS) is realized as a double planetary gearset,
• an output element of the front-mounted gearset (VS) rotates at a rotational speed which is less than the input rotational speed of the drive shaft (AN),
• an input element of the front-mounted gearset (VS) is permanently connected to the drive shaft (AN),
• an element of the front-mounted gearset (VS) is connected to a transmission housing (GG) of the multistage automatic transmission,
• the main gearset (HS) is realized as a coupled planetary gearset which has a plurality of input elements that are not coupled to each other and has an output element,
• the output element of the main gearset (HS) is permanently connected to the output shaft (AB),
• an input element (120) of the first shift element (A) is connected to the output element of the front-mounted gearset (VS),
• an output element (130) of the first shift element (A) is connected to the second input element of the main gearset (HS),
• an input element (220) of the second shift element (B) is connected to the output element of the front-mounted gearset (VS),
• an output element (230) of the second shift element (B) is connected to the first input element of the main gearset (HS),
• an input element of the third shift element (C) is connected to the transmission housing (GG),
• an output element (330) of the third shift element (C) is connected to the first input element of the main gearset (HS) or to an input element of the main gearset (HS) that is adjacent to this first input element in a rotational speed plan,
• an input element of the fourth shift element (D) is connected to the transmission housing (GG),
• an output element (430) of the fourth shift element (D) is connected to a third input element of the main gearset (HS),
• an input element (520) of the fifth shift element (E) is connected to the drive shaft (AN),
• an output element (530) of the fifth shift element (E) is connected to the third input element of the main gearset (HS),
• an input element (620) of the sixth shift element (F) is connected to the drive shaft (AN),
• an output element (630) of the sixth shift element (F) is connected to the first input element of the main gearset (HS) or to an input element of the main gearset (HS) that is adjacent to this first input element in a rotational speed plan,
**characterized in that**
the second and the sixth shift element (B, F) constitute an assembly which is disposed, as viewed three-dimensionally, at least predominantly on that side of the front-mounted gearset (VS) which faces away from the main gearset (HS), comprising at least
• a plate carrier of the second shift element (B), for accommodating a plate set (200) of the second shift element (B),
• a servo device (210) of the second shift element (B), for actuating the plate set (200) of the second shift element (B),
• a plate set (600) of the sixth shift element (F),
• a plate carrier of the sixth shift element (F), for accommodating this plate set (600) of the sixth shift element (F), and
• a servo device (610) of the sixth shift element (F), for actuating this plate set (600) of the sixth shift element (F).

3. Multistage automatic transmission according to either of Claims 1 or 2, **characterized in that** the second and the sixth shift element (B, F) constitute an assembly which is disposed in a region axially between the front-mounted gearset (VS) and a radially extending housing wall (GW) of the transmission housing (GG) disposed on that side of the front-mounted gearset (VS) which faces away from the main gearset (HS).

4. Multistage automatic transmission according to either of Claims 1 or 2, **characterized in that** the second and the sixth shift element (B, F) constitute an assembly which, as viewed three-dimensionally, is axially adjacent to the front-mounted gearset (VS), the first shift element (A) being disposed, as viewed three-dimensionally, at least partially in a region axially between the front-mounted gearset (VS) and the main gearset (HS).

5. Multistage automatic transmission according to either of Claims 1 or 2, **characterized in that** the second and the sixth shift element (B, F) constitute an assembly which, as viewed three-dimensionally, is axially adjacent to the first shift element (A), in particular to a servo device (110) or to a plate set (100) of the first shift element (A).

6. Multistage automatic transmission according to any one of Claims 1 to 5, **characterized in that** the fifth shift element (E) is disposed, as viewed three-dimensionally, axially between the front-mounted gearset (VS) and the main gearset (HS), axially adjacent to the front-mounted gearset (VS).

7. Multistage automatic transmission according to Claim 6, **characterized in that** the output element (230) of the second shift element (B) that is connected to the output element (630) of the sixth shift element (F) overlaps radially outwards in their entirety the front-mounted gearset (VS) and the first shift element (A) and the fifth shift element (E) in the axial direction.

8. Multistage automatic transmission according to Claim 6, **characterized in that** the output element (230) of the second shift element (B) that is connected to the first input element of the main gearset (HS) and the output element (630) of the sixth shift element (F) that is connected to the first input element of the main gearset (HS) overlap radially outwards in their entirety the front-mounted gearset (VS) and the first shift element (A) and the fifth shift element (E) in the axial direction.

9. Multistage automatic transmission according to any one of Claims 1 to 5, **characterized in that** the fifth shift element (E) is disposed, as viewed three-dimensionally, axially on that side of the main gearset (HS) which faces away from the front-mounted gearset (VS), axially adjacent to the main gearset (HS).

10. Multistage automatic transmission according to Claim 9, **characterized in that** the output element (230) of the second shift element (B) that is connected to the output element (630) of the sixth shift element (F) overlaps radially outwards in their entirety the front-mounted gearset (VS) and the first shift element (A) in the axial direction.

11. Multistage automatic transmission according to Claim 9, **characterized in that** the output element (230) of the second shift element (B) that is connected to the first input element of the main gearset (HS) and the output element (630) of the sixth shift element (F) that is connected to the first input element of the main gearset (HS) overlap radially outwards in their entirety the front-mounted gearset (VS) and the first shift element (A) and the first shift element (A) in the axial direction.

12. Multistage automatic transmission according to any one of Claims 1 to 11, **characterized in that** the plate set (200) of the second shift element (B) is disposed, as viewed in the axial direction, at least partially radially over the plate set (600) of the sixth shift element (F).

13. Multistage automatic transmission according to any one of Claims 1 to 11, **characterized in that** the plate set (200) of the sixth shift element (F) is disposed, as viewed in the axial direction, at least partially radially above the plate set (200) of the second shift element (B).

14. Multistage automatic transmission according to any one of Claims 1 to 11, **characterized in that** the plate set (200) of the second shift element (B) is disposed axially next to the plate set (600) of the sixth shift element (F).

15. Multistage automatic transmission according to any one of Claims 1 to 11, **characterized in that** the plate set (200) of the second shift element (B) is disposed, as viewed in the axial direction, at least partially radially over the front-mounted gearset (VS).

16. Multistage automatic transmission according to any one of Claims 1 to 15, **characterized in that** the plate set (200) of the second shift element (B) is disposed closer to the main gearset (HS) than is the plate set (600) of the sixth shift element (F).

17. Multistage automatic transmission according to any one of Claims 1 to 16, **characterized in that** the second and the sixth shift element (B, F) have a common plate carrier (ZYLBF) for accommodating plates of the second and the sixth shift element (BF), which plate carrier is connected to the first input element of the main gearset (HS).

18. Multistage automatic transmission according to any one of Claims 1 to 17, **characterized in that** the output element (630) of the sixth shift element (F) is connected to the first input element of the main gearset (HS) via the output element (230) of the second shift element (B).

19. Multistage automatic transmission according to any one of Claims 1 to 17, **characterized in that** the sixth shift element (F) and the second shift element (B) are connected to the first input element of the main gearset (HS) via a common output element.

20. Multistage automatic transmission according to any one of Claims 1 to 19, **characterized in that** the servo device (610) of the sixth shift element (F), in particular a pressure chamber (611) and a pressure equalization chamber (612) of the servo device (610) of the sixth shift element (F), always rotates at the rotational speed of the first input element of the main gearset (HS).

21. Multistage automatic transmission according to any one of Claim 1 to 19, **characterized in that** the servo device (610) of the sixth shift element (F), in particular a pressure chamber (611) and a pressure equalization chamber (612) of the servo device (610) of the sixth shift element (F), always rotates at the rotational speed of the drive shaft (AN).

22. Multistage automatic transmission according to any one of Claims 1 to 21, **characterized in that** the servo device (210) of the second shift element (B), in particular a pressure chamber (211) and a pressure equalization chamber (212) of the servo device (210) of the second shift element (B), always rotates at the rotational speed of the first element of the main gearset (HS).

23. Multistage automatic transmission according to any one of Claims 1 to 21, **characterized in that** the servo device (210) of the second shift element (B), in particular a pressure chamber (211) and a pressure equalization chamber (212) of the servo device (210) of the second shift element (B), always rotates at the rotational speed of the output element of the front-mounted gearset (VS).

24. Multistage automatic transmission according to any one of Claims 1 to 23, **characterized in that** the sixth shift element (F), in particular the plate set (600) and the servo device (610) of the sixth shift element (F), is disposed, at least to a large extent, within a clutch chamber of the second shift element (B), which clutch chamber is constituted by an outer plate carrier of the second shift element (B).

25. Multistage automatic transmission according to any one of Claims 1 to 23, **characterized in that** the second shift element (B), in particular the plate set (200) and the servo device (210) of the second shift element (B), is disposed, at least to a large extent, within a clutch chamber of the second shift element (B), which clutch chamber is constituted by an outer plate carrier of the sixth shift element (F).

26. Multistage automatic transmission according to any one of Claims 1 to 25, **characterized in that** the servo devices (210, 610) of the second and the sixth shift element (B, F) are disposed, at least predominantly, on that side of the plate set (200, 600), respectively assigned to the servo device, of the second and the sixth shift element (B, F) which faces away from the front-mounted gearset (VS).

27. Multistage automatic transmission according to any one of Claims 1 to 25, **characterized in that** the servo devices (210, 610) of the second and the sixth shift element (B, F) are disposed, at least predominantly, on that side of the plate set (200, 600), respectively assigned to the servo device, of the second and the sixth shift element (B, F) which faces towards the front-mounted gearset (VS).

28. Multistage automatic transmission according to any one of Claims 1 to 25, **characterized in that** the servo device (210) of the second shift element (B) is disposed, at least predominantly, on that side of the plate set (200) of the second shift element (B) which faces away from the front-mounted gearset (VS), and the servo device (610) of the sixth shift element (F) is disposed, at least predominantly, on that side of the plate set (600) of the sixth shift element (F) which faces towards the front-mounted gearset (VS).

29. Multistage automatic transmission according to any one of Claims 1 to 28, **characterized in that** the input element (620) of the sixth shift element (F) is mounted on a rotationally rigid hub (GN) of the housing wall (GW) of the transmission housing (GG).

30. Multistage automatic transmission according to any one of Claims 1 to 29, **characterized in that** the output element (630) of the sixth shift element (F) and/or the output element (230) of the second shift element (B) are/is mounted on a rotationally rigid hub (GN) of the housing wall (GW) of the transmission housing (GG).

31. Multistage automatic transmission according to any one of Claims 1 to 30, **characterized in that** the input element (220) of the second shift element (B) is mounted on the input element (620) of the sixth shift element (F).

32. Multistage automatic transmission according to any one of Claims 1 to 30, **characterized in that** the input element (220) of the second shift element (B) is mounted on the output element (630) of the sixth shift element (F) or on the output element (230) of the second shift element (B).

33. Multistage automatic transmission according to any one of Claims 1 to 32, **characterized in that** an input element (130) of the first shift element (A) that is connected to the output element of the front-mounted gearset (VS) is mounted on the input element (620) of the sixth shift element (F).

34. Multistage automatic transmission according to any one of Claims 1 to 33, **characterized in that** the hub (GN) of the housing wall (GW) has channels for supplying pressure medium and/or lubricant to the servo device (610, 210, 110) of the sixth and/or the second and/or the first shift element (F, B, A).

35. Multistage automatic transmission according to any one of Claims 1 to 34, **characterized in that** the plate sets (100, 200) of the first and the second shift element (A, B) are disposed on the same or at least a similar diameter.

36. Multistage automatic transmission according to any one of Claims 1 to 35, **characterized in that** the first and the second shift element (A, B) have a common plate carrier (ZYLAB), which is connected to the output element of the front-mounted gearset (VS).

37. Multistage automatic transmission according to any one of Claims 1 to 36, **characterized in that** the front-mounted gearset (VS) has a sun gear (SO_VS), a ring gear (HO_VS), and a coupled planet carrier (ST_VS) on which inner and outer planet gears (P1_VS, P2_VS) are rotatably mounted, wherein
• the inner planet gears (P1_VS) of the front-mounted gearset (VS) mesh with the sun gear (SO_VS) and with the outer planet gears (P2_VS) of the front-mounted gearset (VS),
• the outer planet gears (P2_VS) of the front-mounted gearset (VS) mesh with the inner planet gears (P1_VS) and with the ring gear (HO_VS) of the front-mounted gearset (HS),
• the planet carrier (ST_VS) of the front-mounted gearset (VS) constitutes the input element of the front-mounted gearset (VS) that is permanently connected to the drive shaft (AN),
• the ring gear (HO_VS) of the front-mounted gearset (VS) constitutes the output element of the front-mounted gearset (VS) that can be connected to input elements of the main gearset (HS),
• the sun gear (SO_VS) of the front-mounted gearset (VS) is fixed to the transmission housing (GG),
and the main gearset (HS) is realized as a two-planet-carrier, four-shaft transmission in the structural form of a Ravigneaux gearset which comprises two sun gears (S1_HS, S2_HS) and a ring gear (HO_HS), and comprises a coupled planet carrier (ST_HS), rotatably mounted on which are long planet gears (P1_HS) and short planet gears (P2_HS),
• the long planet gears (P1_HS) of the main gearset (HS) meshing with the ring gear (HO_HS) and with the first sun gear (S1_HS) of the main gear (HS),
• the short planet gears (P2_HS) of the main gear (HS) meshing with the long planet gears (P1_HS) and with the second sun gear (S2_HS) of the main gearset (HS),
• the first sun gear (S1_HS) of the main gearset (HS) constituting the first input element of the main gearset (HS) and being connected to the output elements (230, 330, 630) of the second, third and sixth shift elements (B, C, F),
• the second sun gear (S2_HS) of the main gearset (HS) constituting the second input element of the main gearset (HS) and being connected to the output element (130) of the first shift element (A),
• the planet carrier (ST_HS) of the main gearset (HS) constituting the third input element of the main gearset (HS), and being connected to the output elements (430, 530) of the fourth and the fifth shift element (D, E),
• the ring gear (HO_HS) of the main gearset (HS) constituting the output element of the main gearset (HS) and being connected to the output shaft (AB).

38. Multistage automatic transmission according to any one of Claims 1 to 36, **characterized in that** the front-mounted gearset (VS) has a sun gear (SO_VS), a ring gear (HO_VS), and a coupled planet carrier (ST_VS) on which inner and outer planet gears (P1_VS, P2_VS) are rotatably mounted, wherein
• the inner planet gears (P1_VS) of the front-mounted gearset (VS) mesh with the sun gear (SO_VS) and with the outer planet gears (P2_VS) of the front-mounted gearset (VS),
• the outer planet gears (P2_VS) of the front-mounted gearset (VS) mesh with the inner planet gears (P1_VS) and with the ring gear (HO_VS) of the front-mounted gearset (HS),
• the planet carrier (ST_VS) of the front-mounted gearset (VS) constitutes the input element of the front-mounted gearset (VS) that is permanently connected to the drive shaft (AN),
• the ring gear (HO_VS) of the front-mounted gearset (VS) constitutes the output element of the front-mounted gearset (VS) that can be connected to input elements of the main gearset (HS),
• the sun gear (SO_VS) of the front-mounted gearset (VS) is fixed to the transmission housing (GG),
and the main gearset (HS) is realized as a two-planet-carrier, four-shaft transmission having two coupled single planetary gearsets, comprising two sun gears (S1_HS, S2_HS), two ring gears (H1_HS, H2_HS), a first planet carrier (ST1_HS) on which first planet gears (PL_HS) are rotatably mounted, and comprising a coupled second planet carrier (ST2_HS), on which inner and outer planet gears (PLi_HS, PLa_HS) are rotatably mounted,
• the first planet gears (PL_HS) of the main gearset (HS) meshing with the first ring gear (H1_HS) and with the first sun gear (S1_HS) of the main gearset (HS),
• the inner planet gears (PLi_HS) of the main gearset (HS) meshing with the outer planet gears (PLa_HS) and with the second sun gear (S2_HS) of the main gearset (HS),
• the outer planet gears (PLa_HS) of the main gearset (HS) meshing with the inner planet gears (PLi_HS) and with the second ring gear (H2_HS) of the main gearset (HS),
• the first sun gear (S1_HS) and the coupled second planet carrier (ST2_HS) of the main gearset (HS) being connected to each other and constituting the first input element of the main gearset (HS), and being connected to the output elements (230, 330, 630) of the second, the third and the sixth shift element (B, C, F),
• the second sun gear (S2_HS) of the main gearset (HS) constituting the second input element of the main gearset (HS) and being connected to the output element (130) of the first shift element (A),
• the first planet carrier (ST1_HS) and the second ring gear (H2_HS) of the main gearset (HS) being connected to each other and constituting the third input element of the main gearset (HS), and being connected to the output elements (430, 530) of the fourth and the fifth shift element (D, E), and
• the first ring gear (H1_HS) of the main gearset (HS) constituting the output element of the main gearset (HS) and being connected to the output shaft (AB).

39. Multistage automatic transmission according to any one of Claims 1 to 36, **characterized in that** the front-mounted gearset (VS) has a sun gear (SO_VS), a ring gear (HO_VS), and a coupled planet carrier (ST_VS) on which inner and outer planet gears (P1_VS, P2_VS) are rotatably mounted, wherein
• the inner planet gears (P1_VS) of the front-mounted gearset (VS) mesh with the sun gear (SO_VS) and with the outer planet gears (P2_VS) of the front-mounted gearset (VS),
• the outer planet gears (P2_VS) of the front-mounted gearset (VS) mesh with the inner planet gears (P1_VS) and with the ring gear (HO_VS) of the front-mounted gearset (HS),
• the planet carrier (ST_VS) of the front-mounted gearset (VS) constitutes the input element of the front-mounted gearset (VS) that is permanently connected to the drive shaft (AN),
• the ring gear (HO_VS) of the front-mounted gearset (VS) constitutes the output element of the front-mounted gearset (VS) that can be connected to input elements of the main gearset (HS), and
• the sun gear (SO_VS) of the front-mounted gearset (VS) is fixed to the transmission housing,
and the main gearset (HS) is realized as a three-planet-carrier, five-shaft transmission comprising three sun gears (S1_HS, S2_HS, S3_HS), a coupled ring gear (H13_HS), a second ring gear (H2_HS), a coupled planet carrier (ST13_HS) with long planet gears (P13_HS) rotatably mounted thereon, and comprising a second planet carrier (ST2_HS) with short planet gears (P2_HS) rotatably mounted thereon,
• the third sun gear (S3_HS) of the main gearset (HS) being disposed axially between the second and the first sun gear (S2_HS, S1_HS) of the main gearset (HS)
• the long planet gears (P13_HS) of the main gearset (HS) meshing with the coupled ring gear (H13_HS) and with the first and the third sun gear (S1_HS, S3_HS) of the main gearset (HS),
• the short planet gears (P2_HS) of the main gearset (HS) meshing with the second ring gear (H2_HS) and with the second sun gear (S2_HS) of the main gearset (HS),
• the second and the third sun gear (S2_HS, S3_HS) of the main gearset (HS) being fixedly connected to each other,
• the first sun gear (S1_HS) of the main gearset (HS) constituting the first input element of the main gearset (HS) and being connected to the output elements (230, 330, 630) of the second, the third and the sixth shift element (B, C, F),
• the coupled ring gear (H13_HS) of the main gearset (HS) constituting the second input element of the main gearset (HS) and being connected to the output element (130) of the first shift element (A),
• the second planet carrier (ST2_HS) of the main gearset (HS) constituting the third input element of the main gearset (HS) and being connected to the output elements (430, 530) of the fourth and the fifth shift element (D, E),
• the second ring gear (H2_HS) and the coupled planet carrier (ST13_HS) of the main gearset (HS) being fixedly connected to each other and constituting the output element of the main gearset (HS), and being connected to the output shaft (AB).

40. Multistage automatic transmission according to Claim 39, **characterized in that** the coupled planet carrier (ST13_HS) of the main gearset (HS) has a planet-carrier plate which extends through inwardly in the radial direction axially between the first and the third sun gear (S1_HS, S3_HS) of the main gearset (HS), a hub that is operatively connected to this planet-carrier plate in a rotationally rigid manner and operatively connected to the output shaft (AB) extending centrally through the first sun gear (S1_HS) of the main gearset (HS) in the axial direction.

41. Multistage automatic transmission according to either of Claims 39 or 40, **characterized in that** the long planet gears (P13_HS) of the main gearset (HS) are realized as stepped planet gears.

42. Multistage automatic transmission according to any one of Claims 1 to 41, **characterized in that**, through selective closing of the shift elements (A to F), at least eight forward gears can be shifted in such a way that the rotational speed of the drive shaft (AN) can be transmitted to the output shaft in such a way that, for the purpose of shifting from one gear to the sequentially next higher or sequentially next lower gear, of the shift element just then actuated respectively only one shift element is opened, and a further shift element is closed, wherein
• in the first forward gear the first and the fourth shift element (A, D) are closed,
• in the second forward gear the first and the third shift element (A, C) are closed,
• in the third forward gear the first and the second shift element (A, B) are closed,
• in the fourth forward gear the first and the sixth shift element (A, F) are closed,
• in the fifth forward gear the first and the fifth shift element (A, E) are closed,
• in the sixth forward gear the fifth and the sixth shift element (E, F) are closed,
• in the seventh forward gear the second and the fifth shift element (B, E) are closed, and
• in the eighth forward gear the third and the fifth shift element (C, E) are closed,
and wherein in a reverse gear the fourth shift element (D) and, in addition, either the second shift element (B) or the sixth shift element (F) are closed.

## Revendications (Revendications pour l'(les) Etat(s) contractant(s) suivant(s): DE, FR, GB)

1. Boîte de vitesses automatique à étages multiples, comprenant un arbre d'entrée (AN), un arbre de sortie (AB), un train de roues amont (VS), un train de roues principal (HS) et au moins six éléments de commande (A à F) et présentant les caractéristiques suivantes :
• le train de roues amont (VS) est constitué par un train épicycloïdal double,
• un élément de sortie du train de roues amont (VS) tourne avec une vitesse de rotation qui est plus petite que la vitesse de rotation d'entrée de l'arbre d'entrée (AN),
• un élément d'entrée du train de roues amont (VS) est relié en permanence à l'arbre d'entrée (AN),
• un élément du train de roues amont (VS) est relié à un carter de boîte de vitesses (GG) de la boîte de vitesses automatique à étages multiples,
• le train de roues principal (HS) est constitué par un train épicycloïdal couplé possédant plusieurs éléments d'entrée qui ne sont pas couplés entre eux et un élément de sortie,
• l'élément de sortie du train de roues principal (HS) est relié en permanence à l'arbre de sortie (AB),
• un élément d'entrée (120) du premier élément de commande (A) est relié à l'élément de sortie du train de roues amont (VS),
• un élément de sortie (130) du premier élément de commande (A) est relié à un deuxième élément d'entrée du train de roues principal (HS),
• un élément d'entrée (220) du deuxième élément de commande (B) est relié à l'élément de sortie du train de roues amont (VS),
• un élément de sortie (230) du deuxième élément de commande (B) est relié à un premier élément d'entrée du train de roues principal (HS),
• un élément d'entrée du troisième élément de commande (C) est relié au carter de boîte de vitesses (GG),
• un élément de sortie (330) du troisième élément de commande (C) est relié au premier élément d'entrée du train de roues principal (HS) ou à un élément d'entrée du train de roues principal (HS) voisin de ce premier élément d'entrée dans un plan de vitesse de rotation,
• un élément d'entrée du quatrième élément de commande (D) est relié au carter de boîte de vitesses (GG),
• un élément de sortie (430) du quatrième élément de commande (D) est relié à un troisième élément d'entrée du train de roues principal (HS),
• un élément d'entrée (520) du cinquième élément de commande (E) est relié à l'arbre d'entrée (AN),
• un élément de sortie (530) du cinquième élément de commande (E) est relié au troisième élément d'entrée du train de roues principal (HS),
• un élément d'entrée (620) du sixième élément de commande (F) est relié à l'arbre d'entrée (AN),
• un élément de sortie (630) du sixième élément de commande (F) est relié au premier élément d'entrée du train de roues principal (HS) ou à un élément d'entrée du train de roues principal (HS) qui est voisin de ce premier élément d'entrée dans le plan de vitesse de rotation,
**caractérisée en ce que**
• le train de roues amont (VS) présente une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_VS),
• les roues satellites intérieures (P1_VS) du train de roues amont (VS) engrènent avec la roue planétaire (SO_VS) et avec les roues satellites extérieures (P2_VS) du train de roues amont (VS),
• les roues satellites extérieures (P2_VS) du train de roues amont (VS) engrènent avec les roues satellites intérieures (P1_VS) et avec la couronne à denture intérieure (HO_VS) du train de roues amont (VS),
• le porte-satellites (ST_VS) du train de roues amont (VS) forme l'élément d'entrée du train de roues amont (VS) relié en permanence à l'arbre d'entrée (AN),
• la couronne à denture intérieure (HO_VS) du train de roues amont (VS) forme l'élément de sortie du train de roues amont (VS) qui peut être relié aux éléments d'entrée du train de roues principal (HS),
• la roue planétaire (SO_VS) du train de roues amont (VS) est bloquée sur le carter de boîte de vitesses (GG),
• le train de roues principal (HS) est réalisé sous la forme d'un mécanisme à deux porte-satellites-quatre-arbres comprenant deux trains épicycloïdaux simples couplés, comprenant deux roues planétaires (S1_HS, S2_HS), deux couronnes à denture intérieure (H1_HS, H2_HS), un premier porte-satellites (ST1_HS), sur lequel sont montées rotatives des premières roue planétaire (PL_HS), ainsi qu'un deuxième porte-satellites couplé(ST2_HS), sur lequel sont montées rotatives des roues satellites (PLi_HS, PLa_HS),
• les premières roues satellites (PL_HS) du train de roues principal (HS) engrènent avec la première couronne à denture intérieure (H1_HS) et avec la première roue planétaire (S1_HS) du train de roues principal (HS),
• les roues satellites intérieures (PLi_HS) du train de roues principal (HS) engrènent avec les roues satellites extérieures (PLa_HS) et avec la deuxième roue planétaire (S2_HS) du train de roues principal (HS),
• les roues satellites extérieures (PLa_HS) du train de roues principal (HS) engrènent avec les roues satellites intérieures (PLi_HS) et avec la deuxième couronne à denture intérieure (H2_HS) du train de roues principal (HS),
• la première roue planétaire (S1_HS) et le deuxième porte-satellites couplé (ST2_HS) du train de roues principal (HS) sont reliées l'une à l'autre et forment le premier élément d'entrée du train de roues principal (HS) et sont reliés aux éléments de sorties (230, 330, 630) des deuxième, troisième et sixième éléments de commande (B, C, F),
• la deuxième roue planétaire (S2_HS) du train de roues principal (HS) forme l'élément d'entrée du train de roues principal (HS) et est reliée à l'élément de sortie (130) du premier élément de commande (A),
• le premier porte-satellites (ST1_HS) et la deuxième couronne à denture intérieure (H2_HS) du train de roues principal (HS) sont reliés l'un à l'autre, forment le troisième élément d'entrée du train de roues principal (HS) et sont reliés aux éléments de sortie (430, 530) des quatrième et cinquième éléments de commande (D, E),
• la première couronne à denture intérieure (H1_HS) du train de roues principal (HS) forme l'élément de sortie du train de roues principal (HS) et sont reliés à l'arbre de sortie (AB),
les deuxième et sixième éléments de commande (B, F) formant un groupe qui est disposé, vu dans l'espace, du moins en majeure partie, sur le côté du train de roues amont (VS) qui est éloigné du train de roues principal (HS), comprenant au moins
• un support de disques du deuxième élément de commande (B) destiné à recevoir un paquet de disques (200) du deuxième élément de commande (B),
• un servodispositif (210) du deuxième élément de commande (B) destiné à actionner le paquet de disque (200) du deuxième élément de commande (B),
• un paquet de disques (600) du sixième élément de commande (F),
• un support de disques du sixième élément de commande (F) destiné à recevoir ce paquet de disques (600) du sixième élément de commande (F), ainsi que
• un servodispositif (610) du sixième élément de commande (F) destiné à actionner ce paquet de disques (600) du sixième élément de commande (F).

2. Boîte de vitesses automatique à étages multiples, comprenant un arbre d'entrée (AN), un arbre de sortie (AB), un train de roues amont (VS), un train de roues principal (HS) et au moins six éléments de commande (A à F) et présentant les caractéristiques suivantes :
• le train de roues amont (VS) est constitué par un train épicycloïdal double,
• un élément de sortie du train de roues amont (VS) tourne avec une vitesse de rotation qui est plus petite que la vitesse de rotation d'entrée de l'arbre d'entrée (AN),
• un élément d'entrée du train de roues amont (VS) est relié en permanence à l'arbre d'entrée (AN),
• un élément du train de roues amont (VS) est relié à un carter de boîte de vitesses (GG) de la boîte de vitesses automatique à étages multiples,
• le train de roues principal (HS) est constitué par un train épicycloïdal couplé possédant plusieurs éléments d'entrée qui ne sont pas couplés entre eux et un élément de sortie,
• l'élément de sortie du train de roues principal (HS) est relié en permanence à l'arbre de sortie (AB),
• un élément d'entrée (120) du premier élément de commande (A) est relié à l'élément de sortie du train de roues amont (VS),
• un élément de sortie (130) du premier élément de commande (A) est relié à un deuxième élément d'entrée du train de roues principal (HS),
• un élément d'entrée (220) du deuxième élément de commande (B) est relié à l'élément de sortie du train de roues amont (VS),
• un élément de sortie (230) du deuxième élément de commande (B) est relié à un premier élément d'entrée du train de roues principal (HS),
• un élément d'entrée du troisième élément de commande (C) est relié au carter de boîte de vitesses (GG),
• un élément de sortie (330) du troisième élément de commande (C) est relié au premier élément d'entrée du train de roues principal (HS) ou à un élément d'entrée du train de roues principal (HS) voisin de ce premier élément d'entrée dans un plan de vitesse de rotation,
• un élément d'entrée du quatrième élément de commande (D) est relié au carter de boîte de vitesses (GG),
• un élément de sortie (430) du quatrième élément de commande (D) est relié à un troisième élément d'entrée du train de roues principal (HS),
• un élément d'entrée (520) du cinquième élément de commande (E) est relié à l'arbre d'entrée (AN),
• un élément de sortie (530) du cinquième élément de commande (E) est relié au troisième élément d'entrée du train de roues principal (HS),
• un élément d'entrée (620) du sixième élément de commande (F) est relié à l'arbre d'entrée (AN),
• un élément de sortie (630) du sixième élément de commande (F) est relié au premier élément d'entrée du train de roues principal (HS) ou à un élément d'entrée du train de roues principal (HS) qui est voisin de ce premier élément d'entrée dans le plan de vitesse de rotation,
**caractérisée en ce que**
• le train de roues amont (VS) présente une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_VS),
• les roues satellites intérieures (P1_VS) du train de roues amont (VS) engrènent avec la roue planétaire (SO_VS) et avec les roues satellites extérieures (P2_VS) du train de roues amont (VS),
• les roues satellites extérieures (P2_VS) du train de roues amont (VS) engrènent avec les roues satellites intérieures (P1_VS) et avec la couronne à denture intérieure (HO_VS) du train de roues amont (VS),
• le porte-satellites (ST_VS) du train de roues amont (VS) forme l'élément d'entrée du train de roues amont (VS) relié en permanence à l'arbre d'entrée (AN),
• la couronne à denture intérieure (HO_VS) du train de roues amont (VS) forme l'élément de sortie du train de roues amont (VS) qui peut être relié aux éléments d'entrée du train de roues principal (HS),
• la roue planétaire (SO_VS) du train de roues amont (VS) est bloquée sur le carter de boîte de vitesses,
• le train de roues principal (HS) est réalisé sous la forme d'un mécanisme à trois porte-satellites-cinq-arbres comprenant trois roues planétaires (S1_HS, S2_HS, S3_HS), une couronne à denture intérieure (couplée (H13_HS), une deuxième couronne à denture intérieure (H2_HS), un porte-satellites couplé (ST13_HS) portant des roues satellites longues (P13_ HS) montées rotatives sur lui, ainsi qu'un deuxième porte-satellites (ST2_HS) portant des roues satellites courtes (P2_HS) montées rotatives sur lui,
• la troisième roue planétaire (S3_HS) du train de roues principal (HS) est disposée axialement entre les deuxième et première roues planétaires (S2_HS, S1_HS) du train de roues principal (HS),
• les roues satellites longues (P13_HS) du train de roues principal (HS) engrènent avec la couronne à denture intérieure couplée (H13_HS) et avec les première et troisième roues planétaires (S1_HS, S3_HS) du train de roues principal (HS),
• les roues satellites courtes (P2_HS) du train de roues principal (HS) engrènent avec la deuxième couronne à denture intérieure (H2_HS) et avec la deuxième roue planétaire (S2_HS) du train de roues principal (HS),
• les deuxième et troisième roues planétaires (S2_HS, S3_HS) du train de roues principal (HS) sont reliées rigidement entre elles,
• la première roue planétaire (S1_HS) du train de roues principal (HS) forme le premier élément d'entrée du train de roues principal (HS) et est reliée aux éléments de sortie (230, 330, 630) des deuxième, troisième et sixième éléments de commande (B, C, F),
• la couronne à denture intérieure couplée (H13_HS) du train de roues principal (HS) forme le deuxième élément d'entrée du train de roues principal (HS) et est reliée à l'élément de sortie (130) du premier élément de commande (A),
• le deuxième porte-satellites (ST2_HS) du train de roues principal (HS) forme le troisième élément d'entrée du train de roues principal (HS) et est relié aux éléments de sortie (430, 530) des quatrième et cinquième éléments de commande (D, E),
• la deuxième couronne à denture intérieure (ST2_HS) et le porte-satellites couplé du train de roues principal (HS) sont reliés rigidement l'une à l'autre et forment l'élément de sortie du train de roues principal (HS) et sont reliés à l'arbre de sortie (AB).
les deuxième et sixième éléments de commande (B, F) formant un groupe qui est disposé, vu dans l'espace, du moins en majeure partie, sur le côté du train de roues amont (VS) qui est éloigné du train de roues principal (HS), comprenant au moins
• un support de disques du deuxième élément de commande (B) destiné à recevoir un paquet de disques (200) du deuxième élément de commande (B),
• un servodispositif (210) du deuxième élément de commande (B) destiné à actionner le paquet de disque (200) du deuxième élément de commande (B),
• un paquet de disques (600) du sixième élément de commande (F),
• un support de disques du sixième élément de commande (F) destiné à recevoir ce paquet de disques (600) du sixième élément de commande (F), ainsi que
• un servodispositif (610) du sixième élément de commande (F) destiné à actionner ce paquet de disques (600) du sixième élément de commande (F).

3. Boîte de vitesses automatique à étages multiples selon la revendication 2, **caractérisée en ce que** le porte-satellites couplé (ST13_HS) du train de roues principal (HS) comporte un disque de porte-satellites qui est engagé vers l'intérieur dans la direction radiale, en s'intercalant axialement entre les première et troisième roues planétaires (S1_HS, S3_HS) du train de roues principal (HS), un moyeu qui est relié solidairement en rotation à ce disque de porte-satellites et est relié fonctionnellement à l'arbre de sortie (AB) traversant au centre, dans la direction axiale, la première roue planétaire (S1_HS) du train de roues principal (HS).

4. Boîte de vitesses automatique à étages multiples selon la revendication 2 ou 3, **caractérisée en ce que** les roues satellites longues (P13_HS) du train de roues principal (HS) sont constituées par des roues satellites étagées.

5. Boîte de vitesses automatique à étages multiples selon l'une des revendications 1 à 4, **caractérisée en ce que** l'élément de sortie (630) du sixième élément de commande (F) est relié au premier élément d'entrée du train de roues principal (HS) par l'intermédiaire de l'élément de sortie (230) du deuxième élément de commande (B)^.

6. Boîte de vitesses automatique à étages multiples selon l'une des revendications 1 à 4, **caractérisée en ce que** le sixième élément de commande (F) et le deuxième élément de commande (B) sont reliés au premier élément d'entrée du train de roues principal (HS) par l'intermédiaire d'un élément de sortie commun (ZYLBF).

7. Boîte de vitesses automatique à étages multiples selon l'une des revendications 1 à 6, **caractérisée en ce que** les deuxième et sixième éléments de commande (B, F) forment un groupe qui est disposé dans une région située axialement entre le train de roues amont (VS) et une paroi de carter (GW) du carter de boîte de vitesses (GG) s'étendant radialement et disposée sur le côté de train de roues amont (VS) qui est éloigné du train de roues principal (HS).

8. Boîte de vitesses automatique à étages multiples selon l'une des revendications 1 à 7, **caractérisée en ce que** les deuxième et sixième éléments de commande (B, F) forment un groupe qui, vu dans l'espace, est axialement adjacent au train de roues amont (VS), le premier élément de commande (A) étant disposé, vu dans l'espace, du moins partiellement, dans une région située axialement entre le train de roues amont (VS) et le train de roues principal (HS).

9. Boîte de vitesses automatique à étages multiples selon l'une des revendications 1 à 7, **caractérisée en ce que** les deuxième et sixième éléments de commande (B, F) forment un groupe qui, vu dans l'espace, est axialement adjacent au premier élément de commande (A), en particulier à un servodispositif (110) ou à un paquet de disques (100) du premier élément de commande (A).

10. Boîte de vitesses automatique à étages multiples selon l'une des revendications 1 à 9, **caractérisée en ce que** le cinquième élément de commande (E) est disposé, vu dans l'espace, axialement entre le train de roues amont (VS) et le train de roues principal (HS) et axialement adjacent au train de roues amont (VS).

11. Boîte de vitesses automatique à étages multiples selon la revendication 10, **caractérisée en ce que** l'élément de sortie (230) du deuxième élément de commande (B) qui est relié à l'élément de sortie du sixième élément de commande (F) emboîte complètement radialement à l'extérieur dans la direction axiale le train de roues amont (VS), le premier élément de commande (A) et le cinquième élément de commande (E).

12. Boîte de vitesses automatique à étages multiples selon la revendication 10, **caractérisée en ce que** l'élément de sortie (230) du deuxième élément de commande (B) qui est relié au premier élément d'entrée du train de roues principal (HS) et l'élément de sortie (630) du sixième élément de commande (F) qui est relié au premier élément d'entrée du train de roues principal (HS) emboîtent complètement radialement à l'extérieur dans la direction axiale le train de roues amont (VS), le premier élément de commande (A) et le cinquième élément de commande (E).

13. Boîte de vitesses automatique à étages multiples selon l'une des revendications 1 à 9, **caractérisée en ce que** le cinquième élément de commande (E) est disposé axialement, vu dans l'espace, sur le côté du train de roues principal (HS) qui est éloigné du train de roues amont (VS), et axialement adjacent au train de roues principal (HS).

14. Boîte de vitesses automatique à étages multiples selon la revendication 13, **caractérisée en ce que** l'élément de sortie (230) du deuxième élément de commande (B) qui est relié à l'élément de sortie (630) du sixième élément de commande (F) emboîte complètement le train de roues amont (VS) et le premier élément de commande (A) radialement à l'extérieur, dans la direction axiale.

15. Boîte de vitesses automatique à étages multiples selon la revendication 13, **caractérisée en ce que** l'élément de sortie (230) du deuxième élément de commande (B) qui est relié au premier élément d'entrée du train de roues principal (HS) et l'élément de sortie (630) du sixième élément de commande (F) qui est relié au premier élément d'entrée du train de roues principal (HS) emboîtent complètement radialement à l'extérieur dans la direction axiale le train de roues amont (VS) et le premier élément de commande (A).

16. Boîte de vitesses automatique à étages multiples selon l'une des revendications 1 à 15, **caractérisée en ce que** le paquet de disques (200) du deuxième élément de commande (B) est disposé, vu dans la direction axiale, du moins partiellement, radialement au-delà du paquet de disques (600) du sixième élément de commande (F).

17. Boîte de vitesses automatique à étages multiples selon l'une des revendications 1 à 15, **caractérisée en ce que** le paquet de disques (600) du sixième élément de commande (F) est disposé, vu dans la direction axiale, du moins partiellement, radialement au-delà du paquet de disques (200) du deuxième élément de commande (B).

18. Boîte de vitesses automatique à étages multiples selon l'une des revendications 1 à 15, **caractérisée en ce que** le paquet de disques (200) du deuxième élément de commande (B) est disposé axialement à côté du paquet de disques (600) du sixième élément de commande (F).

19. Boîte de vitesses automatique à étages multiples selon l'une des revendications 1 à 15, **caractérisée en ce que** le paquet de disques (200) du deuxième élément de commande (B) est disposé, vu dans la direction axiale, du moins partiellement, radialement au-delà du train de roues amont (VS).

20. Boîte de vitesses automatique à étages multiples selon l'une des revendications 1 à 19, **caractérisée en ce que** le paquet de disques (200) du deuxième élément de commande (B) est disposé plus près du train de roues principal (HS) que le paquet de disques (600) du sixième élément de commande (F).

21. Boîte de vitesses automatique à étages multiples selon l'une des revendications 1 à 20, **caractérisée en ce que** les deuxième et sixième éléments de commande (B, F) comportent, pour recevoir des disques des deuxième et sixième éléments de commande (B, F) un support de disques commun (ZYLBF) qui est relié au premier élément d'entrée du train de roues principal (HS).

22. Boîte de vitesses automatique à étages multiples selon l'une des revendications 1 à 21, **caractérisée en ce que** le servodispositif (610) du sixième élément de commande (F), en particulier une chambre de pression (611) et une chambre de compensation de pression (612) du servodispositif (610) du sixième élément de commande (F), tourne en permanence à la vitesse de rotation du premier élément d'entrée du train de roues principal (HS).

23. Boîte de vitesses automatique à étages multiples selon l'une des revendications 1 à 21, **caractérisée en ce que** le servodispositif (610) du sixième élément de commande (F), en particulier une chambre de pression (611) et une chambre de compensation de pression (612) du servodispositif (610) du sixième élément de commande (F), tourne en permanence à la vitesse de rotation de l'arbre d'entrée (AN).

24. Boîte de vitesses automatique à étages multiples selon l'une des revendications 1 à 23, **caractérisée en ce que** le servodispositif (210) du deuxième élément de commande (B), en particulier une chambre de pression (211) et une chambre de compensation de pression (212) du servodispositif (210) du deuxième élément de commande (B), tourne en permanence à la vitesse de rotation du premier élément du train de roues principal (HS).

25. Boîte de vitesses automatique à étages multiples selon l'une des revendications 1 à 23, **caractérisée en ce que** le servodispositif (210) du deuxième élément de commande (B), en particulier une chambre de pression (211) et une chambre de compensation de pression (212) du servodispositif (210) du deuxième élément de commande (B), tourne en permanence à la vitesse de rotation de l'élément de sortie du train de roues amont (VS).

26. Boîte de vitesses automatique à étages multiples selon l'une des revendications 1 à 25, **caractérisée en ce que**, le sixième élément de commande (F), en particulier le paquet de disques (600) et le servodispositif (610) du sixième élément de commande (F) sont disposés, du moins en grande partie, à l'intérieur d'une chambre d'embrayage du deuxième élément de commande (B) qui est formée par un support de disques extérieur du deuxième élément de commande (B).

27. Boîte de vitesses automatique à étages multiples selon l'une des revendications 1 à 25, **caractérisée en ce que**, le deuxième élément de commande (B), en particulier le paquet de disques (200) et le servodispositif (210) du deuxième élément de commande (B) sont disposés, du moins en grande partie, à l'intérieur d'une chambre d'embrayage du deuxième élément de commande (B) qui est formée par un support de disques extérieur du sixième élément de commande (F).

28. Boîte de vitesses automatique à étages multiples selon l'une des revendications 1 à 27, **caractérisée en ce que** les servodispositifs (210, 610) des deuxième et sixième éléments de commande (B, F) sont disposés, du moins en majeure partie, sur le côté du paquet de disques respectivement correspondant (200, 600) du deuxième ou du sixième élément de commande (B, F) qui est éloigné du train de roues amont (VS).

29. Boîte de vitesses automatique à étages multiples selon l'une des revendications 1 à 27, **caractérisée en ce que** les servodispositifs (210, 610) des deuxième et sixième éléments de commande (B, F) sont disposés, du moins en majeure partie, sur le côté du paquet de disques respectivement correspondant (200, 600) du deuxième ou du sixième élément de commande (B, F) qui est dirigé vers le train de roues amont (VS).

30. Boîte de vitesses automatique à étages multiples selon l'une des revendications 1 à 27, **caractérisée en ce que** le servodispositif (210) du deuxième élément de commande (B) est disposé, du moins en majeure partie, sur le côté du paquet de disques (200) du deuxième élément de commande (B) qui est éloigné du train de roues amont (VS),
et **en ce que** le servodispositif (610) du sixième élément de commande (F) est disposé, du moins en majeure partie, sur le côté du paquet de disques (600) du sixième élément de commande (F) qui est dirigé vers le train de roues amont (VS).

31. Boîte de vitesses automatique à étages multiples selon l'une des revendications 1 à 31, **caractérisée en ce que** l'élément d'entrée (620) du sixième élément de commande (F) est monté rotatif sur un moyeu (GN) fixe en rotation de la paroi (GW) du carter de boîte de vitesses (GG).

32. Boîte de vitesses automatique à étages multiples selon l'une des revendications 1 à 31, **caractérisée en ce que** l'élément de sortie (630) du sixième élément de commande (F) et/ou l'élément de sortie (230) du deuxième élément de commande (B) est ou sont montés rotatifs sur un moyeu (GN) fixe en rotation de la paroi (GW) du carter de boîte de vitesses (GG).

33. Boîte de vitesses automatique à étages multiples selon l'une des revendications 1 à 32, **caractérisée en ce que** l'élément d'entrée (220) du deuxième élément de commande (B) est monté rotatif sur l'élément d'entrée (620) du sixième élément de commande (F).

34. Boîte de vitesses automatique à étages multiples selon l'une des revendications 1 à 32, **caractérisée en ce que** l'élément d'entrée (220) du deuxième élément de commande (B) est monté rotatif sur l'élément de sortie (230) du deuxième élément de commande (B).

35. Boîte de vitesses automatique à étages multiples selon l'une des revendications 1 à 34, **caractérisée en ce qu'**un élément d'entrée (130) du premier élément de commande (A) qui est relié à l'élément de sortie du train de roues amont (VS) est monté rotatif sur l'élément d'entrée (620) du sixième élément de commande (F).

36. Boîte de vitesses automatique à étages multiples selon l'une des revendications 1 à 35, **caractérisée en ce que** le moyeu (GN) de la paroi (GW) du carter comporte des canaux pour l'amenée de milieux de pression et/ou lubrifiants aux servodispositifs (610, 210, 110) des sixième et/ou deuxième et/ou premier éléments de commande (F, B, A).

37. Boîte de vitesses automatique à étages multiples selon l'une des revendications 1 à 36, **caractérisée en ce que** les paquets de disques (100, 200) des premier et deuxième éléments de commande (A, B) sont disposés sur le même diamètre ou au moins sur un diamètre analogue.

38. Boîte de vitesses automatique à étages multiples selon l'une des revendications 1 à 37, **caractérisée en ce que** les premier et deuxième éléments de commande (A, B) comportent un support de disques commun (ZYLAB) qui est relié à l'élément de sortie du train de roues amont (VS).

39. Boîte de vitesses automatique à étages multiples selon l'une des revendications 1 à 38, **caractérisée en ce que**, par fermeture sélective des éléments de commande (A à F), on peut enclencher au moins huit vitesses de marche avant, **en ce que** la vitesse de rotation de l'arbre d'entrée (AN) peut être transmise à l'arbre de sortie (AB) de telle manière que, pour passer d'une vitesse à la vitesse immédiatement supérieure ou à la vitesse immédiatement inférieure, parmi les éléments de commande qui sont actionnés au moment considéré, il ne se produit que l'ouverture d'un élément de commande et la fermeture d'un autre élément de commande,
• dans la première vitesse de marche avant, les premier et quatrième éléments de commande (A, D) étant fermés,
• dans la deuxième vitesse de marche avant, les premier et troisième éléments de commande (A, C) étant fermés,
• dans la troisième vitesse de marche avant, les premier et deuxième éléments de commande (A, B) étant fermés,
• dans la quatrième vitesse de marche avant, les premier et sixième éléments de commande (A, F) étant fermés,
• dans la cinquième vitesse de marche avant, les premier et cinquième éléments de commande (A, E) étant fermés,
• dans la sixième vitesse de marche avant, les cinquième et sixième éléments de commande (E, F) étant fermés,
• dans la septième vitesse de marche avant, les deuxième et cinquième éléments de commande (B, E) étant fermés,
• dans la huitième vitesse de marche avant, les troisième et cinquième éléments de commande (C, E) étant fermés,
et, dans une vitesse de marche arrière, le quatrième élément de commande (D) et, en supplément, soit le deuxième élément de commande (B), soit le sixième élément de commande (F) étant fermés.

## Revendications (Revendications pour l'(les) Etat(s) contractant(s) suivant(s): AT, BE, BG, CH, CY, CZ, DK, EE, ES, FI, HU, IE, IS, IT, LI, LT, LU, LV, MC, NL, PL, PT, RO, SE, SI, SK, TR)

1. Boîte de vitesses automatique à étages multiples, comprenant un arbre d'entrée (AN), six éléments de commande (A à F), un train de roues amont (VS) constitué par un train épicycloïdal, et un train de roues principal (HS) constitué par un train épicycloïdal accouplé comprenant plusieurs éléments d'entrée non accouplés entre eux et un élément de sortie, dans lequel
• un élément d'entrée du train de roues amont (VS) est relié en permanence à l'arbre d'entrée (AN),
• un élément de sortie du train de roues amont (VS) tourne avec une vitesse de rotation qui est plus petite que la vitesse de rotation d'entrée de l'arbre d'entrée (AN) et est relié en permanence à un élément d'entrée (120) du premier élément de commande (A) et en permanence à un élément d'entrée (220) du deuxième élément de commande (B),
• un premier élément d'entrée du train de roues principal (HS) est relié en permanence à un élément de sortie (230) du deuxième élément de commande (B) et en permanence à un élément de sortie (330) du troisième élément de commande (C) et en permanence à un élément de sortie (630) du sixième élément de commande (F),
• un deuxième élément d'entrée du train de roues principal (HS) est relié en permanence à un élément de sortie (130) du premier élément de commande (A),
• un troisième élément d'entrée du train de roues principal (HS) est relié en permanence à un élément de sortie (430) du quatrième élément de commande (D) et en permanence à un élément de sortie (530 du cinquième élément de commande (E),
• l'élément de sortie du train de roues principal (HS) est relié en permanence à l'arbre de sortie (AB),
• un élément d'entrée du troisième élément de commande (C) et un élément d'entrée du quatrième élément de commande (D) sont reliés à un carter de boîte de vitesses (GG),
• un élément d'entrée (520) du cinquième élément de commande (C) et un élément d'entrée (620) du sixième élément de commande (F) sont reliés à l'arbre d'entrée (AN),
**caractérisée**
**en ce que** les deuxième et sixième éléments de commande (B, F) forment un groupe qui est disposé, vu dans l'espace, en majeure partie sur le côté du train de roues amont (VS) qui est éloigné du train de roues principal (HS), et comprend au moins
• un support de disques du deuxième élément de commande (B) destiné à recevoir un paquet de disques (200) du deuxième élément de commande (B),
• un servodispositif (210) du deuxième élément de commande (B) destiné à actionner le paquet de disque (200) du deuxième élément de commande (B),
• un paquet de disques (600) du sixième élément de commande (F),
• un support de disques du sixième élément de commande (F) destiné à recevoir ce paquet de disques (600) du sixième élément de commande (F), ainsi que
• un servodispositif (610) du sixième élément de commande (F) destiné à actionner ce paquet de disques (600) du sixième élément de commande (F).

2. Boîte de vitesses automatique à étages multiples, comprenant un arbre d'entrée (AN), un arbre de sortie (AB), un train de roues amont (VS), un train de roues principal (HS) et au moins six éléments de commande (A à F) et présentant les caractéristiques suivantes :
• le train de roues amont (VS) est constitué par un train épicycloïdal double,
• un élément de sortie du train de roues amont (VS) tourne avec une vitesse de rotation qui est plus petite que la vitesse de rotation d'entrée de l'arbre d'entrée (AN),
• un élément d'entrée du train de roues amont (VS) est relié en permanence à l'arbre d'entrée (AN),
• un élément du train de roues amont (VS) est relié à un carter de boîte de vitesses (GG) de la boîte de vitesses automatique à étages multiples,
• le train de roues principal (HS) est constitué par un train épicycloïdal accouplé possédant plusieurs éléments d'entrée qui ne sont pas accouplés entre eux et un élément de sortie,
• l'élément de sortie du train de roues principal (HS) est relié en permanence à l'arbre de sortie (AB),
• un élément d'entrée (120) du premier élément de commande (A) est relié à l'élément de sortie du train de roues amont (VS),
• un élément de sortie (130) du premier élément de commande (A) est relié à un deuxième élément d'entrée du train de roues principal (HS),
• un élément d'entrée (220) du deuxième élément de commande (B) est relié à l'élément de sortie du train de roues amont (VS),
• un élément de sortie (230) du deuxième élément de commande (B) est relié à un premier élément d'entrée du train de roues principal (HS),
• un élément d'entrée du troisième élément de commande (C) est relié au carter de boîte de vitesses (GG),
• un élément de sortie (330) du troisième élément de commande (C) est relié au premier élément d'entrée du train de roues principal (HS) ou à un élément d'entrée du train de roues principal (HS) voisin de ce premier élément d'entrée dans un plan de vitesse de rotation,
• un élément d'entrée du quatrième élément de commande (D) est relié au carter de boîte de vitesses (GG),
• un élément de sortie (430) du quatrième élément de commande (D) est relié à un troisième élément d'entrée du train de roues principal (HS),
• un élément d'entrée (520) du cinquième élément de commande (E) est relié à l'arbre d'entrée (AN),
• un élément de sortie (530) du cinquième élément de commande (E) est relié au troisième élément d'entrée du train de roues principal (HS),
• un élément d'entrée (620) du sixième élément de commande (F) est relié à l'arbre d'entrée (AN),
• un élément de sortie (630) du sixième élément de commande (F) est relié au premier élément d'entrée du train de roues principal (HS) ou à un élément d'entrée du train de roues principal (HS) qui est voisin de ce premier élément d'entrée dans le plan de vitesse de rotation,
**caractérisée**
**en ce que** les deuxième et sixième éléments de commande (B, F) forment un groupe qui est disposé, vu dans l'espace, au moins en majeure partie sur le côté du train de roues amont (VS) qui est éloigné du train de roues principal (HS), comprenant au moins
• un support de disques du deuxième élément de commande (B) destiné à recevoir un paquet de disques (200) du deuxième élément de commande (B),
• un servodispositif (210) du deuxième élément de commande (B) destiné à actionner le paquet de disque (200) du deuxième élément de commande (B),
• un paquet de disques (600) du sixième élément de commande (F),
• un support de disques du sixième élément de commande (F) destiné à recevoir ce paquet de disques (600) du sixième élément de commande (F), ainsi que
• un servodispositif (610) du sixième élément de commande (F) destiné à actionner ce paquet de disques (600) du sixième élément de commande (F).

3. Boîte de vitesses automatique à étages multiples selon la revendication 1 ou 2, **caractérisée en ce que** les deuxième et sixième éléments de commande (B, F) forment un groupe qui est disposé dans une région située axialement entre le train de roues amont (VS) et une paroi de carter (GW) du carter de boîte de vitesses (GG) s'étendant radialement et disposée sur le côté de train de roues amont (VS) qui est éloigné du train de roues principal (HS).

4. Boîte de vitesses automatique à étages multiples selon la revendication 1 ou 2, **caractérisée en ce que** les deuxième et sixième éléments de commande (B, F) forment un groupe qui, vu dans l'espace, est axialement adjacent au train de roues amont (VS), le premier élément de commande (A) étant disposé, vu dans l'espace, du moins partiellement, dans une région située axialement entre le train de roues amont (VS) et le train de roues principal (HS).

5. Boîte de vitesses automatique à étages multiples selon la revendication 1 ou 2, **caractérisée en ce que** les deuxième et sixième éléments de commande (B, F) forment un groupe qui, vu dans l'espace, est axialement adjacent au premier élément de commande (A), en particulier à un servodispositif (110) ou à un paquet de disques (100) du premier élément de commande (A).

6. Boîte de vitesses automatique à étages multiples selon l'une des revendications 1 à 5, **caractérisée en ce que** le cinquième élément de commande (E) est disposé, vu dans l'espace, axialement entre le train de roues amont (VS) et le train de roues principal (HS) et axialement adjacent au train de roues amont (VS).

7. Boîte de vitesses automatique à étages multiples selon la revendication 6, **caractérisée en ce que** l'élément de sortie (230) du deuxième élément de commande (B) qui est relié à l'élément de sortie (630) du sixième élément de commande (F) emboîte complètement radialement à l'extérieur dans la direction axiale le train de roues amont (VS), le premier élément de commande (A) et le cinquième élément de commande (E).

8. Boîte de vitesses automatique à étages multiples selon la revendication 6, **caractérisée en ce que** l'élément de sortie (230) du deuxième élément de commande (B) qui est relié au premier élément d'entrée du train de roues principal (HS) et l'élément de sortie (630) du sixième élément de commande (F) qui est relié au premier élément d'entrée du train de roues principal (HS) emboîtent complètement radialement à l'extérieur dans la direction axiale le train de roues amont (VS), le premier élément de commande (A) et le cinquième élément de commande (E).

9. Boîte de vitesses automatique à étages multiples selon l'une des revendications 1 à 5, **caractérisée en ce que** le cinquième élément de commande (E) est disposé axialement, vu dans l'espace, sur le côté du train de roues principal (HS) qui est éloigné du train de roues amont (VS), et axialement adjacent au train de roues principal (HS).

10. Boîte de vitesses automatique à étages multiples selon la revendication 9, **caractérisée en ce que** l'élément de sortie (230) du deuxième élément de commande (B) qui est relié à l'élément de sortie (630) du sixième élément de commande (F) emboîte complètement le train de roues amont (VS) et le premier élément de commande (A) radialement à l'extérieur, dans la direction axiale.

11. Boîte de vitesses automatique à étages multiples selon la revendication 9, **caractérisée en ce que** l'élément de sortie (230) du deuxième élément de commande (B) qui est relié au premier élément d'entrée du train de roues principal (HS) et l'élément de sortie (630) du sixième élément de commande (F) qui est relié au premier élément d'entrée du train de roues principal (HS) emboîtent complètement radialement à l'extérieur dans la direction axiale le train de roues amont (VS) et le premier élément de commande (A).

12. Boîte de vitesses automatique à étages multiples selon l'une des revendications 1 à 11, **caractérisée en ce que** le paquet de disques (200) du deuxième élément de commande (B) est disposé, vu dans la direction axiale, du moins partiellement, radialement au-delà du paquet de disques (600) du sixième élément de commande (F).

13. Boîte de vitesses automatique à étages multiples selon l'une des revendications 1 à 11, **caractérisée en ce que** le paquet de disques (600) du sixième élément de commande (F) est disposé, vu dans la direction axiale, du moins partiellement, radialement au-delà du paquet de disques (200) du deuxième élément de commande (B).

14. Boîte de vitesses automatique à étages multiples selon l'une des revendications 1 à 11, **caractérisée en ce que** le paquet de disques (200) du deuxième élément de commande (B) est disposé axialement à côté du paquet de disques (600) du sixième élément de commande (F).

15. Boîte de vitesses automatique à étages multiples selon l'une des revendications 1 à 11, **caractérisée en ce que** le paquet de disques (200) du deuxième élément de commande (B) est disposé, vu dans la direction axiale, du moins partiellement, radialement au-delà du train de roues amont (VS).

16. Boîte de vitesses automatique à étages multiples selon l'une des revendications 1 à 15, **caractérisée en ce que** le paquet de disques (200) du deuxième élément de commande (B) est disposé plus près du train de roues principal (HS) que le paquet de disques (600) du sixième élément de commande (F).

17. Boîte de vitesses automatique à étages multiples selon l'une des revendications 1 à 16, **caractérisée en ce que** les deuxième et sixième éléments de commande (B, F) comportent, pour recevoir des disques des deuxième et sixième éléments de commande (B, F) un support de disques commun (ZYLBF) qui est relié au premier élément d"entrée du train de roues principal (HS).

18. Boîte de vitesses automatique à étages multiples selon l'une des revendications 1 à 17, **caractérisée en ce que** l'élément de sortie (630) du sixième élément de commande (F) est relié au premier élément d'entrée du train de roues principal (HS) par l'intermédiaire de l'élément de sortie (230) du train de roues principal (HS).

19. Boîte de vitesses automatique à étages multiples selon l'une des revendications 1 à 17, **caractérisée en ce que** le sixième élément de commande (F) et le deuxième élément de commande (B) sont reliés au premier élément d'entrée du train de roues principal (HS) par l'intermédiaire d'un élément de sortie commun.

20. Boîte de vitesses automatique à étages multiples selon l'une des revendications 1 à 19, **caractérisée en ce que** le servodispositif (610) du sixième élément de commande (F), en particulier une chambre de pression (611) et une chambre de compensation de pression (612) du servodispositif (610) du sixième élément de commande (F), tourne en permanence à la vitesse de rotation du premier élément d'entrée du train de roues principal (HS).

21. Boîte de vitesses automatique à étages multiples selon l'une des revendications 1 à 19, **caractérisée en ce que** le servodispositif (610) du sixième élément de commande (F), en particulier une chambre de pression (611) et une chambre de compensation de pression (612) du servodispositif (610) du sixième élément de commande (F), tourne en permanence à la vitesse de rotation de l'arbre d'entrée (AN).

22. Boîte de vitesses automatique à étages multiples selon l'une des revendications 1 à 21, **caractérisée en ce que** le servodispositif (210) du deuxième élément de commande (B), en particulier une chambre de pression (211) et une chambre de compensation de pression (212) du servodispositif (210) du deuxième élément de commande (B), tourne en permanence à la vitesse de rotation du premier élément du train de roues principal (HS).

23. Boîte de vitesses automatique à étages multiples selon l'une des revendications 1 à 21, **caractérisée en ce que** le servodispositif (210) du deuxième élément de commande (B), en particulier une chambre de pression (211) et une chambre de compensation de pression (212) du servodispositif (210) du deuxième élément de commande (B), tourne en permanence à la vitesse de rotation de l'élément de sortie du train de roues amont (VS).

24. Boîte de vitesses automatique à étages multiples selon l'une des revendications 1 à 23, **caractérisée en ce que** le sixième élément de commande (F), en particulier le paquet de disques (600) et le servodispositif (610) du sixième élément de commande (F) sont disposés, du moins en grande partie, à l'intérieur d'une chambre d'embrayage du deuxième élément de commande (B) qui est formée par un support de disques extérieur du deuxième élément de commande (B).

25. Boîte de vitesses automatique à étages multiples selon l'une des revendications 1 à 23, **caractérisée en ce que** le deuxième élément de commande (B), en particulier le paquet de disques (200) et le servodispositif (210) du deuxième élément de commande (B) sont disposés, du moins en grande partie, à l'intérieur d'une chambre d'embrayage du deuxième élément de commande (B) qui est formée par un support de disques extérieur du sixième élément de commande (F).

26. Boîte de vitesses automatique à étages multiples selon l'une des revendications 1 à 25, **caractérisée en ce que** les servodispositifs (210, 610) des deuxième et sixième éléments de commande (B, F) sont disposés, du moins en majeure partie, sur le côté du paquet de disques respectivement correspondant (200, 600) du deuxième ou du sixième élément de commande (B, F) qui est éloigné du train de roues amont (VS).

27. Boîte de vitesses automatique à étages multiples selon l'une des revendications 1 à 25, **caractérisée en ce que** les servodispositifs (210, 610) des deuxième et sixième éléments de commande (B, F) sont disposés, du moins en majeure partie, sur le côté du paquet de disques respectivement correspondant (200, 600) du deuxième ou du sixième élément de commande (B, F) qui est dirigé vers le train de roues amont (VS).

28. Boîte de vitesses automatique à étages multiples selon l'une des revendications 1 à 25, **caractérisée**
**en ce que** le servodispositif (210) du deuxième élément de commande (B) est disposé, du moins en majeure partie, sur le côté du paquet de disques (200) du deuxième élément de commande (B) qui est éloigné du train de roues amont (VS),
et **en ce que** le servodispositif (610) du sixième élément de commande (F) est disposé, du moins en majeure partie, sur le côté du paquet de disques (600) du sixième élément de commande (F) qui est dirigé vers le train de roues amont (VS).

29. Boîte de vitesses automatique à étages multiples selon l'une des revendications 1 à 28, **caractérisée en ce que** l'élément d'entrée (620) du sixième élément de commande (F) est monté rotatif sur un moyeu (GN) fixe en rotation de la paroi (GW) du carter de boîte de vitesses (GG).

30. Boîte de vitesses automatique à étages multiples selon l'une des revendications 1 à 29, **caractérisée en ce que** l'élément de sortie (630) du sixième élément de commande (F) et/ou l'élément de sortie (230) du deuxième élément de commande (B) est ou sont montés rotatifs sur un moyeu (GN) fixe en rotation de la paroi (GW) du carter de boîte de vitesses (GG).

31. Boîte de vitesses automatique à étages multiples selon l'une des revendications 1 à 30, **caractérisée en ce que** l'élément d'entrée (220) du deuxième élément de commande (B) est monté rotatif sur l'élément d'entrée (620) du sixième élément de commande (F).

32. Boîte de vitesses automatique à étages multiples selon l'une des revendications 1 à 30, **caractérisée en ce que** l'élément d'entrée (220) du deuxième élément de commande (B) est monté rotatif sur l'élément de sortie (630) du sixième élément de commande (F) ou sur l'élément de sortie (230) du deuxième élément de commande (B).

33. Boîte de vitesses automatique à étages multiples selon l'une des revendications 1 à 32, **caractérisée en ce qu'**un élément d'entrée (130) du premier élément de commande (A) qui est relié à l'élément de sortie du train de roues amont (VS) est monté rotatif sur l'élément d'entrée (620) du sixième élément de commande (F).

34. Boîte de vitesses automatique à étages multiples selon l'une des revendications 1 à 33, **caractérisée en ce que** le moyeu (GN) de la paroi (GW) du carter comporte des canaux pour l'amenée de milieux de pression et/ou lubrifiants aux servodispositifs (610, 210, 110) des sixième et/ou deuxième et/ou premier éléments de commande (F, B, A).

35. Boîte de vitesses automatique à étages multiples selon l'une des revendications 1 à 34, **caractérisée en ce que** les paquets de disques (100, 200) des premier et deuxième éléments de commande (A, B) sont disposés sur le même diamètre ou au moins sur un diamètre analogue.

36. Boîte de vitesses automatique à étages multiples selon l'une des revendications 1 à 35, **caractérisée en ce que** les premier et deuxième éléments de commande (A, B) comportent un support de disques commun (ZYLAB) qui est relié à l'élément de sortie du train de roues amont (VS).

37. Boîte de vitesses automatique à étages multiples selon l'une des revendications 1 à 35, **caractérisée en ce que** le train de roues amont (VS) comporte une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_ VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boîte de vitesses,
et **en ce que** le train de roues principal (HS) est réalisé sous la forme d'un mécanisme à deux porte-satellites-quatre arbres du type train de Ravigneaux, qui comprend deux roues planétaires (S1_HS, S2_HS), une couronne à denture intérieure (HO_HS), ainsi qu'un porte-satellites couplé (ST_HS) sur lequel sont montées rotatives des roues satellites longues (P1_HS), ainsi que des roues satellites courtes (P2_HS),
• les roues satellites longues (P1_HS) du train de roues principal (HS) engrenant avec la couronne à denture intérieure (HO_HS) et avec la première roue planétaire (S1_HS) du train de roues principal (HS),
• les roues satellites courtes (P2_HS) du train de roues principal (HS) engrenant avec les roues satellites longues (P1_HS) et avec la deuxième roue planétaire (S2_HS) du train de roues principal (HS),
• la première roue planétaire (S1_HS) du train de roues principal (HS) formant le premier élément d'entrée du train de roues principal (HS) et étant reliée aux éléments de sortie (230, 330, 630) des deuxième, troisième et sixième éléments de commande (B, C, F),
• la deuxième roue planétaire (S2_HS) du train de roues principal (HS) formant le deuxième élément d'entrée du train de roues principal (HS) et étant reliée à l'élément de sortie (130) du premier élément de commande (A),
• le porte-satellites (ST_HS) du train de roues principal (HS) formant le troisième élément d'entrée du train de roues principal (HS) et étant relié aux éléments de sortie (430, 530) des quatrième et cinquième éléments de commande (D, E), et
• la couronne à denture intérieure (HO_HS) du train de roues principal (HS) formant l'élément de sortie du train de roues principal (HS) et étant reliée à l'arbre de sortie (AB).

38. Boîte de vitesses automatique à étages multiples selon l'une des revendications 1 à 36, **caractérisée**
**en ce que** le train de roues amont (VS) comporte une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_ VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boîte de vitesses,
et **en ce que** le train de roues principal (HS) est réalisé sous la forme d'un mécanisme à deux porte-satellites-quatre arbres comportant deux trains épicycloïdaux individuels couplés, comprenant deux roues planétaires (S1_HS, S2_HS), deux couronnes à denture intérieure (H1_HS, H2_HS), un premier porte-satellites (ST1_HS) sur lequel sont montées rotatives des premières roues satellites (PL_HS), ainsi qu'un deuxième porte-satellites couplé (ST2_HS) sur lequel sont montées rotatives des roues satellites intérieures et extérieures (PLi_HS, PLa_HS),
• les premières roues satellites (PS_HS) du train de roues principal (HS) engrenant avec la première couronne à denture intérieure (H1_HS) et avec la première roue planétaire (S1_HS) du train de roues principal (HS),
• les roues satellites intérieures (PLi_HS) du train de roues principal (HS) engrenant avec les roues satellites extérieures (PLa_HS) et avec la deuxième roue planétaire (S2_HS) du train de roues principal (HS),
• les roues satellites extérieures (PLa_HS) du train de roues principal (HS) engrenant avec les roues satellites intérieures (PLi_HS) et avec la deuxième couronne à denture intérieure (H2_HS) du train de roues principal (HS),
• la première roue planétaire (S1_HS) et le deuxième porte-satellites couplé (ST2_HS) du train de roues principal (HS) étant reliés l'un à l'autre et formant le premier élément d'entrée du train de roues principal (HS) et étant reliés aux éléments de sortie (230, 330, 630) des deuxième, troisième, et sixième éléments de commande (B, C, F),
• la deuxième roue planétaire (S2_HS) du train de roues principal (HS) formant le deuxième élément d'entrée du train de roues principal (HS) et étant reliée à l'élément de sortie (130) du premier élément de commande (A),
• le premier porte-satellites (ST1_HS) et la deuxième couronne à denture intérieure (H2_HS) du train de roues principal (HS) étant reliés l'un à l'autre et formant le troisième élément d'entrée du train de roues principal (HS) et étant reliés aux éléments de sortie (430, 530) des quatrième et cinquième éléments de commande (D, E), et
• la première couronne à denture intérieure (H1_HS) du train de roues principal (HS) formant l'élément de sortie du train de roues principal (HS) et étant reliée à l'arbre de sortie (AB).

39. Boîte de vitesses automatique à étages multiples selon l'une des revendications 1 à 36, **caractérisée en ce que** le train de roues amont (VS) comporte une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_ VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (VS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boîte de vitesses,
et **en ce que** le train de roues principal (HS) est réalisé sous la forme d'un mécanisme à trois porte-satellites-cinq arbres comportant trois roues planétaires (S1_HS, S2_HS, S3_HS), une couronne à denture intérieure couplée (H13_HS), une deuxième couronne à denture intérieure (H2_HS), un porte-satellites couplé (ST13_HS) sur lequel sont montées rotatives des roues satellites longues (P13_HS), ainsi qu'un deuxième porte-satellites (ST2_HS) sur lequel sont montées rotatives des roues satellites courtes (PL2_HS),
• la troisième roue planétaire (S3_HS) du train de roues principal (HS) étant disposée axialement entre la deuxième et la première roue planétaire (S2_HS, S1_HS) du train de roues principal (HS),
• les roues satellites longues (P13_HS) du train de roues principal (HS) engrenant avec la couronne à denture intérieure couplée (H13_HS) et avec les première et troisième roues planétaire (S1_HS, S3_HS) du train de roues principal (HS),
• les roues satellites courtes (P2_HS) du train de roues principal (HS) engrenant avec la deuxième couronne à denture intérieure (H2_HS) et avec la deuxième roue planétaire (S2_HS) du train de roues principal (HS),
• les deuxième et troisième roues planétaire (S2_HS, S3_HS) du train de roues principal (HS) étant reliées rigidement l'une à l'autre,
• la première roue planétaire (S1_HS) du train de roues principal (HS) formant le premier élément d'entrée du train de roues principal (HS) et étant reliée aux éléments de sortie (230, 330, 630) des deuxième, troisième et sixième éléments de commande (B, C, F),
• la couronne à denture intérieure couplée (H13_HS) du train de roues principal (HS) formant le deuxième élément d'entrée du train de roues principal (HS) et étant reliée à l'élément de sortie (130) du premier élément de commande (A),
• le deuxième porte-satellites (ST2_HS) du train de roues principal (HS) formant le troisième élément d'entrée du train de roues principal (HS) et étant relié aux éléments de sortie (430, 530) des quatrième et cinquième éléments de commande (D, E),
• la deuxième couronne à denture intérieure (H2_HS) et le porte-satellites couplé (ST13_HS) du train de roues principal (HS) étant reliés rigidement l'une à l'autre, formant l'élément de sortie du train de roues principal (HS) et étant reliés à l'arbre de sortie (AB).

40. Boîte de vitesses automatique à étages multiples selon la revendication 39, **caractérisée en ce que** le porte-satellites couplé (ST13_HS) du train de roues principal (HS) comporte un disque de porte-satellites qui est engagé vers l'intérieur dans la direction radiale, axialement entre les première et troisième roues planétaire (S1_HS, S3_HS) du train de roues principal (HS), un moyeu qui est relié solidairement en rotation à ce disque de porte-satellites et fonctionnellement à l'arbre de sortie (AB) traversant la première roue planétaire (S1_HS) du train de roues principal (HS) au centre dans la direction axiale.

41. Boîte de vitesses automatique à étages multiples selon la revendication 39 ou 40, **caractérisée en ce que** les roues satellites longues (P13_HS) du train de roues principal (HS) sont constituées par des roues satellites étagées.

42. Boîte de vitesses automatique à étages multiples selon l'une des revendications 1 à 41, **caractérisée en ce que**, par fermeture sélective des éléments de commande (A à F), on peut enclencher au moins huit vitesses de marche avant, **en ce que** la vitesse de rotation de l'arbre d'entrée (AN) peut être transmise à l'arbre de sortie (AB) de telle manière que, pour passer d'une vitesse à la vitesse immédiatement supérieure ou à la vitesse immédiatement inférieure, parmi les éléments de commande qui sont actionnés au moment considéré, il ne se produit que l'ouverture d'un élément de commande et la fermeture d'un autre élément de commande,
• dans la première vitesse de marche avant, les premier et quatrième éléments de commande (A, D) étant fermés,
• dans la deuxième vitesse de marche avant, les premier et troisième éléments de commande (A, C) étant fermés,
• dans la troisième vitesse de marche avant, les premier et deuxième éléments de commande (A, B) étant fermés,
• dans la quatrième vitesse de marche avant, les premier et sixième éléments de commande (A, F) étant fermés,
• dans la cinquième vitesse de marche avant, les premier et cinquième éléments de commande (A, E) étant fermés,
• dans la sixième vitesse de marche avant, les cinquième et sixième éléments de commande (E, F) étant fermés,
• dans la septième vitesse de marche avant, les deuxième et cinquième éléments de commande (B, E) étant fermés,
• dans la huitième vitesse de marche avant, les troisième et cinquième éléments de commande (C, E) étant fermés,
et, dans une vitesse de marche arrière, le quatrième élément de commande (D) et, en supplément, soit le deuxième élément de commande (B), soit le sixième élément de commande (F) étant fermés.
